(19) Europäisches Patentamt
European Patent Office
Office européen des brevets

(11) EP 4 556 969 A1

(12) **EUROPEAN PATENT APPLICATION**
published in accordance with Art. 153(4) EPC

(43) Date of publication:
**21.05.2025 Bulletin 2025/21**

(21) Application number: **23839630.3**

(22) Date of filing: **11.07.2023**

(51) International Patent Classification (IPC):
***G02B 5/30*** $^{(2006.01)}$ ***B32B 3/04*** $^{(2006.01)}$
***B32B 7/022*** $^{(2019.01)}$ ***B32B 7/023*** $^{(2019.01)}$
***B32B 27/00*** $^{(2006.01)}$ ***B32B 27/06*** $^{(2006.01)}$
***B32B 27/34*** $^{(2006.01)}$ ***B32B 27/36*** $^{(2006.01)}$
***C08G 63/16*** $^{(2006.01)}$ ***C08J 5/18*** $^{(2006.01)}$

(52) Cooperative Patent Classification (CPC):
**B32B 3/04; B32B 7/022; B32B 7/023; B32B 27/00; B32B 27/06; B32B 27/34; B32B 27/36; C08G 63/16; C08J 5/18; C08J 7/043; C08J 7/046; C08L 67/02; G02B 1/11; G02B 1/14; G02B 1/16;**
(Cont.)

(86) International application number:
**PCT/JP2023/025582**

(87) International publication number:
**WO 2024/014458 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:
**13.07.2022 JP 2022112703**
**13.07.2022 JP 2022112732**
**13.07.2022 JP 2022112740**
**13.07.2022 JP 2022112707**
**13.07.2022 JP 2022112730**
**31.08.2022 JP 2022138598**
**31.08.2022 JP 2022138624**
**31.08.2022 JP 2022138612**
**31.08.2022 JP 2022138617**
**31.08.2022 JP 2022138623**

(71) Applicant: **Dai Nippon Printing Co., Ltd.**
**Tokyo 162-8001 (JP)**

(72) Inventors:
- **FURUI Gen**
**Tokyo 162-8001 (JP)**
- **YOSHIKATA Kuniaki**
**Tokyo 162-8001 (JP)**
- **HORIO Tomoyuki**
**Tokyo 162-8001 (JP)**
- **KATO Emiko**
**Tokyo 162-8001 (JP)**
- **KUBOTA Shosei**
**Tokyo 162-8001 (JP)**
- **SEGAWA Hiroaki**
**Tokyo 162-8001 (JP)**

(74) Representative: **Cabinet Beau de Loménie**
**158, rue de l'Université**
**75340 Paris Cedex 07 (FR)**

(54) **OPTICAL FILM, OPTICAL EFFECT FILM, EASILY ADHESIVE FILM, OPTICAL LAMINATE, SURFACE PLATE, IMAGE DISPLAY DEVICE, AND POLARIZING PLATE**

(57) [Object] To provide an optical film that is superior in visibility and with which environmental impacts can be reduced.

[Solution] An optical film for placing at least one functional layer thereon contains at least one polyester. The biomass content of the optical film is 10% or more, the total transmittance of the optical film is 70% or more, and the in-plane phase difference of the optical film is 3,000 nm or more and 30,000 nm or less.

EP 4 556 969 A1

(52) Cooperative Patent Classification (CPC): (Cont.)
**G02B 1/18; G02B 5/02; G02B 5/22; G02B 5/30; G02F 1/1335; G02F 1/13363; G09F 9/00; H05B 33/02; H05B 33/14; H10K 50/10; H10K 59/00**

## Description

### Technical Field

The present disclosure relates to an optical film, an optical effect film, an easily adhesive film, an optical multilayer body, a surface plate, an image display device, and a polarizing plate.

### Background Art

An image display device includes various optical multilayer bodies for purposes such as improving the visibility of images and reducing scratches on device surfaces. Such an optical multilayer body generally includes a plastic film as an optical film and at least one functional layer provided on this film (see, for example, PTL 1 and 2).

### Citation List

### Patent Literature

PTL 1: Japanese Unexamined Patent Application Publication No. 2007-046031
PTL 2: Japanese Unexamined Patent Application Publication No. 2012-256014

### Summary of Invention

In recent years, there has been a growing movement toward building a sustainable, recycling-oriented society. From the perspective of carbon neutrality, the materials field also faces the need to transition away from fossil fuels, similar to the energy sector.

An object of the present disclosure is to provide an optical film with which environmental impacts can be reduced.

An optical film according to a first embodiment of the present disclosure is an optical film for placing at least one functional layer thereon, the optical film containing at least one polyester, wherein a biomass content of the optical film is 10% or more, a total transmittance of the optical film is 70% or more, and an in-plane phase difference of the optical film is 3,000 nm or more and 30,000 nm or less.

An optical film according to a second embodiment of the present disclosure is an optical film for placing at least one functional layer thereon, the optical film containing at least one polyester, wherein a biomass content of the optical film is 10% or more, a total transmittance of the optical film is 70% or more, and an in-plane phase difference of the optical film is 1,500 nm or less.

An optical effect film according to a third embodiment of the present disclosure contains at least one polyester, wherein the optical effect film has a biomass content of 10% or more, a total transmittance of 70% or more, and a yellowness index (YI) of -1.0 or greater and 2.5 or less.

An easily adhesive film according to a fourth embodiment of the present disclosure includes a polyester film and at least one easily adhesive layer, wherein the polyester film contains at least one polyester, a biomass content of the easily adhesive film is 10% or more, a total transmittance of the easily adhesive film is 70% or more, an average $\delta q/\delta a$ of a surface of the easily adhesive layer is 3.10 or less, and the easily adhesive film is for providing at least one functional layer on the easily adhesive layer.

An optical multilayer body according to a fifth embodiment of the present disclosure includes a resin substrate and at least one functional layer provided on the resin substrate, wherein when a reduced elastic modulus of the functional layer is defined as $E_rB$, and a reduced elastic modulus of the resin substrate is defined as $E_rA$, $E_rB$ is 1.0 GPa or more and 10.0 GPa or less, and $E_rB/E_rA$ is 0.50 or greater and 2.00 or less, a biomass content of the optical multilayer body is 10% or more, and a total transmittance of the optical multilayer body is 70% or more.

According to the present disclosure, there is provided an optical film with which environmental impacts can be reduced.

### Brief Description of Drawings

[Fig. 1] Fig. 1 is a cross-sectional view schematically illustrating an embodiment of an optical film.

[Fig. 2] Fig. 2 is an outline cross-sectional view of a device for measuring the erosion rate.

[Fig. 3] Fig. 3 is an illustrative diagram of an optical film being worn by a test solution containing purified water and spherical silica ejected from an ejecting section.

[Fig. 4] Fig. 4 is a cross-sectional view schematically illustrating an embodiment of an optical film.

[Fig. 5] Fig. 5 is a cross-sectional view schematically illustrating an embodiment of an optical multilayer body.

[Fig. 6] Fig. 6 includes diagrams schematically illustrating a repeated folding test in progress.

[Fig. 7] Fig. 7 is a cross-sectional view schematically illustrating an embodiment of an optical multilayer body.

[Fig. 8] Fig. 8 is a cross-sectional view schematically illustrating an embodiment of an optical multilayer body.

Description of Embodiments

When multiple candidate upper limits and multiple candidate lower limits are listed for a certain parameter herein, the numerical range of that parameter may be constituted by pairing any one candidate upper limit with any one candidate lower limit. As an example, the following statement is described: "Parameter B may be A1 or more, may be A2 or more, or may be A3 or more. Parameter B may be A4 or less, may be A5 or less, or may be A6 or less." In this example, the numerical range of parameter B may be from A1 to A4, both inclusive, may be from A1 to A5, both inclusive, may be from A1 to A6, both inclusive, may be from A2 to A4, both inclusive, may be from A2 to A5, both inclusive, may be from A2 to A6, both inclusive, may be from A3 to A4, both inclusive, may be from A3 to A5, both inclusive, or may be from A3 to A6, both inclusive.

As used herein, terms such as "film," "sheet," and "plate" are not differentiated from each other solely based on the difference in name. This means that a "film," for example, encompasses an element that may also be referred to as a sheet or a plate. As one specific example, an "optical film" and an "optical effect film" encompass an element that may also be referred to as an "optical sheet" or an "optical plate."

Herein, the atmosphere during the measurement of parameters is at a temperature of 23°C $\pm$ 5°C and a relative humidity of 40% or more and 65% or less unless otherwise specified. Unless otherwise stated, furthermore, the sample is exposed to this atmosphere for 30 minutes or more and 60 minutes or less before each measurement. Examples of parameters include nx - ny, Re, total transmittance, and haze.

<u>First Embodiment</u>

A first embodiment of the present disclosure relates to an optical film.

A first embodiment of the present disclosure will now be described. First, the problems to be solved by the first embodiment will be described. An image display device includes various optical multilayer bodies for purposes such as improving the visibility of images and reducing scratches on device surfaces. Such an optical multilayer body generally includes a plastic film as an optical film and at least one functional layer provided on this film (see, for example, Japanese Unexamined Patent Application Publication No. 2007-046031 and Japanese Unexamined Patent Application Publication No. 2012-256014).

For use as the plastic film, polyester films, such as a polyethylene terephthalate film, have been proposed. When a polyester film is applied to an image display device that emits polarized light, such as a liquid crystal display device or OLED display device, however, rainbow-like interference patterns, referred to as rainbow effects, can occur, potentially reducing visibility.

In recent years, furthermore, there has been a growing movement toward building a sustainable, recycling-oriented society. From the perspective of carbon neutrality, the materials field also faces the need to transition away from fossil fuels, similar to the energy sector.

An object of the first embodiment of the present disclosure is to provide an optical film that is superior in visibility and with which environmental impacts can be reduced.

According to the first embodiment of the present disclosure, there is provided an optical film that is superior in visibility and with which environmental impacts can be reduced. Even when a biomass material-derived polyester is used, furthermore, an optical film having optical properties and mechanical properties comparable to those achieved with a fossil fuel-derived polyester can be provided.

[Optical Film]

Herein, an optical film is a film through which light can be transmitted.
The optical film 1 according to the first embodiment of the present disclosure has, as illustrated in Fig. 1, a first surface 1a and a second surface 1b opposite the first surface 1a. The polyester film described later also has a first surface and a second surface opposite the first surface. When the first surface and the second surface are not specifically distinguished, "surface" may simply be used. The optical film has, within its plane, a first direction and a second direction perpendicular to the first direction. The first direction is, in the first embodiment, the longitudinal direction, flow direction, or machine direction (MD) of the optical film. The second direction is, in the first embodiment, the transverse direction or width direction (TD) of the optical film. In the following description of the first embodiment of the present disclosure, mentioning an "optical film" is intended to refer to the optical film according to the first embodiment of the present disclosure, unless specifically distinguished.
The optical film includes, in the first embodiment, at least a polyester film.
A polyester film is a film containing at least one polyester.
The optical film consists of, in the first embodiment, a polyester film.
The optical film includes, in the first embodiment, a polyester film and at least one easily adhesive layer provided on the polyester film. Herein, an optical film that includes a polyester film and at least one easily adhesive layer may be specifically referred to as an "easily adhesive film."

<Polyester>

The optical film and the polyester film each contain at least one polyester.
Polyester refers to a copolymer of at least a diol component and a dicarboxylic acid component. The optical film contains, as the polyester, at least a biomass material-derived polyester (hereinafter also referred to as "a biomass polyester"). The polyester film contains, in the first embodiment, at least a biomass polyester as the polyester. By weighing a biomass polyester as a raw material for the optical film and the polyester film and designating it as a raw material for the films, the biomass content of the films can be specified, and the quality of the films can also be controlled, in advance.
Biomass polyester refers to a polyester in which at least a subset of the starting monomers is monomer(s) derived from a biomass material, such as a plant. Examples of plants include sugarcane and corn. Fossil fuel-derived polyester refers to a polyester in which all of the starting monomers are monomers derived from fossil fuels, such as petroleum.
An example of a biomass polyester is a polyester that has diol units derived from diol components and dicarboxylic acid units derived from dicarboxylic acid components and in which at least a subset of the diol components and/or at least a subset of the dicarboxylic acid components is derived from a biomass material.
For the biomass polyester, it is preferred that its biomass content, which will be described later herein, be high because in that case it can contribute to reducing environmental impacts. It is, however, not necessarily required for the biomass content to be 100%; the biomass polyester may have a fossil fuel-derived monomer unit.
Examples of biomass polyesters include polyesters having a diol unit derived from biomass material-derived ethylene glycol and a dicarboxylic acid unit derived from a fossil fuel-derived dicarboxylic acid component, polyesters having a diol unit derived from fossil fuel-derived ethylene glycol and a dicarboxylic acid unit derived from a biomass material-derived dicarboxylic acid component, and polyesters having a diol unit derived from biomass material-derived ethylene glycol and a dicarboxylic acid unit derived from a biomass material-derived dicarboxylic acid component. Polyesters having a diol unit derived from biomass material-derived ethylene glycol and a dicarboxylic acid unit derived from a fossil fuel-derived dicarboxylic acid component are preferred because they are readily available or easy to manufacture. Polyesters having a diol unit derived from biomass material-derived ethylene glycol, a dicarboxylic acid unit derived from a fossil fuel-derived dicarboxylic acid component, and a dicarboxylic acid unit derived from a biomass material-derived dicarboxylic acid component, furthermore, are also preferred. By specifying the biomass content of the polyester at the stage of raw materials for the films and designating this polyester as a raw material for the films, the biomass content of the films can be specified, and the quality of the films can also be controlled, in advance.
Biomass material-derived ethylene glycol is obtained from ethanol produced using a biomass material as a raw material (hereinafter also referred to as "biomass ethanol"). For example, biomass material-derived ethylene glycol can be obtained using methods such as the method of producing ethylene glycol from biomass ethanol via ethylene oxide. Commercially available biomass material-derived ethylene glycol may also be used.
Examples of diol components also include, in addition to ethylene glycol, diethylene glycol, triethylene glycol, propanediol, butanediol, 2-methyl-1,3-propanediol, pentanediol, hexanediol, neopentyl glycol, cyclohexanedimethanol, cyclohexanediethanol, decahydronaphthalenedimethanol, decahydronaphthalenediethanol, norbornanedimethanol, norbornanediethanol, tricyclodecanedimethanol, tricyclodecanediethanol, tetracyclododecanedimethanol, tetracyclododecanediethanol, decalin dimethanol, decalin diethanol, 5-methylol-5-ethyl-2-(1,1-dimethyl-2-hydroxyethyl)-1,3-dioxane, cyclopentanediol, 3-methyl-1,2-cyclopentanediol, 4-cyclopenten-1,3-diol, cyclohexanediol, bicyclohexyl-4,4'-diol,

2,2-bis(4-hydroxycyclohexylpropane), 2,2-bis(4-(2-hydroxyethoxy)cyclohexyl)propane, adamantanediol, paraxylene glycol, bisphenol A, bisphenol S, and styrene glycol.

One or two or more diol components can be used.

Examples of dicarboxylic acid components include dicarboxylic acids and derivatives thereof. Examples of dicarboxylic acids include aromatic dicarboxylic acids and aliphatic dicarboxylic acids. Examples of derivatives of dicarboxylic acids include alkyl esters (monoalkyl esters or dialkyl esters) and acid anhydrides of dicarboxylic acids.

Examples of aromatic dicarboxylic acids include terephthalic acid, isophthalic acid, orthophthalic acid, naphthalene dicarboxylic acids (e.g., 1,4-naphthalenedicarboxylic acid, 1,5-naphthalenedicarboxylic acid, 2,5-naphthalenedicarboxylic acid, and 2,6-naphthalenedicarboxylic acid and 1,8-naphthalenedicarboxylic acid), 4,4'-diphenyldicarboxylic acid, 4,4'-diphenyletherdicarboxylic acid, diphenoxyethanedicarboxylic acid, diphenylsulfondicarboxylic acid, anthracenedicarboxylic acid, phenanthrenedicarboxylic acid, 9,9'-bis(4-carboxyphenyl)fluorene acid, and furandicarboxylic acid. Examples of derivatives of aromatic dicarboxylic acids include alkyl esters of aromatic dicarboxylic acids, specifically methyl esters, ethyl esters, propyl esters, and butyl esters. Of these, terephthalic acid, naphthalenedicarboxylic acids, and furandicarboxylic acid and alkyl esters thereof are particularly preferred.

Examples of aliphatic dicarboxylic acids include chain dicarboxylic acids and alicyclic dicarboxylic acids. Examples of chain dicarboxylic acids include oxalic acid, malonic acid, methylmalonic acid, dimethylmalonic acid, ethylmalonic acid, succinic acid, 3,3-diethylsuccinic acid, glutaric acid, 2,2-dimethylglutaric acid, adipic acid, 2-methyladipic acid, trimethyladipic acid, pimelic acid, suberic acid, sebacic acid, azelaic acid, dodecanedioic acid, eicosadienoic acid, and dimer acid. Examples of alicyclic dicarboxylic acids include adamantanedicarboxylic acid, norbornenedicarboxylic acid, cyclopentanedicarboxylic acid, cyclohexanedicarboxylic acid, decalin dicarboxylic acid, hexahydroterephthalic acid, and hexahydroisophthalic acid. Examples of derivatives of aliphatic dicarboxylic acids include alkyl esters of aliphatic dicarboxylic acids, such as methyl esters, ethyl esters, propyl esters, and butyl esters, and cyclic acid anhydrides of aliphatic dicarboxylic acids, such as succinic anhydride.

Examples of biomass material-derived dicarboxylic acids include aliphatic dicarboxylic acids obtained from vegetable raw materials, such as vegetable oils, e.g., soybean oil, linseed oil, paulownia oil, coconut oil, palm oil, and castor oil, and recycled oils made from sources such as waste cooking oils that are primarily such vegetable oils as listed above. Examples of biomass material-derived aliphatic dicarboxylic acids include succinic acid, glutaric acid, adipic acid, sebacic acid, and dimer acid.

One or two or more dicarboxylic acid components can be used.

The polyester may be a copolymeric polyester having a copolymerization unit derived from a copolymerization component as a third component in addition to a diol unit and a dicarboxylic acid unit. Examples of copolymerization components include bifunctional oxycarboxylic acids, as well as trifunctional or higher-functionality polyhydric alcohols, trifunctional or higher-functionality polycarboxylic acids, anhydrides of such polycarboxylic acids, and trifunctional and higher-functionality oxycarboxylic acids, which are for forming a crosslink structure.

Specific examples of polyesters include polyethylene terephthalate (PET), polybutylene terephthalate (PBT), polytrimethylene terephthalate (PTT), polyethylene naphthalate (PEN), polybutylene naphthalate (PBN), and polyethylene furanoate (PEF). Of these, PET is particularly preferred because it results in an optical film superior in mechanical strength. As for biomass polyesters, specific examples include such types of polyesters produced using biomass material-derived monomer(s) as a subset or all of the starting monomers (the diol component and the dicarboxylic acid component).

Regarding the composition of the polyester, the percentage of each unit can be quantified using 1H-NMR and 13C-NMR after dissolving the polyester in hexafluoroisopropanol (HFIP).

The polyester can be obtained using methods known in the related art in which at least a diol component and a dicarboxylic acid component are polycondensed. Specifically, the polyester can be produced using the standard method for melt polymerization, which involves directly initiating the polycondensation reaction between the diol component and the dicarboxylic acid component or causing esterification reaction and/or transesterification reaction between the diol component and the dicarboxylic acid component and then initiating polycondensation reaction under reduced pressure, or a known solution-heating dehydrative condensation method using an organic solvent. The amount of the diol component used in producing the polyester may be substantially equimolar to 100 moles of the dicarboxylic acid component, but the amount may be more than 100 moles and 120 moles or less because distillation during the reaction generally occurs.

The optical film can contain one or two or more polyesters.

The polyester film can contain one or two or more polyesters.

The optical film may further contain a fossil fuel-derived polyester in addition to the biomass polyester. The polyester film may further contain a fossil fuel-derived polyester in addition to the biomass polyester. With the inclusion of a biomass polyester in the optical film or polyester film at least as part of it, the amount of fossil fuel-derived polyesters can be decreased, and thus environmental impacts can be reduced, compared to known films.

The optical film may contain a recycled material-derived polyester. The polyester contained in the optical film may be a recycled material-derived polyester that is also a biomass polyester. A subset of polyesters contained in the optical film may be recycled material-derived polyester(s). In that case, another subset of the polyesters contained in the optical

film, which is not the recycled material-derived polyester(s), may be biomass polyester(s). The recycled material-derived polyester may be recycled PET. The recycled material-derived polyester may be a polyester derived from a raw material produced through recycling. More specifically, at least either one of recycled material-derived ethylene glycol or a recycled material-derived dicarboxylic acid component may be used as a raw material for the recycled material-derived polyester.

The percentage of the polyester in the optical film may be more than 50% by mass, may be 60% by mass or more, may be 70% by mass or more, may be 80% by mass or more, may be 90% by mass or more, or may be 95% by mass or more.

The percentage of the polyester in the polyester film may be more than 50% by mass, may be 60% by mass or more, may be 70% by mass or more, may be 80% by mass or more, may be 90% by mass or more, or may be 95% by mass or more.

The optical film and the polyester film may each contain additives. Examples of additives include ultraviolet absorbers, photostabilizers, antioxidants, heat stabilizers, antistatic agents, slippery particles, heat-resistant polymer particles, alkali metal compounds, alkaline earth metal compounds, phosphorus compounds, flame retardants, gel inhibitors, and surfactants. The optical film and the polyester film can each contain one or two or more additives.

<Structure of the Polyester Film>

The polyester film may have a single-layer structure or may have a multilayer structure. A film having a single-layer structure allows for easier control of stretching. A film having a multilayer structure allows effects to be easily obtained by changing the composition of each layer.

For a polyester film having a multilayer structure, the biomass polyester only needs to be contained in at least one layer. For example, a multilayer film including a layer containing a biomass polyester as its base ingredient with a layer containing a fossil fuel-derived polyester as its base ingredient is superior in stretchability. As used herein, a layer containing a certain polymer as its base ingredient refers to a layer in which the percentage of the polymer is more than 50% by mass. The percentage of the polymer may be 60% by mass or more, may be 70% by mass or more, may be 80% by mass or more, or may be 90% by mass or more.

Examples of polyester films having a multilayer structure include:

(1A) a multilayer film including two or three or more layers,
each containing a biomass polyester as its base ingredient;

(2A) a multilayer film including

a layer containing a biomass polyester as its base ingredient and

a layer containing a fossil fuel-derived polyester as its base ingredient;

(3A) a multilayer film including

a layer containing a biomass polyester as its base ingredient,

a layer containing a fossil fuel-derived polyester as its base ingredient, and

a layer containing a biomass polyester as its base ingredient in this order;

(4A) a multilayer film including

a layer containing a biomass polyester as its base ingredient,
a layer containing a biomass polyester as its base ingredient, and
a layer containing a fossil fuel-derived polyester as its base ingredient in this order; and

(5A) a multilayer film including

a layer containing a fossil fuel-derived polyester as its base ingredient,
a layer containing a biomass polyester as its base ingredient, and
a layer containing a fossil fuel-derived polyester as its base ingredient in this order.

Examples of polyester films having a multilayer structure, furthermore, include:

(1B) a multilayer film including two or three or more layers each having a biomass content of 10% or more;
(2B) a multilayer film including a layer having a biomass content of 10% or more and
a layer having a biomass content of less than 10%;
(3B) a multilayer film including a layer having a biomass content of 10% or more,

a layer having a biomass content of less than 10%, and
a layer having a biomass content of 10% or more in this order;

(4B) a multilayer film including a layer having a biomass content of 10% or more,

a layer having a biomass content of 10% or more, and
a layer having a biomass content of less than 10% in this order; and

(5B) a multilayer film including a layer having a biomass content of less than 10%,

a layer having a biomass content of 10% or more, and
a layer having a biomass content of less than 10% in this order. For the multilayer films of (1B) to (5B) above, however, the overall biomass content of the film is 10% or more.

The multilayer films of (1A) and (1B) above make great environmental contributions. The multilayer films of (2A) to (4A) and (2B) to (4B) above make great environmental contributions and are superior in stretchability. The multilayer films of (5A) and (5B) above can result in reduced impact of impurities that can separate out of the biomass polyester, for example on the functional layer placed on the optical film, as well as making great environmental contributions and being superior in stretchability.

A polyester film having a multilayer structure may be a coextruded resin film. For example, by shaping the constituent materials for the individual layers into films by coextrusion and subjecting the films to drawing treatment, a polyester film having a multilayer structure can be obtained.

The thickness of the optical film may be 10 μm or more, may be 15 μm or more, may be 20 μm or more, may be 25 μm or more, or may be 30 μm or more. Such an optical film is superior in mechanical strength. The same applies to the thickness of the polyester film.

The thickness of the optical film may be 200 μm or less, may be 180 μm or less, may be 160 μm or less, may be 140 μm or less, may be 120 μm or less, or may be 100 μm or less. Such an optical film is superior in bending resistance. The same applies to the thickness of the polyester film.

Herein, the thickness of an optical film and each layer of it is determined by selecting any 20 locations on a cross-sectional image of the optical film obtained using a scanning electron microscope (SEM) and calculating the average of the 20 locations. The 20 locations, however, are selected to ensure that they are not unevenly distributed. As for the acceleration voltage and magnification of the SEM, the acceleration voltage is preferably set to 1 kV or more and 10 kV or less, and the magnification is preferably set to 20 times or more and 7,000 times or less, both being selected according to the layer of interest.

Before the formation of the functional layer on it, the optical film may be subjected to physical treatments, such as corona discharge treatment and oxidation treatment, or may undergo prior coating with a paint referred to as an anchoring agent or primer, for improved adhesion.

The optical film, and the optical multilayer body described later, may be in sheet-shaped form, obtained by cutting into a predetermined size, or may be in roll-shaped form, which is a long sheet wound into a roll. The size of the sheet is, for example, approximately 2 inches or more and 500 inches or less in terms of maximum size. The maximum size refers to the maximum length between any two points in the plane of the optical film or optical multilayer body. For example, when the optical film or optical multilayer body is rectangular, the diagonal length of the rectangle serves as the maximum size. When the optical film or optical multilayer body is round, the diameter of the circle serves as the maximum size.

The width of the roll-shaped form may be, for example, 500 mm or more and 8,000 mm or less. The length of the roll-shaped form may be, for example, 100 m or more and 10,000 m or less. An optical film and an optical multilayer body in roll-shaped form can be used after being cut into a sheet to the size of, for example, an image display device. When cutting them, it is preferred to exclude the ends of the roll, where physical characteristics are variable.

The shape of the sheet may be polygonal, such as triangular, tetragonal, or pentagonal, may be round, or may be random and indefinite. More specifically, when the optical film and the optical multilayer body are in tetragonal shapes, the aspect ratio is not particularly limited, provided that they are acceptable as display screens. Examples include horizontal:vertical = 1:1, 4:3, 16:10, 16:9, 2:1, 5:4, and 11:8.

<Physical Characteristics of the Optical Film>

The physical characteristics that the optical film preferably has will now be described.

(Biomass Content)

The biomass content of the optical film is 10% or more, may be 12% or more, may be 15% or more, or may be 18% or more. With such an optical film, the reduction of environmental impacts can be sought. The higher the biomass content of the optical film, the more preferred; however, the biomass content may be, for example, 98% or less, may be 90% or less, may be 80% or less, may be 70% or less, may be 60% or less, may be 50% or less, may be 40% or less, or may be 30% or less.

As used herein, the "biomass content" (also referred to as biobased carbon content) is a value obtained by correcting pMC (percent Modern Carbon) with δ13C, where pMC is measured according to Method B of ASTM D6866-22. Specifically, a sample is combusted to produce carbon dioxide (CO2), and the carbon dioxide is purified in a vacuum line. The purified carbon dioxide is reduced with hydrogen using iron as a catalyst, causing the formation of graphite. Then the 14C count and carbon isotopic ratios (14C/12C and 13C/12C) of the resulting graphite are measured by accelerator mass spectrometry (AMS). The measuring instrument can be a dedicated system for 14C-AMS (manufactured by NEC Corporation). The standard sample is oxalic acid provided by the National Institute of Standards and Technology (NIST) (HOxII). In addition to this standard sample, the measurement of a background sample is simultaneously performed. From the carbon isotopic ratios obtained, the relative proportion of the 14C/12C of the sample to that of the standard sample (pMC) is calculated. δ13C is a value obtained by measuring the 13C/12C of the sample carbon and expressing the difference from that of the reference sample as a permillage.

Due to the excessive presence of 14C in the atmosphere as a result of nuclear tests, the biobased carbon content is a value obtained by multiplying pMC by a correction factor. Since the amount of surplus 14C in the atmosphere is continuously decreasing, the correction factor is that according to ASTM D6866-22.

Whereas fossil fuel-derived materials are free of radioactive carbon with a mass number of 14 (14C), vegetable-derived materials contain 14C. Owing to this, they can be distinguished using a biomass content based on the amount of 14C. As such, fossil fuel-derived materials are known to have a biomass content of substantially 0%. The biomass content is a measure representing the proportion of mixing between fossil fuel-derived materials and vegetable-derived materials.

When the overall biomass content of the optical film is measured, the sample can be prepared from the optical film. When the biomass content of each layer in the optical film is measured, the sample can be prepared after separating the layer of interest from the optical film.

(In-Plane Phase Difference (Re))

The in-plane phase difference (Re) of the optical film is 3,000 nm or more and 30,000 nm or less. Herein, an "in-plane phase difference" is calculated according to the equation: In-plane phase difference (Re) = (nx - ny) × T [nm]. An "in-plane phase difference" is also referred to as retardation, and its unit is a unit for length. The T in the above equation represents the thickness [nm] of the optical film.

"nx" is the refractive index in the slow axis direction, the direction with the highest refractive index in the plane of the optical film. "ny" is the refractive index in the fast axis direction, which is the direction perpendicular to the slow axis direction in the plane of the optical film. The refractive indices and the in-plane phase difference represent the refractive indices and in-plane phase difference for a wavelength of 550 nm. The direction of the slow axis and the in-plane phase difference are measured at a measurement angle of 0° using trade name "RETS-100," manufactured by Otsuka Electronics Co., Ltd. nx - ny can be calculated from thickness information of the optical film, in addition to the in-plane phase difference measured with "RETS-100."

As used herein, nx - ny and Re represent the averages of measurements at 16 locations excluding the minimum and maximum from measurements at 18 locations. Herein, measurement locations are selected from any locations free of defects, such as scratches or stains.

The difference in refractive index "nx - ny" (hereinafter also referred to as "Δn") may be 0.040 or greater or may be 0.050 or greater. When Δn is 0.040 or greater, the thickness of the optical film required to achieve the desired in-plane phase difference can be reduced. Δn may be 0.250 or less or may be 0.200 or less. When Δn is 0.250 or less, the tear and breakage of the optical film can be reduced because there is no need to excessively draw the optical film.

The refractive index in the slow axis direction (nx) may be 1.660 or greater or may be 1.680 or greater. The refractive index in the slow axis direction (nx) may be 1.780 or less or may be 1.730 or less. The refractive index in the fast axis direction (ny) may be 1.550 or greater or may be 1.570 or greater. The refractive index in the fast axis direction (ny) may be 1.650 or less or may be 1.620 or less.

The optical film or polyester film is preferably an oriented film. The oriented film may be a uniaxially oriented film or

may be a biaxially oriented film. The biaxial orientation may be sequential biaxial orientation or may be simultaneous biaxial orientation.

An optical film having an in-plane phase difference of 3,000 nm or more and 30,000 nm or less is obtained as follows by sequential biaxial orientation, as an example. A resin composition containing a polyester is melted and shaped into a sheet by extrusion to give a cast film. The cast film is drawn in the flow direction and then drawn in the width direction of the film.

The drawing in the flow direction may be performed using, for example, differences in circumferential speed between rollers. The drawing factor in the flow direction may be 1.1 or greater or may be 1.2 or greater. The drawing factor in the flow direction may be 2.0 or less or may be 1.8 or less.

The drawing temperature during drawing in the flow direction may be the glass transition temperature of the polyester or above and the glass transition temperature plus 100°C or below for reduced variations in in-plane phase difference and other optical properties. For PET, this drawing temperature may be 70°C or above, may be 80°C or above, may be 140°C or below, or may be 130°C or below.

The drawing in the width direction may be performed using, for example, the tenter method. The drawing factor in the width direction may be 2.5 or greater or may be 3.0 or greater. The drawing factor in the width direction may be 6.0 or less or may be 5.5 or less. When the drawing factor in the width direction is 6.0 or less, the transparency of the film is excellent. When the drawing factor in the width direction is 2.5 or greater, a required level of stretching tension is achieved, and a large birefringence facilitates the attainment of the desired in-plane phase difference. It is preferred to set the drawing factor in the width direction higher than the drawing factor in the flow direction.

The drawing temperature during drawing in the width direction may be the glass transition temperature of the polyester or above and the glass transition temperature plus 120°C or below. For PET, this drawing temperature may be 80°C or above, may be 90°C or above, may be 160°C or below, or may be 150°C or below. The drawing temperature during drawing in the width direction preferably increases from upstream to downstream. Specifically, when the section for drawing in the width direction is divided into two, the difference between the upstream temperature and the downstream temperature may be 5°C or more, may be 20°C or more, or may be 30°C or more. For PET, the drawing temperature at the first stage may be 80°C or above, may be 90°C or above, may be 120°C or below, or may be 110°C or below.

The sequentially biaxially oriented film is preferably subjected to a heat treatment within the tenter at a temperature equal to or higher than the drawing temperature and equal to or lower than the melting point of the polyester to impart dimensional stability. The temperature during the heat treatment may be 120°C or above, may be 180°C or above, may be 260°C or below, or may be 250°C or below.

After the heat treatment of the sequentially biaxially oriented film, the film is cooled to room temperature and then is wound.

Optionally, relaxation treatment may be performed during the heat treatment and/or cooling. The percentage relaxation during the heat treatment may be 0.5% or more, may be 0.8% or more, may be 5% or less, or may be 3% or less for reduced variations in optical properties. The percentage relaxation during cooling may be 0.5% or more, may be 0.8% or more, may be 3% or less, or may be 2% or less for reduced variations in optical properties. The temperature for relaxation treatment during cooling may be 80°C or above, may be 90°C or above, may be 150°C or below, or may be 130°C or below for the dimensional stability of the film.

Polyesters are superior in transparency, heat resistance, and mechanical properties and allow the in-plane phase difference to be controlled over a wide range through drawing work. An optical film containing a polyester has a large intrinsic birefringence, allowing it to retain a large in-plane phase difference even with a small thickness.

A method for controlling the in-plane phase difference of the optical film to be 3,000 nm or more and 30,000 nm or less is the method of selecting the drawing factors, the drawing temperatures, and the thickness of the produced optical film as appropriate. Specifically, the higher the drawing factor ratios, the larger the in-plane phase difference. The lower the drawing temperatures, the larger the in-plane phase difference. The larger the thickness, the larger the in-plane phase difference. The closer the drawing factor ratios are to 1, the smaller the in-plane phase difference. The higher the drawing temperatures, the smaller the in-plane phase difference. The smaller the thickness, the smaller the in-plane phase difference.

When polarized light passes through a film having birefringence, rainbow effects can be observed on the film. Rainbow effects are rainbow-colored fringes and reduce the visibility of the film. The polarized light is, for example, image light emitted from a liquid crystal display element or an OLED display element including a functional layer that reduces reflection through polarization control. Rainbow effects can be observed with the naked eye, but they can be more clearly observed through a polarizing plate, such as polarized sunglasses. When rainbow-colored fringes occur on a displayed image, the quality of the displayed image degrades.

Rainbow effects are presumed to occur due to causes such as the following. In general, when light passes through a component having an in-plane phase difference, its polarization state changes. When an element having an in-plane phase difference is placed between two polarizing plates, therefore, visible light transmittance values for different wavelengths of the transmitted light change according to the in-plane phase difference of the element. As a result of this,

light that passes through a film having an in-plane phase difference placed between two polarizing plates is visually perceived in a color corresponding to the in-plane phase difference of the film. When the in-plane phase difference varies from position to position in the film plane of the film, furthermore, the color of the transmitted light also varies from position to position in the film plane of the film. The inventors, therefore, presume that rainbow effects are caused by light in a polarized state passing through a film with varying in-plane phase differences and experiencing a change in its polarized state.

The larger the in-plane phase difference of the optical film, the greater the changes in visible light transmittance for different wavelengths in response to a given change in in-plane phase difference. The larger the in-plane phase difference, furthermore, the more easily light with multiple wavelengths is transmitted, and the more likely the transmitted light is to be visually perceived as a mixed color. Even when variations in in-plane phase difference exist, therefore, a decrease in transmittance for a certain wavelength is accompanied by an increase in transmittance for another wavelength because visible light transmittance values for different wavelengths greatly change. As a result of this, changes in the mixed color of the transmitted light are difficult to notice, as long as they are visually observed. When the in-plane phase difference of the optical film is 3,000 nm or more, the changes in visible light transmittance for different wavelengths according to the in-plane phase difference are large, and even if visible light transmittance values change due to variations in in-plane phase difference, the colors are visually perceived as a mixture, making changes in color difficult to notice. Rainbow effects, therefore, can be effectively obscured. For this reason, the in-plane phase difference of the optical film is 3,000 nm or more, may be 4,000 nm or more, or may be 5,000 nm or more. With an optical film having such an in-plane phase difference, rainbow effects can be effectively obscured. For reduced tear and breakage during drawing, furthermore, the in-plane phase difference of the optical film is 30,000 nm or less, may be 25,000 nm or less, may be 20,000 nm or less, or may be 15,000 nm or less.

(Phase Difference in the Thickness Direction (Rth))

Herein, "the in-plane phase difference (Re) of an optical film divided by the phase difference in the thickness direction (Rth) of the optical film" is expressed as "Re/Rth." Herein, "Rth" is a parameter that indicates the average of retardations obtained by multiplying each of the two types of birefringence $\Delta Nxz$ (= |nx - nz|) and $\Delta Nyz$ (= |ny - nz|) as viewed in a cross-section in the thickness direction of the film by the film thickness T. Specifically, Rth is calculated according to the equation: Rth = ($\Delta Nxz \times T + \Delta Nyz \times T$)/2." The definitions of "nx" and "ny" are as described above, and "nz" is the refractive index of the optical film in the thickness direction. The refractive indices and Rth represent the refractive indices and Rth at a wavelength of 550 nm. Rth is measured at a measurement angle of 0° using trade name "RETS-100," manufactured by Otsuka Electronics Co., Ltd.

The Re/Rth of the optical film may be 0.2 or greater or may be 0.5 or greater for reduced occurrence of rainbow effects associated with the observation angle. The Re/Rth of the optical film may be 1.2 or less or may be 1.0 or less for mechanical strength reasons. Rth can be adjusted by controlling the drawing factor ratios of the optical film.

As used herein, Rth represents the average of measurements at 16 locations excluding the minimum and maximum from measurements at 18 locations. Herein, measurement locations are selected from any locations free of defects, such as scratches or stains.

(Maximum Strain in the Primary Orientation Axis)

For the optical film, the maximum strain in its primary orientation axis as measured using a microwave-transmission molecular orientation analyzer may be 7° or less, may be 6° or less, may be 5° or less, or may be 4° or less. With a surface plate for image display devices including such an optical film, decreases in the visibility of the product, for example caused by light leakage during black display and changes in displayed color due to phase differences, can be reduced. The maximum strain in the primary orientation axis is 0° or more, with lower strain being more preferred; however, the maximum strain is not particularly limited.

The maximum strain in the primary orientation axis can be adjusted to the above upper limits or lower by, for example, adjusting the temperature and drawing factor during drawing in the flow direction, the temperature and drawing factor during drawing in the width direction, and the temperature for heat treatment, during the manufacture of the film.

The maximum strain in the primary orientation axis can be measured as follows. When the shape of the film is roll-shaped, a rectangular film measuring 1000 mm in the machine direction and the full length in the width direction is cut out from the roll-shaped optical film. With the middle in the width direction of this film as the baseline, multiple 100-mm square films are cut out at the positions 300 mm apart in the width direction. The sides of these square films are aligned with the machine direction and the width direction. When the shape of the film is sheet-shaped, a rectangle with the largest area that fits within the shape of the sample is drawn, and 100-mm square films sharing two sides with the four corners of the rectangle are cut out from the corners. For the extracted sample films, the direction of molecular orientation (primary orientation axis) of each is measured using a microwave-transmission molecular orientation analyzer. With the width direction of the film as 0°, the difference from 0° is determined if the molecular orientation angle with respect to the width

direction is smaller than 45°, or the difference from 90° is determined if the molecular orientation angle is greater than 45°. The molecular orientation angle with the largest absolute value is defined as the maximum angle, and it is reported as the maximum strain in the primary orientation axis. As the microwave-transmission molecular orientation analyzer, a molecular orientation analyzer manufactured by Kanzaki Paper Manufacturing Co., Ltd. (MOA-2001A) is used.

(Total Transmittance and Haze)

The total transmittance of the optical film may be 70% or more, may be 75% or more, may be 80% or more, may be 85% or more, or may be 90% or more. The higher the total transmittance of the optical film, the more preferred; however, the total transmittance may be 99% or less, may be 98% or less, or may be 95% or less. The total transmittance is measured according to JIS K7361-1: 1997.

The haze of the optical film may be 3.0% or less, may be 2.5% or less, may be 2.0% or less, may be 1.5% or less, or may be 1.0% or less. The lower the haze of the optical film, the more preferred; however, the haze may be 0.1% or more, may be 0.2% or more, or may be 0.3% or more. The haze is measured according to JIS K7136: 2000.

(Martens Hardness)

The Martens hardness on at least one surface of the optical film may be 110 N/mm2 or more and 170 N/mm2 or less. An optical film having a Martens hardness of 110 N/mm2 or more has high hardness and is superior in abrasion resistance and wear resistance. An optical film having a Martens hardness of 170 N/mm2 or less is superior in foldability. The Martens hardness can be adjusted by aligning the molecular orientation through a drawing treatment of the film.

The Martens hardness on at least one surface of the optical film may be 115 N/mm2 or more, may be 120 N/mm2 or more, may be 125 N/mm2 or more, may be 130 N/mm2 or more, may be 135 N/mm2 or more, or may be 140 N/mm2 or more. The Martens hardness on at least one surface of the optical film may be 165 N/mm2 or less or may be 160 N/mm2 or less.

In the first embodiment, it is preferred that at least one of the first surface or second surface of the optical film have a Martens hardness as specified above, and it is more preferred that both of the first surface and the second surface have a Martens hardness as specified above. In the first embodiment, the Martens hardness represents the average of measurements at 20 locations excluding the minimum and maximum from measurements at 22 locations. In the first embodiment, measurement locations are selected from any locations free of defects, such as scratches or stains.

The standard deviation $3\sigma$ of the Martens hardness on at least one surface of the optical film is preferably 45 N/mm2 or less. An optical film for which the standard deviation of the Martens hardness is 45 N/mm2 or less is superior in foldability. This standard deviation may be 40 N/mm2 or less, may be 35 N/mm2 or less, may be 30 N/mm2 or less, may be 25 N/mm2 or less, or may be 20 N/mm2 or less for foldability reasons. The smaller this standard deviation, the more preferred; however, this standard deviation may be 1 N/mm2 or more or may be 5 N/mm2 or more. The standard deviation can be adjusted by the temperature during the formation of the optical film.

In the first embodiment, it is preferred that at least one of the first surface or second surface of the optical film have a standard deviation of the Martens hardness as specified above, and it is more preferred that both of the first surface and the second surface have a standard deviation of the Martens hardness as specified above. In the first embodiment, the standard deviation of the Martens hardness represents the standard deviation across measurements at 20 locations.

Herein, Martens hardness is measured by nanoindentation. First, indentation depths h (nm) corresponding to indentation loads F (N) are continuously measured, and the loading-unloading curve is created. The "loading-unloading curve" may also be referred to as the "load-displacement curve." The "maximum indentation depth hmax" is determined through analysis from the loading curve, and the projected area AC (mm2) at hmax is also determined through analysis. The projected area AC represents the area over which the indenter and the optical film are in contact. The Martens hardness HM can be calculated as the maximum indentation load Pmax (N) divided by the projected area AC (equation (1) below).

$$HM = Pmax/AC \ldots (1)$$

In this equation, AC is the projected contact area corrected for the indenter tip curvature using the standard method for the analyzer.

The Martens hardness can be measured using an analyzer capable of nanoindentation. Such an analyzer can be Fischer Instruments K.K.'s product number "PICODENTOR HM500."

The Martens hardness is measured under the following conditions.

<Measurement Conditions>

- Indenter used: Vickers indenter (diamond, pyramidal shape; model number, VV005; Fischer Instruments K.K.)
- Indentation conditions: Maximum load
- Maximum indentation load: 20 mN
- Loading time: 10 seconds
- Retention time: Retained for 5 seconds at the maximum indentation load
- Unloading time: 10 seconds
- Stage for sample placement: Suction stage (The suction stage is SMC Corporation's model number "SP2130-AD.")

(Percentage of Elastic Deformation Work)

The percentage of elastic deformation work on at least one surface of the optical film may be 60% or more and 70% or less. An optical film having a percentage of elastic deformation work of 60% or more is superior in foldability. An optical film having a percentage of elastic deformation work of 70% or less is superior in hardness.
The percentage of elastic deformation work can be determined by calculating each of the areas of the indentation work region, the elastic work region, and the plastic work region in the "loading-unloading curve" created in the measurement of the Martens hardness and then calculating the percentage according to the following equation.

Percentage of elastic deformation work [%] = (Area of the elastic work region/area of the indentation work region) $\times$ 100

Herein, the percentage of elastic deformation work represents the average of measurements at 20 locations excluding the minimum and maximum from measurements at 22 locations. Herein, measurement locations are selected from any locations free of defects, such as scratches or stains.
The standard deviation $3\sigma$ of the percentage of elastic deformation work is preferably 10% or less. An optical film for which the standard deviation of the percentage of elastic deformation work is 10% or less is superior in hardness. The smaller this standard deviation, the more preferred; however, this standard deviation may be 1% or more or may be 2% or more. The standard deviation can be adjusted by the temperature during the formation of the optical film.
In the first embodiment, it is preferred that at least one of the first surface or second surface of the optical film have a percentage of elastic deformation work as specified above, and it is more preferred that both of the first surface and the second surface have a percentage of elastic deformation work as specified above. In the first embodiment, it is preferred that at least one of the first surface or second surface of the optical film have a standard deviation of the percentage of elastic deformation work as specified above, and it is more preferred that both of the first surface and the second surface have a standard deviation of the percentage of elastic deformation work as specified above.

(Percentage Thermal Shrinkage)

Percentage thermal shrinkage 1 of the optical film, which is in the fast axis direction, may be 5.0% or less, may be 3.0% or less, or may be 2.5% or less. Percentage thermal shrinkage 1 may be 0% or more, may be 0.5% or more, or may be 1.0% or more.
Percentage thermal shrinkage 2 of the optical film, which is in the slow axis direction, may be 1.0% or less, may be 0.5% or less, or may be 0.3% or less. Percentage thermal shrinkage 2 may be 0% or more, may be 0.1% or more, or may be 0.2% or more.
The fast axis direction of an optical film typically corresponds to the machine direction (MD) of the optical film. The slow axis direction of an optical film typically corresponds to the width direction (TD) of the optical film. The slow axis direction and the fast axis direction can be, as mentioned above, measured at a measurement angle of 0° using trade name

"RETS-100," manufactured by Otsuka Electronics Co., Ltd.

The ratio (percentage thermal shrinkage 1/percentage thermal shrinkage 2) may be 6.0 or greater, may be 6.1 or greater, or may be 6.2 or greater. Such an optical film exhibits good interlayer adhesion when the functional layer is placed on it. The ratio (percentage thermal shrinkage 1/percentage thermal shrinkage 2) may be 15.0 or less, may be 13.0 or less, may be 11.0 or less, or may be 9.0 or less.

The percentage thermal shrinkage ratio, as well as the tensile strength ratio and the percentage elongation ratio, which will be described later, of the optical film can be controlled by, for example, the ratio between the drawing factors in the respective directions. Specifically, the larger the drawing factor in one direction is compared to the drawing factor in the other direction, the larger these ratios.

The percentage thermal shrinkage is measured under the conditions of 150°C and 30 minutes, and specifically is measured as follows. A film with a length of 250 mm, which is along the axis direction of interest (the fast axis direction or slow axis direction) of the film, and a width of 10 mm, which is in the direction perpendicular to the axial direction, is accurately cut out into a strip shape. The positions 25 mm away from both longitudinal ends of the strip are each marked (distance: 200 mm), and the distance A (mm) between the marks is read under a constant tension of 5 gf/10 mm. Subsequently, after heat treatment in an oven in an atmosphere at 150°C for 30 minutes without a load, the distance B (mm) between the marks is read under a constant tension of 5 gf/10 mm. These distances between marks are read in 0.5 mm increments using a stainless steel ruler, and the average of three measurements is determined and rounded to one decimal place. The percentage thermal shrinkage in the machine direction and that in the width direction of the film are determined according to the following equation.

$$\text{Percentage thermal shrinkage at } 150°\text{C } (\%) = (A - B)/A \times 100$$

(Tensile Strength)

Tensile strength 1 of the optical film, which is in the fast axis direction, may be 95 MPa or less, may be 90 MPa or less, or may be 85 MPa or less. Tensile strength 1 may be 55 MPa or more, may be 60 MPa or more, or may be 65 MPa or more.

Tensile strength 2 of the optical film, which is in the slow axis direction, may be 450 MPa or less, may be 400 MPa or less, or may be 350 MPa or less. Tensile strength 2 may be 200 MPa or more, may be 250 MPa or more, or may be 300 MPa or more.

The ratio (tensile strength 2/tensile strength 1) may be 2.0 or greater, may be 2.2 or greater, or may be 2.4 or more. Such an optical film exhibits good interlayer adhesion when the functional layer is placed on it. The ratio (tensile strength 2/tensile strength 1) may be 5.0 or less or may be 4.5 or less.

(Percentage Elongation)

Percentage elongation 1 of the optical film, which is in the fast axis direction, may be 10.0% or less, may be 7.0% or less, or may be 5.0% or less. Percentage elongation 1 may be 3.0% or more, may be 3.5% or more, or may be 4.0% or more.

Percentage elongation 2 of the optical film, which is in the slow axis direction, may be 95.0% or less, may be 85.0% or less, or may be 80.0% or less. Percentage elongation 2 may be 55.0% or more, may be 60.0% or more, or may be 65.0% or more.

The ratio (percentage elongation 2/percentage elongation 1) may be 6.5 or greater, may be 6.8 or greater, or may be 7.0 or greater. Such an optical film exhibits good interlayer adhesion when the functional layer is placed on it. The ratio (percentage elongation 2/percentage elongation 1) may be 20.0 or less, may be 15.0 or less, or may be 10.0 or less.

The tensile strength and percentage elongation are measured according to JIS K7127: 1999 under the following conditions: test speed, 25 mm/minute; temperature, 23°C. The percentage elongation (elongation at break) is expressed as percentage elongation (%) = $100 \times (L - L_O)/L_O$, where $L_O$, the length of the test specimen before testing; L, the length of the test specimen at break.

Herein, percentage thermal shrinkage, tensile strength, and percentage elongation each represent the average of measurements from ten different samples of the optical film.

(Erosion Rate)

When the average erosion rate from the surface of the optical film to a depth of 20 μm is defined as E0-20, the optical film may have an E0-20 of 0.80 μm/g or more. Such an optical film exhibits good pencil hardness.

Herein, E0-20 is measured under the following measurement conditions.

<Measurement Conditions>

A test solution obtained by mixing purified water, a dispersant, and a spherical silica whose average particle diameter is within ±8% of a standard of 4.2 μm in a ratio by mass (purified water:dispersant:spherical silica) = 968:2:30 is placed into a container. "Whose average particle diameter is within ±8% of a standard of 4.2 μm" means, in other words, that the average particle diameter is 3.864 μm or more and 4.536 μm or less.

The test solution in the container is delivered to a nozzle. Compressed air is delivered into the nozzle to accelerate the test solution within the nozzle, and a predetermined amount of the test solution is ejected from the ejection hole at the tip of the nozzle vertically onto the optical film, causing the spherical silica in the test solution to collide with the optical film. The cross-sectional shape of the nozzle is a 1 mm × 1 mm square, and the distance between the ejection hole and the optical film is set to 4 mm. The flow rates of the test solution and the compressed air supplied to the nozzle, the pressure of the compressed air, and the pressure of the test solution within the nozzle are set to predetermined values adjusted through the calibration described later.

After the predetermined amount of the test solution is ejected, the ejection of the test solution is temporarily stopped. After the ejection of the test solution is temporarily stopped, the cross-sectional profile is measured for the area of the optical film at which the spherical silica in the test solution has collided.

An operation in which the three steps of a step of ejecting a predetermined amount of the test solution from the ejection hole, a step of temporarily stopping the ejection of the test solution after ejecting the predetermined amount of the test solution, and a step of measuring the cross-sectional profile after temporarily stopping the ejection of the test solution constitute one cycle is carried out until the depth of the cross-sectional profile exceeds 20 μm. Then, for each cycle until a depth of the cross-sectional profile of 20 μm, the erosion rate (μm/g) of the optical film is calculated. The erosion rates of the optical film in the respective cycles until a depth of the cross-sectional profile of 20 μm are averaged, and thereby E0-20 is calculated.

<Calibration>

Before the measurement of the erosion rate described above, calibration is performed.

The test solution is placed into the container. The test solution in the container is delivered to a nozzle. Compressed air is delivered into the nozzle to accelerate the test solution within the nozzle, and any selected amount of the test solution is ejected from the ejection hole at the tip of the nozzle vertically onto an acrylic plate having a thickness of 2 mm, causing the spherical silica in the test solution to collide with the acrylic plate. The cross-sectional shape of the nozzle is a 1 mm × 1 mm square, and the distance between the ejection hole and the acrylic plate is set to 4 mm.

After the predetermined amount of the test solution is ejected, the ejection of the test solution is temporarily stopped. After the ejection of the test solution is temporarily stopped, the cross-sectional profile is measured for the area of the acrylic plate at which the spherical silica in the test solution has collided. The erosion rate (μm/g) of the acrylic plate, which is the depth (μm) of the cross-sectional profile divided by the selected amount (g), is calculated.

With the acceptance criterion being that the erosion rate of the acrylic plate is within a range of ±5% of a standard of 1.88 (μm/g), calibration is performed by adjusting the flow rates of the test solution and compressed air, the pressure of the compressed air, and the pressure of the test solution within the nozzle to bring the erosion rate of the acrylic plate within this range. "The erosion rate is within ±5% of a standard of 1.88 (μm/g)" means, in other words, that the erosion rate is 1.786 (μm/g) or more and 1.974 (μm/g) or less.

The test solution used in the calibration is the same as the test solution used under the subsequent measurement conditions. The measuring instrument used in the calibration is the same as the measuring instrument used under the subsequent measurement conditions. An example of a difference between the calibration and the subsequent measurement conditions is that whereas the sample used in the calibration is an acrylic plate having a thickness of 2 mm, which is the standard sample, the sample used under the measurement conditions is an optical film.

The acrylic plate having a thickness of 2 mm, which is the standard sample, is preferably a polymethyl methacrylate plate (PMMA plate). When the average erosion rate of the acrylic plate having a thickness of 2 mm, which is the standard sample, as measured under measurement conditions A below is defined as AcE, the acrylic plate is preferably one having an AcE of 1.786 μm/g or more and 1.974 μm/g or less. An example of the spherical silica in measurement conditions A below is model number "MSE-BS-5-3," which is specified by Palmeso Co., Ltd. An example of a spherical silica that qualifies as model number "MSE-BS-5-3," specified by Palmeso Co., Ltd., is Potters-Ballotini Co., Ltd.'s product number "BS5-3."

<Measurement Conditions A>

A test solution obtained by mixing purified water, a dispersant, and a spherical silica whose average particle diameter is within ±8% of a standard of 4.2 μm in a ratio by mass = 968:2:30 is placed into a container. The test solution in

the container is delivered to a nozzle. Compressed air is delivered into the nozzle to accelerate the test solution within the nozzle, and a predetermined amount of the test solution is ejected from the ejection hole at the tip of the nozzle vertically onto the acrylic plate, causing the spherical silica in the test solution to collide with the acrylic plate. The cross-sectional shape of the nozzle is a 1 mm × 1 mm square, and the distance between the ejection hole and the acrylic plate is set to 4 mm. As for the flow rates of the test solution and the compressed air supplied to the nozzle, the pressure of the compressed air, and the pressure of the test solution within the nozzle, the flow rate of the test solution is set to 100 ml/minute or more and 150 ml/minute or less, the flow rate of the compressed air is set to 4.96 L/minute or more and 7.44 L/minute or less, the pressure of the compressed air is set to 0.184 MPa or more and 0.277 MPa or less, and the pressure of the test solution within the nozzle is set to 0.169 MPa or more and 0.254 MPa or less.

After 4 g of the test solution is ejected, the ejection of the test solution is temporarily stopped. After the ejection of the test solution is temporarily stopped, the cross-sectional profile is measured for the area of the acrylic plate at which the spherical silica in the test solution has collided. AcE (with the unit "μm/g"), which is the erosion rate of the acrylic plate, given by dividing the depth (μm) of the cross-sectional profile by the amount of the test solution ejected (4 g), is calculated.

In the following, the technical significance of the measurement conditions for the erosion rate and the erosion rate calculated under the measurement conditions will be described with the citation of Fig. 2. An example of a measuring instrument for the erosion rate like that in Fig. 2 is model number "MSE-A203" of Palmeso Co., Ltd.'s MSE testing apparatus.

Under the measurement conditions for the erosion rate according to the present disclosure, a test solution obtained by mixing purified water, a dispersant, and a spherical silica whose average particle diameter is within ±8% of a standard of 4.2 μm in a ratio by mass = 968:2:30 is first placed into a container (11). Within the container (11), the test solution is preferably stirred. The dispersant is not particularly restricted, provided that the spherical silica can be dispersed with it. An example of a dispersant is Wako Pure Chemical Industries, Ltd.'s trade name "Demol N."

Under the measurement conditions for the erosion rate herein, the "average particle diameter of the spherical silica" is that measured as a volume average d50 in a particle size distribution measurement by laser light diffraction (It is the so-called "median diameter.").

For the spherical silica, it is preferred that the range of the particle diameters indicating a frequency of 50 be within ±10% of a standard of 4.2 μm when the frequency of the particle diameter with the highest frequency is normalized to 100 in the results of the particle size distribution measurement. The "range of the particle diameters indicating a frequency of 50" is the range represented by "X - Y (μm)" when "the particle diameter that indicates a frequency of 50 and is positioned in the positive direction relative to the particle diameter that indicates a frequency of 100" is defined as "X," and "the particle diameter that indicates a frequency of 50 and is positioned in the negative direction relative to the particle diameter that indicates a frequency of 100" is defined as "Y." It should be noted that the "range of the particle diameters indicating a frequency of 50" may be herein referred to as the "full width at half maximum of the particle size distribution."

An example of a spherical silica whose average particle diameter is within ±8% of a standard of 4.2 μm is model number "MSE-BS-5-3," which is specified by Palmeso Co., Ltd. An example of a spherical silica that qualifies as model number "MSE-BS-5-3," specified by Palmeso Co., Ltd., is Potters-Ballotini Co., Ltd.'s product number "BS5-3."

The test solution within the container is delivered into a nozzle (51). The test solution can be delivered to the nozzle through test solution piping (21). It is preferred that a flow meter (31) for measuring the flow rate of the test solution be placed between the container (11) and the nozzle (51). The flow rate of the test solution is set to the value adjusted through the calibration described above. In Fig. 2, the nozzle (51) is disposed within a housing (52) that constitutes an ejecting section (50).

Into the nozzle (51), compressed air is delivered. The compressed air is delivered to the nozzle through compressed air piping (22). It is preferred that within the nozzle, the point to which the compressed air is delivered be upstream of the point to which the test solution is delivered. Upstream refers to the side farther from the ejection hole of the nozzle.

It is preferred that there be a flow meter (32) for measuring the flow rate of the compressed air, as well as a pressure gauge (42) that measures the pressure of the compressed air, before the compressed air reaches the nozzle (51). The compressed air can be supplied using, for example, an air compressor, not illustrated.

The flow rate and the pressure of the compressed air are set to the values adjusted through the calibration described above.

When the compressed air is delivered into the nozzle (51), the test solution is accelerated by the compressed air while being mixed. The accelerated test solution is then ejected from an ejection hole at the tip of the nozzle (51) and vertically collides with the optical film (70). The optical film is worn primarily by spherical silica particles in the test solution.

It is preferred that a pressure gauge (41) that measures the pressure of the test solution within the nozzle be disposed within the nozzle (51). The pressure gauge (41) is preferably located downstream of the point to which the compressed air is delivered and the point to which the test solution is delivered.

The pressure of the test solution within the nozzle (51) is set to the value adjusted through the calibration described above.

The test solution ejected from the ejection hole at the tip of the nozzle (51) is mixed with air and ejected in a mist-like form. By virtue of this, the collision pressure of the spherical silica particles on the optical film can be reduced. The amount of wear on the optical film caused by a single spherical silica particle, therefore, can be reduced to an extremely small level.

Fig. 3 is an illustrative diagram of an optical film (70) is being worn by a test solution containing purified water (A1) and spherical silica (A2) ejected from an ejecting section (50). In Fig. 3, reference numeral A3 denotes air, and reference numeral A4 denotes the worn optical film.

Since the test solution contains water, which is superior in cooling effects, the deformation and alteration of the optical film caused by heat during collision can be virtually eliminated. That is, abnormal wear on the optical film can be virtually eliminated. The water also plays the role of washing the surface of the worn optical film to achieve stable wear. The water has roles such as accelerating the spherical silica particles and controlling the fluid of the test solution.

Since a vast number of spherical silica particles collide with the optical film, the influences of subtle differences in physical characteristics between the individual spherical silica particles can be eliminated.

The measurement conditions according to the present disclosure, furthermore, specify the factors that affect the amount of wear on the optical film by setting the flow rate of the test solution supplied to the nozzle, the flow rate of the compressed air supplied to the nozzle, the pressure of the compressed air supplied to the nozzle, and the pressure of the test solution within the nozzle to the values adjusted through the calibration described above and by specifying the cross-sectional shape of the nozzle as a 1 mm $\times$ 1 mm square and specifying the distance between the ejection hole and the optical film as 4 mm. The distance is the distance denoted by "d" in Fig. 2 and represents the vertical distance between the ejection hole, which is the tip of the nozzle, and the optical film. Based on this, it can be concluded that the measurement conditions according to the present disclosure are measurement conditions under which a statistically stable wear mark can be created on an optical film.

The optical film (70) can be simply attached to a sample mounting platform (81) of the measuring instrument (90). The optical film (70) is preferably attached to the sample mounting platform (81) with a support (82), such as a stainless steel plate, interposed therebetween.

The test solution ejected onto the optical film (70) is preferably collected at a receiving container (12) and returned to the container (11) via return piping (23). It is preferred that a return pump (24) be disposed between the receiving container (12) and the return piping (23).

Under the measurement conditions according to the present disclosure, it is required that the ejection of the test solution be temporarily stopped after a predetermined amount of the test solution is ejected, and that the cross-sectional profile of the area of the optical film at which the spherical silica in the test solution has collided be measured after the ejection of the test solution is temporarily stopped.

The cross-sectional profile refers to the cross-sectional shape of the optical film worn by the test solution. The optical film is worn primarily by spherical silica particles in the test solution. The cross-sectional profile can be measured using a cross-sectional profile acquisition section (60), for example of a surface shape measurement apparatus of stylus type or a surface shape measurement apparatus of laser interference type. During the ejection of the test solution, the cross-sectional profile acquisition section (60) is typically positioned at a point apart from the optical film (70). It is, therefore, preferred that at least one of the optical film (70) or the cross-sectional profile acquisition section (60) be movable. For model number "MSE-A203" of Palmeso Co., Ltd.'s MSE testing apparatus, the means for measuring the cross-sectional profile is the stylus type.

Under the measurement conditions according to the present disclosure, an operation in which the three steps of a step of ejecting a predetermined amount of the test solution from the ejection hole, a step of temporarily stopping the ejection of the test solution after ejecting the predetermined amount of the test solution, and a step of measuring the cross-sectional profile after temporarily stopping the ejection of the test solution constitute one cycle is carried out until the depth of the cross-sectional profile exceeds 20 $\mu$m.

By carrying out this operation, the erosion rate of the optical film in each cycle can be measured, and variations in the erosion rate of the optical film can be calculated.

The cycles described above may be continued even after the depth of the cross-sectional profile exceeds 20 $\mu$m, but preferably, the cycles are ended when the depth of the cross-sectional profile exceeds 20 $\mu$m. The reason for measurement until "a depth of 20 $\mu$m from the surface of the optical film," furthermore, is that the tendency for the physical characteristics of an optical film to be readily variable in the vicinity of the surface but become more consistent toward the interior is considered.

Herein, an erosion rate in a cycle can be calculated by dividing the increase in the depth ($\mu$m) of the cross-sectional profile during that cycle by the amount (g) of the test solution ejected in that cycle. The depth ($\mu$m) of the cross-sectional profile in a cycle is defined as the depth of the deepest point of the cross-sectional profile during that cycle.

The amount of the test solution ejected in each cycle is "constant" in principle, but there may be slight variations between cycles. The amount of the test solution ejected in each cycle is preferably 0.5 g or more, more preferably 1.0 g or more, preferably 3.0 g or less, more preferably 2.0 g or less.

Under the measurement conditions according to the present disclosure, the erosion rate (μm/g) is calculated in each cycle until a depth of 20 μm of the cross-sectional profile. Then the erosion rates in the respective cycles until a depth of the cross-sectional profile of 20 μm are averaged, and thereby E0-20 (the average erosion rate until a depth of 20 μm from the surface of the optical film) is calculated.

The cycles are conducted until the depth of the cross-sectional profile exceeds 20 μm; however, data from cycles after the depth of the cross-sectional profile exceeds 20 μm are excluded from the calculation of E0-20.

In general, optical films are more susceptible to damage when softer and less susceptible to damage when harder. Optical films, furthermore, tend to have increased strength when stretched. Specifically, uniaxially oriented optical films tend to exhibit better pencil hardness than cast optical films, and biaxially oriented optical films tend to exhibit better pencil hardness than uniaxially oriented optical films. Even biaxially oriented optical films, however, have lacked sufficient pencil hardness in some cases.

The inventors have studied the erosion rate as a measure of the pencil hardness of optical films. As mentioned above, optical films are more susceptible to damage when softer and less susceptible to damage when harder; therefore, it is expected that lower erosion rates can result in better pencil hardness. The inventors, however, have found that making the erosion rate (E0-20) as high as 0.80 μm/g or more can result in good pencil hardness of the optical film, contrary to the expectation. The inventors also discovered that regarding the erosion rate of optical films, biaxially oriented optical films are more likely to exhibit a high value than uniaxially oriented optical films, and that how good the pencil hardness of a biaxially oriented optical film is can be determined based on the erosion rate.

A possible reason for the correlation between the erosion rate and the pencil hardness of an optical film is as follows. As mentioned above, under the measurement conditions according to the present disclosure, the test solution, containing water and spherical silica, is mixed with air and ejected in a mist-like form. By virtue of this, the collision pressure of the spherical silica particles on the optical film is limited to a low level. When the optical film is soft, therefore, it is likely that the stress from the collision of the spherical silica with the optical film is dispersed. As a result, the optical film is unlikely to be worn, leading to a low erosion rate. When the optical film is hard, by contrast, it is unlikely that the stress from the collision of the spherical silica with the optical film is dispersed. As a result, the optical film is likely to be worn, leading to a high erosion rate.

The differences in erosion rate among biaxially oriented optical films, furthermore, appear to stem from differences in the degree of molecular chain stretching and differences in the degree of molecular orientation. For example, in biaxially oriented optical films, molecules are stretched in the plane in principle, but there can also be molecules that are locally insufficiently stretched in the plane. The inventors believe that when the proportion of such molecules that are locally insufficiently stretched in the plane increases, the biaxially oriented optical film becomes locally soft, leading to a reduced erosion rate. Even biaxially oriented optical films with similar in-plane phase differences, furthermore, exhibit different erosion rates due to differences in local molecular orientation.

For good pencil hardness of the optical film to be achieved, E0-20 may be 0.80 μm/g or more, may be 0.85 μm/g or more, may be 0.90 μm/g or more, may be 0.95 μm/g or more, or may be 1.00 μm/g or more. E0-20 may be 3.00 μm/g or less, may be 2.50 μm/g or less, or may be 2.00 μm/g or less so that the optical film does not easily break.

In drawing in the flow direction, a shortened drawing time tends to result in a reduced erosion rate, and an extended drawing time tends to result in an increased erosion rate. A possible reason for this is that whereas molecules are unlikely to be evenly stretched in the plane of the optical film when the drawing time is short, molecules are likely to be evenly stretched in the plane of the optical film when the drawing time is long.

(Loss Tangent (tanδ))

The peak-top temperature for the loss tangent (tanδ) of the optical film may be 90°C or above and 160°C or below. Such an optical film is superior in workability during heating. The peak-top temperature for tanδ may be 92°C or above, may be 94°C or above, may be 96°C or above, or may be 100°C or above. The peak-top temperature for tanδ may be 160°C or below, may be 155°C or below, or may be 150°C or below.

The peak-top temperature for tanδ typically corresponds to the glass transition temperature of the polyester contained in the optical film. By adjusting the glass transition temperature of the polyester, therefore, the peak-top temperature for tanδ can be adjusted to fall within the above ranges.

tanδ is measured using a dynamic mechanical analyzer (DMA). The temperature at which tanδ reaches its maximum is defined as the peak-top temperature for tanδ of the optical film. When two or more maxima of tanδ are observed, the value at the lowest temperature is used. The measurement conditions are as follows. Measuring instrument, Rheogel-E4000 (manufactured by K.K. UBM), sample for measurement, 5 mm wide × 25 mm long; frequency, 10 Hz; chuck distance, 10 mm; measurement temperature range, 25°C to 250°C; temperature elevation rate, 2°C/min.

(Degree of Crystallinity)

The degree of crystallinity of the optical film may be 85% or less. Such an optical film exhibits good interlayer adhesion when the functional layer is placed on it. The degree of crystallinity of the optical film may be 60% or more, may be 65% or more, or may be 70% or more for the mechanical strength of the optical film.
The degree of crystallinity of the optical film is a value measured by X-ray diffraction.
The measurement conditions and calculation method for the degree of crystallinity are as follows.

(Measurement Conditions)

Measurement method: 2θ/θ measurement

Instrument: Smart Lab, manufactured by Rigaku Corporation, 9 kW

X-ray source: Cu-Kα, 45 kV-200 mA

Measurement range: 10 deg to 50 deg

Step: 0.020 deg

Measurement time: 4.0 deg/min

(Calculation Method)

The degree of crystallinity is calculated according to the equation of the degree of crystallinity (%) = (the area of the crystalline peak)/(the area of the crystalline peak + the area of the amorphous peak) × 100, based on profile fitting.

The degree of crystallinity of the optical film can be controlled by, for example, the drawing factors and the drawing temperatures. Specifically, the larger the drawing factors, the higher the degree of crystallinity. The smaller the drawing factors, the lower the degree of crystallinity.

(Gas Barrier Properties)

The optical film is, in the first embodiment, superior in gas barrier properties.
The water vapor transmission rate of the optical film in an environment at a temperature of 40°C and a humidity of 90% RH as measured according to JIS K7129-2: 2019 may be 20 g/(m2·24 hr) or less, may be 15 g/(m2·24 hr) or less, or may be 10 g/(m2·24 hr) or less. The lower the water vapor transmission rate of the optical film, the more preferred; however, the water vapor transmission rate may be 2 g/(m2·24 hr) or more or may be 3 g/(m2·24 hr) or more. The water vapor transmission rate can be measured using a water vapor permeation analyzer ("PERMATRAN," manufactured by Modern Controls, Inc.).
The oxygen transmission rate of the optical film in an environment at a temperature of 25°C and a humidity of 50% RH as measured according to JIS K7126-2: 2006 may be 100 cc/(m2·24 hr·atm) or less, may be 80 cc/(m2·24 hr·atm) or less, or may be 50 cc/(m2·24 hr·atm) or less. The lower the oxygen transmission rate of the optical film, the more preferred; however, the oxygen transmission rate may be 5 cc/(m2·24 hr·atm) or more or may be 7 cc/(m2·24 hr·atm) or more. The oxygen transmission rate can be measured using an oxygen permeation analyzer ("OX-TRAN I0/50A"), manufactured by Modern Controls, Inc.).
The optical film according to the present disclosure is suitable as a film for use in image display devices. Specifically, the optical film is suitable as a substrate for various functional films, such as a hard-coat film, an antiglare film, an antireflection film, an antifouling film, an antistatic film, and a polarizer-protecting film.

<Easily Adhesive Layer>

The optical film according to the present disclosure may be an easily adhesive film including a polyester film and

at least one easily adhesive layer provided on the polyester film. The easily adhesive layer may be provided solely on either one of the first surface or the second surface of the polyester film, or may be provided on both of the first surface and the second surface.

Fig. 4 is a cross-sectional view illustrating an embodiment of an easily adhesive film 1 according to the present disclosure. The easily adhesive film 1 in Fig. 4 includes a polyester film 4 and an easily adhesive layer 6 in this order. The easily adhesive layer 6 is provided on the first surface 4a of the polyester film 4.

By providing an easily adhesive layer on a polyester film, good interlayer adhesion can be achieved in an optical multilayer body including the polyester film, the easily adhesive layer, and a functional layer in this order.

Examples of resins that can constitute the easily adhesive layer include thermoplastic resins, such as polyester, polyurethane, and (meth)acrylic resins, and thermosetting resins, with thermoplastic resins being preferred. Of thermoplastic resins, polyester and polyurethane are particularly preferred, and resins containing both of a polyester component and a polyurethane component are more preferred. With such resins, it is easier to reduce the difference in refractive index between the polyester film and the easily adhesive layer.

With the aforementioned polyurethane component, good adhesion is easier to achieve, but it may be difficult to attain high coating strength. The resin constituting the easily adhesive layer, therefore, preferably contains both of a polyester component and a polyurethane component. When the amount of the polyurethane component is too large in relation to the polyester component, however, phase separation easily occurs. For the resin that contains both of a polyester component and a polyurethane component, therefore, the ratio by mass (the polyester component:the polyurethane component) may be from 95:5 to 60:40 or may be from 90:10 to 60:40.

The resin constituting the easily adhesive layer may be a biomass material-derived resin, may be a fossil fuel-derived resin, or may be a mixed resin including a biomass material-derived resin and a fossil fuel-derived resin. For example, each of the aforementioned thermoplastic resins, such as polyester, polyurethane, and (meth)acrylic resins, and thermosetting resins may be a biomass material-derived resin, may be a fossil fuel-derived resin, or may be a mixed resin including a biomass material-derived resin and a fossil fuel-derived resin.

An easily adhesive layer containing a biomass material-derived resin makes a great environmental contribution and exhibits high compatibility with a polyester film containing a biomass polyester and high conformity to the shape of that film. An optical film including such an easily adhesive layer, therefore, is superior in workability. An optical film including an easily adhesive layer containing a fossil fuel-derived resin is superior in adhesion durability in a high-temperature and high-humidity environment.

The biomass content of the easily adhesive layer may be, in the first embodiment, 10% or more, may be 12% or more, may be 15% or more, or may be 18% or more. The biomass content of the easily adhesive layer may be, in the first embodiment, 98% or less, may be 90% or less, may be 80% or less, may be 70% or less, may be 60% or less, or may be 50% or less. By specifying the biomass content of the resin constituting the easily adhesive layer and designating that resin as a raw material, the biomass content of the easily adhesive layer can be specified, and the quality of the optical film can also be controlled, in advance.

The easily adhesive layer can contain one such resin or two or more.

The percentage of such resins in the easily adhesive layer may be more than 50% by mass, may be 60% by mass or more, may be 70% by mass or more, may be 80% by mass or more, may be 90% by mass or more, or may be 95% by mass or more.

The number-average molecular weight of the resin constituting the easily adhesive layer may be 10,000 or greater or may be 15,000 or greater. The number-average molecular weight of this resin may be 100,000 or less or may be 60,000 or less. With such resins, it can be made easier to reduce cohesive failures of the easily adhesive layer. As used herein, a number-average molecular weight refers to a polystyrene-equivalent value measured by gel permeation chromatography according to JIS K7252-1: 2016.

The glass transition temperature of the resin constituting the easily adhesive layer may be 30°C or above, may be 50°C or above, or may be 70°C or above. The glass transition temperature of this resin may be 120°C or below, may be 110°C or below, or may be 90°C or below. The glass transition temperature is the midpoint glass transition temperature as obtained by differential scanning calorimetry (DSC) according to JIS K7121: 2012.

When the glass transition temperature of the resin constituting the easily adhesive layer is 30°C or above, it can be made easier to reduce the occurrence of internal stress caused by the flow of the easily adhesive layer due to in-process heat. Examples of in-process heat include heat during a drying step for a functional layer coating solution and heat generated by warming during the attachment of an optical multilayer body, for example to a polarizer. When the glass transition temperature of the resin constituting the easily adhesive layer is 120°C or below, it can be made easier to reduce the occurrence of stress caused by a difference in thermal behavior between the easily adhesive layer and the polyester film, and thus the formation of cracks, for example, in the easily adhesive layer induced by stress can be reduced.

The easily adhesive layer may contain additives, such as refractive index modifiers, dyes, pigments, leveling agents, ultraviolet absorbers, antioxidants, and photostabilizers, and crosslinking agents for adjusting hardness or viscosity. The easily adhesive layer can contain one or two or more of such ingredients. Examples of crosslinking agents

include xylylene diisocyanate crosslinking agents, isophorone diisocyanate crosslinking agents, and hexamethylene diisocyanate crosslinking agents and ionizing radiation-curable polyfunctional monomers.

The easily adhesive layer may be formed by inline coating, in which the formation of the easily adhesive layer is performed during the formation of the polyester film, or may be formed by offline coating, in which the formation of the easily adhesive layer is performed after the formation of the polyester film. In inline coating and offline coating, it is preferred to use an easily adhesive layer coating solution, which contains the constituents of the easily adhesive layer. For example, by applying an easily adhesive layer coating solution to the polyester film using a common application method and drying it, the easily adhesive layer can be formed.

The direction of the drying air during the formation of the easily adhesive layer is preferably opposite the direction of transport of the polyester film. When the direction of the drying air and the direction of transport of the polyester film are opposite, the drying time of the easily adhesive layer coating solution can be shortened without excessively increasing the drying temperature.

The drying time of the easily adhesive layer coating solution may be 120 seconds or less or may be 90 seconds or less. This drying time may be 15 seconds or more or may be 20 seconds or more. The drying time can be adjusted by the drying temperature and the velocity of the drying air. When the drying time is 120 seconds or less, the phase separation of the constituents of the easily adhesive layer can be reduced. Setting the drying time too short may cause the coating surface to become roughened and optical properties to degrade.

The drying temperature for the easily adhesive layer coating solution may be 50°C or above or may be 60°C or above. This drying temperature may be 200°C or below or may be 150°C or below. By setting the drying temperature to 50°C or above, the phase separation of the constituents of the easily adhesive layer can be reduced because the drying time of the easily adhesive layer coating solution can be shortened. By setting the drying temperature to 200°C or below, thermal decomposition of the constituents of the easily adhesive layer can be reduced.

The easily adhesive layer coating solution preferably contains at least one organic solvent to allow the constituents of the easily adhesive layer to dissolve or disperse and/or to adjust viscosity. Examples of organic solvents include ketones, such as acetone, methyl ethyl ketone, methyl isobutyl ketone, and cyclohexanone, ethers, such as dioxane and tetrahydrofuran, aliphatic hydrocarbons, such as hexane and heptane, alicyclic hydrocarbons, such as cyclohexane, aromatic hydrocarbons, such as toluene and xylene, halogenated hydrocarbons, such as dichloromethane and dichloroethane, esters, such as methyl acetate, ethyl acetate, propyl acetate, and butyl acetate, alcohols, such as isopropyl alcohol, butanol, and cyclohexanol, cellosolves, such as methyl cellosolve and ethyl cellosolve, glycol ethers, such as propylene glycol monomethyl ether acetate, cellosolve acetates, sulfoxides, such as dimethylsulfoxide, and amides, such as dimethylformamide and dimethylacetamide.

When the drying time of the organic solvent in the easily adhesive layer coating solution is too long, the phase separation of the constituents of the easily adhesive layer is likely to occur. The organic solvent in the easily adhesive layer coating solution, therefore, preferably includes a solvent with a high evaporation rate. When the drying time of the organic solvent in the easily adhesive layer coating solution is too short, the coating surface is likely to become roughened. For the organic solvent in the easily adhesive layer coating solution, therefore, it is preferred to use an organic solvent with an extremely high evaporation rate and an organic solvent with a moderately high evaporation rate as a mixture.

As used herein, an organic solvent with an extremely high evaporation rate refers to an organic solvent whose evaporation rate is 280 or greater when it is assumed that the evaporation rate of butyl acetate is 100. As used herein, an organic solvent with a moderately high evaporation rate refers to an organic solvent whose evaporation rate is 150 or greater and less than 280 when it is assumed that the evaporation rate of butyl acetate is 100.

For an organic solvent with an extremely high evaporation rate, the evaporation rate may be 320 or greater or may be 340 or greater. The evaporation rate may be 430 or less or may be 400 or less. Examples of organic solvents with extremely high evaporation rates include methyl ethyl ketone, whose evaporation rate is 370, and normal heptane, whose evaporation rate is 362.

For an organic solvent with a moderately high evaporation rate, the evaporation rate may be 170 or greater or may be 180 or greater. The evaporation rate may be 250 or less or may be 220 or less. Examples of organic solvents with moderately high evaporation rates include toluene, whose evaporation rate is 200, and propyl acetate, whose evaporation rate is 214.

For organic solvents contained in the easily adhesive layer coating solution, the ratio by mass (organic solvents with extremely high evaporation rates:organic solvents with moderately high evaporation rates) may be from 50:50 to 90:10 or may be from 70:30 to 85:15.

For easier reduction of phase separation in the easily adhesive layer coating solution, the solids concentration of this coating solution may be 2% by mass or more or may be 4% by mass or more. The solids concentration of this coating solution may be 30% by mass or less or may be 15% by mass or less.

The thickness of the easily adhesive layer may be 10 nm or more, may be 20 nm or more, or may be 50 nm or more. The thickness of the easily adhesive layer may be 600 nm or less, may be 300 nm or less, or may be 200 nm or less. If the reduction of interference fringes is intended, a smaller thickness of the easily adhesive layer is more preferred.

[Optical Multilayer Body]

Examples of applications of the optical film according to the present disclosure include an optical multilayer body that includes the optical film according to the present disclosure and at least one functional layer provided on the film, and an optical multilayer body that includes the easily adhesive film according to the present disclosure and at least one functional layer provided on the easily adhesive layer of the film. The functional layer may be provided on one surface of the optical film or may be provided on both surfaces.

Herein, an optical multilayer body is a multilayer body through which light can be transmitted.

Fig. 5 is a cross-sectional view illustrating an embodiment of an optical multilayer body 3 according to the present disclosure. The optical multilayer body 3 in Fig. 3 includes a polyester film 4, an easily adhesive layer 6, and a functional layer 8 in this order. The easily adhesive layer 6 and the functional layer 8 are provided on the first surface 4a of the polyester film 4. The easily adhesive layer 6 does not need to be provided.

The total transmittance of the optical multilayer body may be 50% or more, may be 60% or more, may be 70% or more, may be 80% or more, may be 85% or more, or may be 90% or more. The higher the total transmittance of the optical multilayer body, the more preferred; however, the total transmittance may be 99% or less, may be 98% or less, or may be 95% or less. The total transmittance is measured according to JIS K7361-1: 1997.

The haze of the optical multilayer body may be 10.0% or less, may be 7.0% or less, may be 5.0% or less, may be 4.0% or less, or may be 3.0% or less. The haze of the optical multilayer body may be 0.1% or more, may be 0.2% or more, or may be 0.3% or more. The haze is measured according to JIS K7136: 2000.

The total transmittance and haze are, in the case of an optical multilayer body including a polyester film, optionally an easily adhesive layer, and a functional layer in this order, measured with the light incident surface being the polyester film surface.

<Functional Layer>

The optical multilayer body according to the present disclosure may include one functional layer or may include two or more. That is, two or more functional layers may be stacked on the optical film or, in the first embodiment, may be stacked on the easily adhesive layer of the easily adhesive film.

Herein, a functional layer is a layer that imparts functions such as scratch resistance, antiglare properties, antireflection properties, retardation properties, antifouling properties, antistatic properties, and electrical conductivity to an optical multilayer body.

Examples of functional layers include a hard-coat layer, an antiglare layer, antireflection layers (e.g., a low-refractive-index layer, a high-refractive-index layer, and a structure in which they are stacked), a retardation layer, an antifouling layer, an antistatic layer, and an electrically conductive layer. A functional layer may have multiple functions within a single layer. For example, a hard-coat layer may additionally have at least one function selected from antiglare properties, antireflection properties, retardation properties, antifouling properties, antistatic properties, and electrical conductivity.

Examples of functional layers include the following (1) to (12).

(1) A hard-coat layer

(2) An antiglare layer

(3) An antifouling layer

(4) A multilayer structure including a hard-coat layer and an antireflection layer in this order

(5) A multilayer structure including a hard-coat layer and an antiglare layer in this order

(6) A multilayer structure including a hard-coat layer and an antifouling layer in this order

(7) A multilayer structure including an antiglare layer and an antireflection layer in this order

(8) A multilayer structure including an antiglare layer and an antifouling layer in this order

(9) A multilayer structure including a hard-coat layer, an antiglare layer, and an antireflection layer in this order

(10) An antistatic layer

(11) An electrically conductive layer

(12) A retardation layer

In (4) to (11) above, the left side indicates the layer positioned on the optical film side.

Of one or more functional layers, the functional layer in contact with the optical film preferably contains a cured form of at least one ionizing radiation-curable ingredient. The functional layer in contact with the optical film is preferably a hard-coat layer. With the inclusion of a cured form of an ionizing radiation-curable ingredient in the functional layer in contact with the optical film, it can be made easier to achieve high pencil hardness of the optical multilayer body.

The functional layer contains, for example, at least one binder resin and optionally at least one additive. The functional layer can contain one or two or more binder resins. The functional layer can contain one or two or more additives.

The functional layer preferably contains a cured form of at least one curable ingredient as a binder resin. The functional layer can be formed using, for example, a curable composition that contains at least one curable ingredient and optionally additives. The curable composition may further contain an organic solvent. Specific examples of organic solvents are as mentioned above as examples for the easily adhesive layer coating solution. Examples of cured forms of curable ingredients include a cured form of a thermosetting ingredient and a cured form of an ionizing radiation-curable ingredient, with a cured form of an ionizing radiation-curable ingredient being preferred.

The percentage of the cured form of the curable ingredient to all binder resins in the functional layer may be 60% by mass or more, may be 70% by mass or more, may be 80% by mass or more, may be 90% by mass or more, or may be 95% by mass or more.

Examples of thermosetting ingredients include thermosetting resins. Examples of thermosetting resins include phenolic resins, urea resins, melamine resins, melamine-urea co-condensed resins, diallyl phthalate resins, aminoalkyd resins, epoxy resins, unsaturated (meth)acrylic resins, unsaturated polyurethane resins, unsaturated polyester resins, and silicone resins. In conjunction with a thermosetting ingredient, a curing agent may be used.

An example of an ionizing radiation-curable ingredient is a compound having an ionizing radiation-curable functional group. A compound having an ionizing radiation-curable functional group may be herein referred to as an ionizing radiation-curable compound.

Ionizing radiation refers to electromagnetic waves or charged particle beams that have an energy quantum capable of polymerizing or crosslinking molecules. Although ionizing radiation is typically ultraviolet radiation or an electron beam, electromagnetic waves such as X-rays and y-rays and charged particle beams such as $\alpha$-rays and ion beams can also be used.

Examples of ionizing radiation-curable functional groups include ethylenically unsaturated groups, such as a (meth)acryloyl group, a vinyl group, and an allyl group, and an epoxy group and an oxetanyl group. For use as ionizing radiation-curable compounds, compounds having an ethylenically unsaturated group are preferred, compounds having two or more ethylenically unsaturated groups are more preferred, and polyfunctional (meth)acrylates having two or more ethylenically unsaturated groups are even more preferred.

As used herein, a (meth)acrylate refers to an acrylate or methacrylate, (meth)acrylic acid refers to acrylic acid or methacrylic acid, and a (meth)acryloyl group refers to an acryloyl group or methacryloyl group.

For polyfunctional (meth)acrylates, both monomers and oligomers can be used. As the ionizing radiation-curable ingredient, it is preferred to use at least a polyfunctional (meth)acrylate oligomer. That is, the functional layer preferably contains a cured form of a polyfunctional (meth)acrylate oligomer as a binder resin. With a cured form of a polyfunctional (meth)acrylate oligomer, excessive curing shrinkage of the functional layer can be reduced while achieving good surface hardness of the optical multilayer body.

If easier achievement of a better balance between the surface hardness and the interlayer adhesion of the optical multilayer body is intended, it is more preferred to use at least an oligomer and a monomer of a polyfunctional (meth) acrylate as ionizing radiation-curable ingredients. That is, the functional layer preferably contains cured forms of a polyfunctional (meth)acrylate oligomer and a polyfunctional (meth)acrylate monomer as binder resins.

When an oligomer and a monomer are used as polyfunctional (meth)acrylates, the ratio by mass between the oligomer and the monomer (oligomer:monomer) may be from 5:95 to 95:5, may be from 50:50 to 85:15, or may be from 60:40 to 80:20.

Examples of polyfunctional (meth)acrylate oligomers include urethane (meth)acrylate, epoxy (meth)acrylate, polyester (meth)acrylate, and polyether (meth)acrylate. Urethane (meth)acrylate is obtained through, for example, the reaction of a polyol and a polyisocyanate with a hydroxy-containing (meth)acrylate. The polyfunctional (meth)acrylate oligomer may be a (meth)acrylate oligomer having two or more and twelve or fewer functional groups.

The weight-average molecular weight of the polyfunctional (meth)acrylate oligomer may be 250 or more, may be 300 or more, or may be 1,000 or more. This weight-average molecular weight may be 5,000 or less or may be 3,000 or less. When the weight-average molecular weight of the oligomer is 250 or more, it is easier to reduce excessive curing shrinkage of the functional layer. When the weight-average molecular weight of the oligomer is 5,000 or less, it is easier to limit a

decrease in surface hardness. As used herein, a weight-average molecular weight refers to a polystyrene-equivalent value measured by gel permeation chromatography according to JIS K7252-1: 2016.

Examples of polyfunctional (meth)acrylate monomers include bifunctional (meth)acrylate monomers and trifunctional and higher-functionality (meth)acrylate monomers.

Examples of bifunctional (meth)acrylate monomers include ethylene glycol di(meth)acrylate, polyethylene glycol di(meth)acrylate, polybutylene glycol di(meth)acrylate, isocyanuric acid di(meth)acrylate, bisphenol A tetraethoxydi(meth)acrylate, bisphenol A tetrapropoxydi(meth)acrylate, and 1,6-hexanediol di(meth)acrylate.

Examples of trifunctional and higher-functionality (meth)acrylate monomers include trimethylolpropane tri(meth) acrylate, pentaerythritol tri(meth)acrylate, pentaerythritol tetra(meth)acrylate, dipentaerythritol hexa(meth)acrylate, dipentaerythritol tetra(meth)acrylate, and isocyanuric acid-modified tri(meth)acrylate.

The polyfunctional (meth)acrylate monomer may have part of its molecular backbone modified. For example, a (meth)acrylate monomer modified with a structure such as ethylene oxide, propylene oxide, caprolactone, isocyanuric acid, an alkyl, a cyclic alkyl, an aromatic, or bisphenol may be used.

As an ionizing radiation-curable compound, a monofunctional (meth)acrylate may additionally be used. Through this, the viscosity of the ingredient, for example, can be adjusted. Examples of monofunctional (meth)acrylates include methyl (meth)acrylate, ethyl (meth)acrylate, propyl (meth)acrylate, butyl (meth)acrylate, pentyl (meth)acrylate, hexyl (meth)acrylate, cyclohexyl (meth)acrylate, 2-ethylhexyl (meth)acrylate, lauryl (meth)acrylate, stearyl (meth)acrylate, and isobornyl (meth)acrylate.

The functional layer may contain a biomass material-derived ingredient or may be free of biomass material-derived ingredients.

The biomass content of the functional layer is, in the first embodiment, 10% or more, may be 15% or more, may be 20% or more, may be 25% or more, or may be 30% or more. With an optical multilayer body including such a functional layer, the reduction of environmental impacts can be sought. The higher the biomass content of the functional layer, the more preferred; however, the biomass content may be, for example, 98% or less, may be 90% or less, may be 80% or less, may be 70% or less, may be 60% or less, or may be 50% or less.

A functional layer having such a biomass content can be formed using, for example, at least a (meth)acrylate having a biomass material-derived group (hereinafter also referred to as "a biomass (meth)acrylate"). For example, an ionizing radiation-curable ingredient that contains at least a biomass (meth)acrylate as an ionizing radiation-curable compound as mentioned above is used. By specifying the biomass content of the raw materials that form the functional layer and designating them as raw materials, the biomass content of the functional layer can be specified, and the quality of the optical multilayer body can also be controlled, in advance.

An example of a biomass (meth)acrylate is a (meth)acrylate having a biomass material-derived alkyl group, which is an ester of a biomass material-derived alcohol and biomass material-derived (meth)acrylic acid or (meth)acrylic acid not derived from a biomass material.

Examples of biomass material-derived alcohols include alcohols containing 1 or more and 36 or fewer carbons. Examples of biomass material-derived alcohols include biomass ethanol and alcohols derived from vegetable raw materials, such as palm oil, palm kernel oil, and coconut oil. When the number of carbons in a biomass material-derived alcohol is three or more, this alcohol may be linear-chain or may have branching.

The biomass material-derived alcohol may be a saturated aliphatic alcohol containing 6 or more and 36 or fewer carbons, may be a saturated aliphatic alcohol containing 12 or more and 20 or fewer carbons, or may be a saturated aliphatic alcohol containing 16 or more and 18 or fewer carbons. Examples of saturated aliphatic alcohols include linear-chain aliphatic alcohols, such as lauryl alcohol, cetyl alcohol, stearyl alcohol, cetearyl alcohol, and behenyl alcohol. For natural alcohols, alicyclic alcohols containing ten carbons are also known, with an example being isobornyl alcohol, which is extracted from trees. Glycerol is also an example of a natural alcohol.

Specific examples of biomass (meth)acrylates include lauryl (meth)acrylate, cetyl (meth)acrylate, stearyl (meth) acrylate, cetearyl (meth)acrylate, behenyl (meth)acrylate, isobornyl (meth)acrylate, and (poly)glycerol (meth)acrylates. Soybean oil-modified epoxy (meth)acrylate and rosin-modified epoxy (meth)acrylate, furthermore, are also included.

Examples of (poly)glycerol (meth)acrylates include glycerol (meth)acrylate, glycerol di(meth)acrylate, glycerol tri(meth)acrylate, diglycerol tri(meth)acrylate, and diglycerol tetra(meth)acrylate and (poly)alkylene oxide-modified forms thereof, such as (poly)ethylene oxide-modified forms and (poly)propylene oxide-modified forms.

Examples of biomass (meth)acrylates also include a urethane (meth)acrylate that is the product of the reaction of a polyol and a polyisocyanate with a hydroxy-containing (meth)acrylate and in which at least one of the polyol, polyisocyanate, or hydroxy-containing (meth)acrylate contains a biomass material-derived component.

Examples of polyols include polyester polyols, polyether polyols, and polycarbonate polyols. Examples of biomass material-derived polyols include such types of polyols obtained using biomass material-derived ingredient(s) as at least a subset of their raw materials.

Examples of polyisocyanates include aromatic diisocyanates, aliphatic diisocyanates, and alicyclic diisocyanates. Examples of aromatic diisocyanates include aromatic diisocyanates such as toluene-2,4-diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate diphenyl ether, 4,4'-methylenebis(phenylene isocyanate) (MDI), durylene diisocyanate, tolidine diisocyanate, diphenylmethane diisocyanate, xylylene diisocyanate (XDI), 1,5-naphthalene diisocyanate, benzidine diisocyanate, o-nitrobenzidine diisocyanate, and 4,4'-diisocyanate dibenzyl. Examples of aliphatic diisocyanates include methylene diisocyanate, 1,4-tetramethylene diisocyanate, 1,6-hexamethylene diisocyanate, and 1,10-decamethylene diisocyanate. Examples of alicyclic diisocyanates include 1,4-cyclohexylene diisocyanate, 4,4-methylenebis(cyclohexyl isocyanate), 1,5-tetrahydronaphthalene diisocyanate, isophorone diisocyanate, hydrogenated MDI, and hydrogenated XDI.

Examples of biomass material-derived polyisocyanates include those obtained by turning a vegetable-derived dicarboxylic acid into an acid amide, converting it into terminal amino groups by reducing it, and then allowing the amino groups to react with phosgene to convert them into isocyanate groups. Examples of biomass material-derived diisocyanates include dimer acid diisocyanate (DDI), octamethylene diisocyanate, and decamethylene diisocyanate. By using a vegetable-derived amino acid as a raw material and converting its amino groups into isocyanate groups, too, a vegetable-derived diisocyanate can be obtained. For example, lysine diisocyanate (LDI) is obtained by turning the carboxy group in lysine into the methyl ester and then converting the amino groups into isocyanate groups. 1,5-Pentamethylene diisocyanate, furthermore, is obtained by decarboxylating the carboxy group in lysine and then converting the amino groups into isocyanate groups.

Examples of hydroxy-containing (meth)acrylates include compounds having one (meth)acryloyl group, such as hydroxyethyl (meth)acrylate, hydroxypropyl (meth)acrylate, hydroxybutyl (meth)acrylate, and 2-hydroxy-3-phenoxypropyl (meth)acrylate, and compounds having two or more (meth)acryloyl groups, such as glycerol di(meth)acrylate, pentaerythritol tri(meth)acrylate, ditrimethylolpropane tri(meth)acrylate, dipentaerythritol penta(meth)acrylate, and sorbitol penta(meth)acrylate.

The biomass content of the biomass (meth)acrylate is, in the first embodiment, 10% or more, may be 15% or more, may be 20% or more, may be 25% or more, or may be 30% or more. The higher the biomass content of the biomass (meth)acrylate, the more preferred; however, the biomass content may be, for example, 98% or less, may be 90% or less, may be 80% or less, may be 70% or less, may be 60% or less, or may be 50% or less.

One or two or more ionizing radiation-curable compounds can be used.

The curable composition may contain a polymer to adjust viscosity, in addition to the curable ingredient. An example of a polymer is one having a weight-average molecular weight of more than 5,000 and 200,000 or less. The curable composition may further contain a vegetable-derived resin. Examples of such resins include rosin-modified alkyd resins, rosin-modified maleic acid resins, rosin ester resins, rosin-modified phenolic resins, terpene resins, fatty acid-modified rosin resins, and vegetable oil-modified alkyd resins.

When the ionizing radiation-curable compound is an ultraviolet-curable compound, the curable composition preferably further contains a photoinitiator and/or a photoaccelerator. Examples of photoinitiators include acetophenones, benzophenones, $\alpha$-hydroxyalkylphenones, Michler's ketones, benzoins, benzyl dimethyl ketals, benzoyl benzoates, $\alpha$-acyl oxime esters, anthraquinones, halogenoketones, and thioxanthones. With a photoaccelerator, the curing rate can be increased by mitigating the inhibition of polymerization by air during curing. Examples of photoaccelerators include isoamyl p-dimethylaminobenzoate and ethyl p-dimethylaminobenzoate.

The functional layer may optionally contain additives.

The additives can be selected as appropriate from commonly used materials according to the functions to be imparted to the functional layer. Examples of additives include particles, refractive index adjusting-materials, antifouling agents, antistatic agents, electrically conductive fibers, leveling agents, ultraviolet absorbers, antioxidants, and photostabilizers. When antiglare properties are imparted to the functional layer, the functional layer preferably contains particles as an additive. When antireflection properties are imparted to the functional layer, the functional layer preferably contains refractive index-adjusting materials, such as high-refractive-index materials and low-refractive-index materials, as additives. When antifouling properties are imparted to the functional layer, the functional layer preferably contains an antifouling agent as an additive. When antistatic properties are imparted to the functional layer, the functional layer preferably contains an antistatic agent as an additive. When electrical conductivity is imparted to the functional layer, the functional layer preferably contains electrically conductive fiber as an additive.

The functional layer may contain nanoparticles as an additive.

A functional layer containing nanoparticles is, for example, of low refractive index and superior in hardness.

In the present disclosure, "nanoparticles" refers to particles whose average primary particle diameter is less than 1000 nm. The average primary particle diameter is determined by selecting 20 particles in a cross-sectional image of the functional layer taken using a scanning electron microscope (SEM) and measuring their primary particle diameters; the arithmetic mean of the primary particle diameters of the 20 particles is defined as the average primary particle diameter. In this context, the primary particle diameter is obtained by measuring the maximum distance between two points on the outer periphery of the particle (major axis) and the minimum distance (minor axis) and averaging the major axis and the minor axis.

The nanoparticles may be inorganic particles, may be organic particles, or may be mixed particles including both.

An example of inorganic particles is silica particles. When silica particles are used as inorganic particles, the silica particles may be reactive silica particles. Reactive silica particles are silica particles capable of constituting a crosslink structure with ionizing radiation-curable ingredients, and functional layers such as a hard-coat layer can achieve sufficiently high hardness by containing reactive silica particles. The reactive silica particles preferably have a reactive functional group on the surface of the particles. Examples of reactive functional groups include the ionizing radiation-curable functional groups named earlier.

Examples of organic particles include polymethyl methacrylate particles, polyacrylic-styrene copolymer particles, polystyrene particles, crosslinked polystyrene particles, polycarbonate particles, polyester resin particles, polyvinyl chloride particles, melamine resin particles, benzoguanamine-melamine formaldehyde particles, silicone particles, and fluoropolymer particles. In the organic particles, an inorganic ingredient may be mixed.

Of nanoparticles, silica particles are particularly preferred.

The particles may be in any of, for example, a perfectly spherical shape, an ellipsoidal shape, or an indefinite shape. The particles, furthermore, may be hollow particles or nonhollow particles.

The average primary particle diameter of the nanoparticles can be selected according to the physical characteristics of the functional layer intended to be improved. Types of nanoparticles with different average primary particle diameters or types of nanoparticles in different shapes may be used as a mixture.

The average primary particle diameter of the nanoparticles may be, in the first embodiment, 5 nm or more and 100 nm or less. As long as the average primary particle diameter is 100 nm or less, the hardness of functional layers such as a hard-coat layer can be improved without forming large irregularities on the surface of the functional layers.

The average primary particle diameter of the nanoparticles may be, in the first embodiment, more than 100 nm, may be more than 100 nm and 600 nm or less, or may be more than 100 nm and 350 nm or less. A functional layer containing nanoparticles having an average primary particle diameter of more than 100 nm is superior in anti-blocking properties.

The amount of nanoparticles in functional layers such as a hard-coat may be 10 parts by mass or more, may be 15 parts by mass or more, may be 20 parts by mass or more, may be 60 parts by mass or less, may be 50 parts by mass or less, or may be 40 parts by mass or less, per 100 parts by mass of the binder resin.

An antiglare layer contains, in the first embodiment, at least one binder resin as described above and particles. The particles may be either organic particles or inorganic particles. Examples of organic particles include particles made of organic materials such as polymethyl methacrylate, polyacrylic-styrene copolymers, melamine resins, polycarbonate, polystyrene, polyvinyl chloride, benzoguanamine-melamine-formaldehyde condensates, silicone, fluoropolymers, and polyester resins. Examples of inorganic particles include particles made of inorganic materials such as silica, alumina, antimony, zirconia, and titania. The amount of particles in the antiglare layer is, for example, 1 part by mass or more and 100 parts by mass or less per 100 parts by mass of the binder resin.

Of functional layers, an antireflection layer may have a single-layer structure or may have a multilayer structure. An example of an antireflection layer having a single layer is a low-refractive-index layer. Examples of antireflection layers having a multilayer structure include a two-layer configuration of a high-refractive-index layer and a low-refractive-index layer, and also include configurations with three or more layers.

The refractive index of the low-refractive-index layer is, for example, 1.10 or greater and 1.48 or less.

The thickness of the low-refractive-index layer is, for example, 80 nm or more and 120 nm or less.

The low-refractive-index layer may contain, in the first embodiment, at least one binder resin as described above and hollow particles, and may further contain nonhollow particles. The materials for the hollow particles and the nonhollow particles may be, for example, either inorganic compounds, such as silica and magnesium fluoride, or organic compounds, with silica being preferred. For use as the hollow particles, therefore, hollow silica particles are preferred, and for use as the nonhollow particles, nonhollow silica particles are preferred. The amount of hollow silica particles in the low-refractive-index layer is, for example, 100 parts by mass or more and 400 parts by mass or less per 100 parts by mass of the binder resin. The amount of nonhollow silica particles in the low-refractive-index layer is, for example, 90 parts by mass or more and 200 parts by mass or less per 100 parts by mass of the binder resin.

The refractive index of the high-refractive-index layer is, for example, 1.53 or greater and 1.85 or less.

The thickness of the high-refractive-index layer is, for example, 50 nm or more and 200 nm or less.

The high-refractive-index layer contains, in the first embodiment, at least one binder resin as described above and high-refractive-index particles. Examples of high-refractive-index particles include antimony pentoxide, zinc oxide, titanium oxide, cerium oxide, tin-doped indium oxide, antimony-doped tin oxide, yttrium oxide, and zirconium oxide. The amount of high-refractive-index particles in the high-refractive-index layer is, for example, 10 parts by mass or more and 500 parts by mass or less per 100 parts by mass of the binder resin.

An antifouling layer contains, in the first embodiment, at least one binder resin as described above and an antifouling agent. Examples of antifouling agent include fluoropolymers, silicone resins, and fluoro-silicone copolymeric resins. The amount of the antifouling agent in the antifouling layer is, for example, 5% by mass or more and 30% by mass or

less of the total solids content of the antifouling layer.

An electrically conductive layer contains, in the first embodiment, at least one optically transparent resin as a binder resin as described above and multiple filaments of electrically conductive fiber placed in the optically transparent resin. Electrically conductive fiber is a substance having electrical conductivity and also having a shape in which the length is sufficiently large compared to the thickness (e.g., the diameter). For example, substances that have electrical conductivity and whose length is equal to or greater than approximately fivefold the thickness are included as electrically conductive fibers. An electrically conductive layer refers to a layer that contains an optically transparent resin and multiple filaments of electrically conductive fiber placed in the optically transparent resin and is capable of conducting electricity from its surface. The filament diameter of the electrically conductive fiber is, for example, 10 nm or more and 200 nm or less. The filament length of the electrically conductive fiber is, for example, 30 μm or more, and its upper limit is not particularly limited. Examples of electrically conductive fibers include electrically conductive carbon fiber, metal fibers, such as metal nanowires, metal-coated organic fibers, metal-coated inorganic fibers, and carbon nanotubes.

A large part of the electrically conductive fiber may be present on the side closer to the optical film than the position at half the thickness of the electrically conductive layer. In that case, the electrically conductive fiber is also present on the side closer to the surface than the position at half the thickness of the electrically conductive layer and on the surface of the electrically conductive layer as a result of the rest of the electrically conductive fiber accumulating on the large part of the electrically conductive fiber. Owing to this, the electrically conductive layer is electrically capable of conducting electricity from its surface, and, furthermore, filaments of the electrically conductive fiber are in contact with each other in the thickness direction of the electrically conductive layer.

The functional layer may include, for example, a retardation layer or may include an alignment layer and a retardation layer provided on the alignment layer. The alignment layer has the role of facilitating the alignment of a liquid crystal compound within the retardation layer when the retardation layer is formed by applying, drying, and curing a composition for forming the retardation layer.

The retardation layer contains a liquid crystal compound or has a constituent unit derived from the liquid crystal compound.

Examples of liquid crystal compounds include rod-like liquid crystal compounds, such as nematic liquid crystal compounds and smectic liquid crystal compounds, cholesteric liquid crystal compounds, and discotic liquid crystal compounds. The liquid crystal compound is preferably a polymerizable liquid crystal compound because this enables immobilization through polymerization. In other words, the retardation layer is preferably a cured form of a composition for forming the retardation layer that contains a polymerizable liquid crystal compound.

Polymerizable liquid crystal compounds are liquid crystal compounds having at least one polymerizable group, and examples include monofunctional liquid crystal compounds, which have one polymerizable group, and polyfunctional liquid crystal compounds, which have two or more polymerizable groups. Of these, polyfunctional liquid crystal compounds are particularly preferred, polyfunctional liquid crystal compounds in which the number of polymerizable groups is two or three are more preferred, and polyfunctional liquid crystal compounds in which the number of polymerizable groups is two is even more preferred. Polymerizable groups are groups that can polymerize in response to irradiation with active energy radiation, such as ultraviolet radiation or electron beams, and examples include groups containing an ethylenically unsaturated double bond, such as a vinyl group, an acryloyl group, and a methacryloyl group.

In the retardation layer, the liquid crystal compound is preferably immobilized in any alignment state of vertical alignment or homeotropic alignment, horizontal alignment or homogeneous alignment, hybrid alignment, and tilted alignment. For example, it is preferred that the major axis of a rod-like liquid crystal compound be substantially horizontal with respect to the surface of the retardation layer. For example, it is preferred that the discotic plane of a discotic liquid crystal compound be substantially perpendicular to the surface of the retardation layer.

Examples of rod-like liquid crystal compounds include azomethines, azoxys, cyanobiphenyls, cyanophenyl esters, benzoates, phenyl cyclohexanecarboxylates, cyanophenylcyclohexanes, cyano-substituted phenylpyrimidines, alkoxy-substituted phenylpyrimidines, phenyldioxanes, tolans, and alkenyl cyclohexyl benzonitriles. Rod-like liquid crystal compounds that can be used include not only such small-molecule liquid crystal compounds but also polymeric liquid crystal compounds.

The percentage of the liquid crystal compound in the composition for forming the retardation layer may be 60% by mass or more, may be 65% by mass or more, may be 99.9% by mass or less, or may be 98% by mass or less in all solids in the composition for forming the retardation layer. The percentage of constituent units derived from the liquid crystal compound in the retardation layer may be 60% by mass or more, may be 65% by mass or more, may be 99.9% by mass or less, or may be 98% by mass or less.

The aligned liquid crystal compound is preferably immobilized through a polymerization reaction while maintaining its alignment state. The composition for forming the retardation layer, therefore, preferably contains a photoinitiator. Examples of photoinitiators include acetophenone, benzophenone, α-hydroxyalkylphenones, Michler's ketone, benzoin, benzyl dimethyl ketal, benzoyl benzoate, α-acyl oxime esters, and thioxanthones. The amount of the photoinitiator may be 0.01% by mass or more, may be 0.5% by mass or more, may be 20% by mass or less, or may be 5% by mass or less of the

total solids content of the composition for forming the retardation layer.

The composition for forming the retardation layer typically contains an organic solvent. The amount of the solvent in the composition for forming the retardation layer may be 50% by mass or more, may be 70% by mass or more, may be 90% by mass or less, or may be 80% by mass or less in the composition for forming the retardation layer.

The retardation layer is preferably a $\lambda/2$ retardation layer or a $\lambda/4$ retardation layer.

The retardation layer may be, for example, a positive A layer or may be a positive C layer.

Herein, a positive A layer is a layer that satisfies the relationship $Nx > N\gamma \approx Nz$ when the refractive index in the X-axis direction, which is the axial direction with the highest refractive index within the plane of the retardation layer, is defined as Nx, the refractive index in the Y-axis direction, which is the direction that is perpendicular to the X-axis within the plane of the retardation layer, is defined as Ny, and the refractive index in the thickness direction of the retardation layer is defined as Nz. Herein, a positive C layer is a layer that satisfies the relationship $Nx \approx Ny < Nz$.

The liquid crystal compound that forms a positive A layer can be a liquid crystal compound capable of homogeneous alignment. Homogeneous alignment refers to a state in which the major axis of the molecules of the liquid crystal compound (the axis extending in the direction in which the backbone of the liquid crystal compound extends) is aligned in the horizontal direction with respect to the layer. Examples of liquid crystal compounds that can form a positive A layer include a rod-like liquid crystal material and a discotic liquid crystal material, with a rod-like liquid crystal material being preferred. The rod-like liquid crystal compound, furthermore, may have a side-chain structure to ensure that the retardation layer is one exhibiting reverse dispersion, which will be described later.

The liquid crystal compound that forms a positive C layer can be a liquid crystal compound capable of homeotropic alignment. Homeotropic alignment refers to a state in which the major axis of the molecules of the liquid crystal compound (the axis extending in the direction in which the backbone of the liquid crystal compound extends) is aligned in the vertical alignment with respect to the layer. For use as the liquid crystal compound that forms a positive C layer, a rod-like liquid crystal compound is preferred. The rod-like liquid crystal compound, furthermore, may have a side-chain structure to ensure that the retardation layer is one exhibiting reverse dispersion.

The retardation layer may exhibit normal dispersion or may exhibit reverse dispersion. Reverse dispersion refers to properties in which the phase difference given to the transmitted light increases with increasing wavelength of the transmitted light, specifically referring to properties in which the relationship between the retardation at a wavelength of 450 nm (Re450) and the retardation at a wavelength of 550 nm (Re550) is Re450 < Re550. Normal dispersion refers to properties in which Re450 > Re550.

The thickness of the retardation layer can be adjusted as appropriate considering the phase difference to be imparted. The thickness of the retardation layer may be 0.01 $\mu$m or more, may be 0.1 $\mu$m or more, may be 0.5 $\mu$m or more, may be 10 $\mu$m or less, may be 5 $\mu$m or less, or may be 3 $\mu$m or less.

The retardation layer can be formed by, for example, applying, drying, and curing a composition for forming the retardation layer. The composition for forming the retardation layer is preferably applied to an alignment film.

The alignment layer can be formed by, for example, applying a composition for forming the alignment layer to a transparent substrate and imparting anchoring strength. The composition for forming the alignment layer can be selected as appropriate from those known in the related art, such as photodimerizable materials, and used. Examples of means for imparting anchoring strength to the alignment layer include photoalignment, rubbing, and shaping. The thickness of the alignment layer may be 1 nm or more, may be 60 nm or more, may be 100 nm or more, may be 1000 nm or less, or may be 300 nm or less.

The retardation layer may be a transfer body detachable from the alignment layer or transparent substrate. When an optical multilayer body having a retardation layer is in the aforementioned sheet-shaped form or the roll-shaped form, which is a long sheet wound into a roll, the presence of a substrate in the optical multilayer body is more advantageous because in that case manufacturing problems can be reduced.

The retardation layer may be disposed at a selected position of a surface plate, a polarizing plate, and an image display device, each of which will be described later, and may be used simultaneously with other functional layers or optical multilayer bodies.

The functional layer is formed as follows, for example. A curable composition is applied to the optical film to the desired thickness, through which a coating (uncured resin layer) is formed. When an organic solvent is used, the organic solvent is removed through drying. The drying conditions are, for example, 10 seconds or more and 10 minutes or less at 40°C or above and 120°C or below. Then, when the curable composition contains a thermosetting ingredient, curing is initiated by heating the coating at a temperature required for curing. When the curable composition contains an ionizing radiation-curable ingredient, curing is initiated by irradiating the coating with ionizing radiation. In such a manner, the functional layer can be formed.

When ultraviolet radiation is used as the ionizing radiation, it is preferred to, for example, irradiate at least the coating with ultraviolet radiation having a wavelength of 190 nm or more and 380 nm or less. Examples of ultraviolet radiation sources include a xenon lamp, a low-pressure mercury-vapor lamp, a high-pressure mercury-vapor lamp, an ultrahigh-pressure mercury-vapor lamp, a metal halide lamp, a carbon arc lamp, and a tungsten lamp. The amount of

irradiation light is, for example, 10 mJ/cm2 or more and 350 mJ/cm2 or less.

The thickness of the functional layer can be selected as appropriate according to the functions to be imparted. The thickness of the functional layer may be 0.05 μm or more, may be 0.1 μm or more, may be 0.5 μm or more, may be 1 μm or more, or may be 2 μm or more. The thickness of the functional layer may be 100 μm or less, may be 50 μm or less, may be 30 μm or less, may be 20 μm or less, or may be 10 μm or less. When two or more functional layers are included, the above thickness of the functional layer represents the total thickness of the functional layers.

[Surface Plate for Image Display Devices]

Hereinafter, the optical film (including the easily adhesive film described above) and the optical multilayer body according to the first embodiment of the present disclosure are also collectively referred to as "the optical components according to the first embodiment of the present disclosure." An example of an application of the optical components according to the first embodiment of the present disclosure is a surface plate for image display devices that includes a resin plate or glass plate and an optical component according to the first embodiment of the present disclosure disposed on the plate. The optical multilayer body is preferably positioned such that the surface on the functional layer side of the optical multilayer body faces opposite the resin plate or glass plate.

This surface plate is preferably positioned within the image display device such that its surface to which the optical component according to the first embodiment of the present disclosure has been attached faces the surface side. In other words, this surface plate is preferably positioned such that its surface to which the optical component according to the first embodiment of the present disclosure has been attached faces opposite the display element.

For the resin plate and the glass plate, a resin plate and a glass plate commonly used as surface plates for image display devices can be employed. The optical component according to the first embodiment of the present disclosure can be attached to the resin plate or glass plate using, for example, an adhesive agent.

The thickness of the resin plate and the glass plate may be 10 μm or more for strength reasons. The thickness of the resin plate and the glass plate may be 5,000 μm or less, or, for thinning purposes, may be 1,000 μm or less, may be 500 μm or less, or may be 100 μm or less.

[Image Display Device]

An example of an application of the optical components according to the first embodiment of the present disclosure is an image display device that includes a display element and an optical component according to the first embodiment of the present disclosure. The optical component according to the first embodiment of the present disclosure is disposed on the display element, for example. The optical component according to the first embodiment of the present disclosure may be disposed on the light-emitting surface side of the display element or may be disposed on the side opposite the light-emitting surface. Within the image display device, the optical multilayer body is preferably positioned such that its surface on the functional layer side faces opposite the display element. The optical component according to the first embodiment of the present disclosure may be disposed on the outermost surface of the image display device.

Examples of display elements include liquid crystal display elements, EL display elements, such as OLED display elements and inorganic LED display elements, and plasma display elements, and also include LED display elements, such as mini-LED display elements and micro-LED display elements, and liquid crystal display elements and LED display elements that use quantum dots. For the image display device, therefore, examples include a liquid crystal display device, an EL display device, a plasma display device, an LED display device, and a display device that uses quantum dots.

Examples of display modes for liquid crystals in a liquid crystal display element include the IPS mode, the VA mode, the multidomain mode, the OCB mode, the STN mode, and the TSTN mode. When the display element is a liquid crystal display element, a backlight is required. Examples of backlights include backlights having quantum dots and backlights having white light-emitting diodes.

The image display device may be an image display device of foldable type or may be an image display device of rollable type. The image display device may feature touchscreen capability. Examples of touchscreens include types such as resistive type, capacitive type, electromagnetic induction type, infrared type, and acoustic type. The touchscreen capability may be an add-on capability within the display element, as in in-cell touchscreen liquid crystal display elements, or may be one in which a touchscreen is mounted on the display element.

The image display device is an image display device for use in, for example, a tablet computer, a smartphone, a smartwatch or other timepiece, a car navigation system, a public information display (PID), a fish finder, or a drone control screen.

[Polarizing Plate]

An example of an application of the optical components according to the first embodiment of the present disclosure is a polarizing plate that includes a polarizer, a first transparent protective plate disposed on one surface of the polarizer, and a second transparent protective plate disposed on the other surface of the polarizer, wherein at least one of the first transparent protective plate or the second transparent protective plate is an optical component according to the first embodiment of the present disclosure as described above. The optical multilayer body is preferably positioned such that its surface on the functional layer side faces opposite the polarizer.

Examples of polarizers include sheet-shaped polarizers, which are obtained by drawing films stained with, for example, iodine (e.g., a polyvinyl alcohol film, a polyvinyl formal film, a polyvinyl acetal film, and an ethylene-vinyl acetate copolymer saponified film), wire-grid polarizers, which are composed of numerous metal wires arranged parallel to each other, coating polarizers, which are obtained by applying lyotropic liquid crystals and a dichroic guest-host material, and multilayer thin-film polarizers. The polarizer may be a reflective polarizer, which has the function of reflecting polarized light components that do not pass through it.

On one surface of the polarizer, a first transparent protective plate is disposed, and on the other surface, a second transparent protective plate is disposed. At least one of the first transparent protective plate or the second transparent protective plate is an optical component according to the first embodiment of the present disclosure as described above.

Examples of the first transparent protective plate and the second transparent protective plate excluding the optical components according to the first embodiment of the present disclosure include a plastic film and a glass plate. Examples of plastic films include a polyester film, a polycarbonate film, a triacetylcellulose film, a cycloolefin polymer film, and an acrylic film, with oriented forms of such films being preferred for achieving good mechanical strength. Examples of glass plates include ones made of types of glass such as alkaline glass, nitride glass, soda-lime glass, borosilicate glass, and lead glass.

The polarizer and the transparent protective plates are preferably joined together using an adhesive agent. The adhesive agent can be a commonly used adhesive agent, with polyvinyl alcohol (PVA) adhesive agents, for example, being preferred.

The first embodiment of the present disclosure relates to, for example, the following [1] to [14].

[1] An optical film for placing at least one functional layer thereon, the optical film containing at least one polyester, wherein a biomass content of the optical film is 10% or more, a total transmittance of the optical film is 70% or more, and an in-plane phase difference of the optical film is 3,000 nm or more and 30,000 nm or less.

[2] The optical film according to [1] above, wherein the optical film contains a biomass material-derived polyester.

[3] The optical film according to [1] or [2] above, wherein the optical film contains a recycled material-derived polyester.

[4] The optical film according to any one of [1] to [3] above, wherein the in-plane phase difference is 4,000 nm or more and 15,000 nm or less.

[5] The optical film according to any one of [1] to [4] above, wherein a Martens hardness on at least one surface of the optical film is 110 N/mm2 or more and 170 N/mm2 or less.

[6] The optical film according to any one of [1] to [5] above, wherein a percentage of elastic deformation work on at least one surface of the optical film is 60% or more and 70% or less.

[7] The optical film according to any one of [1] to [6] above, wherein the optical film consists of a polyester film containing the polyester or includes a polyester film containing the polyester and at least one easily adhesive layer provided on the polyester film.

[8] The optical film according to [7] above, wherein resin constituting the easily adhesive layer is a biomass material-derived resin.

[9] The optical film according to [7] above, wherein resin constituting the easily adhesive layer is a fossil fuel-derived resin.

[10] The optical film according to [7] above, wherein resin constituting the easily adhesive layer is a mixed resin including a biomass material-derived resin and a fossil fuel-derived resin.

[11] An optical multilayer body including the optical film according to any one of [1] to [10] above and at least one functional layer provided on the optical film.

[12] A surface plate for an image display device, the surface plate including a resin plate or glass plate and the optical film according to any one of [1] to [10] above or the optical multilayer body according to [11] above disposed on the plate.

[13] An image display device including a display element and the optical film according to any one of [1] to [10] above or the optical multilayer body according to [11] above disposed on the display element.

[14] A polarizing plate including a polarizer, a first transparent protective plate disposed on one surface of the polarizer, and a second transparent protective plate disposed on the other surface of the polarizer, wherein at least one of the first transparent protective plate or the second transparent protective plate is the optical film according to any one of [1] to [10] above or the optical multilayer body according to [11] above.

## Second Embodiment

A second embodiment of the present disclosure relates to an optical film.

A second embodiment of the present disclosure will now be described. In particular, a second embodiment of the present disclosure will be described focusing on differences from the first embodiment described above.

First, the problems to be solved by the second embodiment will be described. An image display device includes various optical multilayer bodies for purposes such as improving the visibility of images and reducing scratches on device surfaces. Such an optical multilayer body generally includes a plastic film as an optical film and at least one functional layer provided on this film (see, for example, Japanese Unexamined Patent Application Publication No. 2007-046031, Japanese Unexamined Patent Application Publication No. 2012-256014, and Japanese Unexamined Patent Application Publication No. 2016-141058).

For use as the plastic film, polyester films, such as a polyethylene terephthalate film, have been proposed. When a polyester film is applied to an image display device that emits polarized light, such as a liquid crystal display device or OLED display device, however, rainbow-like interference patterns, referred to as rainbow effects, can occur, potentially reducing visibility.

In recent years, furthermore, there has been a growing movement toward building a sustainable, recycling-oriented society. From the perspective of carbon neutrality, the materials field also faces the need to transition away from fossil fuels, similar to the energy sector.

An object of the second embodiment of the present disclosure is to provide an optical film that is superior in visibility and with which environmental impacts can be reduced.

According to the second embodiment of the present disclosure, there is provided an optical film that is superior in visibility and with which environmental impacts can be reduced. Even when a biomass material-derived polyester is used, furthermore, an optical film having optical properties and mechanical properties comparable to those achieved with a fossil fuel-derived polyester can be provided.

In the following description of the second embodiment of the present disclosure, portions that can be configured in the same manner as in the optical film described in the first embodiment and the optical multilayer body, the surface plate, the image display device, and the polarizing plate including this optical film may be referenced using the same numerals as the numerals used in the first embodiment, and redundant descriptions may be omitted. When it is obvious that an advantage attainable in the first embodiment is also attainable in the second embodiment, its description may be omitted. As the description of the optical film, the optical multilayer body, the surface plate, the image display device, and the polarizing plate according to the second embodiment of the present disclosure, the description of the optical film, the optical multilayer body, the surface plate, the image display device, and the polarizing plate according to the first embodiment of the present disclosure can be applied unless contradictory.

In the following description of the second embodiment of the present disclosure, mentioning an "optical film" is intended to refer to the optical film according to the second embodiment of the present disclosure, unless specifically distinguished.

### [Optical Film]

#### <Physical Characteristics of the Optical Film>

(In-Plane Phase Difference (Re))

In the second embodiment of the present disclosure, the in-plane phase difference (Re) of the optical film is 1,500 nm or less. Herein, an "in-plane phase difference" is calculated according to the equation: In-plane phase difference (Re) = (nx - ny) $\times$ T [nm]. An "in-plane phase difference" is also referred to as retardation, and its unit is a unit for length. The T in the above equation represents the thickness [nm] of the optical film. When the value of the in-plane phase difference is high, rainbow effects tend to occur on the optical film, and visibility tends to be reduced. With an optical film whose in-plane phase difference is 1,500 nm or less, such rainbow effects can be reduced.

"nx" is the refractive index in the slow axis direction, the direction with the highest refractive index in the plane of the optical film. "ny" is the refractive index in the fast axis direction, which is the direction perpendicular to the slow axis direction in the plane of the optical film. The refractive indices and the in-plane phase difference represent the refractive indices and in-plane phase difference for a wavelength of 550 nm. The direction of the slow axis and the in-plane phase difference are measured at a measurement angle of 0° using trade name "RETS-100," manufactured by Otsuka Electronics Co., Ltd. nx - ny can be calculated from thickness information of the optical film, in addition to the in-plane phase difference measured with "RETS-100."

As used herein, nx - ny and Re represent the averages of measurements at 16 locations excluding the minimum and maximum from measurements at 18 locations. Herein, measurement locations are selected from any locations free of defects, such as scratches or stains.

The difference in refractive index "nx - ny" (hereinafter also referred to as "$\Delta$n") may be 0.050 or less or may be 0.040 or less. When $\Delta$n is 0.050 or less, it can be made easier to reduce rainbow effects caused by the in-plane phase difference. $\Delta$n may be 0.005 or greater, may be 0.008 or greater, or may be 0.010 or greater. When $\Delta$n is 0.005 or greater, it can be made easier to reduce so-called blackouts. In this context, a blackout refers to a phenomenon in which the display screen of, for example, a liquid crystal display device becomes dark depending on the angle when the display device is viewed with polarized sunglasses.

The refractive index in the slow axis direction (nx) may be 1.580 or greater or may be 1.630 or greater. The refractive index in the slow axis direction (nx) may be 1.780 or less or may be 1.730 or less. The refractive index in the fast axis direction (ny) may be 1.560 or greater or may be 1.610 or greater. The refractive index in the fast axis direction (ny) may be 1.760 or less or may be 1.710 or less.

The optical film or polyester film is preferably an oriented film. The oriented film may be a biaxially oriented film. The biaxial orientation may be sequential biaxial orientation or may be simultaneous biaxial orientation.

An optical film having an in-plane phase difference of 1,500 nm or less is obtained as follows by sequential biaxial orientation, as an example. A resin composition containing a polyester is melted and shaped into a sheet by extrusion to give cast polyester. The cast film is drawn in the flow direction and then drawn in the width direction of the film.

The drawing in the flow direction may be performed using, for example, differences in circumferential speed between rollers. The drawing factor in the flow direction may be 2.5 or greater or may be 3.0 or greater. The drawing factor in the flow direction may be 6.0 or less or may be 5.5 or less.

The drawing in the width direction may be performed using, for example, the tenter method. The drawing factor in the width direction may be 80% or more and 120% or less in relation to the drawing factor in the flow direction, or may be 90% or more and 110% or less, for the adjustment of the in-plane phase difference to 1,500 nm or less.

An optical film with a high in-plane phase difference manufactured by uniaxial orientation exhibits large differences in physical characteristics between the direction of orientation and the direction perpendicular to it. An optical film having a high in-plane phase difference, therefore, easily deforms in response to external factors, such as heat. For example, when an optical film having a high in-plane phase difference is used as a substrate for a transparent electrically conductive film, the optical film can deform in response to heat during a step of crystallizing a transparent electrically conductive layer or a step of forming an extraction electrode, for example made of silver paste, on the transparent electrically conductive layer and firing it. In this regard, an optical film with a low in-plane phase difference made by biaxial orientation is superior in thermal stability.

The substrate may include a polyester-containing resin layer as a matrix and birefringent particles that counteract the birefringence of the resin layer when the substrate is stretched. That is, the birefringent particles may have the birefringence that is opposite in sign, positive or negative, to the birefringence of the processed polymer forming the resin layer. A resin layer made of polyester has positive birefringence. The birefringent particles, therefore, may have negative birefringence.

Polyesters are superior in transparency, heat resistance, and mechanical properties and allow the in-plane phase difference to be controlled within the desired range through drawing work.

A method for controlling the in-plane phase difference of the optical film to be 1,500 nm or less is the method of selecting the drawing factor ratios and the drawing temperatures during biaxial orientation and the thickness of the produced optical film as appropriate. Specifically, the closer the drawing factor ratios are to 1, the smaller the in-plane phase difference. The higher the drawing temperatures, the smaller the in-plane phase difference. The smaller the

thickness, the smaller the in-plane phase difference. The higher the drawing factor ratios, the larger the in-plane phase difference. The lower the drawing temperatures, the larger the in-plane phase difference. The larger the thickness, the larger the in-plane phase difference.

The smaller the in-plane phase difference of the optical film, the smaller the changes in visible light transmittance for different wavelengths in response to a given change in in-plane phase difference. The visible light transmittance values for different wavelengths, therefore, remain almost unchanged even when variations in in-plane phase difference exist. Consequently, when variations in in-plane phase difference are sufficiently small, visually observable rainbow effects no longer occur. For this reason, when the in-plane phase difference of the optical film is 1,500 nm or less, the changes in visible light transmittance for different wavelengths according to the in-plane phase difference are sufficiently small, and rainbow effects caused by variations in in-plane phase difference can be effectively obscured. Thus the in-plane phase difference of the optical film is 1,500 nm or less, may be 1,450 nm or less, or may be 1,200 nm or less. With an optical film having such an in-plane phase difference, rainbow effects can be effectively obscured. For the reduction of blackouts, furthermore, the in-plane phase difference of the optical film may be 50 nm or more, may be 100 nm or more, may be 150 nm or more, may be 200 nm or more, may be 250 nm or more, or may be 300 nm or more. By setting the in-plane phase difference to 50 nm or more, it can be made easier to reduce blackouts. This is because an optical film with an in-plane phase difference of 50 nm or more can moderately disturb linearly polarized light.

(Total Transmittance and Haze)

In the second embodiment of the present disclosure, the total transmittance of the optical film may be 70% or more, may be 75% or more, or may be 80% or more. The higher the total transmittance of the optical film, the more preferred; however, the total transmittance may be 99% or less, may be 98% or less, or may be 95% or less. The total transmittance is measured according to JIS K7361-1: 1997.

(Martens Hardness)

In the second embodiment of the present disclosure, the standard deviation 3$\sigma$ of the Martens hardness on at least one surface of the optical film is preferably 45 N/mm2 or less. An optical film for which the standard deviation of the Martens hardness is 45 N/mm2 or less is superior in foldability. This standard deviation may be 40 N/mm2 or less, may be 35 N/mm2 or less, may be 30 N/mm2 or less, may be 25 N/mm2 or less, may be 20 N/mm2 or less, may be 15 N/mm2 or less, or may be 10 N/mm2 or less for foldability reasons. The smaller this standard deviation, the more preferred; however, this standard deviation may be 1 N/mm2 or more or may be 3 N/mm2 or more. The standard deviation can be adjusted by the temperature during the formation of the optical film.

(Percentage of Elastic Deformation Work)

In the second embodiment of the present disclosure, the standard deviation 3$\sigma$ of the percentage of elastic deformation work on at least one surface of the optical film is preferably 10% or less. An optical film for which the standard deviation of the percentage of elastic deformation work is 10% or less is superior in hardness. The smaller this standard deviation, the more preferred; however, this standard deviation may be 0.1% or more, may be 0.5% or more, may be 1% or more, or may be 2% or more. The standard deviation can be adjusted by the temperature during the formation of the optical film.

(Erosion Rate)

In the second embodiment of the present disclosure, the optical film may have an E0-20 of 1.40 $\mu$m/g or more when the average erosion rate from the surface of the optical film to a depth of 20 $\mu$m is defined as E0-20. Such an optical film exhibits good pencil hardness.

The inventors have studied the erosion rate as a measure of the pencil hardness of optical films. As mentioned above, optical films are more susceptible to damage when softer and less susceptible to damage when harder; therefore, it is expected that lower erosion rates can result in better pencil hardness. The inventors, however, have found that making the erosion rate (E0-20) as high as 1.40 $\mu$m/g or more can result in good pencil hardness of the optical film, contrary to the expectation. The inventors also discovered that regarding the erosion rate of optical films, biaxially oriented optical films are more likely to exhibit a high value than uniaxially oriented optical films, and that how good the pencil hardness of a biaxially oriented optical film is can be determined based on the erosion rate.

For good pencil hardness of the optical film to be achieved, E0-20 may be 1.40 $\mu$m/g or more, may be 1.45 $\mu$m/g or more, may be 1.50 $\mu$m/g or more, may be 1.60 $\mu$m/g or more, or may be 1.80 $\mu$m/g or more. E0-20 may be 3.00 $\mu$m/g or less, may be 2.80 $\mu$m/g or less, or may be 2.50 $\mu$m/g or less so that the optical film does not easily break.

(Degree of Crystallinity)

In the second embodiment of the present disclosure, the degree of crystallinity of the optical film may be more than 85%. Such an optical film exhibits good pencil hardness. The degree of crystallinity of the optical film may be 88% or more or may be 90% or more for the pencil hardness of the optical film. The degree of crystallinity of the optical film may be 100% or less, may be 99% or less, or may be 98% or less.

The degree of crystallinity of the optical film can be controlled by, for example, the drawing factors and the drawing temperatures. Specifically, the larger the drawing factors, the higher the degree of crystallinity. The smaller the drawing factors, the lower the degree of crystallinity.

The second embodiment of the present disclosure relates to, for example, the following [1] to [14].

[1] An optical film for placing at least one functional layer thereon, the optical film containing at least one polyester, wherein a biomass content of the optical film is 10% or more, a total transmittance of the optical film is 70% or more, and an in-plane phase difference of the optical film is 1,500 nm or less.

[2] The optical film according to [1] above, wherein the optical film contains a biomass material-derived polyester.

[3] The optical film according to [1] or [2] above, wherein the optical film contains a recycled material-derived polyester.

[4] The optical film according to any one of [1] to [3] above, wherein the in-plane phase difference is 300 nm or more and 1,450 nm or less.

[5] The optical film according to any one of [1] to [4] above, wherein a Martens hardness on at least one surface of the optical film is 110 N/mm2 or more and 170 N/mm2 or less.

[6] The optical film according to any one of [1] to [5] above, wherein a percentage of elastic deformation work on at least one surface of the optical film is 60% or more and 70% or less.

[7] The optical film according to any one of [1] to [6] above, wherein the optical film consists of a polyester film containing the polyester or includes a polyester film containing the polyester and at least one easily adhesive layer provided on the polyester film.

[8] The optical film according to [7] above, wherein resin constituting the easily adhesive layer is a biomass material-derived resin.

[9] The optical film according to [7] above, wherein resin constituting the easily adhesive layer is a fossil fuel-derived resin.

[10] The optical film according to [7] above, wherein resin constituting the easily adhesive layer is a mixed resin including a biomass material-derived resin and a fossil fuel-derived resin.

[11] An optical multilayer body including the optical film according to any one of [1] to [10] above and at least one functional layer provided on the optical film.

[12] A surface plate for an image display device, the surface plate including a resin plate or glass plate and the optical film according to any one of [1] to [10] above or the optical multilayer body according to [11] above disposed on the plate.

[13] An image display device including a display element and the optical film according to any one of [1] to [10] above or the optical multilayer body according to [11] above disposed on the display element.

[14] A polarizing plate including a polarizer, a first transparent protective plate disposed on one surface of the polarizer, and a second transparent protective plate disposed on the other surface of the polarizer, wherein at least one of the first transparent protective plate or the second transparent protective plate is the optical film according to any one of [1] to [10] above or the optical multilayer body according to [11] above.

Third Embodiment

A third embodiment of the present disclosure relates to an optical effect film.

A third embodiment of the present disclosure will now be described. In particular, a third embodiment of the present disclosure will be described focusing on differences from the first embodiment described above.

First, the problems to be solved by the third embodiment will be described. An image display device includes various optical effect films for purposes such as improving the visibility of images and reducing scratches on device surfaces. Such an optical effect film generally includes a plastic film as an optical film and at least one functional layer provided on this film (see, for example, Japanese Unexamined Patent Application Publication No. 2007-046031 and Japanese Unexamined Patent Application Publication No. 2012-256014).

For use as the plastic film, polyester films, such as a polyethylene terephthalate film, have been proposed. In recent years, furthermore, there has been a growing movement toward building a sustainable, recycling-oriented society. From the perspective of carbon neutrality, the materials field also faces the need to transition away from fossil fuels, similar to the energy sector.

The inventors have studied the production of an optical effect film using a biomass material-derived polyester from the perspective of carbon neutrality. The inventors, however, have found that optical effect films containing a biomass material-derived polyester tend to exhibit a yellow color.

An object of the third embodiment of the present disclosure is to provide an optical effect film that has little yellowish tint and with which environmental impacts can be reduced.

According to the third embodiment of the present disclosure, there is provided an optical effect film that has little yellowish tint and with which environmental impacts can be reduced. Even when a biomass material-derived polyester is used, furthermore, an optical effect film having optical properties and mechanical properties comparable to those achieved with a fossil fuel-derived polyester can be provided.

In the following description of the third embodiment of the present disclosure, portions that can be configured in the same manner as in the optical film described in the first embodiment and the optical multilayer body, the surface plate, the image display device, and the polarizing plate including this optical film may be referenced using the same numerals as the numerals used in the first embodiment, and redundant descriptions may be omitted. When it is obvious that an advantage attainable in the first embodiment is also attainable in the third embodiment, its description may be omitted.

[Optical Effect Film]

In the third embodiment of the present disclosure, an optical effect film is a film through which light can be transmitted.

The cross-section of the optical effect film according to the third embodiment of the present disclosure is the same as the cross-section of the optical film 1 illustrated in Fig. 1. That is, Fig. 1 also corresponds to a cross-sectional view illustrating the optical effect film 2 according to the third embodiment of the present disclosure. The optical effect film 2 according to the third embodiment of the present disclosure has, as illustrated in Fig. 1, a first surface 2a and a second surface 2b opposite the first surface 2a. The polyester film described later also has a first surface and a second surface opposite the first surface. When the first surface and the second surface are not specifically distinguished, "surface" may simply be used. The optical effect film has, within its plane, a first direction and a second direction perpendicular to the first direction. The first direction is, in the third embodiment, the longitudinal direction, flow direction, or machine direction (MD) of the optical effect film. The second direction is, in the third embodiment, the transverse direction or width direction (TD) of the optical effect film. In the following description of the first embodiment of the present disclosure, mentioning an "optical effect film" is intended to refer to the optical effect film according to the third embodiment of the present disclosure, unless specifically distinguished.

The optical effect film includes, in the third embodiment, at least a polyester film.

A polyester film is a film containing at least one polyester.

The optical effect film consists of, in the third embodiment, a polyester film.

The optical effect film includes, in the third embodiment, a polyester film and at least one easily adhesive layer provided on the polyester film. In the third embodiment, an optical effect film that includes a polyester film and at least one easily adhesive layer can be specifically referred to as an "easily adhesive film."

Herein, an optical effect film that is a polyester film, an optical effect film that is an easily adhesive film, and an optical effect film that includes a polyester film and a hue adjustment layer, which will be described later, may be collectively described as "optical effect films A."

The optical effect film includes, in the third embodiment, a polyester film and at least one functional layer provided on the polyester film. Herein, an optical effect film that includes a polyester film and a functional layer may be specifically referred to as an "optical multilayer body." An optical multilayer body may include an easily adhesive layer between the polyester film and the functional layer.

<Polyester>

The optical effect film and the polyester film contain at least one polyester.

As the description of the polyester that the optical effect film contains in the third embodiment of the present disclosure, the description of the polyester that the optical film contains in the first embodiment of the present disclosure can be applied unless contradictory. As the description of the polyester that the polyester film contains in the third embodiment of the present disclosure, the description of the polyester that the polyester film contains in the first embodiment of the present disclosure can be applied unless contradictory.

<Bluing Agent>

The optical effect film preferably contains at least one bluing agent as a toning agent.

Herein, a bluing agent is an ingredient that adjusts the hue by absorbing light in the visible light region, for example in the wavelength range from orange to yellow. The visible light region refers to the region from 380 nm to 780 nm, both inclusive. The bluing agent is, for example, a dye or a pigment.

Biomass polyesters may contain components with a low molecular weight (low-molecular-weight components). The inventors presume that optical effect films exhibit an yellow color, or the yellowing of optical effect films occurs, due to the low-molecular-weight components. With the inclusion of a bluing agent in an optical effect film, the yellowish tint of the optical effect film can be reduced well.

For the optical effect film, the polyester film may contain a bluing agent.

For the easily adhesive film, at least one selected from the polyester film and the easily adhesive layer may contain a bluing agent.

For the optical multilayer body, at least one selected from the polyester film and the functional layer may contain a bluing agent. For the optical multilayer body, at least one selected from the polyester film, the easily adhesive layer, and the functional layer may contain a bluing agent.

With these configurations, the yellowish tint of the optical effect film can be reduced well.

The bluing agent may have a maximum absorption peak within the wavelength region from 500 nm to 650 nm, both inclusive, or may have a maximum absorption peak within the wavelength region from 550 nm to 600 nm, both inclusive. With a bluing agent having a maximum absorption peak in such a wavelength region, the yellowish tint of the optical effect film can be reduced well.

Herein, the above maximum absorption peak can be measured using an ultraviolet-visible spectrophotometer (V-670 spectrophotometer, manufactured by JASCO Corporation). The solvent used to dissolve the bluing agent can be acetonitrile.

Examples of bluing agents include organic dyes or pigments and inorganic dyes or pigments. Examples of organic dyes or pigments include fused polycyclic bluing agents and phthalocyanine bluing agents. Examples of inorganic dyes or pigments include ultramarine blue, Prussian blue, and cobalt blue.

The bluing agent may be a fused polycyclic bluing agent for heat resistance, lightfastness, and solubility reasons. Examples of fused polycyclic bluing agents include anthraquinone bluing agents, indigo bluing agents, and phthalocyanine bluing agents. Of these, anthraquinone bluing agents are particularly preferred for heat resistance, lightfastness, and solubility reasons.

Anthraquinone bluing agents are bluing agents having an anthraquinone ring system, represented by formula (1). Examples of anthraquinone bluing agents include compounds represented by formula (2), specifically the compounds represented by formula (3) to formula (5).

[Chem. 1]

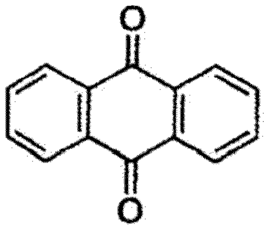

(1)

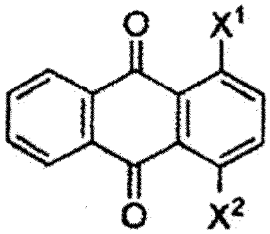

(2)

In formula (2), X1 represents -OH, -NHR1, or -NR1R2, and X2 represents -NHR3 or -NR3R4, where R1, R2, R3, and R4 each independently represent a linear-chain or branched alkyl group containing one or more and six or fewer carbons or a phenyl group in which at least one hydrogen atom has been replaced with a linear-chain or branched alkyl group containing one or more and six or fewer carbons. X1 and X2 in formula (2) may be identical to each other or may be different.

For compounds represented by formula (2), it is preferred that at least one of X1 or X2 have a phenyl group in which at least one hydrogen atom has been replaced with a linear-chain or branched alkyl group containing one or more and six or fewer carbons, and it is more preferred that one of X1 or X2 have a phenyl group in which at least one hydrogen atom has been replaced with a linear-chain or branched alkyl group containing one or more and six or fewer carbons.

[Chem. 2]

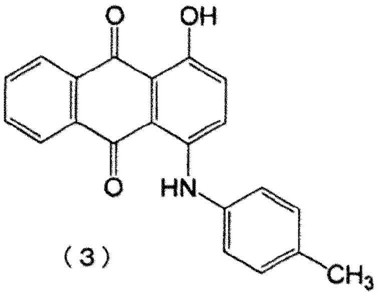

(3)

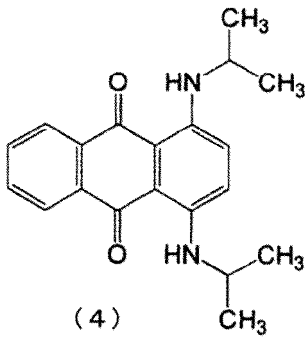

(4)

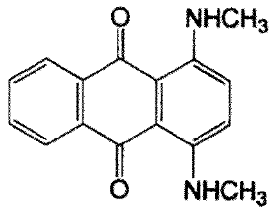

(5)

Indigo bluing agents are bluing agents having indoxyl or thioindoxyl. Phthalocyanine bluing agents are bluing agents having a cyclic structure in which four phthalic acid imides are crosslinked by nitrogen atoms.

The optical effect film can contain one or two or more bluing agents.

When the optical effect film contains bluing agent(s), it is preferred that the amount of the bluing agent(s) be smaller, and that a fewer types of bluing agents be used, if maintaining a high total transmittance of the optical effect film is intended.

The amount of the bluing agent may be 5 wtppm or more, may be 8 wtppm or more, or may be 10 wtppm or more based on the total mass of the optical effect film. An optical effect film in which the amount of bluing agents is equal to or greater than the lower limits exhibits little yellowish tint.

The amount of the bluing agent may be 100 wtppm or less, may be 80 wtppm or less, may be 60 wtppm or less, may be 50 wtppm or less, may be 40 wtppm or less, or may be 30 wtppm or less based on the total mass of the optical effect film. An optical effect film in which the amount of bluing agents is equal to or smaller than the upper limits has a good hue and exhibits a high total transmittance and a low haze.

The amount of the bluing agent can be measured using known methods.

The optical effect film may contain additives. Examples of additives include ultraviolet absorbers, photostabilizers, antioxidants, heat stabilizers, antistatic agents, slippery particles, heat-resistant polymer particles, alkali metal compounds, alkaline earth metal compounds, phosphorus compounds, flame retardants, gel inhibitors, and surfactants. The optical effect film can contain one or two or more additives.

<Structure of the Optical Effect Film>

The optical effect film may have a single-layer structure or may have a multilayer structure. A film having a single-layer structure allows for easier control of stretching. A film having a multilayer structure allows effects to be easily obtained by changing the composition of each layer.

The optical effect film may be a polyester film containing at least one polyester and at least one bluing agent. The optical effect film may include a polyester film and a hue adjustment layer provided on the polyester film and containing at least one bluing agent, and the polyester film may further contain at least one bluing agent. Hereinafter, a hue adjustment layer is also referred to as a "toning layer." The toning layer may be an easily adhesive layer as described later. The toning layer may be a coating layer formed by applying a coating solution containing at least one bluing agent to the polyester film.

Preferred thicknesses of the polyester film will be specified later.

The thickness of the toning layer may be 10 nm or more, may be 30 nm or more, or may be 50 nm or more. The thickness of the toning layer may be 1,000 nm or less, may be 800 nm or less, may be 600 nm or less, may be 400 nm or less, or may be 200 nm or less.

When the polyester film contains a bluing agent, the amount of the bluing agent in the polyester film may be 5 wtppm or more, may be 8 wtppm or more, may be 10 wtppm or more based on the total mass of the polyester film. Such a polyester film exhibits little yellowish tint.

When the polyester film contains a bluing agent, the amount of the bluing agent in the polyester film may be 100 wtppm or less, may be 80 wtppm or less, may be 60 wtppm or less, may be 50 wtppm or less, may be 40 wtppm or less, may be 30 wtppm or less based on the total mass of the polyester film. Such a polyester film has a good hue and exhibits a high total transmittance and a low haze.

The amount of the bluing agent in the toning layer may be 10 wtppm or more, may be 50 wtppm or more, may be 100 wtppm or more, may be 200 wtppm or more, may be 300 wtppm or more, may be 400 wtppm or more, may be 500 wtppm or more, may be 1,000 wtppm or more, may be 2,000 wtppm or more, may be 3,000 wtppm or more, or may be 4,000 wtppm or more based on the mass of the toning layer. An optical effect film including such a toning layer exhibits little yellowish tint.

The amount of the bluing agent in the toning layer may be 20,000 wtppm or less, may be 18,000 wtppm or less, may be 15,000 wtppm or less, may be 13,000 wtppm or less, may be 10,000 wtppm or less, or may be 8,000 wtppm or less based on the mass of the toning layer. An optical effect film including such a toning layer has a good hue and exhibits a high total transmittance and a low haze.

The polyester film may have a single-layer structure or may have a multilayer structure. A film having a single-layer structure allows for easier control of stretching. A film having a multilayer structure allows effects to be easily obtained by changing the composition of each layer. For a polyester film having a multilayer structure, at least one layer may contain a bluing agent.

For a polyester film having a multilayer structure, the biomass polyester only needs to be contained in at least one layer. For example, a multilayer film including a layer containing a biomass polyester as its base ingredient with a layer containing a fossil fuel-derived polyester as its base ingredient is superior in stretchability. As used herein, a layer containing a certain polymer as its base ingredient refers to a layer in which the percentage of the polymer is more than 50% by mass. The percentage of the polymer may be 60% by mass or more, may be 70% by mass or more, may be 80% by mass or more, or may be 90% by mass or more.

Examples of polyester films having a multilayer structure include:

(1A) a multilayer film including two or three or more layers,
each containing a biomass polyester as its base ingredient;
(2A) a multilayer film including

a layer containing a biomass polyester as its base ingredient and
a layer containing a fossil fuel-derived polyester as its base ingredient;

(3A) a multilayer film including

a layer containing a biomass polyester as its base ingredient,
a layer containing a fossil fuel-derived polyester as its base ingredient, and
a layer containing a biomass polyester as its base ingredient in this order;

(4A) a multilayer film including

a layer containing a biomass polyester as its base ingredient,
a layer containing a biomass polyester as its base ingredient, and
a layer containing a fossil fuel-derived polyester as its base ingredient in this order; and

(5A) a multilayer film including

a layer containing a fossil fuel-derived polyester as its base ingredient,
a layer containing a biomass polyester as its base ingredient, and
a layer containing a fossil fuel-derived polyester as its base ingredient in this order.

Examples of polyester films having a multilayer structure, furthermore, include:

(1B) a multilayer film including two or three or more layers each having a biomass content of 10% or more;

(2B) a multilayer film including a layer having a biomass content of 10% or more and
a layer having a biomass content of less than 10%;

(3B) a multilayer film including a layer having a biomass content of 10% or more,

a layer having a biomass content of less than 10%, and

a layer having a biomass content of 10% or more in this order;

(4B) a multilayer film including a layer having a biomass content of 10% or more,

a layer having a biomass content of 10% or more, and

a layer having a biomass content of less than 10% in this order; and

(5B) a multilayer film including a layer having a biomass content of less than 10%,

a layer having a biomass content of 10% or more, and

a layer having a biomass content of less than 10% in this order. For the multilayer films of (1B) to (5B) above, however, the overall biomass content of the film is 10% or more.

The multilayer films of (1A) and (1B) above make great environmental contributions. The multilayer films of (2A) to (4A) and (2B) to (4B) above make great environmental contributions and are superior in stretchability. The multilayer films of (5A) and (5B) above can result in reduced impact of impurities that can separate out of the biomass polyester, for example on the functional layer placed on the polyester film, as well as making great environmental contributions and being superior in stretchability.
A polyester film having a multilayer structure may be a coextruded resin film. For example, by shaping the constituent materials for the individual layers into films by coextrusion and subjecting the films to drawing treatment, a polyester film having a multilayer structure can be obtained.
The thickness of the polyester film may be 10 μm or more, may be 15 μm or more, may be 20 μm or more, may be 25 μm or more, or may be 30 μm or more. Such a polyester film is superior in mechanical strength.
The thickness of the polyester film may be 200 μm or less, may be 180 μm or less, may be 160 μm or less, may be 140 μm or less, may be 120 μm or less, or may be 100 μm or less. Such a polyester film is superior in bending resistance.
Herein, the thickness of an optical effect film, a polyester film, and each layer of them is determined by selecting any 20 locations on a cross-sectional image of the optical effect film and the polyester film obtained using a scanning electron microscope (SEM) and calculating the average of the 20 locations. The 20 locations, however, are selected to ensure that they are not unevenly distributed. As for the acceleration voltage and magnification of the SEM, the acceleration voltage is preferably set to 1 kV or more and 10 kV or less, and the magnification is preferably set to 20 times or more and 7,000 times or less, both being selected according to the layer of interest.
Before the formation of the functional layer on it, the polyester film may be subjected to physical treatments, such as corona discharge treatment and oxidation treatment, or may undergo prior coating with a paint referred to as an

anchoring agent or primer, for improved adhesion.

The polyester film and the optical effect film may be in sheet-shaped form, obtained by cutting into a predetermined size, or may be in roll-shaped form, which is a long sheet wound into a roll. The size of the sheet is, for example, approximately 2 inches or more and 500 inches or less in terms of maximum size. The maximum size refers to the maximum length between any two points in the plane of the polyester film and the optical effect film. For example, when the polyester film and the optical effect film are rectangular, the diagonal length of the rectangle serves as the maximum size. When the polyester film and the optical effect film are round, the diameter of the circle serves as the maximum size.

The width of the roll-shaped form may be, for example, 500 mm or more and 8,000 mm or less. The length of the roll-shaped form may be, for example, 100 m or more and 10,000 m or less. A polyester film and an optical effect film in roll-shaped form can be used after being cut into a sheet to the size of, for example, an image display device. When cutting them, it is preferred to exclude the ends of the roll, where physical characteristics are variable.

The shape of the sheet may be polygonal, such as triangular, tetragonal, or pentagonal, may be round, or may be random and indefinite. More specifically, when the polyester film and the optical effect film are in tetragonal shapes, the aspect ratio is not particularly limited, provided that they are acceptable as display screens. Examples include horizontal:vertical = 1:1, 4:3, 16:10, 16:9, 2:1, 5:4, and 11:8.

<Physical Characteristics of the Optical Effect Film and the Polyester Film>

The physical characteristics that the optical effect film and the polyester film preferably have will now be described.

(Biomass Content)

The biomass content of the optical effect film is 10% or more, may be 12% or more, may be 15% or more, or may be 18% or more. With such an optical effect film, the reduction of environmental impacts can be sought. The higher the biomass content of the optical effect film, the more preferred; however, the biomass content may be, for example, 98% or less, may be 90% or less, may be 80% or less, may be 70% or less, may be 60% or less, may be 50% or less, may be 40% or less, or may be 30% or less.

The biomass content of the polyester film may be 10% or more, may be 12% or more, may be 15% or more, or may be 18% or more. With such a polyester film, the reduction of environmental impacts can be sought. The higher the biomass content of the polyester film, the more preferred; however, the biomass content may be, for example, 98% or less, may be 90% or less, may be 80% or less, may be 70% or less, may be 60% or less, may be 50% or less, may be 40% or less, or may be 30% or less.

When the overall biomass content of the optical effect film is measured, the sample can be prepared from the optical effect film. When the biomass content of each layer in the optical effect film is measured, the sample can be prepared after separating the layer of interest from the optical effect film.

(Yellowness Index YI)

The yellowness index (YI) of the optical effect film is -1.0 or greater and 2.5 or less.

The yellowness index (YI) of the polyester film may be -1.0 or greater and 2.5 or less.

The yellowness index (YI) indicates the degree of deviation of a hue from colorless in the direction of yellow. Positive YI values indicate that the hue is yellow. Negative YI values indicate that the hue is blue. The YI is calculated according to the equation below from the tristimulus values (X, Y, and Z) according to JIS K7373: 2006. The tristimulus values are measured by performing transmittance measurement for light with wavelengths from 300 nm to 800 nm, both inclusive, using an ultraviolet-visible spectrophotometer (V-670 spectrophotometer, manufactured by JASCO Corporation).

$$YI = 100 \times (1.2769X - 1.0592Z)/Y$$

In the above equation, X, Y, and Z each denote a tristimulus value of the optical effect film in the XYZ colorimetric system when supplementary illuminant C is used. The tristimulus values are presented in the XYZ colorimetric system (2-degree field of view) using supplementary illuminant C as defined in JIS Z8720: 2012.

An optical effect film having a YI of greater than 2.5 exhibits a yellow color, which is undesirable for the appearance of the optical effect film. An optical effect film having a YI of less than -1.0 exhibits a blue color, which may be undesirable for the appearance of the optical effect film.

The YI may be 2.4 or less, may be 2.0 or less, may be 1.8 or less, may be 1.5 or less, or may be 1.3 or less. An

optical effect film and a polyester film having such a YI have further reduced yellowish tint. The YI may be -0.8 or greater, may be -0.5 or greater, may be -0.3 or greater, may be 0.0 or greater, may be 0.3 or greater, or may be 0.5 or greater.

(In-Plane Phase Difference (Re))

The in-plane phase difference (Re) of the optical effect film A may be 30,000 nm or less, although it is not particularly limited. Herein, an "in-plane phase difference" is calculated according to the equation: In-plane phase difference (Re) = (nx - ny) $\times$ T [nm]. An "in-plane phase difference" is also referred to as retardation, and its unit is a unit for length. The T in the above equation within the description of the third embodiment represents the thickness [nm] of the optical effect film A.

In the description of the third embodiment, "nx" is the refractive index in the slow axis direction, the direction with the highest refractive index in the plane of the optical effect film A. "ny" is the refractive index in the fast axis direction, which is the direction perpendicular to the slow axis direction in the plane of the optical effect film A. The refractive indices and the in-plane phase difference represent the refractive indices and in-plane phase difference for a wavelength of 550 nm. The direction of the slow axis and the in-plane phase difference are measured at a measurement angle of 0° using trade name "RETS-100," manufactured by Otsuka Electronics Co., Ltd. nx - ny can be calculated from thickness information of the optical effect film A, in addition to the in-plane phase difference measured with "RETS-100."

As used herein, nx - ny and Re represent the averages of measurements at 16 locations excluding the minimum and maximum from measurements at 18 locations. Herein, measurement locations are selected from any locations free of defects, such as scratches or stains.

When polarized light passes through a film having birefringence, rainbow effects can be observed on the film. Rainbow effects are rainbow-colored fringes and may reduce the visibility of the film. The polarized light is, for example, image light emitted from a liquid crystal display element or an OLED display element including a functional layer that reduces reflection through polarization control.

For reduced rainbow effects on the optical effect film A and the resulting improved visibility, the in-plane phase difference of the optical effect film A may be 3,000 nm or more, may be 4,000 nm or more, or may be 5,000 nm or more or may be 1,500 nm or less, may be 1,450 nm or less, or may be 1,200 nm or less.

When the in-plane phase difference of the optical effect film A is 3,000 nm or more, rainbow effects can be effectively obscured. The inventors presume that this is for the following reason. Rainbow effects are presumably caused by light in a polarized state passing through a film with varying in-plane phase differences and experiencing a change in its polarized state. The larger the in-plane phase difference of the optical effect film A, the greater the changes in visible light transmittance for different wavelengths in response to a given change in in-plane phase difference. The larger the in-plane phase difference, furthermore, the more easily light with multiple wavelengths is transmitted, and the more likely the transmitted light is to be visually perceived as a mixed color. Even when variations in in-plane phase difference exist, therefore, a decrease in transmittance for a certain wavelength is accompanied by an increase in transmittance for another wavelength because visible light transmittance values for different wavelengths greatly change. As a result of this, changes in the mixed color of the transmitted light are difficult to notice, as long as they are visually observed. When the in-plane phase difference of the optical effect film A is 3,000 nm or more, the changes in visible light transmittance for different wavelengths according to the in-plane phase difference are large, and even if visible light transmittance values change due to variations in in-plane phase difference, the colors are visually perceived as a mixture, making changes in color difficult to notice. Rainbow effects, therefore, can be effectively obscured. For reduced tear and breakage during drawing, furthermore, the in-plane phase difference of the optical effect film A may be 30,000 nm or less, may be 25,000 nm or less, may be 20,000 nm or less, or may be 15,000 nm or less.

Moreover, when the in-plane phase difference of the optical effect film A is 1,500 nm or less, rainbow effects can be effectively obscured. The inventors presume that this is for the following reason. The smaller the in-plane phase difference of the optical effect film A, the smaller the changes in visible light transmittance for different wavelengths in response to a given change in in-plane phase difference. The visible light transmittance values for different wavelengths, therefore, remain almost unchanged even when variations in in-plane phase difference exist. Accordingly, when variations in in-plane phase difference are sufficiently small, visually observable rainbow effects no longer occur. For this reason, when the in-plane phase difference of the optical effect film A is 1,500 nm or less, the changes in visible light transmittance for different wavelengths according to the in-plane phase difference are sufficiently small, and rainbow effects caused by variations in in-plane phase difference can be effectively obscured. For the reduction of so-called blackouts, furthermore, the in-plane phase difference of the optical effect film A may be 50 nm or more, may be 100 nm or more, may be 150 nm or more, may be 200 nm or more, may be 250 nm or more, or may be 300 nm or more. In this context, a blackout refers to a phenomenon in which the display screen of, for example, a liquid crystal display device becomes dark depending on the angle when the display device is viewed with polarized sunglasses.

The difference in refractive index "nx - ny" (hereinafter also referred to as "$\Delta$n") may be, in the third embodiment, 0.040 or greater or may be 0.050 or greater. When $\Delta$n is 0.040 or greater, the thickness of the optical effect film A required to

achieve the desired in-plane phase difference can be reduced. Δn may be 0.250 or less or may be 0.200 or less. When Δn is 0.250 or less, the tear and breakage of the film can be reduced because there is no need to excessively draw the film.

Δn may be, in the third embodiment, less than 0.040. When Δn is less than 0.040, it can be made easier to reduce rainbow effects caused by the in-plane phase difference. Δn may be 0.005 or greater, may be 0.008 or greater, or may be 0.010 or greater. When Δn is 0.005 or greater, it can be made easier to reduce blackouts.

The optical effect film A is preferably an oriented film. The oriented film may be a uniaxially oriented film or may be a biaxially oriented film. The biaxial orientation may be sequential biaxial orientation or may be simultaneous biaxial orientation.

An optical effect film A having an in-plane phase difference of 3,000 nm or more and 30,000 nm or less is obtained as follows by sequential biaxial orientation, as an example. A resin composition containing a polyester is melted and shaped into a sheet by extrusion to give a cast film. The cast film is drawn in the flow direction and then drawn in the width direction of the film.

The drawing in the flow direction may be performed using, for example, differences in circumferential speed between rollers. The drawing factor in the flow direction may be 1.1 or greater or may be 1.2 or greater. The drawing factor in the flow direction may be 2.5 or less, may be 2.0 or less, or may be 1.8 or less.

The drawing temperature during drawing in the flow direction may be the glass transition temperature of the polyester or above and the glass transition temperature plus 100°C or below for reduced variations in in-plane phase difference and other optical properties. For PET, this drawing temperature may be 70°C or above, may be 80°C or above, may be 140°C or below, or may be 130°C or below.

The drawing in the width direction may be performed using, for example, the tenter method. The drawing factor in the width direction may be 2.5 or greater or may be 3.0 or greater. The drawing factor in the width direction may be 6.0 or less or may be 5.5 or less. When the drawing factor in the width direction is 6.0 or less, the transparency of the film is excellent. When the drawing factor in the width direction is 2.5 or greater, a required level of stretching tension is achieved, and a large birefringence facilitates the attainment of the desired in-plane phase difference. It is preferred to set the drawing factor in the width direction higher than the drawing factor in the flow direction.

The drawing temperature during drawing in the width direction may be the glass transition temperature of the polyester or above and the glass transition temperature plus 120°C or below. For PET, this drawing temperature may be 80°C or above, may be 90°C or above, may be 160°C or below, or may be 150°C or below. The drawing temperature during drawing in the width direction preferably increases from upstream to downstream. Specifically, when the section for drawing in the width direction is divided into two, the difference between the upstream temperature and the downstream temperature may be 5°C or more, may be 20°C or more, or may be 30°C or more. For PET, the drawing temperature at the first stage may be 80°C or above, may be 90°C or above, may be 120°C or below, or may be 110°C or below.

The sequentially biaxially oriented film is preferably subjected to a heat treatment within the tenter at a temperature equal to or higher than the drawing temperature and equal to or lower than the melting point of the polyester to impart dimensional stability. The temperature during the heat treatment may be 120°C or above, may be 180°C or above, may be 260°C or below, or may be 250°C or below.

After the heat treatment of the sequentially biaxially oriented film, the film is cooled to room temperature and then is wound.

Optionally, relaxation treatment may be performed during the heat treatment and/or cooling. The percentage relaxation during the heat treatment may be 0.5% or more, may be 0.8% or more, may be 5% or less, or may be 3% or less for reduced variations in optical properties. The percentage relaxation during cooling may be 0.5% or more, may be 0.8% or more, may be 3% or less, or may be 2% or less for reduced variations in optical properties. The temperature for relaxation treatment during cooling may be 80°C or above, may be 90°C or above, may be 150°C or below, or may be 130°C or below for the dimensional stability of the film.

An optical effect film A having an in-plane phase difference of 1,500 nm or less is obtained by changing the drawing factors as follows in the sequential biaxial orientation described above, as an example. The drawing factor in the flow direction may be 2.5 or greater or may be 3.0 or greater. The drawing factor in the flow direction may be 6.0 or less or may be 5.5 or less. The drawing factor in the width direction may be 80% or more and 120% or less in relation to the drawing factor in the flow direction, or may be 90% or more and 110% or less, for the adjustment of the in-plane phase difference to 1,500 nm or less.

Polyesters are superior in transparency, heat resistance, and mechanical properties and allow the in-plane phase difference to be controlled within the desired range through drawing work.

A method for controlling the in-plane phase difference of the optical effect film A to be 3,000 nm or more and 30,000 nm or less is the method of selecting the drawing factors, the drawing temperatures, and the thickness of the produced optical effect film A as appropriate. Specifically, the higher the drawing factor ratios, the larger the in-plane phase difference. The lower the drawing temperatures, the larger the in-plane phase difference. The larger the thickness, the larger the in-plane phase difference. The closer the drawing factor ratios are to 1, the smaller the in-plane phase difference. The higher the drawing temperatures, the smaller the in-plane phase difference. The smaller the thickness, the smaller the

in-plane phase difference.

A method for controlling the in-plane phase difference of the optical effect film A to be 1,500 nm or less is the method of selecting the drawing factor ratios and the drawing temperatures during biaxial orientation and the thickness of the produced optical effect film A as appropriate. Specifically, the closer the drawing factor ratios are to 1, the smaller the in-plane phase difference. The higher the drawing temperatures, the smaller the in-plane phase difference. The smaller the thickness, the smaller the in-plane phase difference. The higher the drawing factor ratios, the larger the in-plane phase difference. The lower the drawing temperatures, the larger the in-plane phase difference. The larger the thickness, the larger the in-plane phase difference.

(Maximum Strain in the Primary Orientation Axis)

For the optical effect film A, the maximum strain in its primary orientation axis as measured using a microwave-transmission molecular orientation analyzer may be 7° or less, may be 6° or less, may be 5° or less, or may be 4° or less. With a surface plate for image display devices including such a film, decreases in the visibility of the product, for example caused by light leakage during black display and changes in displayed color due to phase differences, can be reduced. The maximum strain in the primary orientation axis is 0° or more, with lower strain being more preferred; however, the maximum strain is not particularly limited.

The maximum strain in the primary orientation axis can be adjusted to the above upper limits or lower by, for example, adjusting the temperature and drawing factor during drawing in the flow direction, the temperature and drawing factor during drawing in the width direction, and the temperature for heat treatment, during the manufacture of the film.

The maximum strain in the primary orientation axis can be measured as follows. When the shape of the film is roll-shaped, a rectangular film measuring 1000 mm in the machine direction and the full length in the width direction is cut out from the roll-shaped optical effect film A. With the middle in the width direction of this film as the baseline, multiple 100-mm square films are cut out at the positions 300 mm apart in the width direction. The sides of these square films are aligned with the machine direction and the width direction. When the shape of the film is sheet-shaped, a rectangle with the largest area that fits within the shape of the sample is drawn, and 100-mm square films sharing two sides with the four corners of the rectangle are cut out from the corners. For the extracted sample films, the direction of molecular orientation (primary orientation axis) of each is measured using a microwave-transmission molecular orientation analyzer. With the width direction of the film as 0°, the difference from 0° is determined if the molecular orientation angle with respect to the width direction is smaller than 45°, or the difference from 90° is determined if the molecular orientation angle is greater than 45°. The molecular orientation angle with the largest absolute value is defined as the maximum angle, and it is reported as the maximum strain in the primary orientation axis. As the microwave-transmission molecular orientation analyzer, a molecular orientation analyzer manufactured by Kanzaki Paper Manufacturing Co., Ltd. (MOA-2001A) is used.

(Total Transmittance and Haze)

The total transmittance of the optical effect film A may be 70% or more, may be 75% or more, may be 80% or more, may be 85% or more, or may be 88% or more. The higher the total transmittance of the optical effect film A, the more preferred; however, the total transmittance may be 99% or less, may be 98% or less, or may be 95% or less. The total transmittance is measured according to JIS K7361-1: 1997.

The haze of the optical effect film A may be 3.0% or less, may be 2.5% or less, may be 2.0% or less, may be 1.5% or less, or may be 1.0% or less. The lower the haze of the optical effect film A, the more preferred; however, the haze may be 0.1% or more, may be 0.2% or more, or may be 0.3% or more. The haze is measured according to JIS K7136: 2000.

(Martens Hardness)

The Martens hardness on at least one surface of the optical effect film A may be 110 N/mm2 or more and 170 N/mm2 or less. A film having a Martens hardness of 110 N/mm2 or more has high hardness and is superior in abrasion resistance and wear resistance. A film having a Martens hardness of 170 N/mm2 or less is superior in foldability. The Martens hardness can be adjusted by aligning the molecular orientation through a drawing treatment of the film.

The Martens hardness on at least one surface of the optical effect film A may be 115 N/mm2 or more, may be 120 N/mm2 or more, may be 125 N/mm2 or more, may be 130 N/mm2 or more, may be 135 N/mm2 or more, or may be 140 N/mm2 or more. The Martens hardness on at least one surface of the optical effect film A may be 165 N/mm2 or less or may be 160 N/mm2 or less.

In the third embodiment, it is preferred that at least one of the first surface or second surface of the optical effect film A have a Martens hardness as specified above, and it is more preferred that both of the first surface and the second surface have a Martens hardness as specified above. Herein, Martens hardness represents the average of measurements at 20 locations excluding the minimum and maximum from measurements at 22 locations. Herein, measurement locations

are selected from any locations free of defects, such as scratches or stains.

The standard deviation 3σ of the Martens hardness on at least one surface of the optical effect film A is preferably 45 N/mm2 or less. A film for which the standard deviation of the Martens hardness is 45 N/mm2 or less is superior in foldability. This standard deviation may be 40 N/mm2 or less, may be 35 N/mm2 or less, may be 30 N/mm2 or less, may be 25 N/mm2 or less, or may be 20 N/mm2 or less for foldability reasons. The smaller this standard deviation, the more preferred; however, this standard deviation may be 1 N/mm2 or more or may be 5 N/mm2 or more. The standard deviation can be adjusted by the temperature during the formation of the film.

In the third embodiment, it is preferred that at least one of the first surface or second surface of the optical effect film A have a standard deviation of the Martens hardness as specified above, and it is more preferred that both of the first surface and the second surface have a standard deviation of the Martens hardness as specified above. Herein, the standard deviation of Martens hardness represents the standard deviation across measurements at 20 locations.

Herein, Martens hardness is measured by nanoindentation. First, indentation depths h (nm) corresponding to indentation loads F (N) are continuously measured, and the loading-unloading curve is created. The "loading-unloading curve" may also be referred to as the "load-displacement curve." The "maximum indentation depth hmax" is determined through analysis from the loading curve, and the projected area AC (mm2) at hmax is also determined through analysis. The projected area AC represents the area over which the indenter and the optical effect film A are in contact. The Martens hardness HM can be calculated as the maximum indentation load Pmax (N) divided by the projected area AC (equation (1) below).

$$HM = Pmax/AC \dots (1)$$

In this equation, AC is the projected contact area corrected for the indenter tip curvature using the standard method for the analyzer.

The Martens hardness can be measured using an analyzer capable of nanoindentation. Such an analyzer can be Fischer Instruments K.K.'s product number "PICODENTOR HM500."

The Martens hardness is measured under the following conditions.

<Measurement Conditions>

- Indenter used: Vickers indenter (diamond, pyramidal shape; model number, VV005; Fischer Instruments K.K.)
- Indentation conditions: Maximum load
- Maximum indentation load: 20 mN
- Loading time: 10 seconds
- Retention time: Retained for 5 seconds at the maximum indentation load
- Unloading time: 10 seconds
- Stage for sample placement: Suction stage (The suction stage is SMC Corporation's model number "SP2130-AD.")

(Percentage of Elastic Deformation Work)

The percentage of elastic deformation work on at least one surface of the optical effect film A may be 60% or more and 70% or less. A film having a percentage of elastic deformation work of 60% or more is superior in foldability. A film having a percentage of elastic deformation work of 70% or less is superior in hardness.

The percentage of elastic deformation work can be determined by calculating each of the areas of the indentation work region, the elastic work region, and the plastic work region in the "loading-unloading curve" created in the measurement of the Martens hardness and then calculating the percentage according to the following equation.

Percentage of elastic deformation work [%] = (Area of the elastic work region/area of the indentation work region) ×100

Herein, the percentage of elastic deformation work represents the average of measurements at 20 locations excluding the minimum and maximum from measurements at 22 locations. Herein, measurement locations are selected from any locations free of defects, such as scratches or stains.
The standard deviation 3σ of the percentage of elastic deformation work is preferably 10% or less. A film for which the standard deviation of the percentage of elastic deformation work is 10% or less is superior in hardness. The smaller this standard deviation, the more preferred; however, this standard deviation may be 1% or more or may be 2% or more. The standard deviation can be adjusted by the temperature during the formation of the film.
In the third embodiment, it is preferred that at least one of the first surface or second surface of the optical effect film A have a percentage of elastic deformation work as specified above, and it is more preferred that both of the first surface and the second surface have a percentage of elastic deformation work as specified above. In the third embodiment, it is preferred that at least one of the first surface or second surface of the optical effect film A have a standard deviation of the percentage of elastic deformation work as specified above, and it is more preferred that both of the first surface and the second surface have a standard deviation of the percentage of elastic deformation work as specified above.

(Loss Tangent (tanδ))

The peak-top temperature for the loss tangent (tanδ) of the optical effect film A may be 90°C or above and 160°C or below. Such a film is superior in workability during heating. The peak-top temperature for tanδ may be 92°C or above, may be 94°C or above, may be 96°C or above, or may be 100°C or above. The peak-top temperature for tanδ may be 160°C or below, may be 155°C or below, or may be 150°C or below.
The peak-top temperature for tanδ typically corresponds to the glass transition temperature of the polyester contained in the optical effect film A. By adjusting the glass transition temperature of the polyester, therefore, the peak-top temperature for tanδ can be adjusted to fall within the above ranges.
tanδ is measured using a dynamic mechanical analyzer (DMA). The temperature at which tanδ reaches its maximum is defined as the peak-top temperature for tanδ of the optical effect film A. When two or more maxima of tanδ are observed, the value at the lowest temperature is used. The measurement conditions are as follows. Measuring instrument, Rheogel-E4000 (manufactured by K.K. UBM), sample for measurement, 5 mm wide × 25 mm long; frequency, 10 Hz; chuck distance, 10 mm; measurement temperature range, 25°C to 250°C; temperature elevation rate, 2°C/min.

(Degree of Crystallinity)

The degree of crystallinity of the optical effect film A may be 85% or less. Such a film exhibits good interlayer adhesion when the functional layer is placed on it. The degree of crystallinity of the optical effect film A may be 60% or more, may be 65% or more, or may be 70% or more for the mechanical strength of the film.
The degree of crystallinity of the optical effect film A may be more than 85%. Such a film exhibits good pencil hardness. The degree of crystallinity of the optical effect film A may be 88% or more or may be 90% or more for the pencil hardness of the film. The degree of crystallinity of the optical effect film A may be 100% or less, may be 99% or less, or may be 98% or less.
The degree of crystallinity of the optical effect film A is a value measured by X-ray diffraction.
The measurement conditions and calculation method for the degree of crystallinity are as follows.

(Measurement Conditions)

Measurement method: 2θ/θ measurement

Instrument: Smart Lab, manufactured by Rigaku Corporation, 9 kW

X-ray source: Cu-Kα, 45 kV-200 mA

Measurement range: 10 deg to 50 deg

Step: 0.020 deg

Measurement time: 4.0 deg/min

(Calculation Method)

The degree of crystallinity is calculated according to the equation of the degree of crystallinity (%) = (the area of the crystalline peak)/(the area of the crystalline peak + the area of the amorphous peak) $\times$ 100, based on profile fitting.

The degree of crystallinity of the optical effect film A can be controlled by, for example, the drawing factors and the drawing temperatures. Specifically, the larger the drawing factors, the higher the degree of crystallinity. The smaller the drawing factors, the lower the degree of crystallinity.

(Gas Barrier Properties)

The optical effect film is, in the third embodiment, superior in gas barrier properties.

The water vapor transmission rate of the optical effect film in an environment at a temperature of 40°C and a humidity of 90% RH as measured according to JIS K7129-2: 2019 may be 20 g/(m2·24 hr) or less, may be 15 g/(m2·24 hr) or less, or may be 10 g/(m2·24 hr) or less. The lower the water vapor transmission rate of the optical effect film, the more preferred; however, the water vapor transmission rate may be 2 g/(m2·24 hr) or more or may be 3 g/(m2·24 hr) or more. The water vapor transmission rate can be measured using a water vapor permeation analyzer ("PERMATRAN," manufactured by Modern Controls, Inc.).

The oxygen transmission rate of the optical effect film in an environment at a temperature of 25°C and a humidity of 50% RH as measured according to JIS K7126-2: 2006 may be 100 cc/(m2·24 hr·atm) or less, may be 80 cc/(m2·24 hr·atm) or less, or may be 50 cc/(m2·24 hr·atm) or less. The lower the oxygen transmission rate of the optical effect film, the more preferred; however, the oxygen transmission rate may be 5 cc/(m2·24 hr·atm) or more or may be 7 cc/(m2·24 hr·atm) or more. The oxygen transmission rate can be measured using an oxygen permeation analyzer ("OX-TRAN I0/50A"), manufactured by Modern Controls, Inc.).

<Easily Adhesive Layer>

The optical effect film according to the third embodiment of the present disclosure may be an easily adhesive film including a polyester film and at least one easily adhesive layer provided on the polyester film. The easily adhesive layer may be provided solely on either one of the first surface or the second surface of the polyester film, or may be provided on both of the first surface and the second surface.

The cross-section of the easily adhesive film according to the third embodiment of the present disclosure is the same as the cross-section of the easily adhesive film 1 illustrated in Fig. 4. That is, Fig. 4 also corresponds to a cross-sectional view illustrating the easily adhesive film 1 according to the third embodiment of the present disclosure. The easily adhesive film 1 in Fig. 4 includes a polyester film 4 and an easily adhesive layer 6 in this order. The easily adhesive layer 6 is provided on the first surface 4a of the polyester film 4.

As the description of the easily adhesive layer in the third embodiment of the present disclosure, the description of the easily adhesive layer in the first embodiment of the present disclosure can be applied unless contradictory.

An easily adhesive layer containing a biomass material-derived resin makes a great environmental contribution and exhibits high compatibility with a polyester film containing a biomass polyester and high conformity to the shape of that film. An optical effect film including such an easily adhesive layer, therefore, is superior in workability. An optical effect film including an easily adhesive layer containing a fossil fuel-derived resin is superior in adhesion durability in a high-temperature and high-humidity environment.

The biomass content of the easily adhesive layer may be, in the third embodiment, 10% or more, may be 12% or more, may be 15% or more, or may be 18% or more. The biomass content of the easily adhesive layer may be, in the third embodiment, 98% or less, may be 90% or less, may be 80% or less, may be 70% or less, may be 60% or less, or may be 50% or less. By specifying the biomass content of the resin constituting the easily adhesive layer and designating that resin as a raw material, the biomass content of the easily adhesive layer can be specified, and the quality of the optical effect film can also be controlled, in advance.

The easily adhesive layer may further contain at least one bluing agent as described above.

The amount of the bluing agent in the easily adhesive layer may be 10 wtppm or more, may be 50 wtppm or more, may be 100 wtppm or more, may be 200 wtppm or more, may be 300 wtppm or more, may be 400 wtppm or more, may be 500 wtppm or more, may be 1,000 wtppm or more, may be 2,000 wtppm or more, may be 3,000 wtppm or more, or may be 4,000 wtppm or more based on the mass of the easily adhesive layer. An easily adhesive film including such an easily adhesive layer exhibits little yellowish tint.

The amount of the bluing agent in the easily adhesive layer may be 20,000 wtppm or less, may be 18,000 wtppm or less, may be 15,000 wtppm or less, may be 13,000 wtppm or less, may be 10,000 wtppm or less, or may be 8,000 wtppm or less based on the mass of the easily adhesive layer. An easily adhesive film including such an easily adhesive layer has a good hue and exhibits a high total transmittance and a low haze.

<Functional Layer>

The optical effect film according to the third embodiment of the present disclosure may be an optical multilayer body including a polyester film and at least one functional layer provided on the polyester film. The optical multilayer body may include an easily adhesive layer between the polyester film and the functional layer. The functional layer may be provided on one surface of the polyester film or may be provided on both surfaces.

The cross-section of the optical multilayer body according to the third embodiment of the present disclosure is the same as the cross-section of the optical multilayer body 3 illustrated in Fig. 5. That is, Fig. 5 also corresponds to a cross-sectional view illustrating the optical multilayer body 3 according to the third embodiment of the present disclosure. The optical multilayer body 3 in Fig. 5 includes a polyester film 4, an easily adhesive layer 6, and a functional layer 8 in this order. The easily adhesive layer 6 and the functional layer 8 are provided on the first surface 4a of the polyester film 4.

The total transmittance of the optical multilayer body may be 50% or more, may be 60% or more, may be 70% or more, may be 80% or more, may be 85% or more, or may be 90% or more. The higher the total transmittance of the optical multilayer body, the more preferred; however, the total transmittance may be 99% or less, may be 98% or less, or may be 95% or less. The total transmittance is measured according to JIS K7361-1: 1997.

The haze of the optical multilayer body may be 10.0% or less, may be 7.0% or less, may be 5.0% or less, may be 4.0% or less, or may be 3.0% or less. The haze of the optical multilayer body may be 0.1% or more, may be 0.2% or more, or may be 0.3% or more. The haze is measured according to JIS K7136: 2000.

The total transmittance and haze are, in the case of an optical multilayer body including a polyester film, optionally an easily adhesive layer, and a functional layer in this order, measured with the light incident surface being the polyester film surface.

The optical multilayer body according to the third embodiment of the present disclosure may include one functional layer or may include two or more. That is, two or more functional layers may be stacked on the polyester film, with an easily adhesive layer interposed therebetween as needed.

As the description of the functional layer in the third embodiment of the present disclosure, the description of the functional layer in the first embodiment of the present disclosure can be applied unless contradictory.

Examples of functional layers include the following (1) to (12).

(1) A hard-coat layer

(2) An antiglare layer

(3) An antifouling layer

(4) A multilayer structure including a hard-coat layer and an antireflection layer in this order

(5) A multilayer structure including a hard-coat layer and an antiglare layer in this order

(6) A multilayer structure including a hard-coat layer and an antifouling layer in this order

(7) A multilayer structure including an antiglare layer and an antireflection layer in this order

(8) A multilayer structure including an antiglare layer and an antifouling layer in this order

(9) A multilayer structure including a hard-coat layer, an antiglare layer, and an antireflection layer in this order

(10) An antistatic layer

(11) An electrically conductive layer

(12) A retardation layer

In (4) to (11) above, the left side indicates the layer positioned on the polyester film side.

Of one or more functional layers, the functional layer in contact with the polyester film or the easily adhesive layer preferably contains a cured form of at least one ionizing radiation-curable ingredient. The functional layer in contact with the polyester film or the easily adhesive layer is preferably a hard-coat layer. With the inclusion of a cured form of an ionizing radiation-curable ingredient in the functional layer in contact with the polyester film or the easily adhesive layer, it can be made easier to achieve high pencil hardness of the optical multilayer body.

The functional layer may further contain at least one bluing agent as described above.

The amount of the bluing agent in the functional layer may be 50 wtppm or more, may be 80 wtppm or more, or may be 100 wtppm or more based on the mass of the functional layer. An optical multilayer body including such a functional layer exhibits little yellowish tint. The amount of the bluing agent in the functional layer may be 600 wtppm or less, may be 550 wtppm or less, or may be 500 wtppm or less based on the mass of the functional layer. An optical multilayer body including such a functional layer exhibits a high total transmittance and a low haze.

An electrically conductive layer contains, in the third embodiment, at least one optically transparent resin as a binder resin as described earlier and multiple filaments of electrically conductive fiber placed in the optically transparent resin. Electrically conductive fiber is a substance having electrical conductivity and also having a shape in which the length is sufficiently large compared to the thickness (e.g., the diameter). For example, substances that have electrical conductivity and whose length is equal to or greater than approximately fivefold the thickness are included as electrically conductive fibers. An electrically conductive layer refers to a layer that contains an optically transparent resin and multiple filaments of electrically conductive fiber placed in the optically transparent resin and is capable of conducting electricity from its surface. The filament diameter of the electrically conductive fiber is, for example, 10 nm or more and 200 nm or less. The filament length of the electrically conductive fiber is, for example, 30 μm or more, and its upper limit is not particularly limited. Examples of electrically conductive fibers include electrically conductive carbon fiber, metal fibers, such as metal nanowires, metal-coated organic fibers, metal-coated inorganic fibers, and carbon nanotubes.

A large part of the electrically conductive fiber may be present on the side closer to the optical effect film than the position at half the thickness of the electrically conductive layer. In that case, the electrically conductive fiber is also present on the side closer to the surface than the position at half the thickness of the electrically conductive layer and on the surface of the electrically conductive layer as a result of the rest of the electrically conductive fiber accumulating on the large part of the electrically conductive fiber. Owing to this, the electrically conductive layer is electrically capable of conducting electricity from its surface, and, furthermore, filaments of the electrically conductive fiber are in contact with each other in the thickness direction of the electrically conductive layer.

The functional layer is formed as follows, for example. A curable composition is applied to the polyester film or the easily adhesive layer to the desired thickness, through which a coating (uncured resin layer) is formed. When an organic solvent is used, the organic solvent is removed through drying. The drying conditions are, for example, 10 seconds or more and 10 minutes or less at 40°C or above and 120°C or below. Then, when the curable composition contains a thermosetting ingredient, curing is initiated by heating the coating at a temperature required for curing. When the curable composition contains an ionizing radiation-curable ingredient, curing is initiated by irradiating the coating with ionizing radiation. In such a manner, the functional layer can be formed.

The optical effect film according to the third embodiment of the present disclosure is suitable as a film for use in image display devices. Specifically, the optical effect film is suitable as various functional films, such as a hard-coat film, an antiglare film, an antireflection film, an antifouling film, an antistatic film, and a polarizer-protecting film.

[Polyester Film]

The third embodiment of the present disclosure relates to, in an embodiment, a polyester film containing at least one polyester and at least one bluing agent. In an embodiment, the biomass content of the polyester film is 10% or more, the total transmittance of the polyester film is 70% or more, and the yellowness index (YI) of the polyester film is -1.0 or greater and 2.5 or less. The details of the individual components, physical characteristics, etc., are as described above.

[Easily Adhesive Film]

The third embodiment of the present disclosure relates to, in an embodiment, an easily adhesive film including a polyester film and at least one easily adhesive layer provided on the polyester film and containing at least one bluing agent. In an embodiment, the biomass content of the easily adhesive film is 10% or more, the total transmittance of the easily adhesive film is 70% or more, and the yellowness index (YI) of the easily adhesive film is -1.0 or greater and 2.5 or less. The details of the individual components, physical characteristics, etc., are as described above.

[Surface Plate for Image Display Devices]

Hereinafter, the optical effect films (including the easily adhesive film and the optical multilayer body described

above) according to the third embodiment of the present disclosure are also referred to as "the optical components according to the third embodiment of the present disclosure." An example of an application of the optical components according to the third embodiment of the present disclosure is a surface plate for image display devices that includes a resin plate or glass plate and an optical component according to the third embodiment of the present disclosure disposed on the plate. The optical multilayer body is preferably positioned such that the surface on the functional layer side of the optical multilayer body faces opposite the resin plate or glass plate.

As the description of the surface plate in the third embodiment of the present disclosure, the description of the surface plate in the first embodiment of the present disclosure can be applied unless contradictory.

[Polarizing Plate]

An example of an application of the optical components according to the third embodiment of the present disclosure is a polarizing plate that includes a polarizer, a first transparent protective plate disposed on one surface of the polarizer, and a second transparent protective plate disposed on the other surface of the polarizer, wherein at least one of the first transparent protective plate or the second transparent protective plate is an optical component according to the third embodiment of the present disclosure as described above. The optical multilayer body is preferably positioned such that its surface on the functional layer side faces opposite the polarizer.

As the description of the polarizing plate in the third embodiment of the present disclosure, the description of the polarizing plate in the first embodiment of the present disclosure can be applied unless contradictory.

On one surface of the polarizer, a first transparent protective plate is disposed, and on the other surface, a second transparent protective plate is disposed. At least one of the first transparent protective plate or the second transparent protective plate is an optical component according to the third embodiment of the present disclosure as described above.

Examples of the first transparent protective plate and the second transparent protective plate excluding the optical components according to the third embodiment of the present disclosure include a plastic film and a glass plate. Examples of plastic films include a polyester film, a polycarbonate film, a triacetylcellulose film, a cycloolefin polymer film, and an acrylic film, with oriented forms of such films being preferred for achieving good mechanical strength. Examples of glass plates include ones made of types of glass such as alkaline glass, nitride glass, soda-lime glass, borosilicate glass, and lead glass.

The third embodiment of the present disclosure relates to, for example, the following [1] to [18].

[1] An optical effect film containing at least one polyester, wherein a biomass content of the optical effect film is 10% or more, a total transmittance of the optical effect film is 70% or more, and a yellowness index (YI) of the optical effect film is -1.0 or greater and 2.5 or less.

[2] The optical effect film according to [1] above, wherein the optical effect film contains at least one bluing agent.

[3] The optical effect film according to [2] above, wherein the optical effect film is a polyester film containing the polyester and the bluing agent.

[4] The optical effect film according to [2] above, wherein the optical effect film includes a polyester film containing the polyester and a hue adjustment layer containing the bluing agent.

[5] The optical effect film according to [4] above, wherein the hue adjustment layer is an easily adhesive layer.

[6] The optical effect film according to [5] above, wherein resin constituting the easily adhesive layer is a biomass material-derived resin.

[7] The optical effect film according to [5] above, wherein resin constituting the easily adhesive layer is a fossil fuel-derived resin.

[8] The optical effect film according to [5] above, wherein resin constituting the easily adhesive layer is a mixed resin including a biomass material-derived resin and a fossil fuel-derived resin.

[9] The optical effect film according to any one of [4] to [8] above, wherein a thickness of the polyester film is 10 μm or more and 200 μm or less, and a thickness of the hue adjustment layer is 10 nm or more and 1,000 nm or less.

[10] The optical effect film according to any one of [1] to [9] above, wherein the optical effect film contains a biomass material-derived polyester.

[11] The optical effect film according to any one of [1] to [10] above, wherein the optical effect film contains a recycled material-derived polyester.

[12] The optical effect film according to any one of [1] to [11] above, wherein a Martens hardness on at least one surface of the optical effect film is 110 N/mm2 or more and 170 N/mm2 or less.

[13] The optical effect film according to any one of [1] to [12] above, wherein a percentage of elastic deformation work on at least one surface of the optical effect film is 60% or more and 70% or less.

[14] The optical effect film according to any one of [1] to [13] above, further including at least one functional layer.

[15] The optical effect film according to [14] above, wherein the functional layer contains at least one bluing agent.

[16] A surface plate for an image display device, the surface plate including a resin plate or glass plate and the optical effect film according to any one of [1] to [15] above disposed on the plate.

[17] An image display device including a display element and the optical effect film according to any one of [1] to [15] above disposed on the display element.

[18] A polarizing plate including a polarizer, a first transparent protective plate disposed on one surface of the polarizer, and a second transparent protective plate disposed on the other surface of the polarizer, wherein at least one of the first transparent protective plate or the second transparent protective plate is the optical effect film according to any one of [1] to [15] above.

## Fourth Embodiment

A fourth embodiment of the present disclosure relates to an easily adhesive film.

A fourth embodiment of the present disclosure will now be described. In particular, a fourth embodiment of the present disclosure will be described focusing on differences from the first embodiment described above.

First, the problems to be solved by the fourth embodiment will be described. An image display device includes various optical multilayer bodies for purposes such as improving the visibility of images and reducing scratches on device surfaces. Such an optical multilayer body generally includes a plastic film as an optical film and at least one functional layer provided on this film (see, for example, Japanese Unexamined Patent Application Publication No. 2007-046031 and Japanese Unexamined Patent Application Publication No. 2012-256014).

For use as the plastic film, polyester films, such as a polyethylene terephthalate film, have been proposed. In that case, an easily adhesive layer may be provided between the polyester film and the functional layer to ensure good adhesion between the film and the functional layer. The inventors, however, have found that the adhesion between the film and the functional layer remains insufficient.

In recent years, furthermore, there has been a growing movement toward building a sustainable, recycling-oriented society. From the perspective of carbon neutrality, the materials field also faces the need to transition away from fossil fuels, similar to the energy sector.

An object of the fourth embodiment of the present disclosure is to provide an easily adhesive film with which good adhesion can be achieved in an optical multilayer body including a polyester film, an easily adhesive layer, and a functional layer in this order, and with which environmental impacts can also be reduced.

According to the fourth embodiment of the present disclosure, there is provided an easily adhesive film with which good adhesion can be achieved in an optical multilayer body including a polyester film, an easily adhesive layer, and a functional layer in this order, and with which environmental impacts can also be reduced. Even when a biomass material-derived polyester is used, furthermore, an easily adhesive film having optical properties and mechanical properties comparable to those achieved with a fossil fuel-derived polyester can be provided.

### [Easily Adhesive Film]

An easily adhesive film according to the fourth embodiment of the present disclosure includes a polyester film and at least one easily adhesive layer.

The easily adhesive layer is provided on the polyester film.

The easily adhesive film is an optical film. Herein, an optical film is a film through which light can be transmitted.

In the following description of the easily adhesive film according to the fourth embodiment of the present disclosure, which is an optical film, portions that can be configured in the same manner as in the optical film described in the

first embodiment may be referenced using the same numerals as the numerals used in the first embodiment, and redundant descriptions may be omitted. Furthermore, as for the optical multilayer body, the surface plate, the image display device, and the polarizing plate according to the fourth embodiment of the present disclosure below, each including an easily adhesive film that is an optical film, portions that can be configured in the same manner as in the optical multilayer body, the surface plate, the image display device, and the polarizing plate described in the first embodiment, each including an optical film, may be described using the same numerals as the numerals used in the first embodiment, and redundant descriptions may be omitted. When it is obvious that an advantage attainable in the first embodiment is also attainable in the fourth embodiment, its description may be omitted. As the description of the optical film, the optical multilayer body, the surface plate, the image display device, and the polarizing plate according to the fourth embodiment of the present disclosure, the description of the optical film, the optical multilayer body, the surface plate, the image display device, and the polarizing plate according to the first embodiment of the present disclosure can be applied unless contradictory.

When an "optical film" is mentioned in the following description of the fourth embodiment, it refers to the easily adhesive film according to the fourth embodiment of the present disclosure, unless specifically distinguished.

The polyester film 4 has, as illustrated in Fig. 4, a first surface 4a and a second surface 4b opposite the first surface 4a. When the first surface and the second surface are not specifically distinguished, "surface" may simply be used. The polyester film has, within its plane, a first direction and a second direction perpendicular to the first direction. The first direction is, in the fourth embodiment, the longitudinal direction, flow direction, or machine direction (MD) of the polyester film. The second direction is, in the fourth embodiment, the transverse direction or width direction (TD) of the polyester film.

The cross-section of the easily adhesive film according to the fourth embodiment of the present disclosure is the same as the cross-section of the optical film 1 (easily adhesive film 1) illustrated in Fig. 4. That is, Fig. 4 also corresponds to a cross-sectional view illustrating the easily adhesive film 1 according to the fourth embodiment of the present disclosure. The easily adhesive film 1 in Fig. 4 includes a polyester film 4 and an easily adhesive layer 6 in this order. The easily adhesive layer 6 is provided on the first surface 4a of the polyester film 4. The easily adhesive layer 6 may be provided solely on either one of the first surface 4a or the second surface 4b of the polyester film, or may be provided on both of the first surface 4a and the second surface 4b.

<Polyester>

The polyester film contains at least one polyester.

Polyester refers to a copolymer of at least a diol component and a dicarboxylic acid component. The polyester film preferably contains, as the polyester, at least a biomass material-derived polyester (hereinafter also referred to as "a biomass polyester"). By weighing a biomass polyester as a raw material for the film and designating it as a raw material for the film, the biomass content of the film can be specified, and the quality of the film can also be controlled, in advance.

Specific examples of polyesters include polyethylene terephthalate (PET), polybutylene terephthalate (PBT), polytrimethylene terephthalate (PTT), polyethylene naphthalate (PEN), polybutylene naphthalate (PBN), and polyethylene furanoate (PEF). Of these, PET is particularly preferred because it results in a polyester film superior in mechanical strength. As for biomass polyesters, specific examples include such types of polyesters produced using biomass material-derived monomer(s) as a subset or all of the starting monomers (the diol component and the dicarboxylic acid component).

The polyester film can contain one or two or more polyesters.

The polyester film may further contain a fossil fuel-derived polyester in addition to the biomass polyester. With the inclusion of a biomass polyester in the polyester film at least as part of it, the amount of fossil fuel-derived polyesters can be decreased, and thus environmental impacts can be reduced, compared to known films.

The easily adhesive film may contain a recycled material-derived polyester. The polyester contained in the easily adhesive film may be a recycled material-derived polyester that is also a biomass polyester. A subset of polyesters contained in the easily adhesive film may be recycled material-derived polyester(s). In that case, another subset of the polyesters contained in the easily adhesive film, which is not the recycled material-derived polyester(s), may be biomass polyester(s). The recycled material-derived polyester may be recycled PET. The recycled material-derived polyester may be a polyester derived from a raw material produced through recycling. More specifically, at least either one of recycled material-derived ethylene glycol or a recycled material-derived dicarboxylic acid component may be used as a raw material for the recycled material-derived polyester.

The percentage of the polyester in the polyester film may be more than 50% by mass, may be 60% by mass or more, may be 70% by mass or more, may be 80% by mass or more, may be 90% by mass or more, or may be 95% by mass or more.

The polyester film may contain additives. Examples of additives include ultraviolet absorbers, photostabilizers, antioxidants, heat stabilizers, antistatic agents, slippery particles, heat-resistant polymer particles, alkali metal compounds, alkaline earth metal compounds, phosphorus compounds, flame retardants, gel inhibitors, and surfactants. The polyester film can each contain one or two or more additives.

<Structure of the Polyester Film>

The polyester film may have a single-layer structure or may have a multilayer structure. A film having a single-layer structure allows for easier control of stretching. A film having a multilayer structure allows effects to be easily obtained by changing the composition of each layer.

Examples of polyester films having a multilayer structure include:

(1A) a multilayer film including two or three or more layers,
each containing a biomass polyester as its base ingredient;
(2A) a multilayer film including

a layer containing a biomass polyester as its base ingredient and
a layer containing a fossil fuel-derived polyester as its base ingredient;

(3A) a multilayer film including

a layer containing a biomass polyester as its base ingredient,
a layer containing a fossil fuel-derived polyester as its base ingredient, and
a layer containing a biomass polyester as its base ingredient in this order;

(4A) a multilayer film including

a layer containing a biomass polyester as its base ingredient,
a layer containing a biomass polyester as its base ingredient, and
a layer containing a fossil fuel-derived polyester as its base ingredient in this order; and

(5A) a multilayer film including

a layer containing a fossil fuel-derived polyester as its base ingredient,
a layer containing a biomass polyester as its base ingredient, and
a layer containing a fossil fuel-derived polyester as its base ingredient in this order.

Examples of polyester films having a multilayer structure, furthermore, include:

(1B) a multilayer film including two or three or more layers each having a biomass content of 10% or more;
(2B) a multilayer film including a layer having a biomass content of 10% or more and
a layer having a biomass content of less than 10%;
(3B) a multilayer film including a layer having a biomass content of 10% or more,

a layer having a biomass content of less than 10%, and

a layer having a biomass content of 10% or more in this order;

(4B) a multilayer film including a layer having a biomass content of 10% or more,

a layer having a biomass content of 10% or more, and

a layer having a biomass content of less than 10% in this order; and

(5B) a multilayer film including a layer having a biomass content of less than 10%,

a layer having a biomass content of 10% or more, and

a layer having a biomass content of less than 10% in this order. For the multilayer films of (1B) to (5B) above, however, the overall biomass content of the film is 10% or more.

The multilayer films of (1A) and (1B) above make great environmental contributions. The multilayer films of (2A) to (4A) and (2B) to (4B) above make great environmental contributions and are superior in stretchability. The multilayer

films of (5A) and (5B) above can result in reduced impact of impurities that can separate out of the biomass polyester, for example on the functional layer placed on the easily adhesive film, as well as making great environmental contributions and being superior in stretchability.

The thickness of the easily adhesive film may be 10 μm or more, may be 15 μm or more, may be 20 μm or more, may be 25 μm or more, or may be 30 μm or more. Such an easily adhesive film is superior in mechanical strength. The same applies to the thickness of the polyester film.

The thickness of the easily adhesive film may be 200 μm or less, may be 180 μm or less, may be 160 μm or less, may be 140 μm or less, may be 120 μm or less, or may be 100 μm or less. Such an easily adhesive film is superior in bending resistance. The same applies to the thickness of the polyester film.

Herein, the thickness of an easily adhesive film and each layer of it is determined by selecting any 20 locations on a cross-sectional image of the easily adhesive film obtained using a scanning electron microscope (SEM) and calculating the average of the 20 locations. The 20 locations, however, are selected to ensure that they are not unevenly distributed. As for the acceleration voltage and magnification of the SEM, the acceleration voltage is preferably set to 1 kV or more and 10 kV or less, and the magnification is preferably set to 20 times or more and 7,000 times or less, both being selected according to the layer of interest.

Before the formation of the functional layer on it, the easily adhesive film may be subjected to physical treatments, such as corona discharge treatment and oxidation treatment, or may undergo prior coating with a paint referred to as an anchoring agent or primer, for improved adhesion.

The easily adhesive film, and the optical multilayer body described later, may be in sheet-shaped form, obtained by cutting into a predetermined size, or may be in roll-shaped form, which is a long sheet wound into a roll. The size of the sheet is, for example, approximately 2 inches or more and 500 inches or less in terms of maximum size. The maximum size refers to the maximum length between any two points in the plane of the easily adhesive film or optical multilayer body. For example, when the easily adhesive film or optical multilayer body is rectangular, the diagonal length of the rectangle serves as the maximum size. When the easily adhesive film or optical multilayer body is round, the diameter of the circle serves as the maximum size.

The width of the roll-shaped form may be, for example, 500 mm or more and 8,000 mm or less. The length of the roll-shaped form may be, for example, 100 m or more and 10,000 m or less. An easily adhesive film and an optical multilayer body in roll-shaped form can be used after being cut into a sheet to the size of, for example, an image display device. When cutting them, it is preferred to exclude the ends of the roll, where physical characteristics are variable.

The shape of the sheet may be polygonal, such as triangular, tetragonal, or pentagonal, may be round, or may be random and indefinite. More specifically, when the easily adhesive film and the optical multilayer body are in tetragonal shapes, the aspect ratio is not particularly limited, provided that they are acceptable as display screens. Examples include horizontal:vertical = 1:1, 4:3, 16:10, 16:9, 2:1, 5:4, and 11:8.

<Physical Characteristics of the Easily Adhesive Film>

The physical characteristics that the easily adhesive film (optical film) preferably has will now be described.

(Biomass Content)

The biomass content of the easily adhesive film is 10% or more, may be 15% or more, may be 20% or more, or may be 25% or more. With such an easily adhesive film, the reduction of environmental impacts can be sought. The higher the biomass content of the easily adhesive film, the more preferred; however, the biomass content may be, for example, 98% or less, may be 90% or less, may be 80% or less, may be 70% or less, may be 60% or less, may be 50% or less, or may be 40% or less.

When the overall biomass content of the easily adhesive film is measured, the sample can be prepared from the easily adhesive film. When the biomass content of each layer in the easily adhesive film is measured, the sample can be prepared after separating the layer of interest from the easily adhesive film.

(δq/δa)

The average δq/δa of the surface of the easily adhesive layer is 3.10 or less.

<Calculation of the Average δq/δa>

A 10 μm × 10 μm region on the surface of the easily adhesive layer is measured using the phase mode of an atomic force microscope (AFM). Through this measurement, the distribution of phase signals on the surface of the easily adhesive layer is obtained. The unit for the phase signals is [deg].

The arithmetic mean of the phase signals, expressed by equation 1 below, is defined as δa.

The root mean square of the phase signals, expressed by equation 2 below, is defined as δq.

In equation 1 below and equation 2 below, the surface for the phase signals is represented by f(x,y), where the X and Y Cartesian coordinate axes are placed in the reference surface, which indicates the average phase signal, and the axis perpendicular to the reference surface is defined as the Z axis. In equation 1 below and equation 2 below, the size of the segment in which δa and δq are calculated is represented by Lx and Ly. In equation 1 below and equation 2 below, Ar = Lx × Ly.

Within the 10 μm × 10 μm region for measurement, seven 2 μm × 2 μm segments are selected. The δa, δq, and δq/δa in the seven segments are calculated. Based on δq/δa in five segments excluding the maximum and minimum from δq/δa in the seven segments, the average δq/δa is calculated.

The above seven segments for measurement may partially overlap. The percentage of overlap between a given segment for measurement and the six other segments for measurement, however, is preferably 25% or less, more preferably 12% or less, even more preferably 5% or less on an area basis.

[Math. 1]

$$\delta a = \frac{1}{Ar}\int_0^{Lx}\int_0^{Ly}\left|f(x,y)\right|dxdy$$

... Equation 1

$$\delta q = \sqrt{\frac{1}{Ar}\int_0^{Lx}\int_0^{Ly} f^2(x,y)dxdy}$$

... Equation 2

When the average δq/δa of the surface of the easily adhesive layer is 3.10 or less, the adhesion in the optical multilayer body including a polyester film, an easily adhesive layer, and a functional layer in this order is particularly good. In the following, the technical significance of the average δq/δa of the surface of the easily adhesive layer will be described.

δa and δq are parameters related to the phase signals when a predetermined region on the surface of the easily adhesive layer is measured using the phase mode of an atomic force microscope. The unit for the phase signals is [deg]. The phase signals indicate the viscoelasticity of the surface of the easily adhesive layer.

δa is the arithmetic mean of the phase signals in the predetermined region. δq is the root mean square of the phase signals in the predetermined region. In the root mean square, compared to the arithmetic mean, values greater than the average are given more weight. An easily adhesive layer with a small average δq/δa, therefore, indicates that the phase signals are concentrated near the average within the predetermined region. Since the phase signals indicate the viscoelasticity of the surface of the easily adhesive layer, an easily adhesive layer with a small average δq/δa indicates that changes in viscoelasticity are small in the predetermined region.

As described above, an easily adhesive layer with a small average δq/δa indicates that changes in viscoelasticity are small in a predetermined region. With a film including an easily adhesive layer with a small average δq/δa, furthermore, good adhesion can be achieved in an optical multilayer body in which a functional layer has been formed on the easily adhesive layer. The inventors believe that the adhesion in the optical multilayer body is good for the following reason.

When the functional layer of the optical multilayer body is contacted by another element, a predetermined amount of stress is generated. The stress is transmitted through the functional layer and the easily adhesive layer to the interface between the polyester film and the easily adhesive layer. The manner in which the stress is transmitted varies according to the viscoelasticity values of the easily adhesive layer. When changes in viscoelasticity within the plane of the easily adhesive layer are large, therefore, the magnitude of the stress transmitted to the interface between the polyester film and the easily adhesive layer varies from location to location within the plane. Accordingly, when the average δq/δa of the easily adhesive layer is large, it is likely that a large amount of stress acts on predetermined sites within the plane, resulting in an increased likelihood of interfacial detachment in the optical multilayer body. When the average δq/δa of the easily adhesive layer is small, by contrast, the stress is dispersed within the plane. The inventors believe that this reduces interfacial detachment in the optical multilayer body, and, as a result, good adhesion can be achieved. As for the reason why the

viscoelasticity of the easily adhesive layer varies from location to location, the miscibility between the constituents of the easily adhesive layer, for example, may be responsible.

When the functional layer in contact with the easily adhesive layer contains a cured form of an ionizing radiation-curable ingredient, it is likely that the adhesion in the optical multilayer body decreases. For an optical multilayer body in which the average δq/δa of the surface of the easily adhesive layer is equal to or smaller than the value specified above, however, it can be made easier to achieve good adhesion in the optical multilayer body even when the functional layer in contact with the easily adhesive layer contains a cured form of an ionizing radiation-curable ingredient.

The average δq/δa is 3.10 or less, may be 3.00 or less, may be 2.80 or less, may be 2.60 or less, may be 2.40 or less, may be 2.20 or less, or may be 2.00 or less.

A smaller average δq/δa indicates that the viscoelasticity of the surface of the easily adhesive layer is closer to homogeneity. When the viscoelasticity of the surface of the easily adhesive layer is too homogeneous, it may be difficult for the ingredients in the functional layer to penetrate the easily adhesive layer, and it may be less likely that the adhesion between the easily adhesive layer and the functional layer increases. For this reason, the average δq/δa may be 1.20 or greater, may be 1.25 or greater, may be 1.30 or greater, may be 1.40 or greater, or may be 1.50 or greater.

The average δq/δa of the surface of the easily adhesive layer described above is a value within a predetermined 10 μm × 10 μm region. In the total area of the surface of the easily adhesive layer, the percentage of the area over which the δq/δa is 3.10 or less may be 80% or more, may be 90% or more, may be 95% or more, may be 98% or more, or may be 100%.

Herein, δa can be calculated using equation 1 above. Equation 1 is based on the equation for arithmetic mean height in ISO 25178-2: 2012. In other words, whereas the equation for arithmetic mean height in ISO 25178-2: 2012 uses elevation as Z-axis data, equation 1 uses phase signals [deg], rather than elevation, as Z-axis data.

Herein, δq can be calculated using equation 2 above. Equation 2 is based on the equation for root mean square height in ISO 25178-2: 2012. In other words, whereas the equation for root mean square height in ISO 25178-2: 2012 uses elevation as Z-axis data, equation 2 uses phase signals [deg], rather than elevation, as Z-axis data.

The average δq/δa can be calculated according to the procedure in A1 to A4 below.

(A1) A 10 μm × 10 μm region on the surface of the easily adhesive layer is measured using the phase mode of an atomic force microscope. The atomic force microscope can be trade name "SPM-9600," manufactured by Shimadzu Corporation.

(A2) Within the 10 μm × 10 μm region for measurement, seven 2 μm × 2 μm segments are selected. The 2 μm × 2 μm segments to be selected are selected from segments in which the maximum height of amplitude as measured using the atomic force microscope is 90 nm or less. The maximum height is the maximum height Sz in ISO 25178-2: 2012. By selecting the 2 μm × 2 μm segments from segments in which Sz is 90 nm or less, it can be made easier to eliminate the influence of contaminants and defects. The seven segments are preferably selected such that they do not overlap, but may overlap with each other. It should be noted that when the segments for measurement overlap, the percentage of overlap between a given segment for measurement and the six other segments for measurement is preferably 25% or less, more preferably 12% or less, even more preferably 5% or less on an area basis. The 2 μm × 2 μm segments to be selected are preferably selected from segments in which the arithmetic mean height of amplitude as measured using the atomic force microscope is 10 nm or less to make it even easier to eliminate the influence of contaminants and defects. The arithmetic mean height is the arithmetic mean height Sa in ISO 25178-2: 2012.

(A3) Within the selected seven segments, δa, δq, and δq/δa are calculated.

(A4) Based on δq/δa in five segments excluding the maximum and minimum from δq/δa in the seven segments, the average δq/δa is calculated.

For the easily adhesive layer, the coefficient of variation for δq/δa calculated based on the δq/δa in the above five segments may be 0.040 or less. Setting the coefficient of variation for δq/δa to 0.040 or less makes it more likely that the stress is dispersed within the plane. By doing this, therefore, it can be made even easier to achieve good adhesion. The coefficient of variation for δq/δa may be 0.037 or less or may be 0.035 or less.

When the coefficient of variation for δq/δa is too small, it may be difficult for the ingredients in the functional layer to penetrate the easily adhesive layer, and it may be less likely that the adhesion between the easily adhesive layer and the functional layer increases. For this reason, the coefficient of variation for δq/δa may be 0.010 or greater or may be 0.015 or greater.

In the total area of the surface of the easily adhesive layer, the percentage of the area over which the coefficient of variation for δq/δa is 0.040 or less may be 80% or more, may be 90% or more, may be 95% or more, may be 98% or more, or may be 100%.

(Total Transmittance and Haze)

The total transmittance of the easily adhesive film may be 70% or more, may be 75% or more, may be 80% or more, may be 85% or more, or may be 90% or more. The higher the total transmittance of the easily adhesive film, the more

preferred; however, the total transmittance may be 99% or less, may be 98% or less, or may be 95% or less. The total transmittance is measured according to JIS K7361-1: 1997.

The haze of the easily adhesive film may be 3.0% or less, may be 2.5% or less, may be 2.0% or less, may be 1.5% or less, or may be 1.0% or less. The lower the haze of the easily adhesive film, the more preferred; however, the haze may be 0.1% or more, may be 0.2% or more, or may be 0.3% or more. The haze is measured according to JIS K7136: 2000.

(In-Plane Phase Difference (Re))

The in-plane phase difference (Re) of the optical film may be 30,000 nm or less, although it is not particularly limited. Herein, an "in-plane phase difference" is calculated according to the equation: In-plane phase difference (Re) = (nx - ny) $\times$ T [nm]. An "in-plane phase difference" is also referred to as retardation, and its unit is a unit for length. The T in the above equation represents the thickness [nm] of the optical film.

When polarized light passes through a film having birefringence, rainbow effects can be observed on the film. Rainbow effects are rainbow-colored fringes and may reduce the visibility of the film. The polarized light is, for example, image light emitted from a liquid crystal display element or an OLED display element including a functional layer that reduces reflection through polarization control.

For reduced rainbow effects on the optical film and the resulting improved visibility, the in-plane phase difference of the optical film may be 3,000 nm or more, may be 4,000 nm or more, or may be 5,000 nm or more or may be 1,500 nm or less, may be 1,450 nm or less, or may be 1,200 nm or less.

When the in-plane phase difference of the optical film is 3,000 nm or more, rainbow effects can be effectively obscured. The inventors presume that this is for the following reason. Rainbow effects are presumably caused by light in a polarized state passing through a film with varying in-plane phase differences and experiencing a change in its polarized state. The larger the in-plane phase difference of the optical film, the greater the changes in visible light transmittance for different wavelengths in response to a given change in in-plane phase difference. The larger the in-plane phase difference, furthermore, the more easily light with multiple wavelengths is transmitted, and the more likely the transmitted light is to be visually perceived as a mixed color. Even when variations in in-plane phase difference exist, therefore, a decrease in transmittance for a certain wavelength is accompanied by an increase in transmittance for another wavelength because visible light transmittance values for different wavelengths greatly change. As a result of this, changes in the mixed color of the transmitted light are difficult to notice, as long as they are visually observed. When the in-plane phase difference of the optical film is 3,000 nm or more, the changes in visible light transmittance for different wavelengths according to the in-plane phase difference are large, and even if visible light transmittance values change due to variations in in-plane phase difference, the colors are visually perceived as a mixture, making changes in color difficult to notice. Rainbow effects, therefore, can be effectively obscured. For reduced tear and breakage during drawing, furthermore, the in-plane phase difference of the optical film may be 30,000 nm or less, may be 25,000 nm or less, may be 20,000 nm or less, or may be 15,000 nm or less.

Moreover, when the in-plane phase difference of the optical film is 1,500 nm or less, rainbow effects can be effectively obscured. The inventors presume that this is for the following reason. The smaller the in-plane phase difference of the optical film, the smaller the changes in visible light transmittance for different wavelengths in response to a given change in in-plane phase difference. The visible light transmittance values for different wavelengths, therefore, remain almost unchanged even when variations in in-plane phase difference exist. Accordingly, when variations in in-plane phase difference are sufficiently small, visually observable rainbow effects no longer occur. For this reason, when the in-plane phase difference of the optical film is 1,500 nm or less, the changes in visible light transmittance for different wavelengths according to the in-plane phase difference are sufficiently small, and rainbow effects caused by variations in in-plane phase difference can be effectively obscured. For the reduction of so-called blackouts, furthermore, the in-plane phase difference of the optical film may be 50 nm or more, may be 100 nm or more, may be 150 nm or more, may be 200 nm or more, may be 250 nm or more, or may be 300 nm or more. In this context, a blackout refers to a phenomenon in which the display screen of, for example, a liquid crystal display device becomes dark depending on the angle when the display device is viewed with polarized sunglasses.

The difference in refractive index "nx - ny" (hereinafter also referred to as "$\Delta$n") may be, in the fourth embodiment, 0.040 or greater or may be 0.050 or greater. When $\Delta$n is 0.040 or greater, the thickness of the optical film required to achieve the desired in-plane phase difference can be reduced. $\Delta$n may be 0.250 or less or may be 0.200 or less. When $\Delta$n is 0.250 or less, the tear and breakage of the optical film can be reduced because there is no need to excessively draw the optical film.

$\Delta$n may be, in the fourth embodiment, less than 0.040. When $\Delta$n is less than 0.040, it can be made easier to reduce rainbow effects caused by the in-plane phase difference. $\Delta$n may be 0.005 or greater, may be 0.008 or greater, or may be 0.010 or greater. When $\Delta$n is 0.005 or greater, it can be made easier to reduce blackouts.

The refractive index in the slow axis direction (nx) may be 1.580 or greater or may be 1.630 or greater. The refractive index in the slow axis direction (nx) may be 1.780 or less or may be 1.730 or less. The refractive index in the fast axis direction (ny) may be 1.550 or greater or may be 1.580 or greater. The refractive index in the fast axis direction (ny) may

be 1.760 or less or may be 1.710 or less.

The optical film or polyester film is preferably an oriented film. The oriented film may be a uniaxially oriented film or may be a biaxially oriented film. The biaxial orientation may be sequential biaxial orientation or may be simultaneous biaxial orientation.

An optical film having an in-plane phase difference of 3,000 nm or more and 30,000 nm or less is obtained as follows by sequential biaxial orientation, as an example. A resin composition containing a polyester is melted and shaped into a sheet by extrusion to give a cast film. The cast film is drawn in the flow direction and then drawn in the width direction of the film.

The drawing in the flow direction may be performed using, for example, differences in circumferential speed between rollers. The drawing factor in the flow direction may be 1.1 or greater or may be 1.2 or greater. The drawing factor in the flow direction may be 2.5 or less, may be 2.0 or less, or may be 1.8 or less.

An optical film having an in-plane phase difference of 1,500 nm or less is obtained by changing the drawing factors as follows in the sequential biaxial orientation described above, as an example. The drawing factor in the flow direction may be 2.5 or greater or may be 3.0 or greater. The drawing factor in the flow direction may be 6.0 or less or may be 5.5 or less. The drawing factor in the width direction may be 80% or more and 120% or less in relation to the drawing factor in the flow direction, or may be 90% or more and 110% or less, for the adjustment of the in-plane phase difference to 1,500 nm or less.

Polyesters are superior in transparency, heat resistance, and mechanical properties and allow the in-plane phase difference to be controlled within the desired range through drawing work.

A method for controlling the in-plane phase difference of the optical film to be 1,500 nm or less is the method of selecting the drawing factor ratios and the drawing temperatures during biaxial orientation and the thickness of the produced optical film as appropriate. Specifically, the closer the drawing factor ratios are to 1, the smaller the in-plane phase difference. The higher the drawing temperatures, the smaller the in-plane phase difference. The smaller the thickness, the smaller the in-plane phase difference. The higher the drawing factor ratios, the larger the in-plane phase difference. The lower the drawing temperatures, the larger the in-plane phase difference. The larger the thickness, the larger the in-plane phase difference.

(Degree of Crystallinity)

The degree of crystallinity of the optical film may be 90% or less, may be 88% or less, may be 86% or less, or may be 85% or less. Such an optical film exhibits good interlayer adhesion when the functional layer is placed on it. The degree of crystallinity of the optical film may be 60% or more, may be 65% or more, or may be 70% or more for the mechanical strength of the optical film.

The degree of crystallinity of the optical film is a value measured by X-ray diffraction.

The measurement conditions and calculation method for the degree of crystallinity are as follows.

(Measurement Conditions)

Measurement method: $2\theta/\theta$ measurement

Instrument: Smart Lab, manufactured by Rigaku Corporation, 9 kW

X-ray source: Cu-K$\alpha$, 45 kV-200 mA

Measurement range: 10 deg to 50 deg

Step: 0.020 deg

Measurement time: 4.0 deg/min

(Calculation Method)

The degree of crystallinity is calculated according to the equation of the degree of crystallinity (%) = (the area of the crystalline peak)/(the area of the crystalline peak + the area of the amorphous peak) $\times$ 100, based on profile fitting.

(Gas Barrier Properties)

The easily adhesive film is, in the fourth embodiment, superior in gas barrier properties.

The water vapor transmission rate of the easily adhesive film in an environment at a temperature of 40°C and a humidity of 90% RH as measured according to JIS K7129-2: 2019 may be 20 g/(m2·24 hr) or less, may be 15 g/(m2·24 hr) or less, or may be 10 g/(m2·24 hr) or less. The lower the water vapor transmission rate of the easily adhesive film, the more preferred; however, the water vapor transmission rate may be 2 g/(m2·24 hr) or more or may be 3 g/(m2·24 hr) or more. The water vapor transmission rate can be measured using a water vapor permeation analyzer ("PERMATRAN," manufactured by Modern Controls, Inc.).

The oxygen transmission rate of the easily adhesive film in an environment at a temperature of 25°C and a humidity of 50% RH as measured according to JIS K7126-2: 2006 may be 100 cc/(m2·24 hr·atm) or less, may be 80 cc/(m2·24 hr·atm) or less, or may be 50 cc/(m2·24 hr·atm) or less. The lower the oxygen transmission rate of the easily adhesive film, the more preferred; however, the oxygen transmission rate may be 5 cc/(m2·24 hr·atm) or more or may be 7 cc/(m2·24 hr·atm) or more. The oxygen transmission rate can be measured using an oxygen permeation analyzer ("OX-TRAN I0/50A"), manufactured by Modern Controls, Inc.).

<Easily Adhesive Layer>

Examples of resins that can constitute the easily adhesive layer include thermoplastic resins, such as polyester, polyurethane, and (meth)acrylic resins, and thermosetting resins, with thermoplastic resins being preferred. Of thermoplastic resins, polyester and polyurethane are particularly preferred, and resins containing both of a polyester component and a polyurethane component are more preferred. With such resins, it is easier to reduce the difference in refractive index between the polyester film and the easily adhesive layer.

With the aforementioned polyurethane component, good adhesion is easier to achieve, but it may be difficult to attain high coating strength. The resin constituting the easily adhesive layer, therefore, preferably contains both of a polyester component and a polyurethane component. When the amount of the polyurethane component is too large in relation to the polyester component, however, phase separation easily occurs, and thus the average δq/δa and the coefficient of variation for δq/δa are likely to be large. Because the polyurethane component is soft, furthermore, too large an amount of the polyurethane component is likely to result in a large average δq/δa and a large coefficient of variation for δq/δa due to differences in crosslink density within the plane. For the resin that contains both of a polyester component and a polyurethane component, therefore, the ratio by mass (the polyester component:the polyurethane component) may be from 95:5 to 60:40 or may be from 90:10 to 60:40.

An easily adhesive layer containing a biomass material-derived resin makes a great environmental contribution and exhibits high compatibility with a polyester film containing a biomass polyester and high conformity to the shape of that film. An easily adhesive film including such an easily adhesive layer, therefore, is superior in workability. An easily adhesive film including an easily adhesive layer containing a fossil fuel-derived resin is superior in adhesion durability in a high-temperature and high-humidity environment.

The biomass content of the easily adhesive layer may be, in the fourth embodiment, 10% or more, may be 12% or more, may be 15% or more, or may be 18% or more. The biomass content of the easily adhesive layer may be, in the fourth embodiment, 98% or less, may be 90% or less, may be 80% or less, may be 70% or less, may be 60% or less, or may be 50% or less. By specifying the biomass content of the resin constituting the easily adhesive layer and designating that resin as a raw material, the biomass content of the easily adhesive layer can be specified, and the quality of the easily adhesive film can also be controlled, in advance.

The glass transition temperature of the resin constituting the easily adhesive layer may be 30°C or above, may be 50°C or above, or may be 70°C or above. The glass transition temperature of this resin may be 120°C or below, may be 110°C or below, or may be 90°C or below. The glass transition temperature is the midpoint glass transition temperature as obtained by differential scanning calorimetry (DSC) according to JIS K7121: 2012.

When the glass transition temperature of the resin constituting the easily adhesive layer is 30°C or above, it can be made easier to reduce the occurrence of internal stress caused by the flow of the easily adhesive layer due to in-process heat, and thus it can be made easier to bring the average δq/δa and the coefficient of variation for δq/δa within the ranges specified above. Examples of in-process heat include heat during a drying step for a functional layer coating solution and heat generated by warming during the attachment of an optical multilayer body, for example to a polarizer. When the glass transition temperature of the resin constituting the easily adhesive layer is 120°C or below, it can be made easier to reduce the occurrence of stress caused by a difference in thermal behavior between the easily adhesive layer and the polyester film, and thus the formation of cracks, for example, in the easily adhesive layer induced by stress can be reduced. When the glass transition temperature of the resin constituting the easily adhesive layer is 120°C or below, therefore, it can be made easier to bring the average δq/δa and the coefficient of variation for δq/δa within the ranges specified above.

The drying time of the easily adhesive layer coating solution may be 120 seconds or less or may be 90 seconds or

less. This drying time may be 15 seconds or more or may be 20 seconds or more. The drying time can be adjusted by the drying temperature and the velocity of the drying air. When the drying time is 120 seconds or less, the phase separation of the constituents of the easily adhesive layer can be reduced, and it can be made easier to bring the average δq/δa and the coefficient of variation for δq/δa within the ranges specified above. Setting the drying time too short may cause the coating surface to become roughened and optical properties to degrade.

The easily adhesive film according to the fourth embodiment of the present disclosure is suitable as a film for use in image display devices. Specifically, the easily adhesive film is suitable as a substrate for various functional films, such as a hard-coat film, an antiglare film, an antireflection film, an antifouling film, an antistatic film, and a polarizer-protecting film.

[Optical Multilayer Body]

An example of an application of the easily adhesive film according to the fourth embodiment of the present disclosure is an optical multilayer body that includes the easily adhesive film according to the fourth embodiment of the present disclosure and at least one functional layer provided on the easily adhesive layer of the film. The functional layer may be provided on one surface of the easily adhesive film or may be provided on both surfaces.

The cross-section of the optical multilayer body according to the fourth embodiment of the present disclosure is the same as the cross-section of the optical multilayer body 3 illustrated in Fig. 5. That is, Fig. 5 also corresponds to a cross-sectional view illustrating the optical multilayer body 3 according to the fourth embodiment of the present disclosure. The optical multilayer body 3 in Fig. 5 includes a polyester film 4, an easily adhesive layer 6, and a functional layer 8 in this order. The easily adhesive layer 6 and the functional layer 8 are provided on the first surface 4a of the polyester film 4.

The total transmittance and haze of the optical multilayer body are, in the case of an optical multilayer body including a polyester film, an easily adhesive layer, and a functional layer in this order, measured with the light incident surface being the polyester film surface.

<Functional Layer>

The optical multilayer body according to the fourth embodiment of the present disclosure may include one functional layer or may include two or more. That is, two or more functional layers may be stacked on the polyester film with the easily adhesive layer interposed therebetween.

Examples of functional layers include the following (1) to (12).

(1) A hard-coat layer

(2) An antiglare layer

(3) An antifouling layer

(4) A multilayer structure including a hard-coat layer and an antireflection layer in this order

(5) A multilayer structure including a hard-coat layer and an antiglare layer in this order

(6) A multilayer structure including a hard-coat layer and an antifouling layer in this order

(7) A multilayer structure including an antiglare layer and an antireflection layer in this order

(8) A multilayer structure including an antiglare layer and an antifouling layer in this order

(9) A multilayer structure including a hard-coat layer, an antiglare layer, and an antireflection layer in this order

(10) An antistatic layer

(11) An electrically conductive layer

(12) A retardation layer

In (4) to (11) above, the left side indicates the layer positioned on the easily adhesive film side.

Of one or more functional layers, the functional layer in contact with the easily adhesive layer preferably contains a cured form of at least one ionizing radiation-curable ingredient. The functional layer in contact with the easily adhesive

layer is preferably a hard-coat layer. With the inclusion of a cured form of an ionizing radiation-curable ingredient in the functional layer in contact with the easily adhesive layer, it can be made easier to achieve high pencil hardness of the optical multilayer body.

An electrically conductive layer contains, in the fourth embodiment, at least one optically transparent resin as a binder resin as described earlier and multiple filaments of electrically conductive fiber placed in the optically transparent resin. Electrically conductive fiber is a substance having electrical conductivity and also having a shape in which the length is sufficiently large compared to the thickness (e.g., the diameter). For example, substances that have electrical conductivity and whose length is equal to or greater than approximately fivefold the thickness are included as electrically conductive fibers. An electrically conductive layer refers to a layer that contains an optically transparent resin and multiple filaments of electrically conductive fiber placed in the optically transparent resin and is capable of conducting electricity from its surface. The filament diameter of the electrically conductive fiber is, for example, 10 nm or more and 200 nm or less. The filament length of the electrically conductive fiber is, for example, 30 μm or more, and its upper limit is not particularly limited. Examples of electrically conductive fibers include electrically conductive carbon fiber, metal fibers, such as metal nanowires, metal-coated organic fibers, metal-coated inorganic fibers, and carbon nanotubes.

A large part of the electrically conductive fiber may be present on the side closer to the easily adhesive film than the position at half the thickness of the electrically conductive layer. In that case, the electrically conductive fiber is also present on the side closer to the surface than the position at half the thickness of the electrically conductive layer and on the surface of the electrically conductive layer as a result of the rest of the electrically conductive fiber accumulating on the large part of the electrically conductive fiber. Owing to this, the electrically conductive layer is electrically capable of conducting electricity from its surface, and, furthermore, filaments of the electrically conductive fiber are in contact with each other in the thickness direction of the electrically conductive layer.

The functional layer is formed as follows, for example. A curable composition is applied to the easily adhesive layer to the desired thickness, through which a coating (uncured resin layer) is formed. When an organic solvent is used, the organic solvent is removed through drying. The drying conditions are, for example, 10 seconds or more and 10 minutes or less at 40°C or above and 120°C or below. Then, when the curable composition contains a thermosetting ingredient, curing is initiated by heating the coating at a temperature required for curing. When the curable composition contains an ionizing radiation-curable ingredient, curing is initiated by irradiating the coating with ionizing radiation. In such a manner, the functional layer can be formed.

The fourth embodiment of the present disclosure relates to, for example, the following [1] to [13].

[1] An easily adhesive film including a polyester film and at least one easily adhesive layer, wherein the polyester film contains at least one polyester, a biomass content of the easily adhesive film is 10% or more, a total transmittance of the easily adhesive film is 70% or more, an average δq/δa of a surface of the easily adhesive layer is 3.10 or less, and the easily adhesive film is for providing at least one functional layer on the easily adhesive layer.

<Calculation of the Average δq/δa>

A 10 μm × 10 μm region on the surface of the easily adhesive layer is measured using the phase mode of an atomic force microscope. Through this measurement, the distribution of phase signals on the surface of the easily adhesive layer is obtained. The unit for the phase signals is [deg].

The arithmetic mean of the phase signals, expressed by equation 1 below, is defined as δa.

The root mean square of the phase signals, expressed by equation 2 below, is defined as δq.

(In equation 1 below and equation 2 below, the surface for the phase signals is represented by f(x,y), where the X and Y Cartesian coordinate axes are placed in the reference surface, which indicates the average phase signal, and the axis perpendicular to the reference surface is defined as the Z axis. In equation 1 below and equation 2 below, the size of the segment in which δa and δq are calculated is represented by Lx and Ly. In equation 1 below and equation 2 below, Ar = Lx × Ly.)

Within the 10 μm × 10 μm region for measurement, seven 2 μm × 2 μm segments are selected. The δa, δq, and δq/δa in the seven segments are calculated. Based on δq/δa in five segments excluding the maximum and minimum from δq/δa in the seven segments, the average δq/δa is calculated.

[Math. 2]

$$\delta a = \frac{1}{Ar}\int_0^{Lx}\int_0^{Ly}|f(x,y)|dxdy$$

... Equation 1

$$\delta q = \sqrt{\frac{1}{Ar}\int_0^{Lx}\int_0^{Ly}f^2(x,y)dxdy}$$

... Equation 2

[2] The easily adhesive film according to [1] above, wherein the polyester film contains a biomass material-derived polyester.
[3] The easily adhesive film according to [1] or [2] above, wherein the easily adhesive film contains a recycled material-derived polyester.
[4] The easily adhesive film according to any one of [1] to [3] above, wherein a Martens hardness on at least one surface of the easily adhesive film is 110 N/mm2 or more and 170 N/mm2 or less.
[5] The easily adhesive film according to any one of [1] to [4] above, wherein a percentage of elastic deformation work on at least one surface of the easily adhesive film is 60% or more and 70% or less.
[6] The easily adhesive film according to any one of [1] to [5] above, wherein a degree of crystallinity of the easily adhesive film is 90% or less.
[7] The easily adhesive film according to any one of [1] to [6] above, wherein resin constituting the easily adhesive layer is a biomass material-derived resin.
[8] The easily adhesive film according to any one of [1] to [6] above, wherein resin constituting the easily adhesive layer is a fossil fuel-derived resin.
[9] The easily adhesive film according to any one of [1] to [6] above, wherein resin constituting the easily adhesive layer is a mixed resin including a biomass material-derived resin and a fossil fuel-derived resin.
[10] An optical multilayer body including the easily adhesive film according to any one of [1] to [9] above and at least one functional layer provided on the easily adhesive layer of the easily adhesive film.
[11] A surface plate for an image display device, the surface plate including a resin plate or glass plate and the easily adhesive film according to any one of [1] to [9] above or the optical multilayer body according to [10] above disposed on the plate.
[12] An image display device including a display element and the easily adhesive film according to any one of [1] to [9] above or the optical multilayer body according to [10] above disposed on the display element.
[13] A polarizing plate including a polarizer, a first transparent protective plate disposed on one surface of the polarizer, and a second transparent protective plate disposed on the other surface of the polarizer, wherein at least one of the first transparent protective plate or the second transparent protective plate is the easily adhesive film according to any one of [1] to [9] above or the optical multilayer body according to [10] above.

## Fifth Embodiment

A fifth embodiment of the present disclosure relates to an optical multilayer body.
A fifth embodiment of the present disclosure will now be described. In particular, a fifth embodiment of the present disclosure will be described focusing on differences from the first embodiment described above.
First, the problems to be solved by the fifth embodiment will be described. An image display device includes various optical multilayer bodies for purposes such as improving the visibility of images and reducing scratches on device surfaces. Such an optical multilayer body generally includes a resin substrate as an optical film and at least one functional layer provided on this resin substrate (see, for example, Japanese Unexamined Patent Application Publication No. 2007-046031 and Japanese Unexamined Patent Application Publication No. 2012-256014).
The inventors have found that the pencil hardness of the optical multilayer body or the adhesion between the resin substrate and the functional layer in the optical multilayer body after exposure to a photoenvironment (lightfast adhesion) is insufficient in some cases.
In recent years, furthermore, there has been a growing movement toward building a sustainable, recycling-oriented society. From the perspective of carbon neutrality, the materials field also faces the need to transition away from fossil fuels, similar to the energy sector.

An object of the fifth embodiment of the present disclosure is to provide an optical multilayer body that is superior in pencil hardness and in lightfast adhesion between the resin substrate and the functional layer and with which environmental impacts can also be reduced.

According to the fifth embodiment of the present disclosure, there is provided an optical multilayer body that is superior in pencil hardness and in lightfast adhesion between the resin substrate and the functional layer and with which environmental impacts can also be reduced. Even when a biomass material-derived polyester is used, furthermore, an optical multilayer body having optical properties and mechanical properties comparable to those achieved with a fossil fuel-derived polyester can be provided.

[Optical Multilayer Body]

In the following description of the optical multilayer body according to the fifth embodiment of the present disclosure, portions that can be configured in the same manner as in the optical multilayer body described in the first embodiment may be referenced using the same numerals as the numerals used in the first embodiment, and redundant descriptions may be omitted. Furthermore, as for the surface plate, the image display device, and the polarizing plate according to the fifth embodiment of the present disclosure below, each including an optical multilayer body, portions that can be configured in the same manner as in the surface plate, the image display device, and the polarizing plate described in the first embodiment, each including an optical multilayer body, may be described using the same numerals as the numerals used in the first embodiment, and redundant descriptions may be omitted. When it is obvious that an advantage attainable in the first embodiment is also attainable in the fifth embodiment, its description may be omitted. As the description of the optical multilayer body, the surface plate, the image display device, and the polarizing plate according to the fifth embodiment of the present disclosure, the description of the optical multilayer body, the surface plate, the image display device, and the polarizing plate according to the first embodiment of the present disclosure can be applied unless contradictory.

As the description of the resin substrate included in the optical multilayer body according to the fifth embodiment of the present disclosure, the description of the optical film according to the first embodiment of the present disclosure can be applied unless contradictory. For the resin substrate according to the fifth embodiment of the present disclosure below, portions that can be configured in the same manner as in the optical film described in the first embodiment may be described using the same numerals as the numerals used in the first embodiment, and redundant descriptions may be omitted.

As the description of the resin film included in the optical multilayer body according to the fifth embodiment of the present disclosure, the description of the polyester film according to the first embodiment of the present disclosure can be applied unless contradictory. For the resin film according to the fifth embodiment of the present disclosure below, portions that can be configured in the same manner as in the polyester film described in the first embodiment may be described using the same numerals as the numerals used in the first embodiment, and redundant descriptions may be omitted.

An optical multilayer body according to the fifth embodiment of the present disclosure includes a resin substrate and at least one functional layer provided on the resin substrate. Herein, an optical multilayer body is a multilayer body through which light can be transmitted. When an "optical multilayer body" is mentioned in the following description of the fifth embodiment, it refers to the optical multilayer body according to the fifth embodiment of the present disclosure, unless specifically distinguished.

The resin substrate 5 has, as illustrated in Fig. 7, a first surface 5a and a second surface 5b opposite the first surface 5a. The resin film described later also has a first surface and a second surface opposite the first surface. When the first surface and the second surface are not specifically distinguished, "surface" may simply be used. The resin substrate has, within its plane, a first direction and a second direction perpendicular to the first direction. The first direction is, in the fifth embodiment, the longitudinal direction, flow direction, or machine direction (MD) of the resin substrate. The second direction is, in the fifth embodiment, the transverse direction or width direction (TD) of the resin substrate.

Fig. 7 is a cross-sectional view illustrating an optical multilayer body 3 according to the fifth embodiment of the present disclosure. The optical multilayer body 3 in Fig. 7 includes a resin substrate 5 and a functional layer 8 in this order. The functional layer 8 is provided on the first surface 5a of the resin substrate 5.

Fig. 8 is a cross-sectional view illustrating an optical multilayer body 3 according to the fifth embodiment of the present disclosure. The optical multilayer body 3 in Fig. 8 includes a resin film 7, an easily adhesive layer 6, and a functional layer 8 in this order. The easily adhesive layer 6 and the functional layer 8 are provided on the first surface 7a of the resin film 7. The resin substrate 5 consists of the resin film 7 and the easily adhesive layer 6. The resin film 7 has a first surface 7a and a second surface 7b opposite the first surface 7a.

The total transmittance of the optical multilayer body is 70% or more, may be 80% or more, may be 85% or more, may be 88% or more, or may be 90% or more. The higher the total transmittance of the optical multilayer body, the more

preferred; however, the total transmittance may be 99% or less, may be 98% or less, or may be 95% or less. The total transmittance is measured according to JIS K7361-1: 1997.

The haze of the optical multilayer body may be 10.0% or less, may be 7.0% or less, may be 5.0% or less, may be 4.0% or less, or may be 3.0% or less. The haze of the optical multilayer body may be 0.1% or more, may be 0.2% or more, or may be 0.3% or more. The haze is measured according to JIS K7136: 2000.

The total transmittance and haze are, in the case of an optical multilayer body including a resin film, optionally an easily adhesive layer, and a functional layer in this order, measured with the light incident surface being the resin film surface.

The biomass content of the optical multilayer body is 10% or more, may be 11% or more, may be 12% or more, may be 15% or more, or may be 20% or more. With such an optical multilayer body, the reduction of environmental impacts can be sought. The higher the biomass content of the optical multilayer body, the more preferred; however, the biomass content may be, for example, 98% or less, may be 90% or less, may be 80% or less, may be 70% or less, may be 60% or less, may be 50% or less, may be 40% or less, may be 30% or less, or may be 25% or less.

When the overall biomass content of the optical multilayer body is measured, the sample can be prepared from the optical multilayer body. When the biomass content of each layer in the optical multilayer body is measured, the sample can be prepared after separating the layer of interest from the optical multilayer body.

<Resin Substrate>

The resin substrate includes, in the fifth embodiment, at least a resin film.

The resin substrate consists of, in the fifth embodiment, a resin film.

The resin substrate includes, in the fifth embodiment, a resin film and at least one easily adhesive layer provided on the resin film.

The resin film is preferably a film having transparency, smoothness, and heat resistance and superior in mechanical strength. Examples of resins that can form the resin film include thermoplastic resins, such as polyester, triacetylcellulose, diacetylcellulose, cellulose acetate butyrate, polyamide, polyimide, polyethersulfone, polysulfone, polyolefins (e.g., polyethylene, polypropylene, and polymethylpentene), polyvinyl chloride, polyvinyl acetal, polyether ketone, polymethyl methacrylate, polycarbonate, and polyurethane. Of these, polyester and triacetylcellulose are particularly preferred, and polyester is more preferred.

The resin substrate may contain a recycled material-derived resin. In particular, the resin film in the resin substrate may contain a recycled material-derived resin. With the inclusion of a recycled material-derived resin in the resin substrate, environmental impacts can be further reduced.

The resin substrate may contain a biomass material-derived resin. The resin film may contain a biomass material-derived resin. Examples of biomass material-derived resins include biomass material-derived polyester and biomass material-derived polyolefins, triacetylcellulose, diacetylcellulose, and cellulose acetate butyrate. By weighing a biomass material-derived resin as a raw material for the resin substrate and the resin film and designating it as a raw material, the biomass content of the resin substrate and the resin film can be specified, and the quality of the resin substrate and the resin film can also be controlled, in advance.

Examples of resin films include polyester films, such as a polyethylene terephthalate film and polybutylene terephthalate, a triacetylcellulose film, polyolefin films, such as a polyethylene film and a polypropylene film, polyamide films, such as a nylon film and a nylon 6/meta-xylylenediamine nylon 6 coextruded cooriented film, a coextruded cooriented film of a polypropylene/ethylene-vinyl alcohol copolymer, and composite films obtained by stacking two or more of such films. Of these, polyester films and a triacetylcellulose film are particularly preferred, and a polyethylene terephthalate film is more preferred.

Polyester will now be described in further detail.

Polyester refers to a copolymer of at least a diol component and a dicarboxylic acid component. The resin substrate may contain, as a polyester, a biomass material-derived polyester (hereinafter also referred to as "a biomass polyester"). The resin film may contain, as a polyester, a biomass polyester.

Specific examples of polyesters include polyethylene terephthalate (PET), polybutylene terephthalate (PBT), polytrimethylene terephthalate (PTT), polyethylene naphthalate (PEN), polybutylene naphthalate (PBN), and polyethylene furanoate (PEF). Of these, PET is particularly preferred because it results in a resin film superior in mechanical strength. As for biomass polyesters, specific examples include such types of polyesters produced using biomass material-derived monomer(s) as a subset or all of the starting monomers (the diol component and the dicarboxylic acid component).

The resin substrate can contain one or two or more polyesters.

The resin film can contain one or two or more polyesters.

The resin substrate and the resin film may each contain a fossil fuel-derived polyester, may each contain a biomass polyester, or may each contain a fossil fuel-derived polyester and a biomass polyester. With the inclusion of a biomass polyester in the resin substrate or resin film at least as part of it, the amount of fossil fuel-derived polyesters can be

decreased, and thus environmental impacts can be reduced, compared to known substrates or films.

The resin substrate and the resin film may contain a recycled material-derived polyester. The polyester contained in the resin substrate and the resin film may be a recycled material-derived polyester that is also a biomass polyester. A subset of polyesters contained in the resin substrate and the resin film may be recycled material-derived polyester(s). In that case, another subset of the polyesters contained in the resin substrate and the resin film, which is not the recycled material-derived polyester(s), may be biomass polyester(s). The recycled material-derived polyester may be recycled PET. The recycled material-derived polyester may be a polyester derived from a raw material produced through recycling. More specifically, at least either one of recycled material-derived ethylene glycol or a recycled material-derived dicarboxylic acid component may be used as a raw material for the recycled material-derived polyester.

The percentage of such resins in the resin substrate may be more than 50% by mass, may be 60% by mass or more, may be 70% by mass or more, may be 80% by mass or more, may be 90% by mass or more, or may be 95% by mass or more.

The percentage of such resins in the resin film may be more than 50% by mass, may be 60% by mass or more, may be 70% by mass or more, may be 80% by mass or more, may be 90% by mass or more, or may be 95% by mass or more.

The resin substrate and the resin film may each contain additives. Examples of additives include ultraviolet absorbers, photostabilizers, antioxidants, heat stabilizers, antistatic agents, slippery particles, heat-resistant polymer particles, alkali metal compounds, alkaline earth metal compounds, phosphorus compounds, flame retardants, gel inhibitors, and surfactants. The resin substrate and the resin film can each contain one or two or more additives.

<Structure of the Resin Film>

The resin film may have a single-layer structure or may have a multilayer structure. A resin film having a single-layer structure allows for easier control of stretching. A resin film having a multilayer structure allows effects to be easily obtained by changing the composition of each layer.

In the following, a polyester film having a multilayer structure will be described.

A polyester film having a multilayer structure may contain a biomass polyester in at least one layer. For example, a multilayer film including a layer containing a biomass polyester as its base ingredient with a layer containing a fossil fuel-derived polyester as its base ingredient is superior in stretchability. As used herein, a layer containing a certain polymer as its base ingredient refers to a layer in which the percentage of the polymer is more than 50% by mass. The percentage of the polymer may be 60% by mass or more, may be 70% by mass or more, may be 80% by mass or more, or may be 90% by mass or more.

Examples of polyester films having a multilayer structure include:

(1A) a multilayer film including two or three or more layers,
each containing a biomass polyester as its base ingredient;

(2A) a multilayer film including

a layer containing a biomass polyester as its base ingredient and

a layer containing a fossil fuel-derived polyester as its base ingredient;

(3A) a multilayer film including

a layer containing a biomass polyester as its base ingredient,

a layer containing a fossil fuel-derived polyester as its base ingredient, and

a layer containing a biomass polyester as its base ingredient in this order;

(4A) a multilayer film including

a layer containing a biomass polyester as its base ingredient,

a layer containing a biomass polyester as its base ingredient, and

a layer containing a fossil fuel-derived polyester as its base ingredient in this order;

(5A) a multilayer film including

a layer containing a fossil fuel-derived polyester as its base ingredient,

a layer containing a biomass polyester as its base ingredient, and

a layer containing a fossil fuel-derived polyester as its base ingredient in this order; and

(6A) a multilayer film including two or three or more layers,
each containing a fossil fuel-derived polyester as its base ingredient.

Examples of resin films having a multilayer structure, furthermore, include:

(1B) a multilayer film including two or three or more layers each having a biomass content of 10% or more;
(2B) a multilayer film including a layer having a biomass content of 10% or more and
a layer having a biomass content of less than 10%;
(3B) a multilayer film including a layer having a biomass content of 10% or more,

a layer having a biomass content of less than 10%, and
a layer having a biomass content of 10% or more in this order;

(4B) a multilayer film including a layer having a biomass content of 10% or more,

a layer having a biomass content of 10% or more, and
a layer having a biomass content of less than 10% in this order;

(5B) a multilayer film including a layer having a biomass content of less than 10%,

a layer having a biomass content of 10% or more, and
a layer having a biomass content of less than 10% in this order; and

(6B) a multilayer film including two or three or more layers each having a biomass content of less than 10%. For the multilayer films of (1B) to (5B) above, however, the overall biomass content of the film may be 10% or more.

The multilayer films of (1A) and (1B) above make great environmental contributions. The multilayer films of (2A) to (4A) and (2B) to (4B) above make great environmental contributions and are superior in stretchability. The multilayer films of (5A) and (5B) above can result in reduced impact of impurities that can separate out of the biomass polyester, for example on the functional layer placed on the resin substrate, as well as making great environmental contributions and being superior in stretchability.
A resin film having a multilayer structure may be a coextruded resin film. For example, by shaping the constituent materials for the individual layers into films by coextrusion and subjecting the films to drawing treatment, a resin film having a multilayer structure can be obtained.
The thickness of the resin substrate may be 10 μm or more, may be 15 μm or more, may be 20 μm or more, may be 25 μm or more, or may be 30 μm or more. Such a resin substrate is superior in mechanical strength. The same applies to the thickness of the resin film.
The thickness of the resin substrate may be 200 μm or less, may be 180 μm or less, may be 160 μm or less, may be 140 μm or less, may be 120 μm or less, or may be 100 μm or less. Such a resin substrate is superior in bending resistance. The same applies to the thickness of the resin film.
Herein, the thickness of a resin substrate, an optical multilayer body, and each layer of them is determined by selecting any 20 locations on a cross-sectional image of the resin substrate and the optical multilayer body obtained using a scanning electron microscope (SEM) and calculating the average of the 20 locations. The 20 locations, however, are selected to ensure that they are not unevenly distributed. As for the acceleration voltage and magnification of the SEM, the acceleration voltage is preferably set to 1 kV or more and 10 kV or less, and the magnification is preferably set to 20 times or more and 7,000 times or less, both being selected according to the layer of interest.
Before the formation of the functional layer on it, the resin substrate may be subjected to physical treatments, such as corona discharge treatment and oxidation treatment, or may undergo prior coating with a paint referred to as an anchoring agent or primer, for improved adhesion.
The resin substrate and the optical multilayer body may be in sheet-shaped form, obtained by cutting into a

predetermined size, or may be in roll-shaped form, which is a long sheet wound into a roll. The size of the sheet is, for example, approximately 2 inches or more and 500 inches or less in terms of maximum size. The maximum size refers to the maximum length between any two points in the plane of the resin substrate or optical multilayer body. For example, when the resin substrate or optical multilayer body is rectangular, the diagonal length of the rectangle serves as the maximum size. When the resin substrate or optical multilayer body is round, the diameter of the circle serves as the maximum size.

The width of the roll-shaped form may be, for example, 500 mm or more and 8,000 mm or less. The length of the roll-shaped form may be, for example, 100 m or more and 10,000 m or less. A resin substrate and an optical multilayer body in roll-shaped form can be used after being cut into a sheet to the size of, for example, an image display device. When cutting them, it is preferred to exclude the ends of the roll, where physical characteristics are variable.

The shape of the sheet may be polygonal, such as triangular, tetragonal, or pentagonal, may be round, or may be random and indefinite. More specifically, when the resin substrate and the optical multilayer body are in tetragonal shapes, the aspect ratio is not particularly limited, provided that they are acceptable as display screens. Examples include horizontal:vertical = 1:1, 4:3, 16:10, 16:9, 2:1, 5:4, and 11:8.

<Physical Characteristics of the Resin Substrate>

The physical characteristics that the resin substrate preferably has will now be described.

(Reduced Elastic Modulus)

The reduced elastic modulus ($E_rA$) of the resin substrate may be 1.0 GPa or more, may be 1.5 GPa or more, may be 2.0 GPa or more, may be 2.5 GPa or more, or may be 3.0 GPa or more. $E_rA$ may be 10.0 GPa or less, may be 9.0 GPa or less, may be 8.0 GPa or less, may be 7.0 GPa or less, or may be 6.0 GPa or less. A resin substrate with an $E_rA$ of 1.0 GPa or more exhibits good hardness. A resin substrate with an $E_rA$ of 10.0 GPa or less exhibits good bending resistance. Herein, $E_rA$ can be adjusted by, for example, appropriately selecting the ingredients contained in the resin substrate.

Herein, the reduced elastic moduli of a resin substrate and a functional layer, which will be described later, are measured by nanoindentation. Specifically, using a nanoindenter and with cross-sections of the functional layer and the resin substrate in an optical multilayer body as surfaces for measurement, the reduced elastic modulus of each is measured. The cross-sections are obtained by cutting in the thickness direction, which is perpendicular to the primary surfaces of the optical multilayer body. The points where the indenter is pressed are the portions of the resin substrate and the functional layer in which the cross-section is exposed, near the middle of the resin substrate and the functional layer in the thickness direction. For a resin substrate including a resin film and an easily adhesive layer, the point where the indenter is pressed is typically the cross-section of the resin film. The measurement conditions are as follows. The tip of the nanoindenter is a Berkovich tip (three-sided pyramidal tip). Over 20 seconds (rate: 10 nm/sec), the indenter is pressed into each of the resin substrate and the functional layer from the cross-section of each of the resin substrate and the functional layer to a maximum indentation depth of 200 nm. The indenter is held in that state for 5 seconds and then released over 20 seconds (rate: 10 nm/sec), and the maximum load $P_{max}$, the projected contact area at the maximum depth $A_p$, and the load-displacement curve are obtained. From the load-displacement curve obtained, the reduced elastic modulus is calculated according to equation (1) below.

[Math. 3]

$$E_r = \frac{S\sqrt{\pi}}{2\sqrt{A_p}} \quad \cdots (1)$$

In equation (1), $A_p$ is the projected contact area, S is contact stiffness, and $E_r$ is the reduced elastic modulus of the resin substrate or functional layer.

The measurement is conducted in a room-temperature (23°C) environment.

Herein, a reduced elastic modulus represents the average of measurements at 10 locations excluding the minimum and maximum from measurements at 12 locations within the same cross-section. Herein, measurement locations are selected from any locations free of defects, such as scratches or stains. The details of the measurement conditions will be provided in the Examples section.

(Biomass Content)

The biomass content of the resin substrate is not particularly limited. The biomass content of the resin substrate may be less than 10%. The biomass content of the resin substrate may be 10% or more, may be 15% or more, may be 20% or more, or may be 25% or more. With such a resin substrate, the reduction of environmental impacts can be sought. The higher the biomass content of the resin substrate, the more preferred; however, the biomass content may be, for example, 98% or less, may be 90% or less, may be 80% or less, may be 70% or less, may be 60% or less, may be 50% or less, or may be 40% or less.

(In-Plane Phase Difference (Re))

The in-plane phase difference (Re) of the resin substrate may be 30,000 nm or less, although it is not particularly limited. Herein, an "in-plane phase difference" is calculated according to the equation: In-plane phase difference (Re) = (nx - ny) $\times$ T [nm]. An "in-plane phase difference" is also referred to as retardation, and its unit is a unit for length. The T in the above equation represents the thickness [nm] of the resin substrate.

"nx" is the refractive index in the slow axis direction, the direction with the highest refractive index in the plane of the resin substrate. "ny" is the refractive index in the fast axis direction, which is the direction perpendicular to the slow axis direction in the plane of the resin substrate. The refractive indices and the in-plane phase difference represent the refractive indices and in-plane phase difference for a wavelength of 550 nm. The direction of the slow axis and the in-plane phase difference are measured at a measurement angle of 0° using trade name "RETS-100," manufactured by Otsuka Electronics Co., Ltd. nx - ny can be calculated from thickness information of the resin substrate, in addition to the in-plane phase difference measured with "RETS-100."

When polarized light passes through a film having birefringence, rainbow effects can be observed on the film. Rainbow effects are rainbow-colored fringes and may reduce the visibility of the film. The polarized light is, for example, image light emitted from a liquid crystal display element or an OLED display element including a functional layer that reduces reflection through polarization control.

For reduced rainbow effects on the resin substrate and the resulting improved visibility, the in-plane phase difference of the resin substrate may be 3,000 nm or more, may be 4,000 nm or more, or may be 5,000 nm or more or may be 1,500 nm or less, may be 1,450 nm or less, or may be 1,200 nm or less.

When the in-plane phase difference of the resin substrate is 3,000 nm or more, rainbow effects can be effectively obscured. The inventors presume that this is for the following reason. Rainbow effects are presumably caused by light in a polarized state passing through a film with varying in-plane phase differences and experiencing a change in its polarized state. The larger the in-plane phase difference of the resin substrate, the greater the changes in visible light transmittance for different wavelengths in response to a given change in in-plane phase difference. The larger the in-plane phase difference, furthermore, the more easily light with multiple wavelengths is transmitted, and the more likely the transmitted light is to be visually perceived as a mixed color. Even when variations in in-plane phase difference exist, therefore, a decrease in transmittance for a certain wavelength is accompanied by an increase in transmittance for another wavelength because visible light transmittance values for different wavelengths greatly change. As a result of this, changes in the mixed color of the transmitted light are difficult to notice, as long as they are visually observed. When the in-plane phase difference of the resin substrate is 3,000 nm or more, the changes in visible light transmittance for different wavelengths according to the in-plane phase difference are large, and even if visible light transmittance values change due to variations in in-plane phase difference, the colors are visually perceived as a mixture, making changes in color difficult to notice. Rainbow effects, therefore, can be effectively obscured. For reduced tear and breakage during drawing, furthermore, the in-plane phase difference of the resin substrate may be 30,000 nm or less, may be 25,000 nm or less, may be 20,000 nm or less, or may be 15,000 nm or less.

Moreover, when the in-plane phase difference of the resin substrate is 1,500 nm or less, rainbow effects can be effectively obscured. The inventors presume that this is for the following reason. The smaller the in-plane phase difference of the resin substrate, the smaller the changes in visible light transmittance for different wavelengths in response to a given change in in-plane phase difference. The visible light transmittance values for different wavelengths, therefore, remain almost unchanged even when variations in in-plane phase difference exist. Accordingly, when variations in in-plane phase difference are sufficiently small, visually observable rainbow effects no longer occur. For this reason, when the in-plane phase difference of the resin substrate is 1,500 nm or less, the changes in visible light transmittance for different wavelengths according to the in-plane phase difference are sufficiently small, and rainbow effects caused by variations in in-plane phase difference can be effectively obscured. For the reduction of so-called blackouts, furthermore, the in-plane phase difference of the resin substrate may be 50 nm or more, may be 100 nm or more, may be 150 nm or more, may be 200 nm or more, may be 250 nm or more, or may be 300 nm or more. In this context, a blackout refers to a phenomenon in which the display screen of, for example, a liquid crystal display device becomes dark depending on the angle when the display device is viewed with polarized sunglasses.

The difference in refractive index "nx - ny" (hereinafter also referred to as "Δn") may be, in the fifth embodiment, 0.040 or greater or may be 0.050 or greater. When Δn is 0.040 or greater, the thickness of the resin substrate required to achieve the desired in-plane phase difference can be reduced. Δn may be 0.250 or less or may be 0.200 or less. When Δn is 0.250 or less, the tear and breakage of the resin substrate can be reduced because there is no need to excessively draw the resin substrate.

Δn may be, in the fifth embodiment, less than 0.040. When Δn is less than 0.040, it can be made easier to reduce rainbow effects caused by the in-plane phase difference. Δn may be 0.005 or greater, may be 0.008 or greater, or may be 0.010 or greater. When Δn is 0.005 or greater, it can be made easier to reduce blackouts.

The resin substrate or resin film is preferably an oriented film. The oriented film may be a uniaxially oriented film or may be a biaxially oriented film. The biaxial orientation may be sequential biaxial orientation or may be simultaneous biaxial orientation.

A resin substrate having an in-plane phase difference of 3,000 nm or more and 30,000 nm or less is obtained as follows, as an example. A resin composition is melted and shaped into a sheet by extrusion to give a cast substrate. The sheet-shaped cast substrate is transversely drawn using a tenter, for example, at a temperature equal to or higher than the glass transition temperature of the resin and then subjected to heat treatment. The transverse drawing temperature may be 80°C or above or may be 90°C or above. The transverse drawing temperature may be 160°C or below or may be 150°C or below. The transverse drawing factor may be 2.5 or greater or may be 3.0 or greater. The transverse drawing factor may be 6.0 or less or may be 5.5 or less. When the transverse drawing factor is 6.0 or less, the transparency of the resin substrate is excellent. When the drawing factor is 2.5 or greater, a required level of stretching tension is achieved, and a large birefringence facilitates the attainment of the desired in-plane phase difference. The resin substrate may have the desired in-plane phase difference imparted through biaxial orientation. The resin substrate may be, after the transverse drawing of the sheet-shaped cast substrate under the conditions specified above, subjected to drawing in the flow direction with respect to the transverse drawing (hereinafter also referred to as "longitudinal drawing") using a biaxial orientation tester. In this instance, the longitudinal drawing factor may be 2.0 or less. The treatment temperature during the heat treatment may be 80°C or above or may be 100°C or above. The treatment temperature during the heat treatment may be 250°C or below or may be 220°C or below.

A resin substrate having an in-plane phase difference of 1,500 nm or less is obtained as follows, as an example. A resin composition is melted and shaped into a sheet by extrusion to give a cast substrate. The sheet-shaped cast substrate is subjected to sequential biaxial orientation at a temperature equal to or higher than the glass transition temperature of the resin and to heat treatment. Transverse drawing, in the width direction (TD), may be performed as drawing in the first stage of sequential biaxial orientation, and drawing in the machine direction (MD) may be performed as drawing in the second stage. The drawing temperature may be 80°C or above or may be 90°C or above. The drawing temperature may be 160°C or below or may be 150°C or below. The transverse drawing factor may be 2.5 or greater or may be 3.0 or greater. The transverse drawing factor may be 6.0 or less or may be 5.5 or less. The longitudinal drawing factor may be 80% or more and 120% or less in relation to the transverse drawing factor, or may be 90% or more and 110% or less, for the adjustment of the in-plane phase difference to 1,500 nm or less. The treatment temperature during the heat treatment may be 80°C or above or may be 100°C or above. The treatment temperature during the heat treatment may be 250°C or below or may be 220°C or below.

Polyesters are superior in transparency, heat resistance, and mechanical properties and allow the in-plane phase difference to be controlled within the desired range through drawing work.

A method for controlling the in-plane phase difference of the resin substrate to be 3,000 nm or more and 30,000 nm or less is the method of selecting the drawing factors, the drawing temperatures, and the thickness of the produced resin substrate as appropriate. Specifically, the higher the drawing factor ratios, the larger the in-plane phase difference. The lower the drawing temperatures, the larger the in-plane phase difference. The larger the thickness, the larger the in-plane phase difference. The closer the drawing factor ratios are to 1, the smaller the in-plane phase difference. The higher the drawing temperatures, the smaller the in-plane phase difference. The smaller the thickness, the smaller the in-plane phase difference.

A method for controlling the in-plane phase difference of the resin substrate to be 1,500 nm or less is the method of selecting the drawing factor ratios and the drawing temperatures during biaxial orientation and the thickness of the produced resin substrate as appropriate. Specifically, the closer the drawing factor ratios are to 1, the smaller the in-plane phase difference. The higher the drawing temperatures, the smaller the in-plane phase difference. The smaller the thickness, the smaller the in-plane phase difference. The higher the drawing factor ratios, the larger the in-plane phase difference. The lower the drawing temperatures, the larger the in-plane phase difference. The larger the thickness, the larger the in-plane phase difference.

(Total Transmittance and Haze)

The total transmittance of the resin substrate may be 70% or more, may be 75% or more, may be 80% or more,

may be 85% or more, or may be 90% or more. The higher the total transmittance of the resin substrate, the more preferred; however, the total transmittance may be 99% or less, may be 98% or less, or may be 95% or less. The total transmittance is measured according to JIS K7361-1: 1997.

The haze of the resin substrate may be 3.0% or less, may be 2.5% or less, may be 2.0% or less, may be 1.5% or less, or may be 1.0% or less. The lower the haze of the resin substrate, the more preferred; however, the haze may be 0.1% or more, may be 0.2% or more, or may be 0.3% or more. The haze is measured according to JIS K7136: 2000.

<Easily Adhesive Layer>

By providing an easily adhesive layer on a resin film, good interlayer adhesion can be achieved in an optical multilayer body including the resin film, the easily adhesive layer, and a functional layer in this order. That is, the optical multilayer body according to the fifth embodiment of the present disclosure may include an easily adhesive layer between the resin film and the functional layer. The easily adhesive layer may be provided solely on either one of the first surface or the second surface of the resin film, or may be provided on both of the first surface and the second surface.

Examples of resins that can constitute the easily adhesive layer include thermoplastic resins, such as polyester, polyurethane, and (meth)acrylic resins, and thermosetting resins, with thermoplastic resins being preferred. Of thermoplastic resins, polyester and polyurethane are particularly preferred, and resins containing both of a polyester component and a polyurethane component are more preferred. With such resins, it is easier to reduce the difference in refractive index between the resin film and the easily adhesive layer.

The glass transition temperature of the resin constituting the easily adhesive layer may be 30°C or above, may be 50°C or above, or may be 70°C or above. The glass transition temperature of this resin may be 120°C or below, may be 110°C or below, or may be 90°C or below. The glass transition temperature is the midpoint glass transition temperature as obtained by differential scanning calorimetry (DSC) according to JIS K7121: 2012.

When the glass transition temperature of the resin constituting the easily adhesive layer is 30°C or above, it can be made easier to reduce the occurrence of internal stress caused by the flow of the easily adhesive layer due to in-process heat. Examples of in-process heat include heat during a drying step for a functional layer coating solution and heat generated by warming during the attachment of the optical multilayer body, for example to a polarizer. When the glass transition temperature of the resin constituting the easily adhesive layer is 120°C or below, it can be made easier to reduce the occurrence of stress caused by a difference in thermal behavior between the easily adhesive layer and the resin film, and thus the formation of cracks, for example, in the easily adhesive layer induced by stress can be reduced.

The easily adhesive layer may be formed by inline coating, in which the formation of the easily adhesive layer is performed during the formation of the resin film, or may be formed by offline coating, in which the formation of the easily adhesive layer is performed after the formation of the resin film. In inline coating and offline coating, it is preferred to use an easily adhesive layer coating solution, which contains the constituents of the easily adhesive layer. For example, by applying an easily adhesive layer coating solution to the resin film using a common application method and drying it, the easily adhesive layer can be formed.

The direction of the drying air during the formation of the easily adhesive layer is preferably opposite the direction of transport of the resin film. When the direction of the drying air and the direction of transport of the resin film are opposite, the drying time of the easily adhesive layer coating solution can be shortened without excessively increasing the drying temperature.

<Functional Layer>

The optical multilayer body according to the fifth embodiment of the present disclosure may include one functional layer or may include two or more. That is, two or more functional layers may be stacked on the resin film, with an easily adhesive layer interposed therebetween as needed. The functional layer may be provided solely on either one of the first surface or the second surface of the resin substrate, or may be provided on both of the first surface and the second surface.

The reduced elastic modulus of the functional layer ($E_rB$) is 1.0 GPa or more and 10.0 GPa or less. $E_rB$ may be 1.5 GPa or more, may be 2.0 GPa or more, may be 2.5 GPa or more, or may be 3.0 GPa or more. $E_rB$ may be 9.0 GPa or less, may be 8.0 GPa or less, may be 7.0 GPa or less, or may be 6.0 GPa or less. A functional layer with an $E_rB$ of 1.0 GPa or more exhibits good hardness. A functional layer with an $E_rB$ of 10.0 GPa or less exhibits good bending resistance, lightfast adhesion, and curling resistance. Herein, $E_rB$ can be adjusted by, for example, appropriately selecting the ingredients contained in the functional layer. $E_rB$ can be adjusted by, as an example, appropriately selecting the number of functional groups and the average molecular weight of a polyfunctional (meth)acrylate oligomer forming the functional layer.

The ratio between the reduced elastic moduli ($E_rB/E_rA$) is 0.50 or greater and 2.00 or less. The ratio ($E_rB/E_rA$) may be 0.60 or greater, may be 0.70 or greater, may be 0.80 or greater, may be 0.90 or greater, or may be 1.00 or greater. The ratio ($E_rB/E_rA$) may be 1.90 or less, may be 1.80 or less, may be 1.70 or less, may be 1.60 or less, or may be 1.50 or

less. When this ratio is 0.50 or greater, the pencil hardness of the optical multilayer body is good, and when this ratio is 1.00 or greater, the pencil hardness of the optical multilayer body is better. When this ratio is 2.00 or less, the lightfast adhesion and curling resistance of the optical multilayer body are good, and when this ratio is 1.50 or less, the lightfast adhesion and curling resistance of the optical multilayer body are better.

When the optical multilayer body includes two or more functional layers, it is sufficient if the reduced elastic modulus ($E_rB$) of at least one functional layer falls within the above ranges; a functional layer with a reduced elastic modulus ($E_rB$) outside the above ranges may be included. It is preferred that the reduced elastic moduli ($E_rB$) of all functional layers fall within the above ranges.

When the optical multilayer body includes two or more functional layers, it is sufficient if the reduced elastic modulus of at least one functional layer meets the above requirement for the ratio ($E_rB/E_rA$), and it is preferred that the reduced elastic moduli of all functional layers meet the above requirement for the ratio ($E_rB/E_rA$).

Examples of functional layers include the following (1) to (12).

(1) A hard-coat layer

(2) An antiglare layer

(3) An antifouling layer

(4) A multilayer structure including a hard-coat layer and an antireflection layer in this order

(5) A multilayer structure including a hard-coat layer and an antiglare layer in this order

(6) A multilayer structure including a hard-coat layer and an antifouling layer in this order

(7) A multilayer structure including an antiglare layer and an antireflection layer in this order

(8) A multilayer structure including an antiglare layer and an antifouling layer in this order

(9) A multilayer structure including a hard-coat layer, an antiglare layer, and an antireflection layer in this order

(10) An antistatic layer

(11) An electrically conductive layer

(12) A retardation layer

In (4) to (11) above, the left side indicates the layer positioned on the resin substrate side.

Of one or more functional layers, the functional layer in contact with the resin substrate preferably contains a cured form of at least one ionizing radiation-curable ingredient. The functional layer in contact with the resin substrate is preferably a hard-coat layer. With the inclusion of a cured form of an ionizing radiation-curable ingredient in the functional layer in contact with the resin substrate, it can be made easier to achieve high pencil hardness of the optical multilayer body.

The functional layer preferably contains a biomass material-derived resin. Through this, the biomass content of the optical multilayer body can be increased. Examples of biomass material-derived resins include cured forms of biomass material-derived curable ingredients, with cured forms of biomass material-derived ionizing radiation-curable ingredients being preferred.

An electrically conductive layer contains, in the fifth embodiment, at least one optically transparent resin as a binder resin as described earlier and multiple filaments of electrically conductive fiber placed in the optically transparent resin. Electrically conductive fiber is a substance having electrical conductivity and also having a shape in which the length is sufficiently large compared to the thickness (e.g., the diameter). For example, substances that have electrical conductivity and whose length is equal to or greater than approximately fivefold the thickness are included as electrically conductive fibers. An electrically conductive layer refers to a layer that contains an optically transparent resin and multiple filaments of electrically conductive fiber placed in the optically transparent resin and is capable of conducting electricity from its surface. The filament diameter of the electrically conductive fiber is, for example, 10 nm or more and 200 nm or less. The filament length of the electrically conductive fiber is, for example, 30 μm or more, and its upper limit is not particularly limited. Examples of electrically conductive fibers include electrically conductive carbon fiber, metal fibers, such as metal nanowires, metal-coated organic fibers, metal-coated inorganic fibers, and carbon nanotubes.

A large part of the electrically conductive fiber may be present on the side closer to the resin substrate than the

position at half the thickness of the electrically conductive layer. In that case, the electrically conductive fiber is also present on the side closer to the surface than the position at half the thickness of the electrically conductive layer and on the surface of the electrically conductive layer as a result of the rest of the electrically conductive fiber accumulating on the large part of the electrically conductive fiber. Owing to this, the electrically conductive layer is electrically capable of conducting electricity from its surface, and, furthermore, filaments of the electrically conductive fiber are in contact with each other in the thickness direction of the electrically conductive layer.

The functional layer is formed as follows, for example. A curable composition is applied to the resin substrate to the desired thickness, through which a coating (uncured resin layer) is formed. When an organic solvent is used, the organic solvent is removed through drying. The drying conditions are, for example, 10 seconds or more and 10 minutes or less at 40°C or above and 120°C or below. Then, when the curable composition contains a thermosetting ingredient, curing is initiated by heating the coating at a temperature required for curing. When the curable composition contains an ionizing radiation-curable ingredient, curing is initiated by irradiating the coating with ionizing radiation. In such a manner, the functional layer can be formed.

The thickness of the functional layer can be selected as appropriate according to the functions to be imparted. The thickness of the functional layer may be 0.05 μm or more, may be 0.1 μm or more, may be 0.5 μm or more, may be 1 μm or more, or may be 2 μm or more. The thickness of the functional layer may be 100 μm or less, may be 50 μm or less, may be 30 μm or less, or may be 20 μm or less. When two or more functional layers are included, the above thickness of the functional layer represents the total thickness of the functional layers.

The ratio between the thickness of the functional layer and the thickness of the resin substrate (the thickness of the functional layer/the thickness of the resin substrate) may be 0.05 or greater, may be 0.10 or greater, or may be 0.30 or greater. This ratio (the thickness of the functional layer/the thickness of the resin substrate) may be 0.75 or less, may be 0.65 or less, or may be 0.50 or less.

(Yellowness Index YI)

The yellowness index (YI) of the optical multilayer body may be 2.0 or less.

The yellowness index (YI) indicates the degree of deviation of a hue from colorless in the direction of yellow. Positive YI values indicate that the hue is yellow. Negative YI values indicate that the hue is blue. The YI is calculated according to the equation below from the tristimulus values (X, Y, and Z) according to JIS K7373: 2006. The tristimulus values are measured by performing transmittance measurement for light with wavelengths from 300 nm to 800 nm, both inclusive, using an ultraviolet-visible spectrophotometer (V-670 spectrophotometer, manufactured by JASCO Corporation).

$$YI = 100 \times (1.2769X - 1.0592Z)/Y$$

In the above equation, X, Y, and Z each denote a tristimulus value of the optical multilayer body in the XYZ colorimetric system when supplementary illuminant C is used. The tristimulus values are presented in the XYZ colorimetric system (2-degree field of view) using supplementary illuminant C as defined in JIS Z8720: 2012.

The YI may be 1.8 or less, may be 1.5 or less, or may be 1.3 or less. An optical multilayer body having such a YI has further reduced yellowish tint. The YI may be -1.0 or greater, may be -0.5 or greater, may be -0.3 or greater, or may be 0.0 or greater.

(Hue b*)

The b* of the optical multilayer body as measured based on transmitted light may be -1.5 or greater, may be -1.0 or greater, or may be 0.1 or greater. The b* of the optical multilayer body as measured based on transmitted light may be 3.0 or less, may be 2.5 or less, or may be 2.3 or less for reduced yellowish tint. b* represents b* in the L*a*b* colorimetric system. The "L*a*b* colorimetric system" refers to the colorimetric system defined by the CIE (the International Commission on Illumination) and adopted in JIS Z8781-4: 2013. In the L*a*b* colorimetric system, lightness is represented by L*, and chromaticity is represented by a* and b*.

The surface of an optical multilayer body including a resin substrate and a functional layer that is the surface of the functional layer or the surface closer to the functional layer than the resin substrate is referred to as the first surface. The surface of this optical multilayer body that is the surface of the resin substrate or the surface closer to the resin substrate than the functional layer is referred to as the second surface.

The "b* as measured based on transmitted light" in relation to the optical multilayer body is measured based on total transmitted light when the first surface of the optical multilayer body is irradiated with light (illuminant D65) at an incident angle of 0 degrees (the direction normal to the first surface of the optical multilayer body is defined as 0 degrees) using a spectrophotometer (UV-3600plus spectrophotometer, manufactured by Shimadzu Corporation).

The b* of an optical multilayer body including an antireflection layer as a functional layer as measured based on reflected light may be -7.0 or greater, may be -6.5 or greater, or may be -6.0 or greater. The b* of this optical multilayer body as measured based on reflected light may be 2.0 or less, may be 1.5 or less, or may be 1.2 or less.
The "b* as measured based on reflected light" in relation to the optical multilayer body is measured based on total reflected light (specular reflected light + diffuse reflected light) when the first surface of the optical multilayer body is irradiated with light (illuminant D65) at an incident angle of 5 degrees (the direction normal to the first surface of the optical multilayer body is defined as 0 degrees) using a spectrophotometer (UV-3600plus spectrophotometer, manufactured by Shimadzu Corporation).
The optical multilayer body according to the fifth embodiment of the present disclosure is suitable for applications in image display devices. Specifically, the optical multilayer body is suitable as various functional films, such as a hard-coat film, an antiglare film, an antireflection film, an antifouling film, an antistatic film, and a polarizer-protecting film.

[Surface Plate for Image Display Devices]

An example of an application of the optical multilayer body according to the fifth embodiment of the present disclosure is a surface plate for image display devices that includes a resin plate or glass plate and the optical multilayer body according to the fifth embodiment of the present disclosure disposed on the plate. The optical multilayer body is preferably positioned such that the surface on the functional layer side of the optical multilayer body faces opposite the resin plate or glass plate.
This surface plate is preferably positioned within the image display device such that its surface to which the optical multilayer body according to the fifth embodiment of the present disclosure has been attached faces the surface side. In other words, this surface plate is preferably positioned such that its surface to which the optical multilayer body according to the fifth embodiment of the present disclosure has been attached faces opposite the display element.
For the resin plate and the glass plate, a resin plate and a glass plate commonly used as surface plates for image display devices can be employed. The optical multilayer body according to the fifth embodiment of the present disclosure can be attached to the resin plate or glass plate using, for example, an adhesive agent.

[Image Display Device]

An example of an application of the optical multilayer body according to the fifth embodiment of the present disclosure is an image display device that includes a display element and the optical multilayer body according to the fifth embodiment of the present disclosure. The optical multilayer body according to the fifth embodiment of the present disclosure is disposed on the display element, for example. The optical multilayer body according to the fifth embodiment of the present disclosure may be disposed on the light-emitting surface side of the display element or may be disposed on the side opposite the light-emitting surface. Within the image display device, the optical multilayer body is preferably positioned such that its surface on the functional layer side faces opposite the display element. The optical multilayer body according to the fifth embodiment of the present disclosure may be disposed on the outermost surface of the image display device.

[Polarizing Plate]

An example of an application of the optical multilayer body according to the fifth embodiment of the present disclosure is a polarizing plate that includes a polarizer, a first transparent protective plate disposed on one surface of the polarizer, and a second transparent protective plate disposed on the other surface of the polarizer, wherein at least one of the first transparent protective plate or the second transparent protective plate is the optical multilayer body according to the fifth embodiment of the present disclosure described above. The optical multilayer body is preferably positioned such that its surface on the functional layer side faces opposite the polarizer.
On one surface of the polarizer, a first transparent protective plate is disposed, and on the other surface, a second transparent protective plate is disposed. At least one of the first transparent protective plate or the second transparent protective plate is the optical multilayer body according to the fifth embodiment of the present disclosure described above.
Examples of the first transparent protective plate and the second transparent protective plate excluding the optical multilayer body according to the fifth embodiment of the present disclosure include a plastic film and a glass plate. Examples of plastic films include a polyester film, a polycarbonate film, a triacetylcellulose film, a cycloolefin polymer film, and an acrylic film, with oriented forms of such films being preferred for achieving good mechanical strength. Examples of glass plates include ones made of types of glass such as alkaline glass, nitride glass, soda-lime glass, borosilicate glass, and lead glass.
The fifth embodiment of the present disclosure relates to, for example, the following [1] to [10].

[1] An optical multilayer body including a resin substrate and at least one functional layer provided on the resin substrate, wherein when a reduced elastic modulus of the functional layer is defined as $E_rB$, and a reduced elastic modulus of the resin substrate is defined as $E_rA$, $E_rB$ is 1.0 GPa or more and 10.0 GPa or less, and $E_rB/E_rA$ is 0.50 or greater and 2.00 or less, a biomass content of the optical multilayer body is 10% or more, and a total transmittance of the optical multilayer body is 70% or more.

[2] The optical multilayer body according to [1] above, wherein the functional layer contains a biomass material-derived resin.

[3] The optical multilayer body according to [1] or [2] above, wherein the resin substrate contains a recycled material-derived resin.

[4] The optical multilayer body according to any one of [1] to [3] above, wherein the functional layer contains nanoparticles.

[5] The optical multilayer body according to any one of [1] to [4] above, wherein the resin substrate contains a biomass material-derived resin.

[6] The optical multilayer body according to any one of [1] to [5] above, wherein the resin substrate consists of a resin film or includes a resin film and at least one easily adhesive layer provided on the resin film.

[7] The optical multilayer body according to any one of [1] to [6] above, wherein the functional layer is at least one layer selected from a hard-coat layer, an antiglare layer, an antireflection layer, a retardation layer, an antifouling layer, an antistatic layer, and an electrically conductive layer.

[8] A surface plate for an image display device, the surface plate including a resin plate or glass plate and the optical multilayer body according to any one of [1] to [7] above disposed on the plate.

[9] An image display device including a display element and the optical multilayer body according to any one of [1] to [7] above disposed on the display element.

[10] A polarizing plate including a polarizer, a first transparent protective plate disposed on one surface of the polarizer, and a second transparent protective plate disposed on the other surface of the polarizer, wherein at least one of the first transparent protective plate or the second transparent protective plate is the optical multilayer body according to any one of [1] to [7] above.

EXAMPLES

(Examples and Comparative Examples of the First Embodiment of the Present Disclosure)

The optical film and other optical components according to the first embodiment of the present disclosure will now be specifically described by providing examples and comparative examples. The optical film and other optical components according to the first embodiment of the present disclosure are not limited to the forms described in the Examples.

As examples and comparative examples of the first embodiment of the present disclosure, the optical films and optical multilayer bodies of Example 1-1 to Example 1-5 and Comparative Example 1-1 to Comparative Example 1-3 were obtained. For the optical films (polyester films and easily adhesive films) and optical multilayer bodies obtained in the Examples and Comparative Examples, the following measurements and evaluations were performed. The results are presented in Table 1 and Table 2. Unless otherwise specified, the atmosphere during each measurement or evaluation was a temperature of 23°C $\pm$ 5°C and a relative humidity of 40% or more and 65% or less. Unless otherwise stated, before the start of each measurement or evaluation, the sample of interest was exposed to this atmosphere for 30 minutes or more and 60 minutes or less.

When the subject of measurement is referred to as the optical film in the following description of measurements and evaluations, it means that the easily adhesive film was selected as the subject of measurement as the optical film. It should be noted that when the easily adhesive layer in the easily adhesive film is a thin film, physical characteristics, such as optical properties, measured for the easily adhesive film can be considered physical characteristics of the polyester film. This is because since the easily adhesive layer is a thin film, the influence of the easily adhesive layer is small in the measurement of physical characteristics.

[Biomass Content and Environmental Contribution]

The biomass content was obtained by correcting pMC (percent Modern Carbon) with δ13C, where pMC is measured according to Method B of ASTM D6866-22.
Optical films with a biomass content of 10% or more were given an environmental contribution rating of A.
Optical films with a biomass content of less than 10% were given an environmental contribution rating of D.

[Thickness of the Optical Film]

The thickness of the optical film was determined by selecting any 20 locations on a cross-sectional image of the optical film obtained using a scanning electron microscope (SEM; manufactured by Hitachi High-Technologies Corporation) and calculating the average of the 20 locations. The acceleration voltage of the SEM was set to 3 kV, and the magnification was set to 100 times.

[In-Plane Phase Difference (Re) and Difference in Refractive Index (Δn)]

Using trade name "RETS-100," manufactured by Otsuka Electronics Co., Ltd., the in-plane phase difference (Re) of the optical films obtained in the Examples and Comparative Examples was measured. In-plane phase differences at 18 locations were measured, and the average of 16 locations excluding the maximum and minimum was calculated. By dividing the average in-plane phase difference of the optical film by the thickness of the optical film, the Δn (nx - ny) of the optical film was calculated.
Preparation for the measurement was performed by following the procedure (A1) to (A4) below.
(A1) First, to stabilize the light source of RETS-100, the light source was left for at least 60 minutes after being turned on. After that, the rotating analyzer method was selected, and the θ mode (angular phase difference measurement) was selected. By selecting this θ mode, the stage is set to the tilt/rotation stage.
(A2) Then the following measurement conditions were entered into RETS-100.

(Measurement Conditions)

- Retardation measuring range: Rotating analyzer method
- Measurement spot diameter: ϕ5 mm
- Tilt angle range: 0°
- Wavelength range: 400 nm to 800 nm, both inclusive
- The average refractive index of the polyester film. For example, for a polyethylene terephthalate film, N (average refractive index) = 1.617 is entered. For a polyethylene naphthalate film, N (average refractive index) = 1.72 is entered. For a polyethylene furanoate film, N (average refractive index) = 1.58 is entered.
- Thickness: Thickness separately measured using an SEM

(A3) Then background data was obtained without a sample set on this analyzer. The analyzer was configured as a closed system, and this process was conducted each time the light source was activated.
(A4) Thereafter, measurement was performed with the sample placed on the stage within the analyzer.

[Total Transmittance (Tt)]

Using a haze meter (HM-150, manufactured by Murakami Color Research Laboratory Co., Ltd.), the total transmittance (%) of the optical film was measured according to JIS K7361-1: 1997.

[Martens Hardness and the Percentage of Elastic Deformation Work]

From the optical films obtained in the Examples and Comparative Examples, samples measuring 50 mm in the flow direction × 50 mm in the width direction were cut out. Using Fischer Instruments K.K.'s product number "PICODENTOR HM500" as the measuring instrument, the measurement of the sample was conducted at 22 locations under the measurement conditions specified below, and the average Martens hardness of 20 locations excluding the minimum and maximum, the standard deviation 3σ of Martens hardness, the percentage of elastic deformation work, and the standard deviation 3σ of the percentage of elastic deformation work were calculated. The measurements at the 22 locations within a single sample were performed consecutively. In Table 1, the values of each standard deviation are indicated in parentheses. The measurement and analysis software was the software that accompanied the measuring instrument (trade name "WIN-HCU," version 3.5). Part of the software operation procedure during the measurement is presented below.

<Measurement Conditions>

- Indenter used: Vickers indenter (diamond, pyramidal shape; model number, VV005; Fischer Instruments K.K.)
- Indentation conditions: Maximum load
- Maximum indentation load: 20 mN
- Loading time: 10 seconds
- Retention time: Retained for 5 seconds at the maximum indentation load
- Unloading time: 10 seconds
- Stage for sample placement: Suction stage (The suction stage was SMC Corporation’s model number "SP2130-AD.")

[Percentage Thermal Shrinkage]

For the optical films obtained in the Examples and Comparative Examples, the percentage thermal shrinkage in the machine direction and that in the width direction were each measured based on the measurement conditions specified earlier, and the percentage thermal shrinkage ratio (percentage thermal shrinkage 1, in the MD (the fast axis direction)/percentage thermal shrinkage 2, in the TD (the slow axis direction)) was calculated.

[Tensile Strength and Percentage Elongation]

Samples for measurement were prepared by cutting a middle portion of the optical films obtained in the Examples and Comparative Examples to a size of longitudinally 20 mm × transversely 150 mm. A sample whose transverse, 150-mm sides are parallel to the TD of the film is referred to as measurement sample A (TD, the slow axis direction). A sample whose transverse, 150-mm sides are parallel to the MD of the film is referred to as measurement sample B (MD, the fast axis direction). In accordance with JIS K7127: 1999, the tensile strength and the percentage elongation of measurement sample A (TD, the slow axis direction) in a 23°C and 50% RH environment and the tensile strength and the percentage elongation of measurement sample B (MD, the fast axis direction) in a 23°C and 50% RH environment were measured under the following conditions: chuck distance, 50 mm; test speed, 25 mm/minute. From the values obtained, the tensile strength ratio (tensile strength 2, in the TD/tensile strength 1, in the MD) and the percentage elongation ratio (percentage elongation 2, in the TD/percentage elongation 1, in the MD) were each calculated.

[Erosion Rate]

Using a measuring instrument for the erosion rate (Palmeso Co., Ltd.’s MSE testing apparatus, product number "MSE-A203"; the cross-sectional shape of the nozzle is a 1 mm × 1 mm square; means for measuring the cross-sectional profile, stylus type), the erosion rate of the optical film was measured, and E0-20 was calculated. The region for the measurement of the erosion rate is 1 mm × 1 mm. The measurement of the erosion rate was conducted before the formation of the easily adhesive layer.
The measurement of the erosion rate of each sample was performed after the calibration described below, in which a standard acrylic plate was used. The test solution was prepared before the calibration, and a dispersion operation

was preliminarily performed before the calibration. The standard acrylic plate was one whose AcE as defined in the main part hereof (the average erosion rate of the acrylic plate as measured under measurement conditions A) fell within the range of 1.786 μm/g to 1.974 μm/g, both inclusive.

(0-1) Preparation of the Test Solution

Within a beaker, a test solution was prepared as a mixture of purified water, a dispersant (Wako Pure Chemical Industries, Ltd.'s trade name "Demol N"), and spherical silica with an average particle diameter (median diameter) of 3.94 μm (model number "MSE-BS-5-3," specified by Palmeso Co., Ltd.; full width at half maximum of the particle size distribution, 4.2 μm) in a ratio by mass = 968:2:30 and stirred with a glass rod. After the prepared test solution and a stirring bar were placed into a container (pot), the pot was closed with a lid, and a clamp was attached. Then the pot was placed in the measuring instrument. In the Examples herein, Potters-Ballotini Co., Ltd.'s product number "BS5-3" was used as model number "MSE-BS-5-3," which is specified by Palmeso Co., Ltd.

(0-2) Dispersion Operation

After the pot containing the test solution was placed in the measuring instrument, a dummy sample was set on the sample mounting platform. Then the buttons "Erosion force setting" and "Perform" on the control panel located on the measuring instrument's main unit were pressed in sequence. Subsequently, predetermined values were entered as the flow rates of the test solution and the compressed air, the pressure of the compressed air, and the pressure of the test solution within the nozzle, and the test solution was projected onto the dummy sample. After the projection was stopped, the buttons "Back," "Complete," and "Confirm" on the control panel were pressed in sequence.

(1) Calibration

A 2-mm thick acrylic plate, which was the calibration sample, was fixed onto the sample mounting platform of the measuring instrument using double-sided adhesive tape (Nitto Denko America, Inc.'s "Kapton double-stick tape"; product number, P-223 1-6299-01). The acrylic plate is a PMMA plate. Then the sample mounting platform with the fixed acrylic plate was set in the measuring instrument. Subsequently, the microgauges were unlocked, and the height adjustment of the sample mounting platform was performed using the height gauge. The distance between the ejection hole of the measuring instrument and the acrylic plate was adjusted to 4 mm. Thereafter, the button "To treatment conditions input screen" on the control panel located on the measuring instrument's main unit was pressed, and then the conditions were set to "No. of steps: 1, Specified projection amount g $\times$ 1." The amount of solution ejected was set to 4 g. Then the buttons "Setting Complete," "Start Operation," and "Yes" on the control panel were pressed in sequence. The flow rates of the test solution and the compressed air, the pressure of the compressed air, and the pressure of the test solution within the nozzle were maintained at the values entered in "(0-2) Dispersion Operation." After that, "Online" on the control screen of the data-processing PC was clicked to discontinue the online state and switch to the offline state. Subsequently, "Down" on the same control screen was clicked to lower the stylus of the stylus profiler in the cross-sectional profile acquisition section. Then the microgauges were checked to ensure that they were unlocked, and the microgauges were turned for upward movement. During this, the gauges were adjusted such that the red arrow on the monitor would be centered. Through this adjustment, the stylus of the stylus profiler and the surface of the calibration sample come into contact, allowing the point zero along the Z axis, which represents the height direction, to be adjusted. Then the microgauges were switched from the unlocked (off) to the on state. Subsequently, "Up" was clicked to lift the stylus of the stylus profiler in the cross-sectional profile acquisition section. After that, "Offline" on the control screen of the data-processing PC was clicked to discontinue the offline state and switch to the online state. Then the cover of the measuring instrument's main unit was closed, and the button "Confirm" on the control panel located on the measuring instrument's main unit was pressed to eject 4 g of the test solution. After the ejection of the test solution was stopped, "Perform" was clicked to calculate the erosion rate. The calibration was ended if the erosion rate was within a range of $\pm$5% of a standard of 1.88 (μm/g). If the erosion rate was outside this range, calibration was repeated until the erosion rate fell within the range, with adjustments made to the flow rate of the test solution, the flow rate of the compressed air, the pressure of the compressed air, and the pressure of the test solution within the nozzle.

(2) Measurement of the Erosion Rate of Each Sample

(2-1) Attachment of the Sample

Multilayer bodies were prepared by attaching the samples (the optical films of the Examples and Comparative Examples) to stainless steel plates, and each multilayer body was fixed onto the sample mounting platform using double-sided adhesive tape (Nitto Denko America, Inc.'s "Kapton double-stick tape"; product number, P-223 1-6299-01). The sample was made to a size of 1 cm × 1 cm. Then the sample mounting platform was set in the measuring instrument. Subsequently, the microgauges were unlocked, and the height of the sample mounting platform was adjusted using the height gauge. The distance between the ejection hole of the measuring instrument and the sample was adjusted to 4 mm. Thereafter, the button "To treatment conditions input screen" on the control panel located on the measuring instrument's main unit was pressed, then the number of steps was entered, and the amount of the test solution to be ejected (g/step) was entered for each step. The amount of solution to be ejected in each step was set within the range of 0.5 g to 3.0 g, both inclusive. The flow rates of the test solution and the compressed air, the pressure of the compressed air, and the pressure of the test solution within the nozzle were maintained at the conditions that qualified in "(1) Calibration." Then the buttons "Setting Complete," "Start Operation," and "Yes" on the control panel were pressed in sequence. After that, "Online" on the control screen of the data-processing PC was clicked to discontinue the online state and switch to the offline state. Subsequently, "Down" on the same control screen was clicked to lower the stylus of the stylus profiler in the cross-sectional profile acquisition section. Then the microgauges were checked to ensure that they were unlocked, and the microgauges were turned for upward movement. During this, the gauges were adjusted such that the red arrow on the monitor would be centered. Through this adjustment, the stylus of the stylus profiler and the surface of the sample come into contact, allowing the point zero along the Z axis, which represents the height direction, to be adjusted. Then the microgauges were switched from the unlocked (off) to the on state. Subsequently, "Up" was clicked to lift the stylus of the stylus profiler in the cross-sectional profile acquisition section. After that, "Offline" on the control screen of the data-processing PC was clicked to discontinue the offline state and switch to the online state.

(2-2) Start of the Measurement

The cover of the measuring instrument's main unit was closed, and the button "Confirm" on the control panel located on the measuring instrument's main unit was pressed to conduct measurement, in which the ejection of the test solution and the measurement of the cross-sectional profile constituted one cycle, until the depth of the cross-sectional profile exceeded 20 μm. Specifically, the measurement was carried out until the depth of the cross-sectional profile reached a depth of 25 μm or more and 30 μm or less. After the measurement, the accompanying software "MseCalc" was launched, and "Analysis method" was clicked. Then "Average analysis" was clicked. Subsequently, "Add" on the average analysis screen was clicked twice to make "A-1" and "A-2" appear in the analysis name section. The "Standard" section for "A-1" was double-clicked to make "◦" appear in the standard section. After that, "A-1" on the average analysis screen was clicked to activate it, and the position of the X-axis location bar was controlled. The position of the location bar was set to a location at which the plastic film in the cross-sectional profile screen was unworn. Then A-2 on the average analysis screen was clicked to activate it, and the position of the X-axis location bar was controlled. The position of the location bar was set to the deepest point at which the plastic film in the cross-sectional profile screen was worn. Subsequently, "File list" in the accompanying software was clicked. Then, in the "Correction" section on the file list screen, "BS5-3" was selected. After that, the cross-sectional profile and erosion rate data for each step were output as a csv file, and the erosion rate E0-20 was calculated. Specifically, the erosion rate E0-20 was calculated by averaging, in the csv output data, the "Erosion rate (corrected)" values with depths of 0 μm or more and 20 μm or less.

[tanδ]

For the optical films obtained in the Examples and Comparative Examples, the peak-top temperature for tanδ was measured by performing dynamic viscoelasticity measurement based on the measurement conditions specified earlier.

[Degree of Crystallinity]

For the optical films obtained in the Examples and Comparative Examples, X-ray diffraction measurement was performed based on the measurement conditions specified earlier, and the degrees of crystallinity of the optical films were calculated based on the calculation method described earlier.

[Rainbow Effect Evaluation (visibility)]

Liquid crystal display devices were prepared by placing the optical films obtained in the Examples and Comparative Examples on the polarizing element on the observer side of an LED backlight liquid crystal monitor (FLATORON IPS226V (manufactured by LG Electronics Japan Inc.)). The optical film was positioned such that the angle between the slow axis of the optical film and the absorption axis of the polarizing element on the observer side of the liquid crystal monitor was 45°. Then, in a dark place and a light place (illuminance around the liquid crystal monitor, 400 lux),

the observation of a displayed image was performed from the front and in a diagonal direction (approximately 50 degrees) visually and with polarized sunglasses, and the presence or absence of rainbow effects was evaluated according to the criteria given below. Observation with polarized sunglasses is a much more stringent evaluation method than visual observation. The visual acuity of the observers was from 0.7 to 1.0 in both eyes for all of them, and the observation was performed by a total of 10 observers. The grade assigned by the majority of observers has been taken as the observation result. A: No rainbow effects were observed with polarized sunglasses. B: Rainbow effects were observed with polarized sunglasses, but the rainbow effects were faint, and,
in visual observation, no rainbow effects were observed; the rainbow effects were at a level acceptable for practical use. C: Rainbow effects were observed with polarized sunglasses, and, in visual observation, rainbow effects were observed extremely faintly. D: Rainbow effects were clearly observed with polarized sunglasses, and, in visual observation, too, rainbow effects were observed.

[Pencil Hardness"

The pencil hardness of the optical films obtained in the Examples and Comparative Examples was measured and graded according to the procedure in (1) to (6) below.

(1) A sample was prepared by cutting the optical film to a size of 5 cm × 10 cm.

(2) The sample was warmed at 100°C for 10 minutes. After warming, the sample was allowed to stand in an environment at a temperature of 24°C and a relative humidity of 40% or more and 60% or less for 30 minutes or more and 60 minutes or less.

(3) For the sample, pencil hardness was measured according to JIS K5600-5-4: 1999, Scratch hardness (Pencil method). Specifically, a load was applied to the sample by placing a pencil having a predetermined hardness grade on the surface of the sample at an angle of 45° and moving it at a speed of 3.0 mm/sec with a load of 100 g.

(4) After the load was applied to the sample, the sample was warmed at 100°C for 10 minutes again.

(5) Immediately after the rewarming, scratches on the sample were visually assessed. The environment for the visual assessment was a temperature of 24°C and a relative humidity of 40% or more and 60% or less.

(6) The operations in (1) to (5) above were conducted five times. Of the pencils that left no scratch in four or more out of the five trials, the hardest one was considered the pencil hardness of the sample of interest. For example, a sample that had no scratch in four out of the five trials with a hardness grade of 3B and had no scratch in three out of the five trials with a hardness grade of 2B is graded as having a hardness grade of 3B.

The evaluation criteria are as follows. A: Pencil hardness with hardness equal to or higher than a pencil hardness grade of 2B B: A pencil hardness grade of 3B C: A pencil hardness grade of 4B D: Pencil hardness with hardness equal to or lower than a pencil hardness grade of 5B

[Foldability]

From the optical films obtained in the Examples and Comparative Examples, a strip-shaped sample measuring 30 mm along the short sides (TD) × 100 mm along the long sides (MD) was cut out. A repeated folding test was performed 200,000 times, in which the sample was folded to 180 degrees with both ends along the short sides (30 mm) fixed on a durability tester (product name "DLDMLH-FS," Yuasa System Co., Ltd.) (the 10-mm regions from the ends were fixed). The folding speed was 120 cycles per minute.
Based on the following evaluation criteria, the foldability of the optical film was evaluated.

A: No cracking or breakage occurs in the bent portion, even when the distance $\phi$ between the two sides is 2 mm.

B: Cracking or breakage occurs in the bent portion when the distance $\phi$ between the two sides is 2 mm; however, when $\phi$ is 3 mm, no cracking or breakage occurs.

C: Cracking or breakage occurs in the bent portion when the distance $\phi$ between the two sides is 3 mm.

The details of the folding test are as follows.

As illustrated in Fig. 6 (A), in the repeated folding test, a side 100C of the optical film 100 and the side 100D opposite the side 100C are each fixed using fixing sections 600 positioned parallel to each other. The fixing sections 600 are configured to be slidable in the horizontal direction.

Then, as illustrated in Fig. 6 (B), the fixing sections 600 of the optical film 100 are moved to approach each other to deform the optical film 100 to fold it. In addition, as illustrated in Fig. 6 (C), the fixing sections 600 are moved to a point at which the distance $\phi$ between the two opposite sides fixed with the fixing sections 600 is 2 mm or 3 mm, and then the fixing sections 600 are moved in the opposite direction to discontinue the deformation of the optical film 100.

By moving the fixing sections 600 as illustrated in Figs. 6 (A) to (C), the optical film 100 can be folded to 180 degrees. By performing the repeated folding test in such a manner that the bent portion 100E of the optical film 100 does not protrude beyond the lower edges of the fixing sections 600, and by controlling the distance $\phi$ between the fixing sections 600 at their closest approach to 2 mm or 3 mm at the same time, furthermore, the distance $\phi$ between the two opposite sides of the optical film can be set to 2 mm or 3 mm.

[Adhesion]

A 100-cell grid-shaped incision pattern was created on the optical multilayer bodies obtained in the Examples and Comparative Examples by putting the blade of a utility knife into their surface on the hard-coat layer side (the number of cuts, 11 incisions each in the longitudinal and transverse directions; the distance between cuts, 1 mm). The blade of the utility knife used was NT Inc.'s product number "BA-52P." Then a detachment test according to the cross-cut test specified in JIS K5600-5-6: 1999 was performed by attaching adhesive tape (Nichiban Co., Ltd., product name "Cellulose Tape®") to the gridded surface of the optical multilayer bodies and then removing the adhesive tape. According to the evaluation criteria below, the interlayer adhesion of the optical multilayer bodies obtained in the Examples and Comparative Examples was evaluated.

<Evaluation Criteria>

A: The number of detached cells is 0, with no partially chipped cell.

B: The number of detached cells is 0, but
there is an area in which cells are partially chipped, for example as a result of part of a cell detaching along an incision.

C: The number of detached cells is 1 or more.

[EXAMPLE 1-1]

Fossil fuel-derived terephthalic acid and biomass material-derived ethylene glycol were allowed to react in a reaction chamber heated to 200°C to give polyethylene terephthalate (PET). The resulting PET was introduced into a single-shaft extruder and melted at 290°C, extruded through a T die, and cast onto a casting drum with surface temperature control to give a cast film. After the resulting cast film was heated at 120°C, the film was drawn 1.5 times in the flow direction (MD) while being heated using radiation heaters from both the front and back sides of the film, and then temporarily cooled. Subsequently, the film was guided to a tenter, preheated using a group of rollers set to 119°C, and then drawn 4.5 times in the width direction (TD) of the film with heat treatment using hot air at 105°C at the first stage and hot air at 140°C at the second stage. During this, the film was drawn in two stages such that when the section for drawing in the width direction was divided into two, the amount of stretch of the film at the midpoint of the section for drawing in the width direction (the film width at the measurement point - the film width before drawing) was 80% of the amount of stretch at the end of the section for drawing in the width direction. The film drawn in the width direction was directly subjected to stepwise heat treatment using hot air ranging from 180°C to a heat treatment temperature of 245°C within the tenter. Following this, the film underwent a 1% relaxation treatment in the width direction under the same temperature conditions and a 1% relaxation treatment in the width direction after rapid cooling to 100°C, and then was wound. In such a manner, a polyester film was obtained.

By mixing 106 parts by mass of dimethyl terephthalate, 25 parts by mass of ethylene glycol, 25 parts by mass of 1,4-butanediol, 0.1 parts by mass of zinc acetate, and 0.1 parts by mass of antimony trioxide and allowing them to undergo transesterification reaction at 200°C over 2 hours, compound 1 was obtained. Then 4.0 parts by mass of fumaric acid was added to compound 1, and esterification reaction was performed at 230°C over 2 hours. Subsequently, polycondensation reaction was performed at 250°C and under reduced pressure (3 mmHg to 6 mmHg) over 1 hour to give compound 2. To compound 2, 230 parts by mass of methyl ethyl ketone and 120 parts of isopropyl alcohol were added. Compound 2 was

dissolved through stirring with warming at 70°C, giving resin solution 3. To resin solution 3, 25 parts by mass of m-xylylene diisocyanate was added, followed by stirring for 3 hours. Then the methyl ethyl ketone and isopropyl alcohol were removed by increasing the temperature of the reaction vessel to 100°C, giving easy adhesion resin 4. Easy adhesion resin 4 was dissolved in a mixed solvent in which methyl ethyl ketone and toluene had been mixed in a ratio by mass of 8:2, yielding easily adhesive layer coating solution A, a solution having a solids concentration of 5% by mass. The ratio by mass between resins in easily adhesive layer coating solution A (the polyester component:the polyurethane component) is 8:2.

Easily adhesive layer coating solution A was applied to the polyester film described above and dried at 90°C for 60 seconds to form an easily adhesive layer with a thickness of 100 nm, giving an easily adhesive film. Then a hard-coat layer coating solution having the formula below was applied to the easily adhesive layer using a bar coater and dried at 80°C for 60 seconds to form a coating. The coating was cured by irradiating it with ultraviolet radiation at 200 mJ/cm2 using a UV irradiation device (manufactured by Fusion UV Systems Japan, K.K.; light source, an H bulb) to form a hard-coat layer with a dry thickness of 8 μm, yielding an optical multilayer body.

<Hard-Coat Layer Coating Solution>

| | |
|---|---|
| - Polyfunctional acrylate monomer | 12 parts by mass |
| (Nippon Kayaku Co., Ltd.; trade name, PET-30) | |
| - Polyfunctional acrylate oligomer | 28 parts by mass |
| (Mitsubishi Chemical Corporation; trade name, SHIKOH UV-1700B) | |
| - Polymerization initiator | 1.0 part by mass |
| (IGM Resins B.V.; trade name, Omnirad 184) | |
| - Toluene | 48 parts by mass |
| - Methyl ethyl ketone | 12 parts by mass |

[EXAMPLE 1-2]

Fossil fuel-derived terephthalic acid, biomass material-derived terephthalic acid, and biomass material-derived ethylene glycol were allowed to react in a reaction chamber heated to 200°C to give polyethylene terephthalate (PET). The resulting PET was introduced into a single-shaft extruder and melted at 290°C, extruded through a T die, and cast onto a casting drum with surface temperature control to give a cast film. A polyester film was obtained in the same manner as in Example 1-1, except that the resulting cast film was drawn 1.5 times in the flow direction (MD) and drawn 4.2 times in the width direction (TD). The subsequent steps were performed in the same manner as in Example 1-1, yielding an easily adhesive film and an optical multilayer body.

[EXAMPLE 1-3]

Biomass material-derived furandicarboxylic acid and biomass material-derived ethylene glycol were allowed to react in a reaction chamber heated to 200°C to give polyethylene furanoate (PEF). The resulting PEF was introduced into a single-shaft extruder and melted at 290°C, extruded through a T die, and cast onto a casting drum with surface temperature control to give a cast film. A polyester film was obtained in the same manner as in Example 1-1, except that the resulting cast film was drawn 1.4 times in the flow direction (MD) and drawn 4.1 times in the width direction (TD). The subsequent steps were performed in the same manner as in Example 1-1, yielding an easily adhesive film and an optical multilayer body.

[EXAMPLE 1-4]

Fossil fuel-derived naphthalenedicarboxylic acid and biomass material-derived ethylene glycol were allowed to react in a reaction chamber heated to 200°C to give polyethylene naphthalate (PEN). The resulting PEN was introduced into a single-shaft extruder and melted at 300°C, extruded through a T die, and cast onto a casting drum with surface temperature control to give a cast film. After the resulting cast film was heated at 130°C, the film was drawn 1.5 times in the flow direction (MD) while being heated using radiation heaters from both the front and back sides of the film, and then temporarily cooled. Subsequently, the film was guided to a tenter, preheated using a group of rollers set to 119°C, and then

drawn 4.5 times in the width direction (TD) of the film with heat treatment using hot air at 105°C at the first stage and hot air at 140°C at the second stage. During this, the film was drawn in two stages such that when the section for drawing in the width direction was divided into two, the amount of stretch of the film at the midpoint of the section for drawing in the width direction (the film width at the measurement point - the film width before drawing) was 80% of the amount of stretch at the end of the section for drawing in the width direction. The film drawn in the width direction was directly subjected to stepwise heat treatment using hot air ranging from 180°C to a heat treatment temperature of 245°C within the tenter. Following this, the film underwent a 1% relaxation treatment in the width direction under the same temperature conditions and a 1% relaxation treatment in the width direction after rapid cooling to 100°C, and then was wound. In such a manner, a polyester film was obtained. The subsequent steps were performed in the same manner as in Example 1-1, yielding an easily adhesive film and an optical multilayer body.

[EXAMPLE 1-5]

PET obtained using the same method as in Example 1-2 was introduced into a single-shaft extruder and melted at 290°C, extruded through a T die, and cast onto a casting drum with surface temperature control to give a cast film. After the resulting cast film was heated at 100°C, the film was drawn 2.0 times in the flow direction (MD) while being heated using radiation heaters from both the front and back sides of the film, and then temporarily cooled. Subsequently, the film was guided to a tenter, preheated using a group of rollers set to 119°C, and then drawn 4.4 times in the width direction (TD) of the film with heat treatment using hot air at 105°C at the first stage and hot air at 110°C at the second stage. During this, the film was drawn in two stages such that when the section for drawing in the width direction was divided into two, the amount of stretch of the film at the midpoint of the section for drawing in the width direction (the film width at the measurement point - the film width before drawing) was 80% of the amount of stretch at the end of the section for drawing in the width direction. The film drawn in the width direction was directly subjected to stepwise heat treatment using hot air ranging from 180°C to a heat treatment temperature of 215°C within the tenter. Following this, the film underwent a 1% relaxation treatment in the width direction under the same temperature conditions and a 1% relaxation treatment in the width direction after rapid cooling to 100°C, and then was wound. In such a manner, a polyester film was obtained. The subsequent steps were performed in the same manner as in Example 1-1, yielding an easily adhesive film and an optical multilayer body.

[COMPARATIVE EXAMPLE 1-1]

A polyester film was obtained in the same manner as in Example 1-1, except that polyethylene terephthalate containing no biomass-derived material was used. The subsequent steps were performed in the same manner as in Example 1-1, yielding an easily adhesive film and an optical multilayer body.

[COMPARATIVE EXAMPLE 1-2]

PET obtained using the same method as in Example 1-2 was introduced into a single-shaft extruder and melted at 290°C, extruded through a T die, and cast onto a casting drum with surface temperature control to give a cast film. A polyester film was obtained in the same manner as in Example 1-1, except that the resulting cast film was drawn 4.9 times in the flow direction (MD) and drawn 5.1 times in the width direction (TD). The subsequent steps were performed in the same manner as in Example 1-1, yielding an easily adhesive film and an optical multilayer body.

[COMPARATIVE EXAMPLE 1-3]

PET obtained using the same method as in Example 1-2 was introduced into a single-shaft extruder and melted at 290°C, extruded through a T die, and cast onto a casting drum with surface temperature control to give a cast film. A polyester film was obtained in the same manner as in Example 1-1, except that the resulting cast film was drawn 1.6 times in the flow direction (MD) and drawn 2.4 times in the width direction (TD). The subsequent steps were performed in the same manner as in Example 1-1, yielding an easily adhesive film and an optical multilayer body.

[EXAMPLE 1-6]

A polyester film was obtained in the same manner as in Example 1-1.

By mixing 106 parts by mass of dimethyl terephthalate, 25 parts by mass of bio-ethylene glycol, 25 parts by mass of 1,4-butanediol, 0.1 parts by mass of zinc acetate, and 0.1 parts by mass of antimony trioxide and allowing them to undergo transesterification reaction at 200°C over 2 hours, compound 5 was obtained. Then 4.0 parts by mass of fumaric acid was added to compound 5, and esterification reaction was performed at 230°C over 2 hours. Subsequently, polycondensation reaction was performed at 250°C and under reduced pressure (3 mmHg to 6 mmHg) over 1 hour to

give compound 6. To compound 6, 230 parts by mass of methyl ethyl ketone and 120 parts of isopropyl alcohol were added. Compound 6 was dissolved through stirring with warming at 70°C, giving resin solution 7. To resin solution 7, 25 parts by mass of m-xylylene diisocyanate was added, followed by stirring for 3 hours. Then the methyl ethyl ketone and isopropyl alcohol were removed by increasing the temperature of the reaction vessel to 100°C, giving easy adhesion resin 8. Easy adhesion resin 8 was dissolved in a mixed solvent in which methyl ethyl ketone and toluene had been mixed in a ratio by mass of 8:2, yielding easily adhesive layer coating solution D, a solution having a solids concentration of 5% by mass. The ratio by mass between resins in easily adhesive layer coating solution D (the polyester component:the polyurethane component) is 8:2.

To the polyester film mentioned above, easily adhesive layer coating solution D, rather than easily adhesive layer coating solution A, was applied to form an easily adhesive layer, giving an easily adhesive film. Except for this, an easily adhesive film and an optical multilayer body were obtained in the same manner as in Example 1-1.

[Table 1]

| | Material | Biomass content | Re | Δn | Thickness | Total transmittance | Martens hardness | Percentage of elastic deformation work | Percentage thermal shrinkage ratio MD/TD | Tensile strength ratio TD/MD | Percentage elongation ratio TD/MD | Erosion rate | tan δ peak-top temperature | Degree of crystallinity |
|---|---|---|---|---|---|---|---|---|---|---|---|---|---|---|
| | | % | nm | | μm | % | N/mm2 | % | | | | μm/g | °C | % |
| Example 1-1 | PET | 20 | 8000 | 0.100 | 80 | 86 | 145 (15) | 63.5 (5.7) | 10.0 | 3.9 | 11.6 | 1.03 | 110 | 81 |
| Example 1-2 | PET | 28 | 6400 | 0.080 | 80 | 88 | 131 (14) | 65.1 (2.7) | 6.5 | 2.5 | 7.0 | 0.99 | 100 | 78 |
| Example 1-3 | PEF | 95 | 6400 | 0.080 | 80 | 90 | 166 (14) | 63.5 (6.8) | 6.2 | 2.5 | 7.0 | 1.57 | 125 | 84 |
| Example 1-4 | PEN | 13 | 12000 | 0.150 | 80 | 90 | 137 (19) | 66.9 (7.8) | 6.5 | 3.5 | 7.2 | 1.03 | 141 | 83 |
| Example 1-5 | PET | 28 | 3520 | 0.044 | 80 | 88 | 115 (42) | 62.0 (8.8) | 7.2 | 2.5 | 7.0 | 1.43 | 95 | 78 |
| Comparative Example 1-1 | PET | 0 | 8000 | 0.100 | 80 | 88 | 135 (15) | 65.6 (5.8) | 9.2 | 3.5 | 7.0 | 1.12 | 95 | 78 |
| Comparative Example 1-2 | PET | 28 | 2000 | 0.025 | 80 | 89 | 135 (12) | 64.8 (6.8) | 1.2 | 1.2 | 0.7 | 1.01 | 100 | 90.4 |
| Comparative Example 1-3 | PET | 28 | 2400 | 0.030 | 80 | 89.5 | 95 (12) | 72.0 (5.9) | 1.4 | 1.5 | 1.1 | 0.55 | 77 | 79 |
| Comparative Example 1-6 | PET | 20 | 8000 | 0.100 | 80 | 86 | 145 (15) | 63.5 (5.7) | 10.5 | 4.0 | 11.7 | 1.02 | 110 | 81 |

[Table 2]

| | Visibility Rainbow effect evaluation | Pencil hardness | Foldability | Environmental contribution | Adhesion |
|---|---|---|---|---|---|
| | | | | | |
| Example 1-1 | A | A | A | A | A |
| Example 1-2 | A | A | A | A | A |
| Example 1-3 | A | A | A | A | A |
| Example 1-4 | A | A | A | A | A |
| Example 1-5 | B | A | B | A | A |
| Comparative Example 1-1 | A | A | A | D | A |
| Comparative Example 1-2 | D | A | A | A | C |
| Comparative Example 1-3 | D | D | A | A | A |
| Comparative Example 1-6 | A | A | A | A | A |

In the repeated folding test of the optical film obtained in Example 1-6, no cracking or breakage occurred in the bent portion even after 250,000 repeated folding trials in which the film was folded to 180 degrees with the distance $\phi$ between the two sides being 2 mm.

(Examples and Comparative Examples of the Second Embodiment of the Present Disclosure)

The optical film and other optical components according to the second embodiment of the present disclosure will now be specifically described by providing examples and comparative examples. The optical film and other optical components according to the second embodiment of the present disclosure are not limited to the forms described in the Examples.

As examples and comparative examples of the second embodiment of the present disclosure, the optical films and optical multilayer bodies of Example 2-1 to Example 2-6 and Comparative Example 2-1 to Comparative Example 2-3 were obtained. For the optical films (polyester films and easily adhesive films) and optical multilayer bodies obtained in the Examples and Comparative Examples, the following measurements and evaluations were performed. The results are presented in Table 3. Unless otherwise specified, the atmosphere during each measurement or evaluation was a temperature of 23°C $\pm$ 5°C and a relative humidity of 40% or more and 65% or less. Unless otherwise stated, before the start of each measurement or evaluation, the sample of interest was exposed to this atmosphere for 30 minutes or more and 60 minutes or less.

When the subject of measurement is referred to as the optical film in the following description of measurements and evaluations, it means that the easily adhesive film was selected as the subject of measurement as the optical film. It should be noted that when the easily adhesive layer in the easily adhesive film is a thin film, physical characteristics, such as optical properties, measured for the easily adhesive film can be considered physical characteristics of the polyester film. This is because since the easily adhesive layer is a thin film, the influence of the easily adhesive layer is small in the measurement of physical characteristics.

[Biomass Content and Environmental Contribution]

The biomass content was measured using the same method as the method for measuring the biomass content in the examples and comparative examples of the first embodiment of the present disclosure. The environmental contribution was evaluated using the same method as the method for evaluating the environmental contribution in the examples and comparative examples of the first embodiment of the present disclosure.

[Thickness of the Optical Film]

The thickness of the optical film was measured using the same method as the method for measuring the thickness of the optical film in the examples and comparative examples of the first embodiment of the present disclosure.

[In-Plane Phase Difference (Re) and Difference in Refractive Index (Δn)]

Using trade name "RETS-100," manufactured by Otsuka Electronics Co., Ltd., the in-plane phase difference (Re) of the optical films obtained in the Examples and Comparative Examples was measured. In-plane phase differences at 18 locations were measured, and the average of 16 locations excluding the maximum and minimum was calculated. By dividing the average in-plane phase difference of the optical film by the thickness of the optical film, the Δn (nx - ny) of the optical film was calculated.
Preparation for the measurement was performed by following the procedure (A1) to (A4) below.
(A1) First, to stabilize the light source of RETS-100, the light source was left for at least 60 minutes after being turned on. After that, the rotating analyzer method was selected, and the θ mode (the mode for angular phase difference measurement) was selected. By selecting this θ mode, the stage is set to the tilt/rotation stage.
(A2) Then the following measurement conditions were entered into RETS-100.

(Measurement Conditions)

- Retardation measuring range: Rotating analyzer method
- Measurement spot diameter: ϕ5 mm
- Tilt angle range: 0°
- Wavelength range: 400 nm to 800 nm, both inclusive
- The average refractive index of the polyester film. For example, for a polyethylene terephthalate film, N (average refractive index) = 1.617 is entered. For a polyethylene furanoate film, N (average refractive index) = 1.58 is entered.
- Thickness: Thickness separately measured using an SEM

(A3) Then background data was obtained without a sample set on this analyzer. The analyzer was configured as a closed system, and this process was conducted each time the light source was activated.
(A4) Thereafter, measurement was performed with the sample placed on the stage within the analyzer.

[Total Transmittance (Tt)]

Total transmittance (%) was measured using the same method as the method for measuring total transmittance (%) in the examples and comparative examples of the first embodiment of the present disclosure.

[Martens Hardness and the Percentage of Elastic Deformation Work]

Martens hardness and the percentage of elastic deformation work were measured using the same methods as the methods for measuring Martens hardness and the percentage of elastic deformation work in the examples and comparative examples of the first embodiment of the present disclosure.

[Erosion Rate]

The erosion rate was measured using the same method as the method for measuring the erosion rate in the examples and comparative examples of the first embodiment of the present disclosure.

[Degree of Crystallinity]

The degree of crystallinity was measured using the same method as the method for measuring the degree of crystallinity in the examples and comparative examples of the first embodiment of the present disclosure.

[Rainbow Effect Evaluation (visibility)]

Liquid crystal display devices were prepared by placing the optical films obtained in the Examples and

Comparative Examples on the polarizing element on the observer side of an LED backlight liquid crystal monitor (FLATORON IPS226V (manufactured by LG Electronics Japan Inc.)). The optical film was positioned such that the angle between the slow axis of the optical film and the absorption axis of the polarizing element on the observer side of the liquid crystal monitor was 45°. Then, in a dark place and a light place (illuminance around the liquid crystal monitor, 400 lux), the observation of a displayed image was performed from the front and in a diagonal direction (approximately 50 degrees) unaidedly and with corrective eyeglasses, and the presence or absence of rainbow effects was evaluated according to the criteria given below. The visual acuity of the observers was from 0.7 to 1.0 in both eyes for all of them, and the observation was performed by a total of ten observers.

A: The number of observers who considered that no rainbow effects were observed was eight or more, irrespective of whether the observers were unaided or wearing corrective eyeglasses.

B: The number of observers who considered that no rainbow effects were observed was five or more and fewer than eight, irrespective of whether the observers were unaided or wearing corrective eyeglasses.

C: The number of observers who considered that no rainbow effects were observed was fewer than five, irrespective of whether the observers were unaided or wearing corrective eyeglasses.

[Pencil Hardness]

Pencil hardness was measured using the same method as the method for measuring pencil hardness in the examples and comparative examples of the first embodiment of the present disclosure.

[Foldability]

Foldability was evaluated using the same method as the method for evaluating foldability in the examples and comparative examples of the first embodiment of the present disclosure.

[EXAMPLE 2-1]

Fossil fuel-derived terephthalic acid and biomass material-derived ethylene glycol were allowed to react in a reaction chamber heated to 200°C to give polyethylene terephthalate (PET). The resulting PET was introduced into a single-shaft extruder and melted at 290°C, extruded through a T die, and cast onto a casting drum with surface temperature control to give a cast film. After the resulting cast film was heated at 120°C, the film was drawn 4.7 times in the flow direction (MD) while being heated using radiation heaters from both the front and back sides of the film, and then temporarily cooled. Subsequently, the film was guided to a tenter, preheated using a group of rollers set to 119°C, and then drawn 5.0 times in the width direction (TD) of the film with heat treatment using hot air at 105°C at the first stage and hot air at 140°C at the second stage. During this, the film was drawn in two stages such that when the section for drawing in the width direction was divided into two, the amount of stretch of the film at the midpoint of the section for drawing in the width direction (the film width at the measurement point - the film width before drawing) was 80% of the amount of stretch at the end of the section for drawing in the width direction. The film drawn in the width direction was directly subjected to stepwise heat treatment using hot air ranging from 180°C to a heat treatment temperature of 245°C within the tenter. Following this, the film underwent a 1% relaxation treatment in the width direction under the same temperature conditions and a 1% relaxation treatment in the width direction after rapid cooling to 100°C, and then was wound. In such a manner, a polyester film was obtained.

By mixing 106 parts by mass of dimethyl terephthalate, 25 parts by mass of ethylene glycol, 25 parts by mass of 1,4-butanediol, 0.1 parts by mass of zinc acetate, and 0.1 parts by mass of antimony trioxide and allowing them to undergo transesterification reaction at 200°C over 2 hours, compound 1 was obtained. Then 4.0 parts by mass of fumaric acid was added to compound 1, and esterification reaction was performed at 230°C over 2 hours. Subsequently, polycondensation reaction was performed at 250°C and under reduced pressure (3 mmHg to 6 mmHg) over 1 hour to give compound 2. To compound 2, 230 parts by mass of methyl ethyl ketone and 120 parts of isopropyl alcohol were added. Compound 2 was dissolved through stirring with warming at 70°C, giving resin solution 3. To resin solution 3, 25 parts by mass of m-xylylene diisocyanate was added, followed by stirring for 3 hours. Then the methyl ethyl ketone and isopropyl alcohol were removed by increasing the temperature of the reaction vessel to 100°C, giving easy adhesion resin 4. Easy adhesion resin 4 was dissolved in a mixed solvent in which methyl ethyl ketone and toluene had been mixed in a ratio by mass of 8:2, yielding easily adhesive layer coating solution A, a solution having a solids concentration of 5% by mass. The ratio by mass between resins in easily adhesive layer coating solution A (polyester component:polyurethane component) is 8:2.

Easily adhesive layer coating solution A was applied to the polyester film described above and dried at 90°C for 60 seconds to form an easily adhesive layer with a thickness of 100 nm, giving an easily adhesive film. Then a hard-coat layer coating solution having the formula below was applied to the easily adhesive layer using a bar coater and dried at 80°C for 60 seconds to form a coating. The coating was cured by irradiating it with ultraviolet radiation at 200 mJ/cm2 using a UV irradiation device (manufactured by Fusion UV Systems Japan, K.K.; light source, an H bulb) to form a hard-coat layer with a dry thickness of 8 μm, yielding an optical multilayer body.

<Hard-Coat Layer Coating Solution>

| | |
|---|---|
| - Polyfunctional acrylate monomer (Nippon Kayaku Co., Ltd.; trade name, PET-30) | 12 parts by mass |
| - Polyfunctional acrylate oligomer (Mitsubishi Chemical Corporation; trade name, SHIKOH UV-1700B) | 28 parts by mass |
| - Polymerization initiator (IGM Resins B.V.; trade name, Omnirad 184) | 1.0 part by mass |
| - Toluene | 48 parts by mass |
| - Methyl ethyl ketone | 12 parts by mass |

[EXAMPLE 2-2]

Fossil fuel-derived terephthalic acid, biomass material-derived terephthalic acid, and biomass material-derived ethylene glycol were allowed to react in a reaction chamber heated to 200°C to give polyethylene terephthalate (PET). The resulting PET was introduced into a single-shaft extruder and melted at 290°C, extruded through a T die, and cast onto a casting drum with surface temperature control to give a cast film. A polyester film was obtained in the same manner as in Example 2-1, except that the resulting cast film was drawn 4.9 times in the flow direction (MD) and drawn 5.2 times in the width direction (TD). The subsequent steps were performed in the same manner as in Example 2-1, yielding an easily adhesive film and an optical multilayer body.

[EXAMPLE 2-3]

PET obtained using the same method as in Example 2-2 was introduced into a single-shaft extruder and melted at 290°C, extruded through a T die, and cast onto a casting drum with surface temperature control to give a cast film. A polyester film was obtained in the same manner as in Example 2-1, except that the resulting cast film was drawn 4.5 times in the flow direction (MD) and drawn 4.6 times in the width direction (TD). The subsequent steps were performed in the same manner as in Example 2-1, yielding an easily adhesive film and an optical multilayer body.

[EXAMPLE 2-4]

PET obtained using the same method as in Example 2-2 was introduced into a single-shaft extruder and melted at 290°C, extruded through a T die, and cast onto a casting drum with surface temperature control to give a cast film. A polyester film was obtained in the same manner as in Example 2-1, except that the resulting cast film was drawn 4.7 times in the flow direction (MD) and drawn 4.6 times in the width direction (TD). The subsequent steps were performed in the same manner as in Example 2-1, yielding an easily adhesive film and an optical multilayer body.

[EXAMPLE 2-5]

Biomass material-derived furandicarboxylic acid and biomass material-derived ethylene glycol were allowed to react in a reaction chamber heated to 200°C to give polyethylene furanoate (PEF). The resulting PEF was introduced into a single-shaft extruder and melted at 290°C, extruded through a T die, and cast onto a casting drum with surface temperature control to give a cast film. A polyester film was obtained in the same manner as in Example 2-1, except that the resulting cast film was drawn 4.9 times in the flow direction (MD) and drawn 4.6 times in the width direction (TD). The subsequent steps were performed in the same manner as in Example 2-1, yielding an easily adhesive film and an optical multilayer body.

[EXAMPLE 2-6]

PET obtained using the same method as in Example 2-2 was introduced into a single-shaft extruder and melted at 290°C, extruded through a T die, and cast onto a casting drum with surface temperature control to give a cast film. A polyester film was obtained in the same manner as in Example 2-1, except that the resulting cast film was drawn 4.9 times in the flow direction (MD) and drawn 5.1 times in the width direction (TD). The subsequent steps were performed in the same manner as in Example 2-1, yielding an easily adhesive film and an optical multilayer body.

[COMPARATIVE EXAMPLE 2-1]

Polyethylene terephthalate containing no biomass-derived material was introduced into a single-shaft extruder and melted at 290°C, extruded through a T die, and cast onto a casting drum with surface temperature control to give a cast film. A polyester film was obtained in the same manner as in Example 2-1, except that the resulting cast film was drawn 4.8 times in the flow direction (MD) and drawn 5.1 times in the width direction (TD). The subsequent steps were performed in the same manner as in Example 2-1, yielding an easily adhesive film and an optical multilayer body.

[COMPARATIVE EXAMPLE 2-2]

PET obtained using the same method as in Example 2-2 was introduced into a single-shaft extruder and melted at 290°C, extruded through a T die, and cast onto a casting drum with surface temperature control to give a cast film. A polyester film was obtained in the same manner as in Example 2-1, except that the resulting cast film was drawn 3.0 times in the flow direction (MD) and drawn 3.8 times in the width direction (TD). The subsequent steps were performed in the same manner as in Example 2-1, yielding an easily adhesive film and an optical multilayer body.

[COMPARATIVE EXAMPLE 2-3]

PET obtained using the same method as in Example 2-2 was introduced into a single-shaft extruder and melted at 290°C, extruded through a T die, and cast onto a casting drum with surface temperature control to give a cast film. A polyester film was obtained in the same manner as in Example 2-1, except that the resulting cast film was drawn 1.6 times in the flow direction (MD) and drawn 2.4 times in the width direction (TD). The subsequent steps were performed in the same manner as in Example 2-1, yielding an easily adhesive film and an optical multilayer body.

[EXAMPLE 2-7]

A polyester film was obtained in the same manner as in Example 2-1.

By mixing 106 parts by mass of dimethyl terephthalate, 25 parts by mass of bio-ethylene glycol, 25 parts by mass of 1,4-butanediol, 0.1 parts by mass of zinc acetate, and 0.1 parts by mass of antimony trioxide and allowing them to undergo transesterification reaction at 200°C over 2 hours, compound 5 was obtained. Then 4.0 parts by mass of fumaric acid was added to compound 5, and esterification reaction was performed at 230°C over 2 hours. Subsequently, polycondensation reaction was performed at 250°C and under reduced pressure (3 mmHg to 6 mmHg) over 1 hour to give compound 6. To compound 6, 230 parts by mass of methyl ethyl ketone and 120 parts of isopropyl alcohol were added. Compound 6 was dissolved through stirring with warming at 70°C, giving resin solution 7. To resin solution 7, 25 parts by mass of m-xylylene diisocyanate was added, followed by stirring for 3 hours. Then the methyl ethyl ketone and isopropyl alcohol were removed by increasing the temperature of the reaction vessel to 100°C, giving easy adhesion resin 8. Easy adhesion resin 8 was dissolved in a mixed solvent in which methyl ethyl ketone and toluene had been mixed in a ratio by mass of 8:2, yielding easily adhesive layer coating solution D, a solution having a solids concentration of 5% by mass. The ratio by mass between resins in easily adhesive layer coating solution D (the polyester component:the polyurethane component) is 8:2.

To the polyester film mentioned above, easily adhesive layer coating solution D, rather than easily adhesive layer coating solution A, was applied to form an easily adhesive layer, giving an easily adhesive film. Except for this, an easily adhesive film and an optical multilayer body were obtained in the same manner as in Example 2-1.

[Table 3]

| | Material | Biomass content | Re | Δn | Thickness | Total transmittance | Martens hardness | Percentage of elastic deformation work | Erosion rate | Degree of crystallinity | Visibility Rainbow effect evaluation | Pencil hardness | Foldability | Enviromental contribution |
|---|---|---|---|---|---|---|---|---|---|---|---|---|---|---|
| | | % | nm | | μm | % | N/mm2 | % | μm/g | % | | | | |
| Example 2-1 | PET | 20 | 1100 | 0.028 | 40 | 82 | 157.8 (9.1) | 63.4 (0.7) | 1.52 | 91.2 | A | A | A | A |
| Example 2-2 | PET | 28 | 1400 | 0.035 | 40 | 84 | 160.3 (7.3) | 63.5 (1.2) | 2.10 | 95.0 | A | A | A | A |
| Example 2-3 | PET | 28 | 750 | 0.019 | 40 | 81 | 155.1 (6.1) | 61.1 (2.8) | 2.30 | 90.0 | A | A | A | A |
| Example 2-4 | PET | 28 | 350 | 0.009 | 40 | 82 | 157.1 (5.9) | 62.1 (2.0) | 2.20 | 90.5 | A | A | A | A |
| Example 2-5 | PEF | 95 | 1100 | 0.028 | 40 | 83 | 166.2 (1.5) | 63.4 (6.8) | 2.20 | 92.0 | A | A | A | A |
| Example 2-6 | PET | 28 | 1450 | 0.036 | 40 | 88 | 115.0 (42) | 62.0 (8.8) | 1.43 | 92.0 | A | A | B | A |
| Comparative Example 2-1 | PET | 0 | 1350 | 0.034 | 40 | 82 | 131.0 (14) | 64.9 (5.2) | 1.56 | 90.0 | A | A | A | D |
| Comparative Example 2-2 | PET | 28 | 2500 | 0.063 | 40 | 78 | 127.0 (14) | 64.8 (6.8) | 1.66 | 88.0 | C | A | A | A |
| Comparative Example 2-3 | PET | 28 | 2480 | 0.062 | 40 | 88 | 95.0 (12) | 72.0 (5.9) | 0.55 | 77.0 | C | D | A | A |
| Comparative Example 2-7 | PET | 20 | 1100 | 0.028 | 40 | 82 | 157.2 (8.2) | 63.6 (1.0) | 1.53 | 91.1 | A | A | A | A |

In the repeated folding test of the optical film obtained in Example 2-7, no cracking or breakage occurred in the bent portion even after 250,000 repeated folding trials in which the film was folded to 180 degrees with the distance $\phi$ between the two sides being 2 mm.

(Examples and Comparative Examples of the Third Embodiment of the Present Disclosure)

The optical effect film and other optical components according to the third embodiment of the present disclosure will now be specifically described by providing examples and comparative examples. The optical effect film and other optical components according to the third embodiment of the present disclosure are not limited to the forms described in the Examples.

As examples and comparative examples of the third embodiment of the present disclosure, the optical effect films and optical multilayer bodies of Example 3-1 to Example 3-6 and Comparative Example 3-1 to Comparative Example 3-3 were obtained. For the polyester films, easily adhesive films, and optical multilayer bodies obtained in the Examples and Comparative Examples, the following measurements and evaluations were performed. The results are presented in Table 4. Unless otherwise specified, the atmosphere during each measurement or evaluation was a temperature of 23°C $\pm$ 5°C and a relative humidity of 40% or more and 65% or less. Unless otherwise stated, before the start of each measurement or evaluation, the sample of interest was exposed to this atmosphere for 30 minutes or more and 60 minutes or less.

When the subject of measurement is referred to as the optical effect film in the following description of measurements and evaluations, it means that the easily adhesive film was selected as the subject of measurement as the optical effect film. It should be noted that when the easily adhesive layer in the easily adhesive film is a thin film, physical characteristics, such as optical properties, excluding the YI measured for the easily adhesive film can be considered physical characteristics of the polyester film. This is because since the easily adhesive layer is a thin film, the influence of the easily adhesive layer is small in the measurement of physical characteristics.

[Biomass Content and Environmental Contribution]

The biomass content was obtained by correcting pMC (percent Modern Carbon) with $\delta$13C, where pMC is measured according to Method B of ASTM D6866-22.

Optical effect films with a biomass content of 10% or more were given an environmental contribution rating of A.

Optical effect films with a biomass content of less than 10% were given an environmental contribution rating of D.

[Thickness of the Optical Effect Film]

The thickness of the optical effect film was measured using the same method as the method for measuring the thickness of the optical film in the examples and comparative examples of the first embodiment of the present disclosure.

[In-Plane Phase Difference (Re) and Difference in Refractive Index ($\Delta$n)]

Using trade name "RETS-100," manufactured by Otsuka Electronics Co., Ltd., the in-plane phase difference (Re) of the optical effect films obtained in the Examples and Comparative Examples was measured. In-plane phase differences at 18 locations were measured, and the average of 16 locations excluding the maximum and minimum was calculated. By dividing the average in-plane phase difference of the optical effect film by the thickness of the optical effect film, the $\Delta$n (nx - ny) of the optical effect film was calculated.

Preparation for the measurement was performed by following the procedure (A1) to (A4) below.

(A1) First, to stabilize the light source of RETS-100, the light source was left for at least 60 minutes after being turned on. After that, the rotating analyzer method was selected, and the $\theta$ mode (the mode for angular phase difference measurement) was selected. By selecting this $\theta$ mode, the stage is set to the tilt/rotation stage.

(A2) Then the following measurement conditions were entered into RETS-100.

(Measurement Conditions)

- Retardation measuring range: Rotating analyzer method
- Measurement spot diameter: $\phi$5 mm
- Tilt angle range: 0°

- Wavelength range: 400 nm to 800 nm, both inclusive
- The average refractive index of the polyester film. For example, for a polyethylene terephthalate film, N (average refractive index) = 1.617 is entered. For a polyethylene furanoate film, N (average refractive index) = 1.58 is entered.
- Thickness: Thickness separately measured using an SEM

(A3) Then background data was obtained without a sample set on this analyzer. The analyzer was configured as a closed system, and this process was conducted each time the light source was activated.
(A4) Thereafter, measurement was performed with the sample placed on the stage within the analyzer.

[Total Transmittance (Tt) and Haze (Hz)]

Using a haze meter (HM-150, manufactured by Murakami Color Research Laboratory Co., Ltd.), the total transmittance (%) and the haze (%) of the optical effect film were measured according to JIS K7361-1: 1997.

[Measurement of the Yellowness Index (YI)]

The yellowness index (YI) of the sample of interest was measured using V-670 ultraviolet-visible spectrophotometer, manufactured by JASCO Corporation, according to JIS K7373: 2006. After a background measurement was performed without the sample of interest, the sample of interest was set in a sample holder, transmittance measurements for light with wavelengths from 300 nm to 800 nm, both inclusive, were performed, and the tristimulus values (X, Y, and Z) were determined.
The YI was calculated according to the equation below.

$$YI = 100 \times (1.2769X - 1.0592Z)/Y$$

[Martens Hardness and the Percentage of Elastic Deformation Work]

The Martens hardness and the percentage of elastic deformation work of the optical effect film were measured using the same methods as the methods for measuring the Martens hardness and the percentage of elastic deformation work of the optical film in the examples and comparative examples of the first embodiment of the present disclosure.

[tanδ]

The peak-top temperature for tanδ of the optical effect film was measured using the same method as the method for measuring the peak-top temperature for tanδ of the optical film in the examples and comparative examples of the first embodiment of the present disclosure.

[Degree of Crystallinity]

The degree of crystallinity was measured using the same method as the method for measuring the degree of crystallinity in the examples and comparative examples of the first embodiment of the present disclosure.

[Evaluation for the Visibility of the White Hue]

The screen of the display of a liquid crystal display device was activated with the background in white and characters in black, and the optical effect film prepared was placed on the display. Observers viewed the optical effect film from viewing distances of 1 m and 2 m under illumination intensities of 1000 lx to 2000 lx and evaluated the visibility of the hue of white and the characters on the display using the four grades below. The visual acuity of the observers was from 0.7 to 1.0 in both eyes for all of them, and the observation was performed by a total of 20 observers.

A: The number of observers who considered that they were not bothered by coloring and that the characters were clearly visible was 15 or more

B: The number of observers who considered that they were not bothered by coloring and that the characters were clearly visible was 10 to 14

C: The number of observers who considered that they were not bothered by coloring and that the characters were clearly visible was 5 to 9

D: The number of observers who considered that they were not bothered by coloring and that the characters were clearly visible was fewer than 5

[Pencil Hardness]

The pencil hardness of the optical effect films obtained in the Examples and Comparative Examples was measured and graded according to the procedure in (1) to (6) below.

(1) A sample was prepared by cutting the easily adhesive film to a size of 5 cm × 10 cm.

(2) The sample was warmed at 100°C for 10 minutes. After warming, the sample was allowed to stand in an environment at a temperature of 24°C and a relative humidity of 40% or more and 60% or less for 30 minutes or more and 60 minutes or less.

(3) For the sample, pencil hardness was measured according to JIS K5600-5-4: 1999, Scratch hardness (Pencil method). Specifically, a load was applied to the sample by placing a pencil having a predetermined hardness grade on the surface of the sample at an angle of 45° and moving it at a speed of 3.0 mm/sec with a load of 100 g.

(4) After the load was applied to the sample, the sample was warmed at 100°C for 10 minutes again.

(5) Immediately after the rewarming, scratches on the sample were visually assessed. The environment for the visual assessment was a temperature of 24°C and a relative humidity of 40% or more and 60% or less.

(6) The operations in (1) to (5) above were conducted five times. Of the pencils that left no scratch in four or more out of the five trials, the hardest one was considered the pencil hardness of the sample of interest. For example, a sample that had no scratch in four out of the five trials with a hardness grade of 3B and had no scratch in three out of the five trials with a hardness grade of 2B is graded as having a hardness grade of 3B.

The evaluation criteria are as follows.

A: Hardness equal to or higher than a pencil hardness grade of 2B

B: A pencil hardness grade of 3B

C: Hardness equal to or lower than a pencil hardness grade of 4B

[Foldability]

The foldability of the optical effect film was evaluated using the same method as the method for evaluating the foldability of the optical film in the examples and comparative examples of the first embodiment of the present disclosure.

[Adhesion]

A 100-cell grid-shaped incision pattern was created on the optical multilayer bodies obtained in the Examples and Comparative Examples by putting the blade of a utility knife into their surface on the hard-coat layer side (the number of cuts, 11 incisions each in the longitudinal and transverse directions; the distance between cuts, 1 mm). The blade of the utility knife used was NT Inc.'s product number "BA-52P." Then a detachment test according to the cross-cut test specified in JIS K5600-5-6: 1999 was performed by attaching adhesive tape (Nichiban Co., Ltd., product name "Cellulose Tape®") to the gridded surface of the optical multilayer bodies and then removing the adhesive tape. Each single optical multilayer body was subjected to three trials of the detachment test. According to the evaluation criteria below, the interlayer adhesion of the optical multilayer bodies obtained in the Examples and Comparative Examples was evaluated.

<Evaluation Criteria>

A: The number of detached cells is 0, with no partially chipped cell.
B: The number of detached cells is 0, but there is an area in which cells are partially chipped, for example as a result of part of a cell detaching along an incision. Alternatively, the number of detached cells is 1 or more.

[EXAMPLE 3-1]

Fossil fuel-derived terephthalic acid and biomass material-derived ethylene glycol were allowed to react in a reaction chamber heated to 200°C to give polyethylene terephthalate (PET). The resulting PET was introduced into a single-shaft extruder and melted at 290°C in the presence of a bluing agent, and extruded through a T die onto a casting drum with surface temperature control to give a cast film. The bluing agent (toning agent) used was MACROLEX Violet B (manufactured by Lanxess AG, an anthraquinone bluing agent). The bluing agent was used in an amount of 1.5 × 10-3 parts by mass per 100 parts by mass of PET.
After the resulting cast film was heated at 120°C, the film was drawn 4.9 times in the flow direction (MD) while being heated using radiation heaters from both the front and back sides of the film, and then temporarily cooled. Subsequently, the film was guided to a tenter, preheated using a group of rollers set to 119°C, and then drawn 5.1 times in the width direction (TD) of the film with heat treatment using hot air at 105°C at the first stage and hot air at 140°C at the second stage. During this, the film was drawn in two stages such that when the section for drawing in the width direction was divided into two, the amount of stretch of the film at the midpoint of the section for drawing in the width direction (the film width at the measurement point - the film width before drawing) was 80% of the amount of stretch at the end of the section for drawing in the width direction. The film drawn in the width direction was directly subjected to stepwise heat treatment using hot air ranging from 180°C to a heat treatment temperature of 245°C within the tenter. Following this, the film underwent a 1% relaxation treatment in the width direction under the same temperature conditions and a 1% relaxation treatment in the width direction after rapid cooling to 100°C, and then was wound. In such a manner, a polyester film with Δn = 0.015, a thickness of 80 μm, an Re of 1,200 nm, a biomass content of 20%, and a YI of 1.20 was obtained.
By mixing 106 parts by mass of dimethyl terephthalate, 25 parts by mass of ethylene glycol, 25 parts by mass of 1,4-butanediol, 0.1 parts by mass of zinc acetate, and 0.1 parts by mass of antimony trioxide and allowing them to undergo transesterification reaction at 200°C over 2 hours, compound 1 was obtained. Then 4.0 parts by mass of fumaric acid was added to compound 1, and esterification reaction was performed at 230°C over 2 hours. Subsequently, polycondensation reaction was performed at 250°C and under reduced pressure (3 mmHg to 6 mmHg) over 1 hour to give compound 2. To compound 2, 230 parts by mass of methyl ethyl ketone and 120 parts of isopropyl alcohol were added. Compound 2 was dissolved through stirring with warming at 70°C, giving resin solution 3. To resin solution 3, 25 parts by mass of m-xylylene diisocyanate was added, followed by stirring for 3 hours. Then the methyl ethyl ketone and isopropyl alcohol were removed by increasing the temperature of the reaction vessel to 100°C, giving easy adhesion resin 4. Easy adhesion resin 4 was dissolved in a mixed solvent in which methyl ethyl ketone and toluene had been mixed in a ratio by mass of 8:2, yielding easily adhesive layer coating solution A, a solution having a solids concentration of 5% by mass. The ratio by mass between resins in easily adhesive layer coating solution A (the polyester component:the polyurethane component) is 8:2.
Easily adhesive layer coating solution A was applied to the polyester film described above and dried at 90°C for 60 seconds to form an easily adhesive layer with a thickness of 200 nm, giving an easily adhesive film. Since the easily adhesive layer is a thin film, the easily adhesive film also has substantially the same Δn, Re, and biomass content as the polyester film.
Then a hard-coat layer coating solution having the formula below was applied to the easily adhesive layer using a bar coater and dried at 80°C for 60 seconds to form a coating. The coating was cured by irradiating it with ultraviolet radiation at 200 mJ/cm2 using a UV irradiation device (manufactured by Fusion UV Systems Japan, K.K.; light source, an H bulb) to form a hard-coat layer with a dry thickness of 8 μm, yielding an optical multilayer body.

<Hard-Coat Layer Coating Solution>

| | |
|---|---|
| - Polyfunctional acrylate monomer | 12 parts by mass |
| (Nippon Kayaku Co., Ltd.; trade name, PET-30) | |
| - Polyfunctional acrylate oligomer | 28 parts by mass |
| (Mitsubishi Chemical Corporation; trade name, SHIKOH UV-1700B) | |
| - Polymerization initiator | 1.0 part by mass |
| (IGM Resins B.V.; trade name, Omnirad 184) | |
| - Toluene | 48 parts by mass |

(continued)

| | |
|---|---|
| - Methyl ethyl ketone | 12 parts by mass |

[EXAMPLE 3-2]

Fossil fuel-derived terephthalic acid, biomass material-derived terephthalic acid, and biomass material-derived ethylene glycol were allowed to react in a reaction chamber heated to 200°C to give polyethylene terephthalate (PET). The resulting PET was introduced into a single-shaft extruder and melted at 290°C, and extruded through a T die onto a casting drum with surface temperature control to give a cast film. After the resulting cast film was heated at 120°C, the film was drawn 2.1 times in the flow direction (MD) while being heated using radiation heaters from both the front and back sides of the film, and then temporarily cooled. Subsequently, the film was guided to a tenter, preheated using a group of rollers set to 119°C, and then drawn 3.8 times in the width direction (TD) of the film with heat treatment using hot air at 105°C at the first stage and hot air at 140°C at the second stage. During this, the film was drawn in two stages such that when the section for drawing in the width direction was divided into two, the amount of stretch of the film at the midpoint of the section for drawing in the width direction (the film width at the measurement point - the film width before drawing) was 80% of the amount of stretch at the end of the section for drawing in the width direction. The film drawn in the width direction was directly subjected to stepwise heat treatment using hot air ranging from 180°C to a heat treatment temperature of 245°C within the tenter. Following this, the film underwent a 1% relaxation treatment in the width direction under the same temperature conditions and a 1% relaxation treatment in the width direction after rapid cooling to 100°C, and then was wound. In such a manner, a polyester film with a thickness of 80 μm was obtained.

To 100 parts by mass on a solids basis of easily adhesive layer coating solution A obtained in the same manner as in Example 3-1, 5.0 × 10-1 parts by mass of MACROLEX Violet B (manufactured by Lanxess AG) was blended as a bluing agent. The resulting mixture was applied to the obtained polyester film and dried at 90°C for 60 seconds to form a toning layer (an easily adhesive layer) with a thickness of 200 nm. In such a manner, an easily adhesive film with Δn = 0.080, a thickness of 80 μm, an Re of 6,400 nm, a biomass content of 28%, and a YI of 2.35 was obtained. Then a hard-coat layer was formed in the same manner as in Example 3-1, yielding an optical multilayer body.

[EXAMPLE 3-3]

An easily adhesive film with Δn = 0.080, a thickness of 80 μm, an Re of 6,400 nm, a biomass content of 28%, and a YI of 1.65 was obtained in the same manner as in Example 3-2, except that the amount of the bluing agent blended was 7.5 × 10-1 parts by mass. Then a hard-coat layer was formed in the same manner as in Example 3-1, yielding an optical multilayer body.

[EXAMPLE 3-4]

PET obtained using the same method as in Example 3-1 was introduced into a single-shaft extruder and melted at 290°C, and extruded through a T die onto a casting drum with surface temperature control to give a cast film. After the resulting cast film was heated at 120°C, the film was drawn 1.5 times in the flow direction (MD) while being heated using radiation heaters from both the front and back sides of the film, and then temporarily cooled. Subsequently, the film was guided to a tenter, preheated using a group of rollers set to 119°C, and then drawn 4.5 times in the width direction (TD) of the film with heat treatment using hot air at 105°C at the first stage and hot air at 140°C at the second stage. During this, the film was drawn in two stages such that when the section for drawing in the width direction was divided into two, the amount of stretch of the film at the midpoint of the section for drawing in the width direction (the film width at the measurement point - the film width before drawing) was 80% of the amount of stretch at the end of the section for drawing in the width direction. The film drawn in the width direction was directly subjected to stepwise heat treatment using hot air ranging from 180°C to a heat treatment temperature of 245°C within the tenter. Following this, the film underwent a 1% relaxation treatment in the width direction under the same temperature conditions and a 1% relaxation treatment in the width direction after rapid cooling to 100°C, and then was wound. In such a manner, a polyester film with a thickness of 60 μm was obtained. On the resulting polyester film, a toning layer similar to that in Example 3-3 was formed. In such a manner, an easily adhesive film with Δn = 0.100, a thickness of 60 μm, an Re of 6,000 nm, a biomass content of 20%, and a YI of 1.25 was obtained. Then a hard-coat layer was formed in the same manner as in Example 3-1, yielding an optical multilayer body.

[EXAMPLE 3-5]

Biomass material-derived furandicarboxylic acid and biomass material-derived ethylene glycol were allowed to react in a reaction chamber heated to 200°C to give polyethylene furanoate (PEF). The resulting PEF was introduced into a

single-shaft extruder and melted at 290°C in the presence of a bluing agent, and extruded through a T die onto a casting drum with surface temperature control to give a cast film. The bluing agent (toning agent) used was MACROLEX Violet B (manufactured by Lanxess AG). The bluing agent was used in an amount of 1.5 × 10-3 parts by mass per 100 parts by mass of PEF.

After the resulting cast film was heated at 120°C, the film was drawn 1.5 times in the flow direction (MD) while being heated using radiation heaters from both the front and back sides of the film, and then temporarily cooled. Subsequently, the film was guided to a tenter, preheated using a group of rollers set to 119°C, and then drawn 4.5 times in the width direction (TD) of the film with heat treatment using hot air at 105°C at the first stage and hot air at 140°C at the second stage. During this, the film was drawn in two stages such that when the section for drawing in the width direction was divided into two, the amount of stretch of the film at the midpoint of the section for drawing in the width direction (the film width at the measurement point - the film width before drawing) was 80% of the amount of stretch at the end of the section for drawing in the width direction. The film drawn in the width direction was directly subjected to stepwise heat treatment using hot air ranging from 180°C to a heat treatment temperature of 245°C within the tenter. Following this, the film underwent a 1% relaxation treatment in the width direction under the same temperature conditions and a 1% relaxation treatment in the width direction after rapid cooling to 100°C, and then was wound. In such a manner, a polyester film with a thickness of 80 μm was obtained. On the resulting polyester film, a toning layer was formed in the same manner as in Example 3-3. In such a manner, an easily adhesive film with Δn = 0.085, a thickness of 80 μm, an Re of 6,800 nm, a biomass content of 95%, and a YI of 0.88 was obtained. Then a hard-coat layer was formed in the same manner as in Example 3-1, yielding an optical multilayer body.

[EXAMPLE 3-6]

A cast film was obtained in the same manner as in Example 3-1, except that the amount of the bluing agent blended was 5.0 × 10-3 parts by mass. A polyester film with Δn = 0.100, a thickness of 80 μm, an Re of 8,000 nm, a biomass content of 20%, and a YI of 0.22 was obtained in the same manner as in Example 3-1, except that the resulting cast film was drawn 1.5 times in the flow direction (MD) and drawn 4.5 times in the width direction (TD). Then an easily adhesive layer and a hard-coat layer were formed in the same manner as in Example 3-1, yielding an easily adhesive film and an optical multilayer body.

[COMPARATIVE EXAMPLE 3-1]

A cast film was obtained in the same manner as in Example 3-6, except that the amount of the bluing agent blended was 6.0 × 10-3 parts by mass. A polyester film with a thickness of 80 μm was obtained in the same manner as in Example 3-1, except that the obtained cast film was drawn 1.5 times in the flow direction (MD) and drawn 4.5 times in the width direction (TD). On the resulting polyester film, a toning layer similar to that in Example 3-3 was formed. In such a manner, an easily adhesive film with Δn = 0.100, a thickness of 80 μm, an Re of 8,000 nm, a biomass content of 20%, and a YI of -1.10 was obtained. Then a hard-coat layer was formed in the same manner as in Example 3-1, yielding an optical multilayer body.

[COMPARATIVE EXAMPLE 3-2]

A polyester film with Δn = 0.100, a thickness of 80 μm, an Re of 8,000 nm, a biomass content of 0%, and a YI of 1.55 was obtained in the same manner as in Example 3-1, except that polyethylene terephthalate containing no biomass-derived material was used, no bluing agent was used, and the obtained cast film was drawn 1.5 times in the flow direction (MD) and drawn 4.5 times in the width direction (TD). Then an easily adhesive layer and a hard-coat layer were formed in the same manner as in Example 3-1, yielding an easily adhesive film and an optical multilayer body.

[COMPARATIVE EXAMPLE 3-3]

A polyester film was obtained in the same manner as in Example 3-2, except that no toning layer containing a bluing agent was provided. The subsequent steps were performed in the same manner as in Example 3-1, yielding an easily adhesive film and an optical multilayer body.

[EXAMPLE 3-7]

A polyester film was obtained in the same manner as in Example 3-1.

By mixing 106 parts by mass of dimethyl terephthalate, 25 parts by mass of bio-ethylene glycol, 25 parts by mass of 1,4-butanediol, 0.1 parts by mass of zinc acetate, and 0.1 parts by mass of antimony trioxide and allowing them to

undergo transesterification reaction at 200°C over 2 hours, compound 5 was obtained. Then 4.0 parts by mass of fumaric acid was added to compound 5, and esterification reaction was performed at 230°C over 2 hours. Subsequently, polycondensation reaction was performed at 250°C and under reduced pressure (3 mmHg to 6 mmHg) over 1 hour to give compound 6. To compound 6, 230 parts by mass of methyl ethyl ketone and 120 parts of isopropyl alcohol were added. Compound 6 was dissolved through stirring with warming at 70°C, giving resin solution 7. To resin solution 7, 25 parts by mass of m-xylylene diisocyanate was added, followed by stirring for 3 hours. Then the methyl ethyl ketone and isopropyl alcohol were removed by increasing the temperature of the reaction vessel to 100°C, giving easy adhesion resin 8. Easy adhesion resin 8 was dissolved in a mixed solvent in which methyl ethyl ketone and toluene had been mixed in a ratio by mass of 8:2, yielding easily adhesive layer coating solution D, a solution having a solids concentration of 5% by mass. The ratio by mass between resins in easily adhesive layer coating solution D (the polyester component:the polyurethane component) is 8:2.

To the polyester film mentioned above, easily adhesive layer coating solution D, rather than easily adhesive layer coating solution A, was applied to form an easily adhesive layer, giving an easily adhesive film. Except for this, an easily adhesive film and an optical multilayer body were obtained in the same manner as in Example 3-1.

[Table 4]

| | Material | Biomass content | Re | Δn | Polyester film thickness | Toning layer thickness | Total transmittance | Haze | Toning agent content of the polyester film | Toning agent content of the toning layer | Yellowness index YI | Martens hardness | Percentage of elastic deformation work | tan δ peak-top temperature | Degree of crystallinity | Visibility | Environmental contribution | Pencil hardness | Foldability | Adhesion |
|---|---|---|---|---|---|---|---|---|---|---|---|---|---|---|---|---|---|---|---|---|
| | | % | nm | | μm | nm | % | % | wtppm | wtppm | | N/mm2 | % | ℃ | % | | | | | |
| Example 3-1 | PET | 20 | 1200 | 0.015 | 80 | 0 | 88 | 0.8 | 15 | 0 | 1.20 | 157.8 (9.1) | 65.1 (2.7) | 100 | 92 | A | A | A | A | A |
| Example 3-2 | PET | 28 | 6400 | 0.080 | 80 | 200 | 88 | 0.7 | 0 | 5000 | 2.35 | 148 (15) | 63.1 (5.7) | 110 | 82 | B | A | A | A | A |
| Example 3-3 | PET | 28 | 6400 | 0.080 | 80 | 200 | 88 | 0.8 | 0 | 7500 | 1.65 | 145 (11) | 63.5 (3.3) | 110 | 81 | A | A | A | A | A |
| Example 3-4 | PET | 20 | 6000 | 0.100 | 60 | 200 | 89 | 0.6 | 0 | 7500 | 1.25 | 146 (17) | 64.5 (6.0) | 111 | 86 | A | A | A | A | A |
| Example 3-5 | PEF | 95 | 6800 | 0.085 | 80 | 200 | 90 | 0.5 | 15 | 7500 | 0.88 | 166 (9) | 63.5 (6.8) | 125 | 84 | A | A | A | A | A |
| Example 3-6 | PET | 20 | 8000 | 0.100 | 80 | 0 | 86 | 1.5 | 50 | 0 | 0.22 | 137 (19) | 66.9 (7.8) | 100 | 83 | B | A | A | A | A |
| Comparative Example 3-1 | PET | 20 | 8000 | 0.100 | 80 | 200 | 84 | 2.0 | 60 | 7500 | -1.10 | 125 (5) | 62.0 (8.8) | 115 | 83 | C | A | A | A | A |
| Comparative Example 3-2 | PET | 0 | 8000 | 0.100 | 80 | 0 | 89 | 0.8 | 0 | 0 | 1.55 | 135 (15) | 65.6 (5.8) | 110 | 85 | A | D | A | A | A |
| Comparative Example 3-3 | PET | 28 | 6400 | 0.080 | 80 | 0 | 88 | 0.7 | 0 | 0 | 3.40 | 125 (5) | 64.8 (6.8) | 100 | 84 | D | A | A | A | A |
| Comparative Example 3-7 | PET | 21 | 1200 | 0.015 | 80 | 0 | 88 | 0.7 | 15 | 0 | 1.21 | 155.9 (9.5) | 65.3 (3.0) | 100 | 92 | A | A | A | A | A |

In the repeated folding test of the optical film obtained in Example 3-7, no cracking or breakage occurred in the bent portion even after 250,000 repeated folding trials in which the film was folded to 180 degrees with the distance ϕ between the two sides being 2 mm.

(Examples and Comparative Examples of the Fourth Embodiment of the Present Disclosure)

The easily adhesive film and other optical components according to the fourth embodiment of the present disclosure will now be specifically described by providing examples and comparative examples. The easily adhesive film and other optical components according to the fourth embodiment of the present disclosure are not limited to the forms described in the Examples.

As examples and comparative examples of the fourth embodiment of the present disclosure, the polyester films, easily adhesive films, and optical multilayer bodies of Example 4-1 to Example 4-4 and Comparative Example 4-1 and Comparative Example 4-2 were obtained. For the polyester films, easily adhesive films, and optical multilayer bodies obtained in the Examples and Comparative Examples, the following measurements and evaluations were performed. The results are presented in Table 5. Unless otherwise specified, the atmosphere during each measurement or evaluation was a temperature of 23°C $\pm$ 5°C and a relative humidity of 40% or more and 65% or less. Unless otherwise stated, before the start of each measurement or evaluation, the sample of interest was exposed to this atmosphere for 30 minutes or more and 60 minutes or less.

[Biomass Content and Environmental Contribution]

The biomass content of the easily adhesive film was measured using the same method as the method for measuring the biomass content in the examples and comparative examples of the first embodiment of the present disclosure. The environmental contribution of the easily adhesive film was evaluated using the same method as the method for evaluating the environmental contribution in the examples and comparative examples of the first embodiment of the present disclosure.

[Thickness of the Easily Adhesive Film]

The thickness of the easily adhesive film was measured using the same method as the method for measuring the thickness of the optical film in the examples and comparative examples of the first embodiment of the present disclosure.

[$\delta q/\delta a$]

For the easily adhesive films of the Examples and Comparative Examples, a 10 μm × 10 μm region on the surface of the easily adhesive layer was measured using the phase mode of an atomic force microscope. The measuring instrument and the measurement conditions are as follows. Within the 10 μm × 10 μm region for measurement, seven 2 μm × 2 μm segments were selected. The seven segments were selected from segments in which the maximum height of amplitude was 90 nm or less, and the arithmetic mean height of amplitude was 10 nm or less, both as measured using the atomic force microscope. Based on $\delta q/\delta a$ in five segments excluding the maximum and minimum from $\delta q/\delta a$ in the seven segments, the average $\delta q/\delta a$ was calculated. It should be noted that with the measuring instrument specified below, when a 2 μm × 2 μm segment is selected on the screen, $\delta a$ and $\delta q$ in the selected segment are automatically presented. On the display screen of the measuring instrument specified below, however, the item corresponding to $\delta a$ is presented as "Ra," and the item corresponding to $\delta q$ is presented as "Rq."

< Measuring Instrument>
Trade name "SPM-9600," manufactured by Shimadzu Corporation
< Analysis Software>
SPM Manager
< AFM Analysis Conditions>
Slope correction: Line fitting
< Cantilever Used>

NanoWorld AG's product number "NCHR"
(resonant frequency, 320 kHz; spring constant, 42 N/m)

< Measurement Mode>
Phase (In the "phase mode" of the above measuring instrument, not only the phase but also the amplitude are measured.)

<Measurement Conditions>

- Amplitude and Phase-
    - Sensitivity: ×2
    - Phase offset: 95.00 deg
- XY Control-
    - Scanning size: 10.0000 μm
    - Scanning rate: 1.00 Hz
    - Number of pixels: 512 × 512
    - Offset X: 0.0000 μm
    - Offset Y: 0.0000 μm
    - Scanning angle: 0.0000 deg
- Z Control-
    - Operating point: 0.228 V
    - P gain: 0.001
    - I gain: 15000.000
    - Offset Z: 0.0630 μm

[Total Transmittance (Tt)]

The total transmittance (%) of the easily adhesive film was measured using the same method as the method for measuring the total transmittance (%) of the optical film in the examples and comparative examples of the first embodiment of the present disclosure.

[Martens Hardness and the Percentage of Elastic Deformation Work]

The Martens hardness and the percentage of elastic deformation work of the easily adhesive film were measured using the same methods as the methods for measuring the Martens hardness and the percentage of elastic deformation work of the optical film in the examples and comparative examples of the first embodiment of the present disclosure.

[Degree of Crystallinity]

The degree of crystallinity of the easily adhesive film was measured using the same method as the method for measuring the degree of crystallinity of the optical film in the examples and comparative examples of the first embodiment of the present disclosure.

[Difference in Refractive Index (Δn)]

Using trade name "RETS-100," manufactured by Otsuka Electronics Co., Ltd., the in-plane phase difference (Re) of the easily adhesive films obtained in the Examples and Comparative Examples was measured. In-plane phase differences at 18 locations were measured, and the average of 16 locations excluding the maximum and minimum was calculated. By dividing the average in-plane phase difference of the easily adhesive film by the thickness of the easily adhesive film, the Δn (nx - ny) of the easily adhesive film was calculated.

Preparation for the measurement was performed by following the procedure (A1) to (A4) below.

(A1) First, to stabilize the light source of RETS-100, the light source was left for at least 60 minutes after being turned on. After that, the rotating analyzer method was selected, and the θ mode (the mode for angular phase difference measurement) was selected. By selecting this θ mode, the stage is set to the tilt/rotation stage.

(A2) Then the following measurement conditions were entered into RETS-100.

(Measurement Conditions)

- Retardation measuring range: Rotating analyzer method
- Measurement spot diameter: ϕ5 mm
- Tilt angle range: 0°
- Wavelength range: 400 nm to 800 nm, both inclusive
- The average refractive index of the polyester film. For example, for a polyethylene terephthalate film, N (average refractive index) = 1.617 is entered. For a polyethylene furanoate film, N (average refractive index) = 1.58 is entered.
- Thickness: Thickness separately measured using an SEM

(A3) Then background data was obtained without a sample set on this analyzer. The analyzer was configured as a closed system, and this process was conducted each time the light source was activated.
(A4) Thereafter, measurement was performed with the sample placed on the stage within the analyzer.

[Pencil Hardness]

The pencil hardness of the easily adhesive films obtained in the Examples and Comparative Examples was measured and graded according to the procedure in (1) to (6) below.

(1) A sample was prepared by cutting the easily adhesive film to a size of 5 cm × 10 cm.

(2) The sample was warmed at 100°C for 10 minutes. After warming, the sample was allowed to stand in an environment at a temperature of 24°C and a relative humidity of 40% or more and 60% or less for 30 minutes or more and 60 minutes or less.

(3) For the sample, pencil hardness was measured according to JIS K5600-5-4: 1999, Scratch hardness (Pencil method). Specifically, a load was applied to the sample by placing a pencil having a predetermined hardness grade on the surface of the sample at an angle of 45° and moving it at a speed of 3.0 mm/sec with a load of 100 g.

(4) After the load was applied to the sample, the sample was warmed at 100°C for 10 minutes again.

(5) Immediately after the rewarming, scratches on the sample were visually assessed. The environment for the visual assessment was a temperature of 24°C and a relative humidity of 40% or more and 60% or less.

(6) The operations in (1) to (5) above were conducted five times. Of the pencils that left no scratch in four or more out of the five trials, the hardest one was considered the pencil hardness of the sample of interest. For example, a sample that had no scratch in four out of the five trials with a hardness grade of B and had no scratch in three out of the five trials with a hardness grade of F is graded as having a hardness grade of B.

[Foldability]

The foldability of the easily adhesive film was evaluated using the same method as the method for evaluating the foldability of the optical film in the examples and comparative examples of the first embodiment of the present disclosure.

[Adhesion]

The adhesion in the easily adhesive film was evaluated using the same method as the method for evaluating the adhesion in the optical film in the examples and comparative examples of the first embodiment of the present disclosure.

[EXAMPLE 4-1]

Fossil fuel-derived terephthalic acid and biomass material-derived ethylene glycol were allowed to react in a reaction chamber heated to 200°C to give polyethylene terephthalate (PET). The resulting PET was introduced into a single-shaft extruder and melted at 290°C, extruded through a T die, and cast onto a casting drum with surface temperature control to give a cast film. After the resulting cast film was heated at 120°C, the film was drawn 4.9 times in the flow direction (MD) while being heated using radiation heaters from both the front and back sides of the film, and then temporarily cooled. Subsequently, the film was guided to a tenter, preheated using a group of rollers set to 119°C, and then drawn 5.1 times in the width direction (TD) of the film with heat treatment using hot air at 105°C at the first stage and hot air at 140°C at the second stage. During this, the film was drawn in two stages such that when the section for drawing in the width direction was divided into two, the amount of stretch of the film at the midpoint of the section for drawing in the width direction (the film width at the measurement point - the film width before drawing) was 80% of the amount of stretch at the end of the section for drawing in the width direction. The film drawn in the width direction was directly subjected to stepwise heat treatment using hot air ranging from 180°C to a heat treatment temperature of 245°C within the tenter. Following this, the film underwent a 1% relaxation treatment in the width direction under the same temperature conditions and a 1% relaxation treatment in the width direction after rapid cooling to 100°C, and then was wound. Easily adhesive layer coating solution A, which had the formula specified below, was applied to the resulting polyester film and dried at 90°C for 60 seconds to form an easily adhesive layer with a thickness of 100 nm. In such a manner, an easily adhesive film with a thickness of 80 μm, an Re of 1,200 nm, a $\Delta n$ of 0.015, a $\delta q/\delta a$ of 2.00, and a biomass content of 20% was obtained.

[EXAMPLE 4-2]

Fossil fuel-derived terephthalic acid, biomass material-derived terephthalic acid, and biomass material-derived ethylene glycol were allowed to react in a reaction chamber heated to 200°C to give polyethylene terephthalate (PET). The resulting PET was introduced into a single-shaft extruder and melted at 290°C, extruded through a T die, and cast onto a casting drum with surface temperature control to give a cast film. A polyester film was obtained in the same manner as in Example 4-1, except that the resulting cast film was drawn 1.5 times in the flow direction (MD) and drawn 4.5 times in the width direction (TD). Easily adhesive layer coating solution B, which had the formula specified below, was applied to the obtained polyester film and dried at 90°C for 60 seconds to form an easily adhesive layer with a thickness of 100 nm. In such a manner, an easily adhesive film with a thickness of 80 μm, an Re of 8,000 nm, a $\Delta n$ of 0.100, a $\delta q/\delta a$ of 1.70, and a biomass content of 28% was obtained.

[EXAMPLE 4-3]

Biomass material-derived furandicarboxylic acid and biomass material-derived ethylene glycol were allowed to react in a reaction chamber heated to 200°C to give polyethylene furanoate (PEF). The resulting PEF was introduced into a single-shaft extruder and melted at 290°C, extruded through a T die, and cast onto a casting drum with surface temperature control to give a cast film. A polyester film was obtained in the same manner as in Example 4-1, except that the resulting cast film was drawn 3.8 times in the flow direction (MD) and drawn 2.0 times in the width direction (TD). Easily adhesive layer coating solution A, which had the formula specified below, was applied to the obtained polyester film and dried at 90°C for 60 seconds to form an easily adhesive layer with a thickness of 100 nm. In such a manner, an easily adhesive film with a thickness of 80 μm, an Re of 6,800 nm, a $\Delta n$ of 0.085, a $\delta q/\delta a$ of 1.80, and a biomass content of 95% was obtained.

[EXAMPLE 4-4]

PET obtained using the same method as in Example 4-2 was introduced into a single-shaft extruder and melted at 290°C, extruded through a T die, and cast onto a casting drum with surface temperature control to give a cast film. A polyester film was obtained in the same manner as in Example 4-1, except that the resulting cast film was drawn 4.6 times in the flow direction (MD) and drawn 5.1 times in the width direction (TD). Easily adhesive layer coating solution A, which had the formula specified below, was applied to the obtained polyester film and dried at 90°C for 60 seconds to form an easily adhesive layer with a thickness of 100 nm. In such a manner, an easily adhesive film with a thickness of 80 μm, an Re of 2,400 nm, a $\Delta n$ of 0.030, a $\delta q/\delta a$ of 2.95, and a biomass content of 28% was obtained.

[COMPARATIVE EXAMPLE 4-1]

Polyethylene terephthalate containing no biomass-derived material was introduced into a single-shaft extruder and melted at 290°C, extruded through a T die, and cast onto a casting drum with surface temperature control to give a cast

film. A polyester film was obtained in the same manner as in Example 4-1, except that the resulting cast film was drawn 1.5 times in the flow direction (MD) and drawn 4.5 times in the width direction (TD). Easily adhesive layer coating solution B, which had the formula specified below, was applied to the obtained polyester film and dried at 90°C for 60 seconds to form an easily adhesive layer with a thickness of 100 nm. In such a manner, an easily adhesive film with a thickness of 80 μm, an Re of 8,000 nm, a Δn of 0.100, a δq/δa of 1.27, and a biomass content of 0% was obtained.

[COMPARATIVE EXAMPLE 4-2]

PETobtained using the same method as in Example 4-2 was introduced into a single-shaft extruder and melted at 290°C, extruded through a T die, and cast onto a casting drum with surface temperature control to give a cast film. After the resulting cast film was heated at 100°C, the film was drawn 1.5 times in the flow direction (MD) while being heated using radiation heaters from both the front and back sides of the film, and then temporarily cooled. Subsequently, the film was guided to a tenter, preheated using a group of rollers set to 119°C, and then drawn 4.5 times in the width direction (TD) of the film with heat treatment using hot air at 105°C at the first stage and hot air at 110°C at the second stage. During this, the film was drawn in two stages such that when the section for drawing in the width direction was divided into two, the amount of stretch of the film at the midpoint of the section for drawing in the width direction (the film width at the measurement point - the film width before drawing) was 80% of the amount of stretch at the end of the section for drawing in the width direction. The film drawn in the width direction was directly subjected to stepwise heat treatment using hot air ranging from 180°C to a heat treatment temperature of 215°C within the tenter. Following this, the film underwent a 1% relaxation treatment in the width direction under the same temperature conditions and a 1% relaxation treatment in the width direction after rapid cooling to 100°C, and then was wound. Easily adhesive layer coating solution C, which had the formula specified below, was applied to the resulting polyester film and dried at 90°C for 60 seconds to form an easily adhesive layer with a thickness of 100 nm. In such a manner, an easily adhesive film with a thickness of 80 μm, an Re of 8,000 nm, a Δn of 0.100, a δq/δa of 3.30, and a biomass content of 28% was obtained.

[Easily Adhesive Layer Coating Solution A]

By mixing 106 parts by mass of dimethyl terephthalate, 25 parts by mass of ethylene glycol, 25 parts by mass of 1,4-butanediol, 0.1 parts by mass of zinc acetate, and 0.1 parts by mass of antimony trioxide and allowing them to undergo transesterification reaction at 200°C over 2 hours, compound 1 was obtained. Then 4.0 parts by mass of fumaric acid was added to compound 1, and esterification reaction was performed at 230°C over 2 hours. Subsequently, polycondensation reaction was performed at 250°C and under reduced pressure (3 mmHg to 6 mmHg) over 1 hour to give compound 2. To compound 2, 230 parts by mass of methyl ethyl ketone and 120 parts of isopropyl alcohol were added. Compound 2 was dissolved through stirring with warming at 70°C, giving resin solution 3. To resin solution 3, 25 parts by mass of m-xylylene diisocyanate was added, followed by stirring for 3 hours. Then the methyl ethyl ketone and isopropyl alcohol were removed by increasing the temperature of the reaction vessel to 100°C, giving easy adhesion resin 4. Easy adhesion resin 4 was dissolved in a mixed solvent in which methyl ethyl ketone and toluene had been mixed in a ratio by mass of 8:2, yielding easily adhesive layer coating solution A, a solution having a solids concentration of 5% by mass. The ratio by mass between resins in easily adhesive layer coating solution A (the polyester component:the polyurethane component) is 8:2.

[Easily Adhesive Layer Coating Solution B]

Easily adhesive layer coating solution B was obtained by dissolving 12 parts by mass of a urethane resin (Dainippon Ink and Chemicals, Inc.; trade name, HYDRAN AP-20), 15 parts by mass of a urethane resin (Dainippon Ink and Chemicals, Inc.; trade name, HYDRAN AP-30), and 3 parts by mass of a curing agent (Sumitomo Chemical Industry Co., Ltd.; trade name, SUMIMAL M30W) in 70 parts by mass of water.

[Easily Adhesive Layer Coating Solution C]

By mixing 106 parts by mass of dimethyl terephthalate, 25 parts by mass of ethylene glycol, 25 parts by mass of 1,4-butanediol, and 0.1 parts by mass of m-xylene diisocyanate and allowing them to undergo transesterification reaction at 200°C over 2 hours, compound 5 was obtained. Then 4.0 parts by mass of fumaric acid was added to compound 5, and esterification reaction was performed at 230°C over 2 hours. Subsequently, polycondensation reaction was performed at 250°C and under reduced pressure (3 mmHg to 6 mmHg) over 1 hour to give compound 6. To compound 6, 230 parts by mass of methyl ethyl ketone and 120 parts of isopropyl alcohol were added. Compound 6 was dissolved through stirring with warming at 70°C, giving resin solution 7. To resin solution 7, 25 parts by mass of m-xylylene diisocyanate was added, followed by stirring for 3 hours. Then the methyl ethyl ketone and isopropyl alcohol were removed by increasing the temperature of the reaction vessel to 100°C, giving easy adhesion resin 8. Easy adhesion resin 8 was dissolved in a mixed

solvent in which methyl ethyl ketone and toluene had been mixed in a ratio by mass of 2:8, yielding easily adhesive layer coating solution C, a solution having a solids concentration of 5% by mass. The ratio by mass between resins in easily adhesive layer coating solution C (the polyester component:the polyurethane component) is 2:8.

[Preparation of Optical Multilayer Bodies]

A hard-coat layer coating solution having the formula below was applied to the easily adhesive layer of the easily adhesive films obtained in the Examples and Comparative Examples using a bar coater and dried at 80°C for 60 seconds to form a coating. The coating was cured by irradiating it with ultraviolet radiation at 200 mJ/cm2 using a UV irradiation device (manufactured by Fusion UV Systems Japan, K.K.; light source, an H bulb) to form a hard-coat layer with a dry thickness of 8 μm, yielding optical multilayer bodies.

<Hard-Coat Layer Coating Solution>

| | |
|---|---|
| - Polyfunctional acrylate monomer<br>(Nippon Kayaku Co., Ltd.; trade name, PET-30) | 12 parts by mass |
| - Polyfunctional acrylate oligomer<br>(Mitsubishi Chemical Corporation; trade name, SHIKOH UV-1700B) | 28 parts by mass |
| - Polymerization initiator<br>(IGM Resins B.V.; trade name, Omnirad 184) | 1.0 part by mass |
| - Toluene | 48 parts by mass |
| - Methyl ethyl ketone | 12 parts by mass |

[EXAMPLE 4-5]

A polyester film was obtained in the same manner as in Example 4-1.

By mixing 106 parts by mass of dimethyl terephthalate, 25 parts by mass of bio-ethylene glycol, 25 parts by mass of 1,4-butanediol, 0.1 parts by mass of zinc acetate, and 0.1 parts by mass of antimony trioxide and allowing them to undergo transesterification reaction at 200°C over 2 hours, compound 5 was obtained. Then 4.0 parts by mass of fumaric acid was added to compound 5, and esterification reaction was performed at 230°C over 2 hours. Subsequently, polycondensation reaction was performed at 250°C and under reduced pressure (3 mmHg to 6 mmHg) over 1 hour to give compound 6. To compound 6, 230 parts by mass of methyl ethyl ketone and 120 parts of isopropyl alcohol were added. Compound 6 was dissolved through stirring with warming at 70°C, giving resin solution 7. To resin solution 7, 25 parts by mass of m-xylylene diisocyanate was added, followed by stirring for 3 hours. Then the methyl ethyl ketone and isopropyl alcohol were removed by increasing the temperature of the reaction vessel to 100°C, giving easy adhesion resin 8. Easy adhesion resin 8 was dissolved in a mixed solvent in which methyl ethyl ketone and toluene had been mixed in a ratio by mass of 8:2, yielding easily adhesive layer coating solution D, a solution having a solids concentration of 5% by mass. The ratio by mass between resins in easily adhesive layer coating solution D (the polyester component:the polyurethane component) is 8:2.

To the polyester film mentioned above, easily adhesive layer coating solution D, rather than easily adhesive layer coating solution A, was applied to form an easily adhesive layer, giving an easily adhesive film. Except for this, an easily adhesive film and an optical multilayer body were obtained in the same manner as in Example 4-1.

[Table 5]

| | Material | Biomass content | Thickness | δq/δa | Total transmittance | Martens hardness | Percentage of elastic deformation work | Degree of crystallinity | Pencil hardness | Adhesion | Foldability | Environmental contribution |
|---|---|---|---|---|---|---|---|---|---|---|---|---|
| | | % | μm | | % | N/mm2 | % | % | | | | |
| Example 4-1 | PET | 20 | 80 | 2.00 | 92 | 157.1 (5.9) | 62.1 (2.0) | 88 | F | B | A | A |
| Example 4-2 | PET | 28 | 80 | 1.70 | 91 | 130.9 (14) | 65.3 (2.5) | 83 | B | A | A | A |
| Example 4-3 | PEF | 95 | 80 | 1.80 | 92 | 159.9 (33) | 65.7 (5.86) | 79 | B | A | A | A |
| Example 4-4 | PET | 28 | 80 | 2.95 | 92 | 95.0 (12) | 72.0 (5.9) | 70 | 2 B | B | A | A |
| Comparative Example 4-1 | PET | 0 | 80 | 1.27 | 90 | 132.5 (14) | 64.7 (6.9) | 83 | B | A | A | D |
| Comparative Example 4-2 | PET | 28 | 80 | 3.30 | 90 | 114.0 (42) | 65.6 (5.8) | 77 | 2 B | C | B | A |
| Comparative Example 4-5 | PET | 21 | 80 | 2.05 | 92 | 158.3 (6.2) | 61.8 (2.6) | 87 | F | B | A | A |

In the repeated folding test of the optical film obtained in Example 4-5, no cracking or breakage occurred in the bent portion even after 250,000 repeated folding trials in which the film was folded to 180 degrees with the distance $\phi$ between the two sides being 2 mm.

(Examples and Comparative Examples of the Fifth Embodiment of the Present Disclosure)

The optical multilayer body according to the fifth embodiment of the present disclosure will now be specifically described by providing examples and comparative examples. The optical multilayer body according to the fifth embodiment of the present disclosure is not limited to the forms described in the Examples.
As examples and comparative examples of the fifth embodiment of the present disclosure, optical multilayer bodies were obtained using resin substrates in Example 5-1 to Example 5-5 and Comparative Example 5-1 to Comparative Example 5-3. For the resin substrates used in the Examples and Comparative Examples and the optical multilayer bodies obtained in the Examples and Comparative Examples, the following measurements and evaluations were performed. The results are presented in Table 6. Unless otherwise specified, the atmosphere during each measurement or evaluation was a temperature of 23°C $\pm$ 5°C and a relative humidity of 40% or more and 65% or less. Unless otherwise stated, before the start of each measurement or evaluation, the sample of interest was exposed to this atmosphere for 30 minutes or more and 60 minutes or less.

[Biomass Content and Environmental Contribution]

The biomass content was obtained by correcting pMC (percent Modern Carbon) with $\delta^{13}C$, where pMC is measured according to Method B of ASTM D6866-22.
Optical multilayer bodies with a biomass content of 10% or more were given an environmental contribution rating of A.
Optical multilayer bodies with a biomass content of less than 10% were given an environmental contribution rating of D.

[Thickness of the Resin Substrate]

The thickness of the resin substrate was measured using the same method as the method for measuring the thickness of the optical film in the examples and comparative examples of the first embodiment of the present disclosure.

[Difference in Refractive Index ($\Delta n$)]

Using trade name "RETS-100," manufactured by Otsuka Electronics Co., Ltd., the in-plane phase difference (Re) of the resin substrates used in the Examples and Comparative Examples was measured. In-plane phase differences at 18 locations were measured, and the average of 16 locations excluding the maximum and minimum was calculated. By dividing the average in-plane phase difference of the resin substrate by the thickness of the resin substrate, the $\Delta n$ (nx - ny) of the resin substrate was calculated.
Preparation for the measurement was performed by following the procedure (A1) to (A4) below.
(A1) First, to stabilize the light source of RETS-100, the light source was left for at least 60 minutes after being turned on. After that, the rotating analyzer method was selected, and the $\theta$ mode (the mode for angular phase difference measurement) was selected. By selecting this $\theta$ mode, the stage is set to the tilt/rotation stage.
(A2) Then the following measurement conditions were entered into RETS-100.

(Measurement Conditions)

- Retardation measuring range: Rotating analyzer method
- Measurement spot diameter: $\phi$5 mm
- Tilt angle range: 0°
- Wavelength range: 400 nm to 800 nm, both inclusive
- The average refractive index of the resin substrate. For example, for a polyethylene terephthalate film, N (average

refractive index) = 1.617 is entered. For a triacetylcellulose film, N (average refractive index) = 1.48 is entered.

- Thickness: Thickness separately measured using an SEM

(A3) Then background data was obtained without a sample set on this analyzer. The analyzer was configured as a closed system, and this process was conducted each time the light source was activated.
(A4) Thereafter, measurement was performed with the sample placed on the stage within the analyzer.

[Total Transmittance (Tt) and Visibility]

Using a haze meter (HM-150, manufactured by Murakami Color Research Laboratory Co., Ltd.), the total transmittance (%) of the optical multilayer body was measured according to JIS K7361-1: 1997. If the total transmittance was 70% or more, the optical multilayer body was graded as having a visibility grade of A, and if the total transmittance was less than 70%, the optical multilayer body was graded as having a visibility grade of D.

[Reduced Elastic Modulus]

For the optical multilayer bodies obtained in the Examples and Comparative Examples, the reduced elastic modulus ($E_r$) was determined using a nanoindenter ("TI950 TriboIndenter," manufactured by Bruker Corporation) on the basis of nanoindentation, with a cross-section of the functional layer or the resin substrate as the measurement surface. The tip of the nanoindenter used was a Berkovich tip (a three-sided pyramidal tip, Berkovich; model number, TI-0039; manufactured by HYSITRON, Inc.). The measurement was conducted at 12 locations within the same cross-section, and the reduced elastic modulus $E_r$ was indicated as the arithmetic mean of 10 locations excluding the minimum and maximum.
The measuring conditions include the use of the displacement control mode (maximum indentation depth, constant at 200 nm; 20 seconds of loading/5 seconds of retention at the maximum indentation depth/20 seconds of unloading) and specifically are as follows. Over 20 seconds (rate: 10 nm/sec), the indenter was pressed into the functional layer or resin substrate from the cross-section of the functional layer or resin substrate to the maximum indentation depth, 200 nm. The indenter was held in that state for 5 seconds and then released over 20 seconds (rate: 10 nm/sec). Through this, the maximum load $P_{max}$, the projected contact area at the maximum depth $A_p$, and the load-displacement curve were successfully obtained, and, from the obtained load-displacement curve, the value of the reduced elastic modulus was calculated. The measurement was conducted in a room-temperature (23°C) environment. The point where the indenter was pressed was the portion of the functional layer or resin substrate in which the cross-section was exposed, near the middle of the functional layer or resin substrate in the thickness direction. The cross-section is obtained by cutting in the thickness direction, which is perpendicular to the primary surfaces of the optical multilayer body. The preparation of the cross-section was conducted by preparing a block in which the optical multilayer body was embedded in embedding resin and cutting this block in a room-temperature (23°C) environment using a commercially available rotary microtome. The finishing was conducted using a diamond knife. The thickness of each layer can also be measured by observing this cross-section.

[Pencil Hardness]

The pencil hardness of the optical multilayer bodies obtained in the Examples and Comparative Examples was measured and graded according to the procedure in (1) to (6) below.

(1) A sample was prepared by cutting the optical multilayer body to a size of 5 cm × 10 cm.

(2) The sample was warmed at 100°C for 10 minutes. After warming, the sample was allowed to stand in an environment at a temperature of 24°C and a relative humidity of 40% or more and 60% or less for 30 minutes or more and 60 minutes or less.

(3) For the sample, pencil hardness was measured according to JIS K5600-5-4: 1999, Scratch hardness (Pencil method). Specifically, a load was applied to the sample by placing a pencil having a predetermined hardness grade on the surface of the hard-coat layer of the sample at an angle of 45° and moving it at a speed of 1.4 mm/sec with a load of 500 g.

(4) After the load was applied to the sample, the sample was warmed at 100°C for 10 minutes again.

(5) Immediately after the rewarming, scratches on the sample were visually assessed. The environment for the visual assessment was a temperature of 24°C and a relative humidity of 40% or more and 60% or less.

(6) The operations in (1) to (5) above were conducted five times. Of the pencils that left no scratch in four or more out of the five trials, the hardest one was considered the pencil hardness of the sample of interest. For example, a sample that had no scratch in four out of the five trials with a hardness grade of B and had no scratch in three out of the five trials with a hardness grade of F is graded as having a hardness grade of B.

[Curling]

From the optical multilayer bodies obtained in the Examples and Comparative Examples, a test specimen in a size of 100 mm × 100 mm was cut out. This test specimen was placed on a flat plate such that the hard-coat layer faced up, with the resin substrate in contact with the flat plate. The average of the heights of lifting of the test specimen from the flat plate at the four corners was calculated and indicated as curl height (mm).

[Lightfast Adhesion]

The optical multilayer bodies obtained in the Examples and Comparative Examples were placed in a light-and-weather-exposure apparatus (enclosed carbon-arc type) compliant with JIS B7751: 2007 (trade name "FAL-AU·B," manufactured by Suga Test Instruments Co., Ltd.; light source, an ultraviolet carbon arc lamp; irradiance, 500 W/$m^2$; black panel temperature, 63°C) and processed for 200 hours. After that, a 100-cell grid-shaped incision pattern was created on the optical multilayer bodies by putting the blade of a utility knife into their surface on the hard-coat layer side (the number of cuts, 11 incisions each in the longitudinal and transverse directions; the distance between cuts, 1 mm). The blade of the utility knife used was NT Inc.'s product number "BA-52P." Then a detachment test according to the cross-cut test specified in JIS K5600-5-6: 1999 was performed by attaching adhesive tape (Nichiban Co., Ltd., product name "Cellulose Tape®") to the gridded surface of the optical multilayer bodies and then removing the adhesive tape. According to the evaluation criteria below, the interlayer adhesion of the optical multilayer bodies obtained in the Examples and Comparative Examples was evaluated.

<Evaluation Criteria>

A: The number of detached cells is 0, with no partially chipped cell.

B: The number of detached cells is 0, but
there is an area in which cells are partially chipped, for example as a result of part of a cell detaching along an incision.

C: The number of detached cells is 1 or more and 49 or less.

D: The number of detached cells is 50 or more.

[Preparation of Acrylates]

<Biomass Material-Derived Acrylate a>

A bifunctional urethane acrylate with a weight-average molecular weight of 300 (biomass content, 50%) was synthesized by polymerizing a vegetable-derived polyol, a vegetable-derived isocyanate, and a petroleum-derived acrylate. The weight-average molecular weight was measured by gel permeation chromatography (GPC) performed in tetrahydrofuran (THF) solvent and was determined as a polystyrene-equivalent value.

<Biomass Material-Derived Acrylate b>

A decafunctional urethane acrylate with a weight-average molecular weight of 2,000 (biomass content, 40%) was synthesized by polymerizing a vegetable-derived polyol, a vegetable-derived isocyanate, and a petroleum-derived acrylate. The weight-average molecular weight was measured by GPC performed in THF solvent and was determined as a polystyrene-equivalent value.

<Petroleum-Derived Acrylate c>

A bifunctional urethane acrylate with a weight-average molecular weight of 310 (biomass content, 0%) was synthesized by polymerizing a polyol, an isocyanate, and an acrylate, all derived from petroleum. The weight-average molecular weight was measured by GPC performed in THF solvent and was determined as a polystyrene-equivalent value.

[Preparation of Hard-Coat Layer Coating Solutions]

Hard-coat layer coating solutions having the formulae specified below were prepared.

<Hard-Coat Layer Coating Solution A>

- Biomass material-derived acrylate a 40 parts by mass
- Biomass material-derived acrylate b 10 parts by mass
- Polymerization initiator 1.0 part by mass

(IGM Resins B.V.; trade name, Omnirad 184)

- Propylene glycol monomethyl ether acetate (PMA) 38 parts by mass
- Methyl ethyl ketone (MEK) 12 parts by mass

<Hard-Coat Layer Coating Solution B>

- Biomass material-derived acrylate a 25 parts by mass
- Biomass material-derived acrylate b 25 parts by mass
- Polymerization initiator 1.0 part by weight
  (IGM Resins B.V.; trade name, Omnirad 184)
- PMA 38 parts by mass
- MEK 12 parts by mass

<Hard-Coat Layer Coating Solution C>

- Biomass material-derived acrylate a 10 parts by mass
- Biomass material-derived acrylate b 40 parts by mass
- Polymerization initiator 1.0 part by weight
  (IGM Resins B.V.; trade name, Omnirad 184)
- PMA 38 parts by mass
- MEK 12 parts by mass

<Hard-Coat Layer Coating Solution D>

- Biomass material-derived acrylate a 30 parts by mass
- Biomass material-derived acrylate b 20 parts by mass
- Polymerization initiator 1.0 part by weight
  (IGM Resins B.V.; trade name, Omnirad 184)
- PMA 38 parts by mass
- MEK 12 parts by mass

<Hard-Coat Layer Coating Solution E>

- Biomass material-derived acrylate b 50 parts by mass
- Polymerization initiator 1.0 part by weight
  (IGM Resins B.V.; trade name, Omnirad 184)
- PMA 38 parts by mass
- MEK 12 parts by mass

<Hard-Coat Layer Coating Solution F>

- Biomass material-derived acrylate a 50 parts by mass
- Polymerization initiator 1.0 part by weight

(IGM Resins B.V.; trade name, Omnirad 184)

- PMA 38 parts by mass
- MEK 12 parts by mass

<Hard-Coat Layer Coating Solution G>

- Biomass material-derived acrylate b 25 parts by mass
- Petroleum-derived acrylate c 25 parts by mass
- Polymerization initiator 1.0 part by weight
  (IGM Resins B.V.; trade name, Omnirad 184)
- PMA 38 parts by mass
- MEK 12 parts by mass

<Hard-Coat Layer Coating Solution H>

- Biomass material-derived acrylate a 38 parts by mass
- Biomass material-derived acrylate b 8 parts by mass
- Silica fine particles 4 parts by mass
  (ELCOM V8803-25; average primary particle diameter, 25 nm; manufactured by JGC Catalysts and Chemicals Ltd.)
- Polymerization initiator (IGM Resins B.V.; trade name, Omnirad 184) 1.0 part by weight
- PMA 38 parts by mass
- MEK 12 parts by mass

[EXAMPLE 5-1]

By mixing 106 parts by mass of dimethyl terephthalate, 25 parts by mass of ethylene glycol, and 25 parts by mass

of 1,4-butanediol, allowing them to undergo transesterification reaction, and dissolving the product in a mixed solvent in which methyl ethyl ketone and toluene had been mixed in a ratio by mass of 8:2, easily adhesive layer coating solution (1), a solution having a solids concentration of 5% by mass, was obtained.

A petroleum-derived polyethylene terephthalate (PET) film with a reduced elastic modulus of 4.6 GPa, a $\Delta n$ of 0.039, and a thickness of 38 $\mu$m was prepared. Easily adhesive layer coating solution (1) was applied to this PET film and dried at 90°C for 60 seconds to form an easily adhesive layer with a thickness of 100 nm, giving a resin substrate. Since the easily adhesive layer is a thin film, the influence of the easily adhesive layer on the reduced elastic modulus and $\Delta n$ is small; therefore, the resin substrate also has substantially the same reduced elastic modulus and $\Delta n$ as the PET film.

Hard-coat layer coating solution A was applied to the easily adhesive layer using a bar coater and dried at 80°C for 60 seconds to form a coating. The coating was cured by irradiating it with ultraviolet radiation at 200 mJ/cm$^2$ using a UV irradiation device (manufactured by Fusion UV Systems Japan, K.K.; light source, an H bulb) to form a hard-coat layer with a dry thickness of 15 $\mu$m and a reduced elastic modulus of 4.4 GPa. In such a manner, an optical multilayer body with a biomass content of 14% was obtained.

[EXAMPLES 5-2, 5-3, and 5-5 and COMPARATIVE EXAMPLES 5-1 to 5-3]

Optical multilayer bodies were obtained in the same manner as in Example 5-1, except that the hard-coat layer was formed using the hard-coat layer coating solution specified in Table 1, instead of hard-coat layer coating solution A.

[EXAMPLE 5-4]

A triacetylcellulose (TAC) film with a reduced elastic modulus of 4.9 GPa, a $\Delta n$ of 0.000, and a thickness of 40 $\mu$m was prepared. Hard-coat layer coating solution D was directly applied to this TAC film using a bar coater and dried at 80°C for 60 seconds to form a coating. The coating was cured by irradiating it with ultraviolet radiation at 200 mJ/cm$^2$ using the UV irradiation device specified above to form a hard-coat layer with a dry thickness of 10 $\mu$m and a reduced elastic modulus of 5.4 GPa. In such a manner, an optical multilayer body with a biomass content of 46% was obtained.

[Table 6]

| | Resin substrate | | | Functional layer (hard-coat layer) | | | Elastic modulus ratio ErB/ErA | Optical multilayer body | | Visibility Clear or not | Curling Average of four corners | Lightfast adhesion | Pencil hardness after functional layer placement | Environ-mental contribution |
|---|---|---|---|---|---|---|---|---|---|---|---|---|---|---|
| | Material | Reduced elastic modulus ErA | Thickness | Reduced elastic modulus ErB | Thickness | Hard-coat layer coating solution | | Total transmittance | Biomass content | | | | | |
| | | GPa | μm | GPa | μm | | | % | % | | mm | | | |
| Example 5-1 | PET | 4.6 | 38 | 4.4 | 15 | A | 0.96 | 88 | 14 | A | 1 | A | H | A |
| Example 5-2 | PET | 4.6 | 38 | 5.5 | 15 | B | 1.20 | 88 | 13 | A | 1 | A | 2 H | A |
| Example 5-3 | PET | 4.6 | 38 | 8.1 | 15 | C | 1.76 | 88 | 12 | A | 8 | B | 2 H | A |
| Example 5-4 | TAC | 4.9 | 40 | 5.4 | 10 | D | 1.10 | 90 | 46 | A | 2 | A | 2 H | A |
| Comparative Example 5-1 | PET | 4.6 | 38 | 9.5 | 15 | E | 2.07 | 88 | 11 | A | 13 | D | 2 H | A |
| Comparative Example 5-2 | PET | 4.6 | 38 | 2.2 | 15 | F | 0.48 | 88 | 14 | A | 2 | A | F | A |
| Comparative Example 5-3 | PET | 4.6 | 38 | 6.3 | 15 | G | 1.37 | 88 | 5 | A | 2 | A | 2 H | D |

Reference Signs List

1: optical film, easily adhesive film
1a: first surface
1b: second surface
2: optical effect film
2a: first surface
2b: second surface
3: optical multilayer body
4: polyester film
4a: first surface
4b: second surface
5: resin substrate
5a: first surface
5b: second surface
6: easily adhesive layer
7: resin film
7a: first surface
7b: second surface
8: functional layer
11: container
12: receiving container
21: test solution piping
22: compressed air piping
23: return piping
24: return pump
31, 32: flow meter
41, 42: pressure gauge
50: ejecting section
51: nozzle
52: housing
60: cross-sectional profile acquisition section
70: optical film
81: sample mounting platform
82: support
90: erosion rate measuring instrument
A1: water
A2: spherical silica
A3: air
A4: worn optical film

## Claims

**1.** An optical film for placing at least one functional layer thereon,

the optical film comprising at least one polyester, wherein:
a biomass content of the optical film is 10% or more;
a total transmittance of the optical film is 70% or more; and
an in-plane phase difference of the optical film is 3,000 nm or more and 30,000 nm or less.

**2.** The optical film according to claim 1, wherein the optical film contains a biomass material-derived polyester.

**3.** The optical film according to claim 1, wherein the in-plane phase difference is 4,000 nm or more and 15,000 nm or less.

**4.** The optical film according to claim 1, wherein a Martens hardness on at least one surface of the optical film is 110

N/mm2 or more and 170 N/mm2 or less.

5. The optical film according to claim 1, wherein a percentage of elastic deformation work on at least one surface of the optical film is 60% or more and 70% or less.

6. The optical film according to claim 1, wherein:

   the optical film consists of a polyester film containing the polyester or
   includes a polyester film containing the polyester and at least one easily adhesive layer provided on the polyester film.

7. The optical film according to claim 6, wherein resin constituting the easily adhesive layer is a biomass material-derived resin.

8. The optical film according to claim 6, wherein resin constituting the easily adhesive layer is a fossil fuel-derived resin.

9. The optical film according to claim 6, wherein resin constituting the easily adhesive layer is a mixed resin including a biomass material-derived resin and a fossil fuel-derived resin.

10. An optical multilayer body comprising:

   the optical film according to claim 6; and
   at least one functional layer provided on the optical film.

11. An optical film for placing at least one functional layer thereon,

   the optical film comprising at least one polyester, wherein:
   a biomass content of the optical film is 10% or more;
   a total transmittance of the optical film is 70% or more; and
   an in-plane phase difference of the optical film is 1,500 nm or less.

12. The optical film according to claim 11, wherein the optical film contains a biomass material-derived polyester.

13. The optical film according to claim 11, wherein the in-plane phase difference is 300 nm or more and 1,450 nm or less.

14. The optical film according to claim 11, wherein a Martens hardness on at least one surface of the optical film is 110 N/mm2 or more and 170 N/mm2 or less.

15. The optical film according to claim 11, wherein a percentage of elastic deformation work on at least one surface of the optical film is 60% or more and 70% or less.

16. The optical film according to claim 11, wherein:

   the optical film consists of a polyester film containing the polyester or
   includes a polyester film containing the polyester and at least one easily adhesive layer provided on the polyester film.

17. The optical film according to claim 16, wherein resin constituting the easily adhesive layer is a biomass material-derived resin.

18. The optical film according to claim 16, wherein resin constituting the easily adhesive layer is a fossil fuel-derived resin.

19. The optical film according to claim 16, wherein resin constituting the easily adhesive layer is a mixed resin including a biomass material-derived resin and a fossil fuel-derived resin.

20. An optical multilayer body comprising:

   the optical film according to claim 16; and

at least one functional layer provided on the optical film.

**21.** An optical effect film comprising at least one polyester, wherein:

a biomass content of the optical effect film is 10% or more;
a total transmittance of the optical effect film is 70% or more; and
a yellowness index (YI) of the optical effect film is -1.0 or greater and 2.5 or less.

**22.** The optical effect film according to claim 21, wherein the optical effect film contains at least one bluing agent.

**23.** The optical effect film according to claim 22, wherein the optical effect film is a polyester film containing the polyester and the bluing agent.

**24.** The optical effect film according to claim 22, wherein the optical effect film includes a polyester film containing the polyester and a hue adjustment layer containing the bluing agent.

**25.** The optical effect film according to claim 24, wherein the hue adjustment layer is an easily adhesive layer.

**26.** The optical effect film according to claim 25, wherein resin constituting the easily adhesive layer is a biomass material-derived resin.

**27.** The optical effect film according to claim 25, wherein resin constituting the easily adhesive layer is a fossil fuel-derived resin.

**28.** The optical effect film according to claim 25, wherein resin constituting the easily adhesive layer is a mixed resin including a biomass material-derived resin and a fossil fuel-derived resin.

**29.** The optical effect film according to claim 24, wherein a thickness of the polyester film is 10 μm or more and 200 μm or less, and a thickness of the hue adjustment layer is 10 nm or more and 1,000 nm or less.

**30.** The optical effect film according to claim 21, wherein the optical effect film contains a biomass material-derived polyester.

**31.** The optical effect film according to claim 21, wherein a Martens hardness on at least one surface of the optical effect film is 110 N/mm2 or more and 170 N/mm2 or less.

**32.** The optical effect film according to claim 21, wherein a percentage of elastic deformation work on at least one surface of the optical effect film is 60% or more and 70% or less.

**33.** The optical effect film according to claim 21, further comprising at least one functional layer.

**34.** The optical effect film according to claim 33, wherein the functional layer contains at least one bluing agent.

**35.** An easily adhesive film comprising a polyester film and at least one easily adhesive layer, wherein:

the polyester film contains at least one polyester;
a biomass content of the easily adhesive film is 10% or more;
a total transmittance of the easily adhesive film is 70% or more;
an average δq/δa of a surface of the easily adhesive layer is 3.10 or less; and
the easily adhesive film is for providing at least one functional layer on the easily adhesive layer. <Calculation of the Average 6q/6a>
A 10 μm × 10 μm region on the surface of the easily adhesive layer is measured using a phase mode of an atomic force microscope. Through the measurement, a distribution of phase signals on the surface of the easily adhesive layer is obtained. A unit for the phase signals is [deg].
An arithmetic mean of the phase signals, expressed by equation 1 below, is defined as δa.
A root mean square of the phase signals, expressed by equation 2 below, is defined as δq.
(In equation 1 below and equation 2 below, a surface for the phase signals is represented by f(x,y), where X and Y Cartesian coordinate axes are placed in a reference surface, which indicates an average phase signal, and an

axis perpendicular to the reference surface is defined as a Z axis. In equation 1 below and equation 2 below, a size of a segment in which 6a and δq are calculated is represented by Lx and Ly. In equation 1 below and equation 2 below, Ar = Lx × Ly.)
Within the 10 μm × 10 μm region for measurement, seven 2 μm × 2 μm segments are selected. δa, δq, and δq/δa in the seven segments are calculated. Based on δq/δa in five segments excluding a maximum and a minimum from δq/δa in the seven segments, the average δq/δa is calculated.

[Math. 1]

$$\delta a = \frac{1}{Ar}\int_0^{Lx}\int_0^{Ly}\left|f(x,y)\right|dxdy$$ ... Equation 1

$$\delta q = \sqrt{\frac{1}{Ar}\int_0^{Lx}\int_0^{Ly} f^2(x,y)dxdy}$$ ... Equation 2

**36.** The easily adhesive film according to claim 35, wherein the polyester film contains a biomass material-derived polyester.

**37.** The easily adhesive film according to claim 35, wherein a Martens hardness on at least one surface of the easily adhesive film is 110 N/mm2 or more and 170 N/mm2 or less.

**38.** The easily adhesive film according to claim 35, wherein a percentage of elastic deformation work on at least one surface of the easily adhesive film is 60% or more and 70% or less.

**39.** The easily adhesive film according to claim 35, wherein a degree of crystallinity of the easily adhesive film is 90% or less.

**40.** The easily adhesive film according to claim 35, wherein resin constituting the easily adhesive layer is a biomass material-derived resin.

**41.** The easily adhesive film according to claim 35, wherein resin constituting the easily adhesive layer is a fossil fuel-derived resin.

**42.** The easily adhesive film according to claim 35, wherein resin constituting the easily adhesive layer is a mixed resin including a biomass material-derived resin and a fossil fuel-derived resin.

**43.** An optical multilayer body comprising:

the easily adhesive film according to claim 35; and
at least one functional layer provided on the easily adhesive layer of the easily adhesive film.

**44.** An optical multilayer body comprising a resin substrate and at least one functional layer provided on the resin substrate, wherein:

when a reduced elastic modulus of the functional layer is defined as $E_rB$, and a reduced elastic modulus of the resin substrate is defined as $E_rA$, $E_rB$ is 1.0 GPa or more and 10.0 GPa or less, and $E_rB/E_rA$ is 0.50 or greater and 2.00 or less;
a biomass content of the optical multilayer body is 10% or more; and
a total transmittance of the optical multilayer body is 70% or more.

**45.** The optical multilayer body according to claim 44, wherein the functional layer contains a biomass material-derived resin.

**46.** The optical multilayer body according to claim 44, wherein the functional layer contains nanoparticles.

**47.** The optical multilayer body according to claim 44, wherein the resin substrate contains a biomass material-derived resin.

**48.** The optical multilayer body according to claim 44, wherein the resin substrate consists of a resin film or includes a resin film and at least one easily adhesive layer provided on the resin film.

**49.** The optical multilayer body according to claim 44, wherein the functional layer is at least one layer selected from a hard-coat layer, an antiglare layer, an antireflection layer, a retardation layer, an antifouling layer, an antistatic layer, and an electrically conductive layer.

**50.** The optical film according to any one of claims 1 to 9 and 11 to 19, wherein the optical film contains a recycled material-derived polyester.

**51.** The optical effect film according to any one of claims 21 to 34, wherein the optical effect film contains a recycled material-derived polyester.

**52.** The easily adhesive film according to any one of claims 35 to 42, wherein the easily adhesive film contains a recycled material-derived polyester.

**53.** The optical multilayer body according to any one of claims 44 to 49, wherein the resin substrate contains a recycled material-derived resin.

**54.** A surface plate for an image display device, the surface plate comprising:

a resin plate or glass plate; and
the optical film according to any one of claims 1 to 9 and 11 to 19, the optical effect film according to any one of claims 21 to 34, the easily adhesive film according to any one of claims 35 to 42, or the optical multilayer body according to any one of claims 10, 20, and 43 to 49, disposed on the plate.

**55.** An image display device comprising:

a display element; and
the optical film according to any one of claims 1 to 9 and 11 to 19, the optical effect film according to any one of claims 21 to 34, the easily adhesive film according to any one of claims 35 to 42, or the optical multilayer body according to any one of claims 10, 20, and 43 to 49, disposed on the display element.

**56.** A polarizing plate comprising a polarizer, a first transparent protective plate disposed on one surface of the polarizer, and a second transparent protective plate disposed on the other surface of the polarizer, wherein:
at least one of the first transparent protective plate or the second transparent protective plate is the optical film according to any one of claims 1 to 9 and 11 to 19, the optical effect film according to any one of claims 21 to 34, the easily adhesive film according to any one of claims 35 to 42, or the optical multilayer body according to any one of claims 10, 20, and 43 to 49.

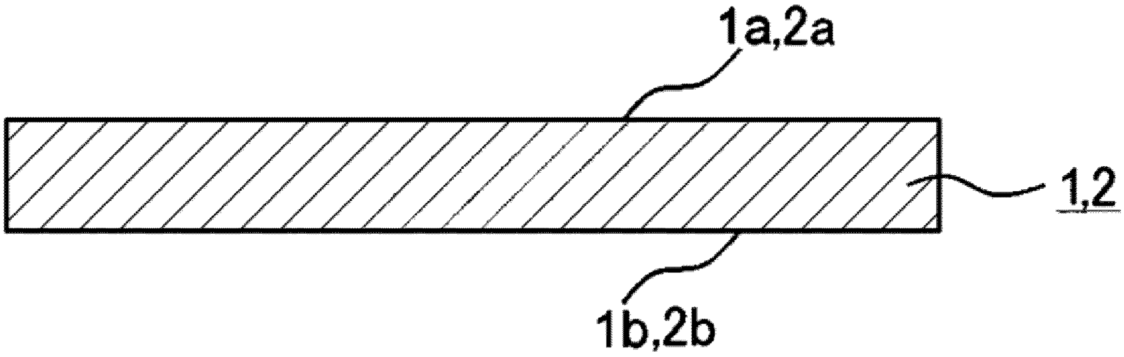


FIG.1

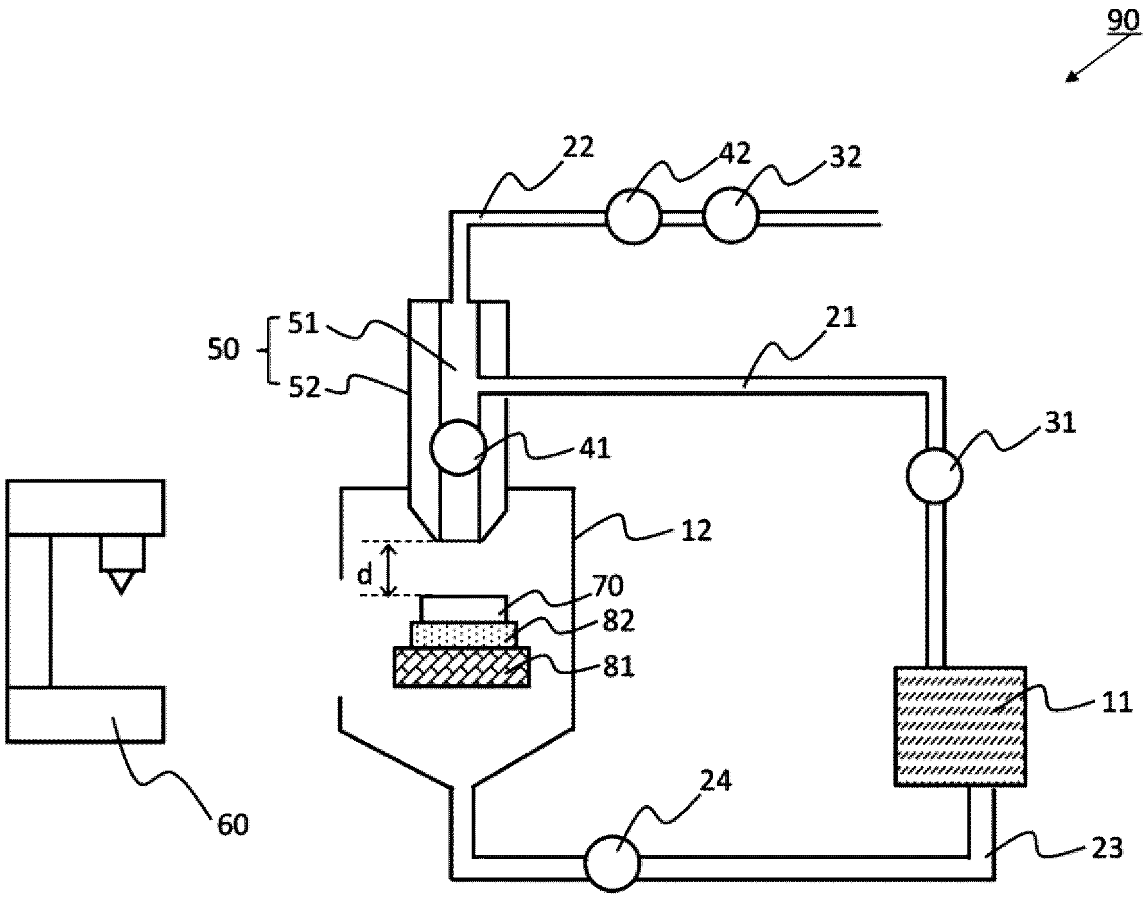


FIG.2

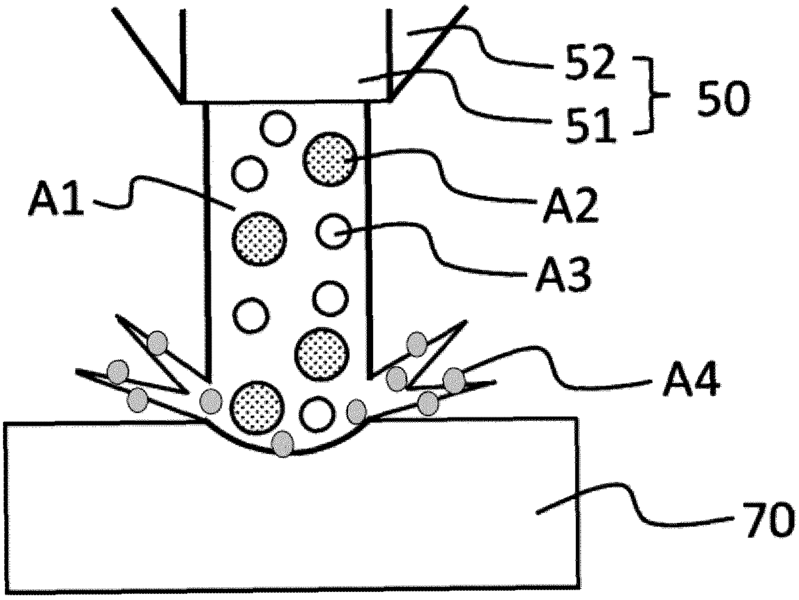


FIG.3

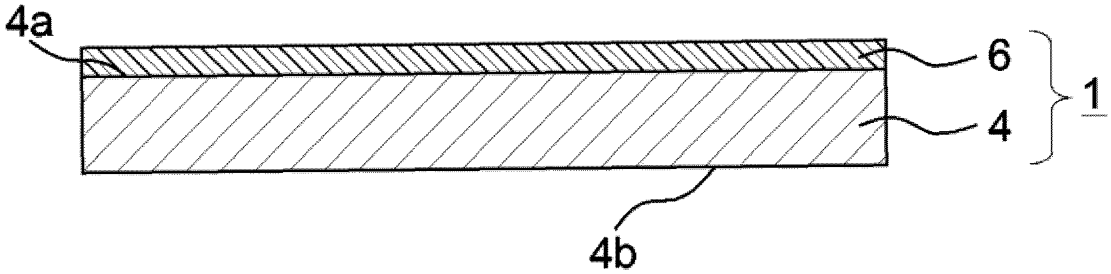


FIG.4

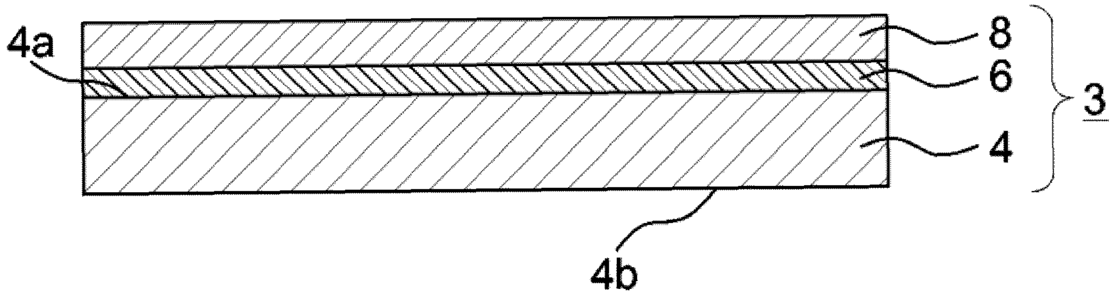


FIG.5

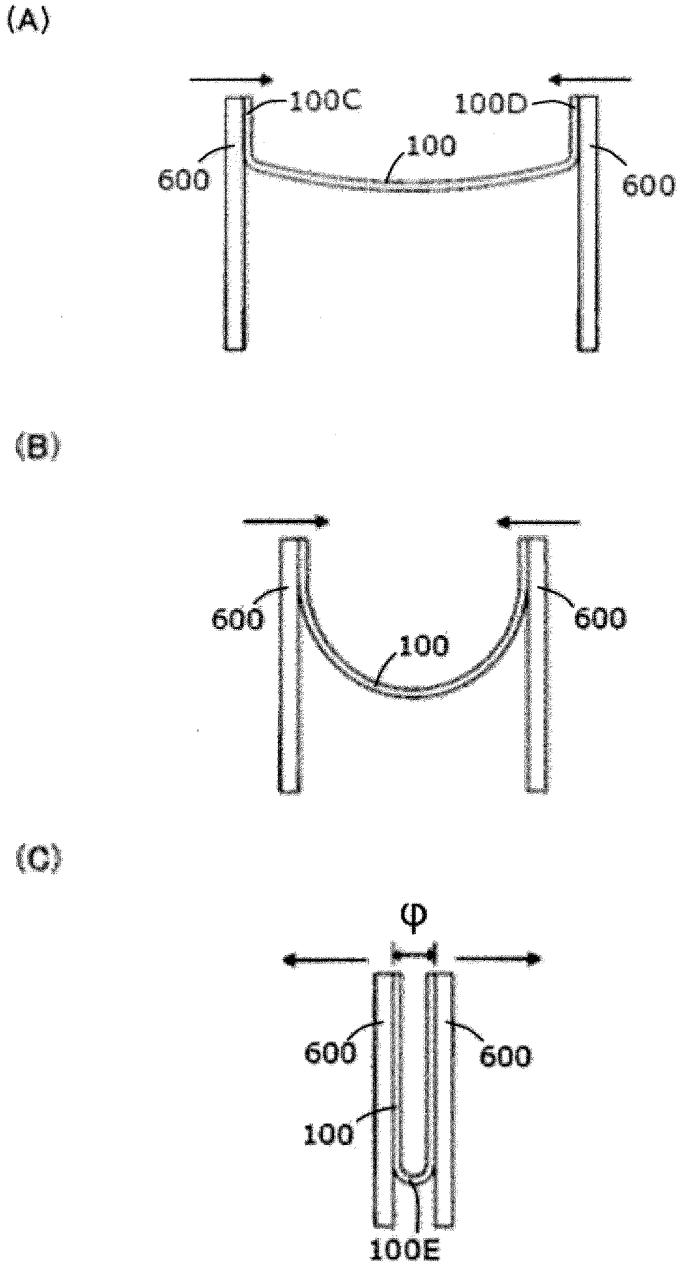
(A)
100C
100D
100
600
600
(B)
600
600
100
(C)
φ
600
600
100
100E

FIG.6

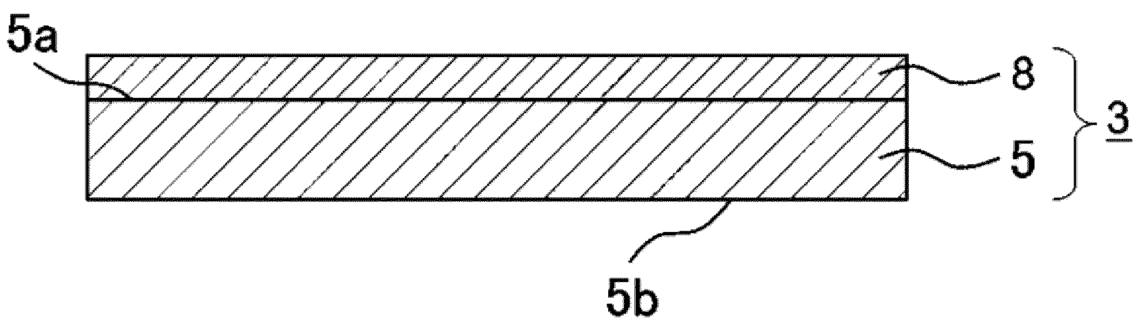
5a
8
3
5
5b

FIG.7

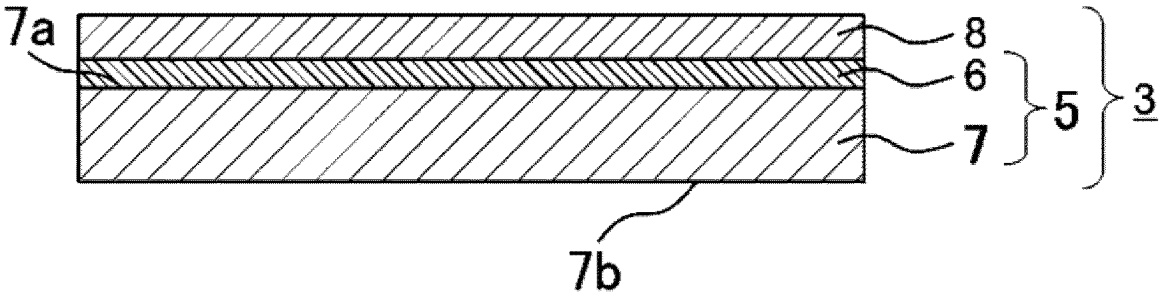


FIG.8

## INTERNATIONAL SEARCH REPORT

International application No.
**PCT/JP2023/025582**

### A. CLASSIFICATION OF SUBJECT MATTER

***G02B 5/30***(2006.01)i; ***B32B 3/04***(2006.01)i; ***B32B 7/022***(2019.01)i; ***B32B 7/023***(2019.01)i; ***B32B 27/00***(2006.01)i; ***B32B 27/06***(2006.01)i; ***B32B 27/34***(2006.01)i; ***B32B 27/36***(2006.01)i; ***C08G 63/16***(2006.01)i; ***C08J 5/18***(2006.01)i; ***C08J 7/043***(2020.01)i; ***C08J 7/046***(2020.01)i; ***C08L 67/02***(2006.01)i; ***G02B 1/11***(2015.01)i; ***G02B 1/14***(2015.01)i; ***G02B 1/16***(2015.01)i; ***G02B 1/18***(2015.01)i; ***G02B 5/02***(2006.01)i; ***G02B 5/22***(2006.01)i; ***G02F 1/1335***(2006.01)i; ***G02F 1/13363***(2006.01)i; ***G09F 9/00***(2006.01)i; ***H05B 33/02***(2006.01)i; ***H05B 33/14***(2006.01)i; ***H10K 50/10***(2023.01)i; ***H10K 59/00***(2023.01)i

FI: G02B5/30; B32B3/04; B32B7/022; B32B7/023; B32B27/00 B; B32B27/00 M; B32B27/06; B32B27/34; B32B27/36; C08G63/16; C08J5/18 CFD; C08J7/043 A CFD; C08J7/046 A CFD; C08L67/02; G02B1/11; G02B1/14; G02B1/16; G02B1/18; G02B5/02 B; G02B5/22; G02F1/1335 510; G02F1/13363; G09F9/00 302; G09F9/00 313; H05B33/02; H05B33/14 A; H05B33/14 Z; H10K59/00

According to International Patent Classification (IPC) or to both national classification and IPC

### B. FIELDS SEARCHED

Minimum documentation searched (classification system followed by classification symbols)

G02B5/30; B32B3/04; B32B7/022; B32B7/023; B32B27/00; B32B27/06; B32B27/34; B32B27/36; C08G63/16; C08J5/18; C08J7/043; C08J7/046; C08L67/02; G02B1/11; G02B1/14; G02B1/16; G02B1/18; G02B5/02; G02B5/22; G02F1/1335; G02F1/13363; G09F9/00; H05B33/02; H05B33/14; H10K50/10; H10K59/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2022-054571 A (TORAY INDUSTRIES) 07 April 2022 (2022-04-07) paragraphs [0007], [0010], [0014], [0020]-[0021], [0023]-[0028], [0038], [0060], [0078], table 3, paragraph [0080], table 5 | 1-56 |
| Y | WO 2021/200367 A1 (TOYOBO CO., LTD.) 07 October 2021 (2021-10-07) paragraphs [0020], [0037] | 1-10, 50, 54-56 |
| Y | WO 2020/196306 A1 (TOYOBO CO., LTD.) 01 October 2020 (2020-10-01) paragraphs [0018], [0020], [0036] | 1-10, 50, 54-56 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 August 2023** | **12 September 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2023/025582

C. DOCUMENTS CONSIDERED TO BE RELEVANT

| Category* | Citation of document, with indication, where appropriate, of the relevant passages | Relevant to claim No. |
|---|---|---|
| Y | WO 2020/162119 A1 (TOYOBO CO., LTD.) 13 August 2020 (2020-08-13) paragraphs [0062]-[0064] | 1-10, 50, 54-56 |
| Y | WO 2022/118807 A1 (DAI NIPPON PRINTING CO., LTD.) 09 June 2022 (2022-06-09) paragraphs [0013]-[0014], [0032]-[0033], [0036], [0065] | 4-5, 11-20, 31-32, 37-38, 50, 54-56 |
| Y | JP 2020-125485 A (SUMITOMO CHEMICAL CO) 20 August 2020 (2020-08-20) paragraphs [0007], [0009], [0016], [0050]-[0051], [0055], [0079]-[0080], [0140], table 1 | 21-34, 51, 54-56 |
| Y | WO 2019/142615 A1 (TOYOBO CO., LTD.) 25 July 2019 (2019-07-25) paragraphs [0009], [0026]-[0027] | 35-43, 52, 54-56 |
| Y | JP 2020-132851 A (NITTO DENKO CORP) 31 August 2020 (2020-08-31) paragraph [0115] | 35-43, 52, 54-56 |
| Y | JP 2015-108098 A (TOYO INK SC HOLDINGS CO LTD) 11 June 2015 (2015-06-11) paragraphs [0020], [0203] | 35-43, 52, 54-56 |
| Y | WO 2022/092249 A1 (DAI NIPPON PRINTING CO., LTD.) 05 May 2022 (2022-05-05) paragraphs [0101], [0107], [0149]-[0156] | 44-49, 53-56 |

Form PCT/ISA/210 (second sheet) (January 2015)

INTERNATIONAL SEARCH REPORT

International application No.
PCT/JP2023/025582

**Box No. III Observations where unity of invention is lacking (Continuation of item 3 of first sheet)**

This International Searching Authority found multiple inventions in this international application, as follows:

Document 1: JP 2022-054571 A (TORAY INDUSTRIES) 07 April 2022 (2022-04-07) paragraphs [0007], [0025]-[0026], [0038], [0080], table 5 (Family: none)

Claims are classified into the following five inventions.

(Invention 1) Claim 1 and claims 2-10, 50, and 54-56 dependent on claim 1

Document 1 discloses a "biaxially oriented polyester film having a biobased synthetic polymer content of at least 10 mol% and having laminated various functional layers" (see paragraphs [0007] and [0026] in document 1). Furthermore, in the example of paragraph [0081] and table 5 in document 1, a haze is less than 6%, which is low, and in addition, in paragraph [0025] in document 1, the problem of suppressing the reduction of total light transmittance is addressed, and thus the biaxially oriented polyester film disclosed in document 1 is highly likely to satisfy the requirement that the "optical film has a total light transmittance of at least 70%" in the invention in claim 1.

Here, since claim 1, and claims 2-10, 50, and 54-56, which are dependent on claim 1, have the special technical feature in that "the in-plane phase difference of the optical film is 3,000 nm to 30,000 nm," claim 1, and claims 2-10, 50, and 54-56 are classified as invention 1.

(Invention 2) Claim 11 and claims 12-20, 50, and 54-56 dependent on claim 11

Claim 11 and claims 12-20, 50, and 54-56, which are dependent on claim 11, share, with claim 1 classified as invention 1, the common technical feature of "an optical film for laminating a functional layer, wherein the optical film contains a polyester, the optical film has a degree of biomass of at least 10%, and the optical film has a total light transmittance of at least 70%." However, said technical feature does not make a contribution over the prior art in light of the disclosure (in particular, see paragraphs [0007], [0025]-[0026], and [0081], and table 5) of document 1, and thus cannot be said to be a special technical feature. Also, there are no other identical or corresponding special technical features between claim 1 and claim 11 and claims 12-20, 50, and 54-56 which ae dependent on claim 11.

In addition, claim 11 and claims 12-20, 50, and 54-56, which are dependent on claim 11, are not dependent on claim 1. In addition, claim 11 and claims 12-20, 50 and 54-56, which are dependent on claim 11, are not substantially identical to or similarly closely related to any of the claims classified as invention 1.

Therefore, claim 11 and claims 12-20, 50 and 54-56, which are dependent on claim 11, cannot be classified as invention 1.

In addition, since claim 11, and claims 12-20, 50 and 54-56, which are dependent on claim 11, have the special technical feature in that "the in-plane phase difference of the optical film is 1,500 nm or less," claim 11, and claims 12-20, 50 and 54-56 are classified as invention 2.

(Invention 3) Claim 21 and claims 22-34, 51, and 54-56 dependent on claim 21

Claim 21 and claims 22-34, 51, and 54-56, which are dependent on claim 21, share, with claim 1 classified as invention 1 and claim 11 classified as invention 2, the common technical feature of "an optical function film (corresponding to the "optical film") containing polyester, wherein the optical function film has a degree of biomass of at least 10%, and the optical function film has a total light transmittance of at least 70%." However, said technical feature does not make a contribution over the prior art in light of the disclosure (in particular, see paragraphs [0007], [0025]-[0026], and [0081], and table 5) of document 1, and thus cannot be said to be a special technical feature. In addition, there are no other identical or corresponding special technical features between claim 1 or claim 11 and claim 21 and claims 22-34, 51, and 54-56 which are dependent on claim 21.

In addition, claim 21 and claims 22-34, 51, and 54-56, which are dependent on claim 21, are not dependent on claim 1 nor claim 11. In addition, claim 21 and claims 22-34, 51, and 54-56, which are dependent on claim 21, are not substantially identical to or similarly closely related to any of the claims classified as invention 1 or invention 2.

Therefore, claim 21 and claims 22-34, 51, and 54-56, which are dependent on claim 21, cannot be classified as invention 1 or invention 2.

In addition, since claim 21, and claims 22-34, 51 and 54-56, which are dependent on claim 21, have the special technical feature in that "the yellow index (YI) of the optical function film is -1.0 to 2.5," claim 21, and claims 22-34, 51, and 54-56 are classified as invention 3.

(Invention 4) Claim 35 and claims 36-43, 52, and 54-56 dependent on claim 35

Claim 35 and claims 36-43, 52, and 54-56, which are dependent on claim 35, share, with claim 1 classified as invention 1, claim 11 classified as invention 2, or claim 21 classified as invention 3, the common technical feature in

Form PCT/ISA/210 (continuation of first sheet) (January 2015)

**INTERNATIONAL SEARCH REPORT**

International application No.
**PCT/JP2023/025582**

**Box No. III Observations where unity of invention is lacking (Continuation of item 3 of first sheet)**

that a film “containing polyester” has a “degree of biomass of at least 10%,” and has a “total light transmittance of at least 70%.” However, said technical feature does not make a contribution over the prior art in light of the disclosure (in particular, see paragraphs [0007], [0025]-[0026], and [0081], and table 5) of document 1, and thus cannot be said to be a special technical feature. In addition, there are no other identical or corresponding special technical features between claim 1, claim 11, or claim 21 and claim 35 and claims 36-43, 52, and 54-56 which are dependent on claim 35.

In addition, claim 35 and claims 36-43, 52, and 54-56, which are dependent on claim 35, are not dependent on claim 1, claim 11, nor claim 21. In addition, claim 35 and claims 36-43, 52, and 54-56, which are dependent on claim 35, are not substantially identical to or similarly closely related to any of the claims classified as invention 1, invention 2, or invention 3.

Therefore, claim 35 and claims 36-43, 52, and 54-56, which are dependent on claim 35, cannot be classified as invention 1, invention 2, or invention 3.

In addition, claim 35, and claims 36-43, 52, and 54-56, which are dependent on claim 35, have the special technical feature of an “easily adhesive film provided with an easily adhesive layer,” “wherein the average value of δq/δa of the surface of the easily adhesive layer is 3.10 or less, and the easily adhesive film is used for providing a functional layer on the easily adhesive layer,” and are thus classified as invention 4.

(Invention 5) Claim 44 and claims 45-49 and 53-56 dependent on claim 44

Claim 44 and claims 45-49 and 53-56, which are dependent on claim 44, share, with claim 1 classified as invention 1, claim 11 classified as invention 2, claim 21 classified as invention 3, or claim 35 classified as invention 4, the common technical feature in that an optical laminated body “comprising a resin substrate (corresponding to “polyester”) and a functional layer provided on the resin substrate” has a “degree of biomass of at least 10%,” and has a “total light transmittance of at least 70%.” However, said technical feature does not make a contribution over the prior art in light of the disclosure (in particular, see paragraphs [0007], [0025]-[0026], and [0081], and table 5) of document 1, and thus cannot be said to be a special technical feature. In addition, there are no other identical or corresponding special technical features between claim 1, claim 11, claim 21, or claim 35 and claim 44 and claims 45-49 and 53-56 which are dependent on claim 44.

In addition, claim 44 and claims 45-49, and 53-56, which are dependent on claim 44, are not dependent on claim 1, claim 11, claim 21, nor claim 35. In addition, claim 44 and claims 45-49 and 53-56, which are dependent on claim 44, are not substantially identical to or similarly closely related to any of the claims classified as invention 1, invention 2, invention 3, or invention 4.

Therefore, claim 44 and claims 45-49 and 53-56, which are dependent on claim 44, cannot be classified as invention 1, invention 2, invention 3, nor invention 4.

In addition, claim 44 and claims 45-49 and 53-56, which are dependent on claim 44, have the special technical feature of an optical laminated body having “$E_rB$ of 1.0 GPa to 10.0 GPa, and $E_rB/E_rA$ of 0.50 to 2.00 when the composite elastic modulus of the functional layer is $E_rB$ and the composite elastic modulus of the resin substrate is $E_rA$,” and are thus classified as invention 5.

**INTERNATIONAL SEARCH REPORT**

International application No.
**PCT/JP2023/025582**

**Box No. III Observations where unity of invention is lacking (Continuation of item 3 of first sheet)**

1. ☑ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:
4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2023/025582**

| Patent document cited in search report | Publication date (day/month/year) | Patent family member(s) | Publication date (day/month/year) |
|---|---|---|---|
| JP 2022-054571 A | 07 April 2022 | (Family: none) | |
| WO 2021/200367 A1 | 07 October 2021 | CN 115335737 A | |
| | | KR 10-2022-0159411 A | |
| | | TW 202200685 A | |
| WO 2020/196306 A1 | 01 October 2020 | US 2022/0187503 A1 paragraphs [0035], [0039], [0057] | |
| | | EP 3951452 A1 | |
| | | CN 113614592 A | |
| | | KR 10-2021-0143822 A | |
| | | TW 202043821 A | |
| WO 2020/162119 A1 | 13 August 2020 | US 2022/0085307 A1 paragraphs [0071]-[0073] | |
| | | EP 3922668 A1 | |
| | | CN 113396179 A | |
| | | KR 10-2021-0125514 A | |
| | | TW 202033637 A | |
| | | JP 2020-185789 A | |
| WO 2022/118807 A1 | 09 June 2022 | TW 202239575 A | |
| JP 2020-125485 A | 20 August 2020 | CN 108373543 A | |
| | | KR 10-2018-0089860 A | |
| | | TW 201833225 A | |
| WO 2019/142615 A1 | 25 July 2019 | KR 10-2020-0078623 A | |
| | | CN 111629901 A | |
| | | TW 201936733 A | |
| JP 2020-132851 A | 31 August 2020 | KR 10-2020-0098401 A | |
| | | CN 111548753 A | |
| | | TW 202030288 A | |
| | | KR 10-2088860 B1 | |
| JP 2015-108098 A | 11 June 2015 | (Family: none) | |
| WO 2022/092249 A1 | 05 May 2022 | JP 2022-74108 A | |
| | | TW 202224938 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007046031 A
- JP 2012256014 A
- JP 2016 A
- JP 141058 A